# EUROPÄISCHE PATENTSCHRIFT

(11) **EP 3 188 987 B1**
(45) Veröffentlichungstag und Bekanntmachung des Hinweises auf die Patenterteilung: **02.12.2020**
(21) Anmeldenummer: 15781846.9
(22) Anmeldetag: 03.09.2015
(51) Int. Cl.: B65G 1/04

(54) **AUTOMATISIERTES REGALLAGERSYSTEM UND VERFAHREN ZUM SICHEREN BETREIBEN DESSELBEN**
AUTOMATED RACK STORAGE SYSTEM AND METHOD FOR SAFELY OPERATING IT
SYSTÈME AUTOMATISÉ DE STOCKAGE À RAYONNAGES ET PROCÉDÉ DE FONCTIONNEMENT FIABLE DUDIT SYSTÈME

(30) Priorität: 05.09.2014 AT 506142014
(43) Veröffentlichungstag der Anmeldung: 12.07.2017
(60) Teilanmeldung: 18203839.8
(73) Patentinhaber: TGW Mechanics GmbH, 4600 Wels (AT)
(72) Erfinder: GROSSE, Eric, 63225 Langen (DE)
(74) Vertreter: Burger, Hannes
(86) Internationale Anmeldenummer: PCT/AT2015/050211
(87) Internationale Veröffentlichungsnummer: WO 2016/033628

(56) Entgegenhaltungen:
- EP-A1- 2 597 058
- EP-A1- 2 657 155
- DE-A1- 10 105 706
- DE-B3-102011 117 487
- US-A1- 2012 185 080

## Beschreibung

Die Erfindung betrifft ein Verfahren zum sicheren Betreiben eines automatisierten Regallagersystems und ein automatisiertes Regallagersystem, wie in den Oberbegriffen der Ansprüche 1, 2 und 11 beschrieben.

Unterschiedliche Ausbildungen eines automatisierten Regallagersystems sind beispielweise aus der WO 2013/090970 A2, EP 2 543 611 A1, EP 2 327 643 B1, WO 2010/118412 A1, EP 2 158 144 B1, DE 10 2004 007 412 A1, EP 2 132 113 B1 und DE 10 2011 012 424 A1 bekannt. Solche Regallagersysteme umfassen Lagerregale und zwischen diesen ausgebildete Regalgassen, wobei in einer Regalgasse in übereinander liegenden Lagerebenen rechnergesteuerte Regalbediengeräte angeordnet sind, mittels welcher Ladegüter auf Lagerplätze einlagert bzw. Ladegüter von Lagerplätzen auslagert werden. Dabei kann ein Regalbediengerät über eine Lastaufnahmevorrichtung entweder nur eine einzige Lagerebene oder über eine speziell ausgebildete Lastaufnahmevorrichtung mehrere Lagerebenen bedienen. Somit kann jeder Lagerebene ein Regalbediengerät oder mehreren Lagerebenen ein gemeinsames Regalbediengerät zugeordnet werden.

Der Automatikbetrieb fordert sicherheitstechnische Konstruktionsmaßnahmen, wie beispielweise physische Barriere, Sicherheitsabstände und dgl.. Das System wird mit einem Schutzzaun umhaust und die Regalgasse ist gegen einen unbefugten Zutritt durch eine Bedienperson mittels einer Zugangstür gesichert, die mit einem Zugangsschlüssel verriegelt und entriegelt wird, wobei ein Sensor überwacht, ob die Zugangstür geschlossen oder geöffnet ist, und entsprechende Statussignale an eine Steuerungsvorrichtung übermittelt. Die Regalgasse weist eine Schaltvorrichtung auf, welche mit der Steuerungsvorrichtung kommuniziert und mit einem Zugangsschlüssel physisch zwischen einer Automatikstellung und einer Wartungsstellung verstellbar ist, wobei der Zugangsschlüssel in der Automatikstellung physisch unlösbar mit der jeweiligen Schaltvorrichtung verbunden ist und in der Wartungsstellung von der Schaltvorrichtung physisch lösbar ist, um die Zugangstür zu öffnen. Sind mehrere Regalgassen vorhanden, so ist jeder Regalgasse eine Zugangstür und eine Schaltvorrichtung zugeordnet.

Tritt die Bedienperson in die Regalgasse ein, um beispielweise Wartungsarbeiten am Regalbediengerät, an der Ladegut-Manipulationseinheit oder an den Lagerregalen durchzuführen oder eine Störung bei der Manipulation von Ladegütern zu beseitigen, so begibt sie sich in den Gefahrenbereich und ist auf jeden Fall sicherzustellen, dass zu diesem Zeitpunkt der Automatikbetrieb in einen Sicherheitsbetrieb geschaltet wurde. Im Sicherheitsbetrieb muss das Regalbediengerät in einen gefahrlosen Ruhezustand geschaltet worden sein, damit die Bedienperson keinem Verletzungsrisiko ausgesetzt wird. Hierzu sind entsprechende sicherheitstechnische Steuerungsmaßnahmen erforderlich.

Es gibt für diese sicherheitstechnischen Aspekte strenge gesetzliche Bestimmungen, welche in einschlägigen Normen, Maschinenrichtlinien und dgl. festgelegt sind. Es sei nur auszugsweise auch die DIN EN 13857, DIN EN 528, DIN EN 13849 hingewiesen.

Die DE 10 2011 117 487 B3 offenbart ein Regallagersystem mit einer Vielzahl von Regalgassen und in diesen jeweils in einer x-Richtung verfahrbaren Regalbediengeräten, wobei jedes Regalbediengerät mit einer, in einer y-Richtung bewegbaren und in einer z-Richtung ausfahrbaren Lastaufnahmevorrichtung ausgestattet ist, um Ladegüter auf Lagerplätze einzulagern bzw. Ladegüter von Lagerplätzen auszulagern. Um in einer Regalgasse eine Wartung und in einer an dieser angrenzenden Regalgasse einen Automatikbetrieb zu ermöglichen, ist es vorgesehen, dass das Regalbediengerät in der angrenzenden Regalgasse noch einseitig betrieben wird, und zwar in eine Richtung, die entgegengesetzt zu der zu wartenden Regalgasse ausgerichtet ist.

Nach der EP 2 597 058 A1 wird zu Wartungszwecken innerhalb der Regalgasse die Stromzufuhr zum Regalbediengerät unterbrochen und es werden damit die Bewegungen des Regalbediengerätes und der Lastaufnahmevorrichtung angehalten.

In der DE 20 2013 101 646 U1 ist ein Regallagersystem mit einem tiefgekühlten und/oder inertisierten Lagerbereich beschrieben, der mehrere Lagerregale, getrennt durch Regalgassen, mit jeweils mehreren Regalebenen aufweist, wobei pro Lagerregalgasse mindestens ein Regalbediengerät für die Ein- und Auslagerung von Lagereinheiten vorgesehen ist. An den geschlossenen Lagerbereich schließt sich ein von diesem abgeschotteter Wartungsbereich an, der über eine Schleuse mit dem Lagerbereich verbunden ist. Im Lagerbereich ist auf jeder Serviceebene ein Zugangssteg in der Regalgasse zwischen den Lagerregalen vorgesehen.

Die US 2012/0185080 A1, welche ein Verfahren zum sicheren Betreiben eines automatisierten Regallagersystems nach dem Oberbegriff des Anspruchs 1 bzw. des Anspruchs 2 sowie ein automatisiertes Regallagersystem nach dem Oberbegriff des Anspruchs 11 offenbart, beschreibt ein automatisiertes Regallagersystem mit Lagerregalen und zwischen den Lagerregalen verlaufenden Regalgassen sowie eine senkrecht zu den Regalgassen verlaufende Transportstrecke (transfer deck). Die Transportstrecke ist mit Ladegut-Hebevorrichtungen (multilevel vertical conveyor) verbunden, mittels welchen Ladegüter zur Transportstrecke angefördert und Ladegüter von der Transportstrecke abgefördert werden. Zusätzlich sind Regalbediengeräte vorhanden, welche in den Regalgassen und entlang der Transportstrecke bewegt werden. Im Automatikbetrieb erhalten die Regalbediengeräte Fahr- und Lagerbefehle und im Sicherheitsbetrieb erhalten diejenigen Regalbediengeräte, welche sich in einem Lagerbereich befinden, in dem von einer Bedienperson Wartungsarbeiten durchzuführen sind, Fahrbefehle, um diese Regalbediengeräte aus der Regalgasse heraus und auf die Transportstrecke zu bewegen. Um eine Absicherung der Regalgasse und damit eine Verletzung einer Bedienperson zu verhindern, wenn diese in der Regalgasse Wartungsarbeiten durchführen oder Störungen beheben muss, wird die Regalgasse über mechanische Barrieren, insbesondere Anschläge oder Netze, abgesperrt, sodass auch bei einer Fehlsteuerung der Regalbediengeräte, diese nicht in die Regalgasse einfahren können. Die Regalbediengeräte würden in diesem Fall gegen die mechanischen Barrieren "auflaufen". Sind Regalbediengeräte nicht fahrtüchtig, so verbleiben diese zwangsweise im Lagerbereich, wo die Bedienperson zutritt. Diese Ausführung hat den wesentlichen Nachteil, dass die Regalbediengeräte aus der Regalgasse vollständig herausfahren müssen, ehe eine Wartung / Störungsbehebung in der Regalgasse durchgeführt werden darf. Dies wirkt sich insbesondere bei sehr langen Regalgassen nachteilig auf die Verfügbarkeit aus, da vorerst die Regalbediengeräte aus der Regalgasse heraus bewegt und danach wieder in die Regalgasse hinein bewegt werden müssen.

Der vorliegenden Erfindung liegt die Aufgabe zugrunde, ein automatisiertes Lagersystem sowie ein Verfahren zum Betrieben desselben bereitzustellen, das höchste sicherheitstechnische Anforderungen erfüllen kann und sich durch eine hohe Verfügbarkeit auszeichnet.

Die Aufgabe der Erfindung wird durch ein Verfahren zum sicheren Betreiben eines automatisierten Regallagersystems nach Anspruch 1 bzw. Anspruch 2 und durch ein automatisiertes Regallagersystem nach Anspruch 11 gelöst.

Der Begriff "räumlicher Zugriffsbereich" ist im Rahmen der Erfindung als der (theoretische) Bewegungsbereich zu verstehen, innerhalb welchem die Bedienperson agieren kann, wenn sie sich in der Regalgasse in einem der Lagerbereiche befindet. Bestimmt wird dieser in der ersten Dimension (y-Richtung) und zweiten Dimension (z-Richtung) durch den uneingeschränkten Bewegungsradius des Armes/Fußes der Bedienperson und in einer dritten Dimension (x-Richtung) durch den uneingeschränkten Gehweg der Bedienperson entlang der Regalgasse. Physische Grenzen, wie sie durch die Gehstege oder Sicherheitsgitter gegeben wären, begrenzen den Zugriffbereich der Bedienperson. Die dritte Dimension (x-Richtung) kann sich insbesondere bei kurzen Regalgassen über die gesamte Länge der Regalgasse und insbesondere bei langen Regalgassen auch nur über einen Längenabschnitt der Regalgasse erstrecken.

Gemäß der Erfindung kann dieser Zugriffsbereich innerhalb eines der Lagerbereiche, in welchen sich die Bedienperson begeben kann, definiert werden, wenn beispielweise Gehstege und Sicherheitsgitter in der Regalgasse und den Lagerregalen vorgesehen sind. In diesem Fall wird der Zugriffsbereich für die Bedienperson durch die Gehstege und Sicherheitsgitter in der ersten Dimension (y-Richtung) und zweiten Dimension (z-Richtung) begrenzt.

Sind physische Grenzen in den Lagerregalen nicht vorgesehen, so erweist sich aber auch von Vorteil, wenn der Zugriffsbereich nicht bloß auf jenen Lagerbereich beschränkt ist, in welchen sich die Bedienperson begeben kann, sondern auf zumindest einen benachbarten Lagerbereich ausgedehnt wird, der oberhalb oder unterhalb des betreffenden Lagerbereiches liegt.

Der Zugriffsbereich kann aber auch sowohl den oberhalb liegenden Lagerbereich als auch den unterhalb liegenden Lagerbereich berücksichtigen. Dies kann bespielweise der Fall sein, wenn die Bedienperson auf einen mittleren Lagerbereich zutreten möchte. Dabei resultiert der Schutzbereich aus den Dimensionen (x-y-z-Richtung) des Zugriffsbereiches und wird so groß konfiguriert, dass für die Bedienperson gegebenenfalls auch von Regalbediengeräten eines benachbarten Lagerbereiches keine Gefährdung ausgeht, auch wenn sie in den benachbarten Lagerbereich greifen würde. Die räumliche Ausweitung des Schutzbereiches auf zumindest zwei Lagerbereiche (innerhalb einer Regalgasse) führt zu einen besonders sicheren Betrieb des Regallagersystems, selbst wenn bei Wartungsarbeiten oder einer Störungsbehebung in einigen Regalebenen nach wie vor der Automatikbetrieb für die Einlagerung von Ladegütern auf die Lagerplätze bzw. Auslagerung von Ladegütern von den Lagerplätzen aufrecht ist.

Ist einerseits der Zugriffsbereich für die Bedienperson durch bauliche Maßnahmen auf den Lagerbereich begrenzt, in welchen diese zutritt, ist auch die räumliche Ausdehnung des Schutzbereiches auf diesen (einen) Lagerbereich ausreichend. Im Sicherheitsbetrieb wird das Regalbediengerät, wenn in diesem Lagerbereich nur ein Regalbediengerät vorhanden ist, oder die Regalbediengeräte, wenn in diesem Lagerbereich mehrere Regalbediengeräte vorhanden sind, in eine Halteposition (x-Halteposition) innerhalb der Regalgasse bewegt werden, in welcher das zumindest eine Regalbediengerät solange verharrt und ferner in einen für die Bedienperson gefahrenlosen bzw. bewegungslosen Ruhezustand versetzt wird, bis die Steuereinheit ein Freischaltsignal (S_{FRB4}) erhält.

Ist andererseits der Zugriffsbereich für die Bedienperson nicht auf nur einen Lagerbereich begrenzt, sondern erstreckt sich über mehrere Lagerbereiche, so ist auch die räumliche Ausdehnung des Schutzbereiches über mehrere Lagerbereiche festgelegt. Im Sicherheitsbetrieb werden das zumindest eine Regalbediengerät in jenem Lagerbereich, in welchem die Bedienperson zutritt, und das zumindest eine Regalbediengerät in jenem oberhalb und/oder unterhalb liegenden Lagerbereich, in welchen sich der Schutzbereich hinein erstreckt, in eine Halteposition (x-Halteposition) entlang der Regalgasse bewegt, in welcher das Regalbediengerät solange verharrt und ferner in einen für die Bedienperson gefahrenlosen bzw. bewegungslosen Ruhezustand versetzt wird, bis die Steuereinheit ein Freischaltsignal (S_{FRB4}) erhält.

Der Begriff "bewegungsloser Ruhezustand" ist so zu verstehen, dass sämtliche Antriebe des Regalbediengerätes "wirkungslos" sind und im Sicherheitsbetrieb die Regalbediengeräte auch keine Fahr- und Lagerbefehle bearbeiten. Das Regalbediengerät oder die Regalbediengeräte verbleibt / verbleiben nach wie vor in der Regalgasse und kann / können nach Wiederaufnahme des Automatikbetriebes unmittelbar Ein- und Auslageraufträge abarbeiten. Lange Zufahrtwege können somit vermieden werden. Im gefahrenlosen bzw. bewegungslosen Ruhezustand kann das Regalbediengerät / können die Regalbediengeräte von einer Bedienperson verschoben werden, um beispielweise eine bessere Zugänglichkeit bei einer Störungsbehebung zu ermöglichen.

Die Halteposition (x-Halteposition) des Regalbediengerätes / der Regalbediengeräte ist von einer Zugangstür zum Zugang in den betreffenden Lagerbereich mit ausreichendem Abstand und soweit in die Regalgasse hinein verlegt, dass einer Bedienperson ein ungehinderter Zugang in die Regalgasse ermöglicht wird. Der Abstand zur Zugangstür beträgt mindestens zwei Meter und kann sich im Wesentlichen bis an das andere Ende der Regalgasse erstrecken.

Nach einer ersten Ausführung der Erfindung, welche im Anspruch 1 offenbart wird, wird im Sicherheitsbetrieb die Hubgeschwindigkeit der Transportvorrichtung reduziert, wenn sich diese entlang dem Schutzbereich bewegt. Die Hubgeschwindigkeit kann soweit reduziert werden, dass die Transportvorrichtung in "sicherer Geschwindigkeit" durch den Schutzbereich hindurchbewegt bzw. am Schutzbereich vorbeibewegt wird.

Es wäre aber auch möglich, dass eine gegenseitige Anpassung zwischen einer im Bereich der Ladegut-Hebevorrichtung vorgesehenen physischen Durchgriffbarriere und der Hubgeschwindigkeit erfolgt. Einschlägige Normen verlangen bestimmte Sicherheitsabstände zu bewegten Maschinenteilen. Im Falle der Ladegut-Hebevorrichtung, müsste eine entsprechend breit dimensionierte physische Durchgriffbarriere (Schutzgitter) vorgesehen werden, wenn die Transportvorrichtung mit maximaler Hubgeschwindigkeit verstellt wird. Dies würde aber bedeuten, dass sich die Durchgriffbarriere soweit verbreitert, dass standardisierte Bereitstellvorrichtungen, welche auf zumindest einer Seite der Ladegut-Hebevorrichtung übereinander angeordnet sein können, verbaut sind und damit eine Übernahme bzw. Übergabe von Ladegütern zwischen einem Übernahmeplatz bzw. Übergabeplatz und einem Regalbediengerät nicht mehr erfolgen könnte. Nur durch Verlängerung der Bereitstellvorrichtungen könnte man diesem Nachteil entgegen, was aber kostspielig wäre. Durch gezielte Anpassung der Hubgeschwindigkeit und Breite der Durchgriffbarriere kann nun sichergestellt werden, dass zumindest der Übernahmeplatz bzw. Übergabeplatz auf den Bereitstellvorrichtungen frei zugänglich sind. Es gilt der Grundsatz, je geringer die Hubgeschwindigkeit desto schmaler kann die Durchgriffbarriere gestaltet werden.

Nach einer zweiten Ausführung der Erfindung, welche im Anspruch 2 offenbart wird, wird im Sicherheitsbetrieb der Hubantrieb und/oder Förderantrieb der Transportvorrichtung abgeschaltet.

Die Transportvorrichtung kann auch nach dem Zutritt der Bedienperson in einen der Lagerbereiche und während dem sich die Bedienperson in Richtung der Ladegut-Manipulationseinheit nähert, nach wie vor automatisch und mit maximaler Hubgeschwindigkeit oder gegebenenfalls nur geringfügig reduzierter Hubgeschwindigkeit betrieben. Die Hubgeschwindigkeit der Transportvorrichtung wird erst reduziert oder es wird die Transportvorrichtung erst stillgesetzt, wenn die Zutrittsüberwachung im Lagerbereich nahe der Ladegut-Manipulationseinheit ausgelöst wird. Einzige Bedingung hierfür ist, dass die Zutrittsüberwachung in einem ausreichend großen Sicherheitsabstand zu der Ladegut-Manipulationseinheit, daher der Ladegut-Hebevorrichtung und gegebenenfalls Bereitstellvorrichtungen, entfernt angeordnet ist. Dieser Sicherheitsabstand resultiert wiederum aus einschlägigen Normen. Bevorzugt arbeiten die Sensoriken mit einem Strahlenfeld oder Schallwellenfeld, wodurch der Durchgang im Lagerbereich nicht durch physische Barrieren blockiert wird. Durch die uneingeschränkte Bewegungsfreiheit im Lagerbereich, können auch Störungsbehebungen leicht durchgeführt werden. Dieses Sicherheitskonzept kann ohne Anordnung einer physischen Durchgriffbarriere an der Ladegut-Hebevorrichtung realisiert werden.

Von Vorteil sind auch die Maßnahmen und Ausführungen nach den Ansprüchen 3 und 12, da der Leistungsabfall relativ gering ist, wenn im Sicherheitsbetrieb für die Regalbediengeräte nur so viele Regalebenen "ausfallen" wie aus sicherheitstechnischen Aspekten unbedingt notwendig ist. Somit wird gegenüber solchen aus dem Stand der Technik bekannten Regallagersystemen, wo das Regalbediengerät des zu betretenden Lagerbereiches und die Regalbediengeräte der angrenzenden Lagerbereiche stillgesetzt werden, eine wesentlich höhere Verfügbarkeit erreicht.

Mit anderen Worten arbeiten außerhalb des Schutzbereiches bewegte Regalbediengeräte des unterhalb und/oder oberhalb liegenden Lagerbereiches weiterhin im Automatikbetrieb. Innerhalb dieses Schutzbereiches angeordnete Regalbediengeräte werden hingegen im Sicherheitsbetrieb gefahrlos bzw. bewegungslos geschalten, sodass auf die Bedienperson keine Gefahr ausgehen kann, wenn sie sich innerhalb des Schutzbereiches befindet. Im Sicherheitsbetrieb wird durch steuerungstechnische Maßnahmen ein unbeabsichtigtes Losfahren eines Regalbediengerätes aus der Halteposition und ein unbeabsichtigtes Ausfahren der Lastaufnahmevorrichtung unterbunden.

Gemäß einer Maßnahme und Ausführung nach den Ansprüchen 4 und 13 wird der für die Bedienperson gefahrenlose bzw. bewegungslose Ruhezustand für das Regalbediengerät in der Halteposition erreicht, wenn das Regalbediengerät mit einer Gefahrenbetriebsspannung versorgt wird. Die Gefahrenbetriebsspannung kann auch so gewählt werden, dass der Fahrantrieb und der Stellantrieb am Regalbediengerät "spannungslos" geschaltet sind. Diese sicherheitstechnische Steuerungsmaßnahme lässt sich einfach verwirklichen und ist zudem sehr zuverlässig.

Die Maßnahme nach Anspruch 5 ermöglicht höchste Flexibilität in der Ansteuerung der Regalbediengeräte und ein zuverlässiges Umschalten zwischen einem Automatikbetrieb und Sicherheitsbetrieb für ein Regalbediengerät. Es lässt sich jedes einzelne Regalbediengerät gezielt im Sicherheitsbetrieb betreiben.

Der schaltungstechnische Aufwand für die Steuerungsvorrichtung lässt sich stark reduzieren, wenn ein Schaltmodul ein Gruppe von Schleifleitungsanordnungen anschalten kann, wie im Anspruch 6 beschrieben. Auch verringert sich die Fehleranfälligkeit des Steuerungssystems. Die "feste Verdrahtung" der Schleifleitungsanordnungen über die Schaltmodule erlaubt ein einfachere Gestaltung des Softwareprogrammes für die Steuerungsvorrichtung.

Als besonders vorteilhafte Maßnahme erweist sich die Rückbestätigung an die Steuerungsvorrichtung, wenn die Haltepositionen der Regalbediengeräte erreicht wurden und sich ein gefahrenloser Ruhezustand jedes dieser Regalbediengeräte eingestellt hat, wie im Anspruch 7 beschrieben. Erst wenn das Bestätigungssignal rückgemeldet wurde, werden die Regalbediengeräte in den "gefahrlosen Ruhezustand" versetzt. Damit ist im Normalfall sichergestellt, dass die Regalbediengeräte zuvor in die Haltepositionen bewegt wurden und erst anschließend der "gefahrlose Ruhezustand" eingestellt wird. Damit ist für die Bedienperson auch im Lagerbereich keine "künstliche Blockade" durch die angehaltenen Regalbediengeräte geschaffen und kann sich über weite Bereiche im Lagerbereich ungehindert bewegen.

Von Vorteil sind auch die Maßnahmen nach den Ansprüchen 8, 9 und 19, da dieses Sicherheitskonzept ohne Anordnung einer physischen Durchgriffbarriere an der Ladegut-Hebevorrichtung realisiert werden kann. Die Transportvorrichtung kann auch nach dem Zutritt der Bedienperson in einen der Lagerbereiche und während dem sich die Bedienperson in Richtung der Ladegut-Manipulationseinheit nähert, nach wie vor automatisch und mit maximaler Hubgeschwindigkeit oder gegebenenfalls nur geringfügig reduzierter Hubgeschwindigkeit betrieben. Die Hubgeschwindigkeit der Transportvorrichtung wird erst reduziert oder es wird die Transportvorrichtung erst stillgesetzt, wenn die Zutrittsüberwachung im Lagerbereich nahe der Ladegut-Manipulationseinheit ausgelöst wird. Einzige Bedingung hierfür ist, dass die Zutrittsüberwachung in einem ausreichend großen Sicherheitsabstand zu der Ladegut-Manipulationseinheit, daher der Ladegut-Hebevorrichtung und den Bereitstellfördervorrichtungen, entfernt angeordnet ist. Dieser Sicherheitsabstand resultiert wiederum aus einschlägigen Normen. Bevorzugt arbeiten die Sensoriken mit einem Strahlenfeld oder Schallwellenfeld, wodurch der Durchgang im Lagerbereich nicht durch physische Barrieren blockiert wird. Durch die uneingeschränkte Bewegungsfreiheit im Lagerbereich, können auch Störungsbehebungen leicht durchgeführt werden.

Vorteilhaft ist auch die Maßnahme nach Anspruch 10, da die Bedienperson den Gefahrenbereich "sicher" passieren und an der Ladegut-Manipulationseinheit vorbeigehen kann, um beispielweise zu einer dieser Regalgasse zugeordneten nächsten Ladegut-Hebevorrichtung zu gehen, ohne den laufenden Automatikbetrieb der "passierten" Ladegut-Manipulationseinheit wesentlich zu stören. Eine solche Ausführung eignet sich bestens für sehr lange Regalgassen, wo auch mehrere Ladegut-Manipulationseinheiten angeordnet sein können.

Die Aufgabe der Erfindung wird ferner durch die Merkmale des Anspruches 11 gelöst.

Für das Regallagersystem gelten die im Zusammenhang mit dem Verfahren zum sicheren Betreiben desselben aufgeführten Vorteile analog.

Gemäß der Maßnahme nach Anspruch 14 erhält die Bedienperson klare Anweisungen, wann sie den Lagerbereich betreten darf. Bei sachgerechter Bedienung kann das Gefahrenrisiko für die Bedienperson auf eine Minimum reduziert werden, da die Bedienperson erst gar nicht in den Lagerbereich eintreten kann, ehe die Bestätigungssignale und Rückmeldesignale der Regalbediengeräte und gegebenenfalls das Bestätigungssignal der Ladegut-Hebevorrichtung und gegebenenfalls die Bestätigungssignale der Bereitstellvorrichtungen (aktiv) an die Steuerungsvorrichtung signalisiert wurden.

Vorteilhaft ist auch die Maßnahme nach Anspruch 15, da eine zusätzliche Sicherheitsmaßnahme mit der Anordnung einer Schließeinheit geschaffen wird, welche erst betätigt wird, wenn entsprechende Freigabesignale vorliegen. Dadurch ist auch ein "gewaltsamer" Zutritt nahezu unmöglich.

Die Ausgestaltung nach den Anspruch 16 ist von Vorteil, weil damit der Zugriff einer Bedienperson von der Regalgassenseite auf den Bewegungsraum der Transportvorrichtung durch eine "trennende Schutzeinrichtung" verhindert wird. Nur bei Bedarf und wenn die Ladegut-Hebevorrichtung in einen für die Bedienperson gefahrenlosen bzw. bewegungslosen Ruhezustand versetzt wurde, kann die "trennende Schutzeinrichtung" entfernt werden.

Gemäß der Ausführung nach Anspruch 17 kann auch der Zugriff einer Bedienperson vom Pufferbereich auf den Bewegungsraum der Transportvorrichtung durch eine "trennende Schutzeinrichtung" verhindert werden. Diese "trennende Schutzeinrichtung" ist vorzugsweise automatisch verstellbar.

Vorteilhaft ist auch die Ausgestaltung gemäß Anspruch 18, da der Durchgriffsschutz mit einem Strahlenfeld oder Schallwellenfeld arbeitet, wodurch ein Zugriff in den Bewegungsraum der Transportvorrichtung nicht durch physische Barrieren blockiert wird, aber dennoch ein sehr ein sehr effektives Sicherheitseinrichtung vorhanden ist. Der Durchgriffsschutz kann auch durch ein Kamerasystem realisiert werden. Wird der Durchgriffsschutz geschaltet und der Steuerungsvorrichtung signalisiert, dass die Bedienperson auf den Bewegungsraum der Transportvorrichtung zugreifen möchte bzw. zugegriffen hat, kann die Transportvorrichtung unmittelbar stillgesetzt werden, insbesondere eine "Notausschaltung" von der Steuerungsvorrichtung veranlasst werden Der Bedienperson wird eine optimale Bewegungsfreiheit im Pufferbereich ermöglicht, sodass auch Störungsbehebungen leicht durchgeführt werden können.

Gemäß Anspruch 20 wird der Lagerbereich seitlich neben der Ladegut-Hebevorrichtung überwacht. Dadurch kann sichergestellt werden, dass die Transportvorrichtung nicht verstellt wird, wenn sich eine Bedienperson unmittelbar im Bereich der Ladegut-Hebevorrichtung aufhält.

Zum besseren Verständnis der Erfindung wird diese anhand der nachfolgenden Figuren näher erläutert.

Es zeigen jeweils in stark vereinfachter, schematischer Darstellung:
- Fig. 1: einen Ausschnitt eines Regallagersystems in einer ersten Ausführung mit einem Regallager und einer Ladegut-Manipulationseinheit in Draufsicht auf eine Regalebene;
- Fig. 2: das Regallagersystem in Ansicht gemäß der Linie II in Fig. 1;
- Fig. 3: das Regallagersystem nach Fig. 1 in Stirnansicht;
- Fig. 4: eine Stirnansicht auf ein Regallagersystem in einer zweiten Ausführung;
- Fig. 5: eine Stirnansicht auf ein Regallagersystem in einer dritten Ausführung;
- Fig. 6: einen Ausschnitt eines Regallagersystems in einer vierten Ausführung mit einem Regallager und einer Ladegut-Manipulationseinheit in Draufsicht auf eine Regalebene;
- Fig. 7: einen Ausschnitt eines Regallagersystems in einer fünften Ausführung mit einem Regallager und einer Ladegut-Manipulationseinheit in Draufsicht auf eine Regalebene;
- Fig. 8: einen Ausschnitt eines Regallagersystems in einer sechsten Ausführung mit einem Regallager und einer Ladegut-Manipulationseinheit in Draufsicht auf eine Regalebene;
- Fig. 9: eine Ausschnittsvergrößerung aus einem Lagerregal und einem Regalbediengerät gemäß Fig. 1, in Stirnsicht;
- Fig. 10: das Regallagersystem nach Fig. 1 in einem Automatikbetrieb mit einer ersten Ausführung einer Steuerungsvorrichtung;
- Fig. 11a, 11b: das Regallagersystem nach Fig. 1 mit einem Sicherheitsbetrieb für einige der Regalbediengeräte und einem Automatikbetrieb für einige der Regalbediengeräte;
- Fig. 12, 13: das Regallagersystem nach Fig. 1 mit einer zweiten Ausführung einer Steuerungsvorrichtung;
- Fig. 14, 15: das Regallagersystem nach Fig. 1 mit einer dritten Ausführung einer Steuerungsvorrichtung;
- Fig. 16: das Regallagersystem mit einer ersten Ausführung für eine mechanische und steuerungstechnische Sicherheitseinrichtung, im Automatikbetrieb für die Regalbediengeräte und die Ladegut-Manipulationseinheit;
- Fig. 17a, 17b: das Regallagersystem nach Fig. 16 mit einem Sicherheitsbetrieb für einige der Regalbediengeräte und die Ladegut-Manipulationseinheit;
- Fig. 18: das Regallagersystem mit einer zweiten Ausführung für eine mechanische und steuerungstechnische Sicherheitseinrichtung, im Automatikbetrieb für die Regalbediengeräte, die Ladegut-Manipulationseinheit und Bereitstell vorrichtungen;
- Fig. 19a, 19b: das Regallagersystem nach Fig. 18 mit einem Sicherheitsbetrieb für einige der Regalbediengeräte, die Ladegut-Manipulationseinheit und Bereitstell vorrichtungen;
- Fig. 20: das Regallagersystem mit einer dritten Ausführung für eine mechanische und steuerungstechnische Sicherheitseinrichtung;
- Fig. 21: das Regallagersystem mit einer vierten Ausführung für eine mechanische und steuerungstechnische Sicherheitseinrichtung;
- Fig. 22: das Regallagersystem mit einer fünften Ausführung für eine mechanische und steuerungstechnische Sicherheitseinrichtung, welche nicht in den beanspruchten Schutzbereich fällt;
- Fig. 23: das Regallagersystem mit einer sechsten Ausführung für eine mechanische und steuerungstechnische Sicherheitseinrichtung, welche nicht in den beanspruchten Schutzbereich fällt;
- Fig. 24a bis 24e: ein Flussdiagramm für ein erstes Steuerungsverfahren des Regallagersystems;
- Fig. 25a bis 25e: ein Flussdiagramm für ein zweites Steuerungsverfahren des Regallagersystems;
- Fig. 26a bis 26e: ein Flussdiagramm für ein drittes Steuerungsverfahren des Regallagersystems.

Das erfindungsgemäße Verfahren zum sicheren Betreiben eines automatisierten Regallagersystems wird durch die Merkmale des Anspruchs 1 bzw. des Anspruchs 2 und das erfindungsgemäße automatisierte Regallagersystem durch die Merkmale des Anspruchs 11 definiert. Weitere Ausführungsformen der Erfindung ergeben sich aus den abhängigen Ansprüchen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

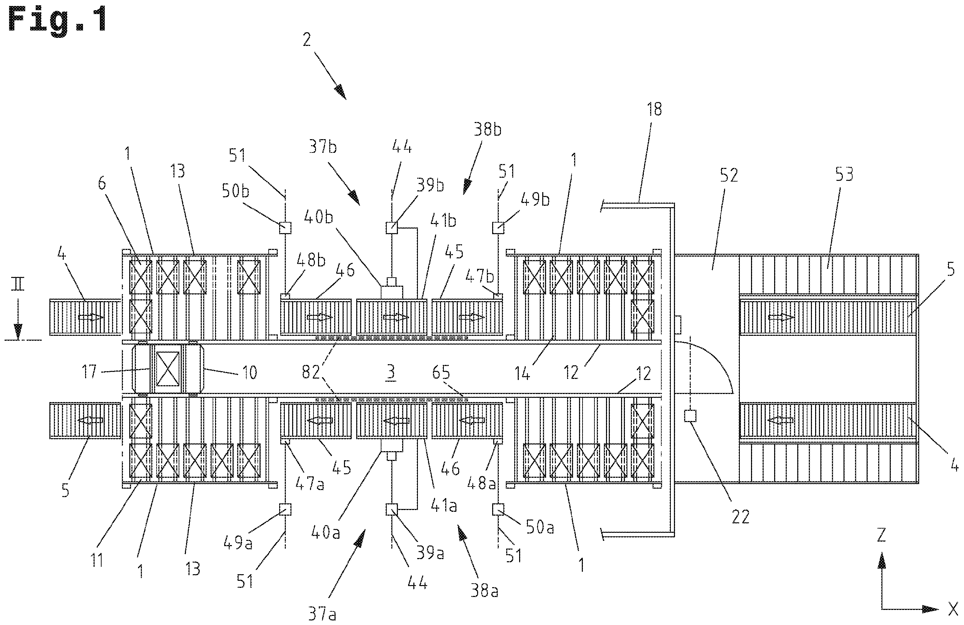

In den Fig. 1 bis 3 ist eine erste Ausführung eines Regallagersystems gezeigt, welches Lagerregale 1, eine Ladegut-Manipulationseinheit 2, zumindest eine zwischen den Lagerregalen 1 und entlang der Ladegut-Manipulationseinheit 2 in einer x-Richtung verlaufende Regalgasse 3, eine an die Ladegut-Manipulationseinheit 2 angeschlossene Fördertechnik 4, 5 zum Antransport von Ladegütern 6 und zum Abtransport von Ladegütern 6, Lagerbereichen 7, 8, 9 und je Lagerbereich 7, 8, 9 Regalbediengeräte 10 zum Einlagern der Ladegüter 6 auf Lagerplätze 11 bzw. Auslagern von Ladegütern 6 aus den Lagerplätzen 11 umfasst. Im gezeigten Beispiel sind zwei Lagerregale 1 dargestellt. Im Rahmen der Erfindung können aber auch mehr als zwei Lagerregale 1 vorgesehen werden, wobei zwischen benachbarten Lagerregalen 1 jeweils eine Regalgasse 3 ausgebildet ist.

Nach gezeigter Ausführung bilden die Lagerregale 1 in den Regalebenen (RE) jeweils nebeneinander und hintereinander vorgesehene Lagerplätze 11 für die Ladegüter 6 aus, sodass in Tiefenrichtung der Lagerregale 1 zwei oder mehr Ladegüter 6 abgestellt werden können, daher eine so genannte "doppelttiefe" bzw. "mehrfachtiefe" Lagerung möglich ist. Andererseits ist es auch möglich, dass die Lagerregale 1 in den Regalebenen jeweils ausschließlich in einer Reihe nebeneinander vorgesehene Lagerplätze 11 für die Ladegüter 6 ausbilden, sodass in Tiefenrichtung der Lagerregale 1 nur ein Ladegut 6 abgestellt werden kann, daher eine so genannte "einfachtiefe" Lagerung möglich ist.

Die im Abstand parallel angeordneten Lagerregale 1 bilden in übereinander liegenden Regalebenen (RE) jeweils nebeneinander vorgesehene Lagerplätze 11 für die Ladegüter 6 aus und umfassen jeweils der Regalgasse 3 benachbarte, vertikale vordere Regalsteher und von der Regalgasse 3 entfernte, vertikale hintere Regalsteher. Die vorderen Regalsteher sind mit in Richtung der Regalgasse 3 horizontal verlaufenden vorderen Längstraversen 12 und die hinteren Regalsteher mit in Richtung der Regalgasse 3 horizontal verlaufenden hinteren Längstraversen 13 verbunden. Die vorderen Längstraversen 12 bilden Führungsschienen für das Regalbediengerät 10. Zwischen den Längstraversen 12, 13 können Querträger 14 vorgesehen werden, welche sich in Tiefenrichtung eines Lagerregales (z-Richtung) erstrecken und obenseitig eine Lagerfläche bzw. die Lagerplätze 11 ausbilden.

Das Regallagersystem umfasst mehrere übereinander angeordnete und durch Gehstege 15 voneinander getrennte Lagerbereiche 7, 8, 9. Die Lagerbereiche 7, 8, 9 haben jeweils eine Höhe zwischen 2,1 m und 3,0 m und eine Breite zwischen 0,75 m und 1,5 m.

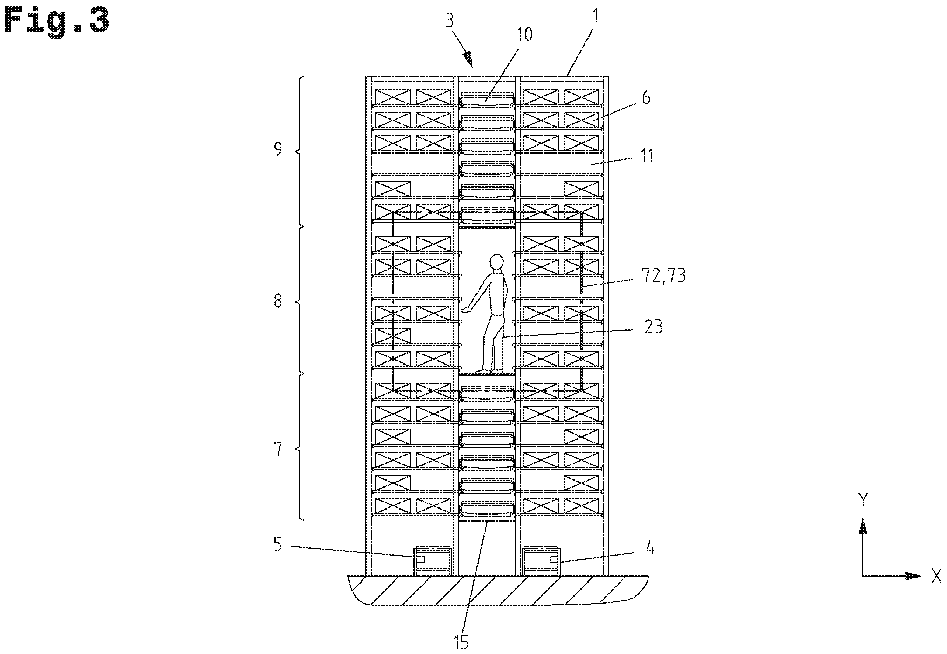

Jeder Lagerbereich 7, 8, 9 umfasst wiederum in übereinander liegenden (horizontalen) Fahrebenen 16 in der Regalgasse 3 bewegbare und unabhängig voneinander angesteuerte Regalbediengeräte 10 zum Einlagern der Ladegüter 6 auf die Lagerplätze 11 bzw. Auslagern von Ladegütern 6 aus den Lagerplätzen 11. Es kann vorgesehen werden, dass jeder Regalebene (RE) ein Regalbediengerät 10 zugeordnet ist. Somit bedient ein Regalbediengerät 10 über eine Lastaufnahmevorrichtung 17 eine Regalebene. Die Lastaufnahmevorrichtung 17 kann in einer Querrichtung (z-Richtung) doppelseitig ein oder mehrere Ladegüter 6 in die Lagerplätze 11 einlagern bzw. aus den Lagerplätzen 11 auslagern. Die Fahrebenen 16 und Regalebenen (RE) liegen im gezeigten Ausführungsbeispiel im Wesentlichen auf gleicher Höhenebene, wobei die in Längsrichtung der Regalgasse 3 (x-Richtung) verlaufenden und paarweise einander gegenüberliegenden Längstraversen 12 jeweils eine Fahrebene 16 ausbilden, entlang welcher das Regalbediengerät 10 bewegt wird. Beispielweise weist jeder Lagerbereich 7, 8, 9 sechs Fahrebenen 16, sechs Regalebenen (RE) und sechs Regalbediengeräte 10 auf. Gezeigt wird dies aus Gründen der besseren Übersicht in Fig. 3 nur für den unteren und oberen Lagerbereich 7, 9.

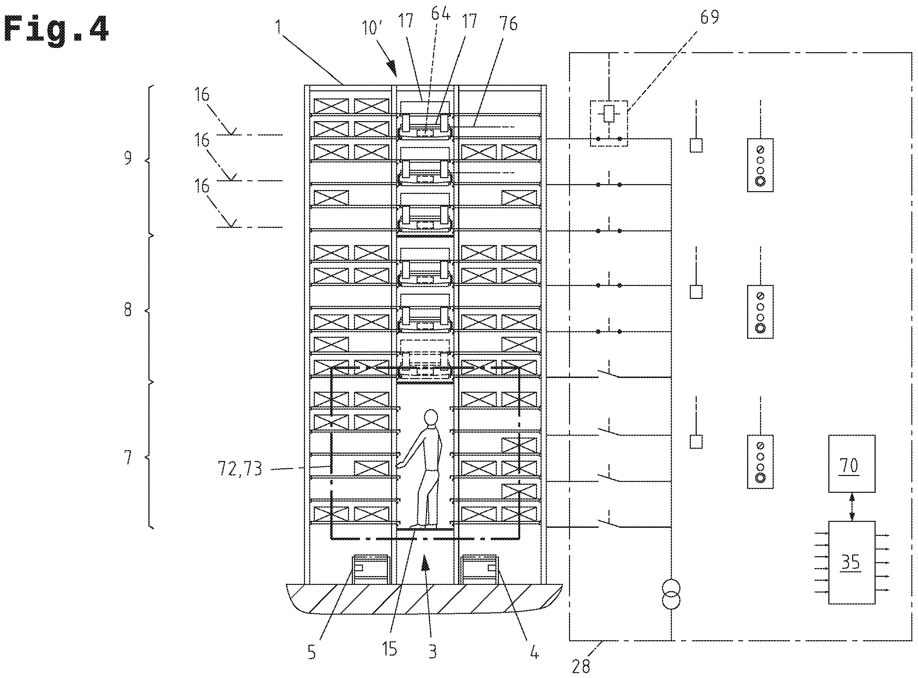

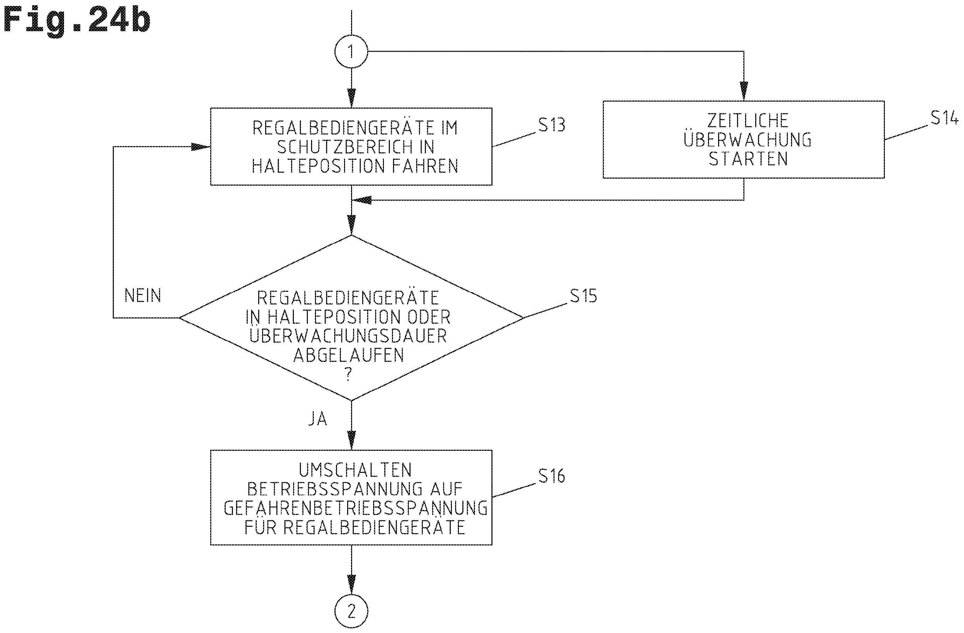

Es können aber auch weniger Regalbediengeräte 10' als Regalebenen (RE) vorhanden sein, wenn das Regalbediengerät 10' übereinander angeordnete und unabhängig voneinander steuerbare Lastaufnahmevorrichtungen 17 umfasst, wie in Fig. 4 ebenfalls aus Gründen der besseren Übersicht nur anhand dem mittleren und oberen Lagerbereich 9 gezeigt. Die Lastaufnahmevorrichtungen 17 können unabhängig voneinander angesteuert werden, wovon eine erste Lastaufnahmevorrichtung 17 in einer Querrichtung (z-Richtung) auf einer ersten Regalebene (RE) ein oder mehrere Ladegüter 6 in einen Lagerplatz 11 einlagern bzw. aus einem Lagerplatz 11 auslagern kann und eine zweite Lastaufnahmevorrichtung 17 in einer Querrichtung (z-Richtung) auf einer zweiten Regalebene (RE) ein oder mehrere Ladegüter 6 in einen Lagerplatz 11 einlagern bzw. aus einem Lagerplatz 11 auslagern kann. Somit kann ein Regalbediengerät 10' beispielweise über zwei Lastaufnahmevorrichtungen 17 mehr als eine Regalebene, beispielweise zwei Regalebenen bedienen. Die Fahrebenen 16 liegen zwar nicht mehr in jeder Regalebene (RE), aber im Wesentlichen auf gleicher Höhenebene jeder zweiten Regalebene (RE), wobei die in Längsrichtung der Regalgasse 3 (x-Richtung) verlaufenden und paarweise einander gegenüberliegenden Längstraversen 12 jeweils eine Fahrebene 16 ausbilden, entlang welcher das Regalbediengerät 10' bewegt wird. Beispielweise weist jeder Lagerbereich 7, 8, 9 drei Fahrebenen 16, sechs Regalebenen (RE) und drei Regalbediengeräte 10 auf. Das Regallagersystem gemäß Fig. 4 umfasst wiederum die Lagerregale 1, eine (nicht gezeigte) Ladegut-Manipulationseinheit 2 (54; 55), zumindest eine zwischen den Lagerregalen 1 und entlang der Ladegut-Manipulationseinheit 2 (54; 55) in einer x-Richtung verlaufende Regalgasse 3, eine an die Ladegut-Manipulationseinheit 2 (54; 55) angeschlossene Fördertechnik 4, 5 zum Antransport von Ladegütern 6 und zum Abtransport von Ladegütern 6, Lagerbereichen 7, 8, 9 und je Lagerbereich 7, 8, 9 Regalbediengeräte 10' zum Einlagern der Ladegüter 6 auf Lagerplätze 11 bzw. Auslagern von Ladegütern 6 aus den Lagerplätzen 11.

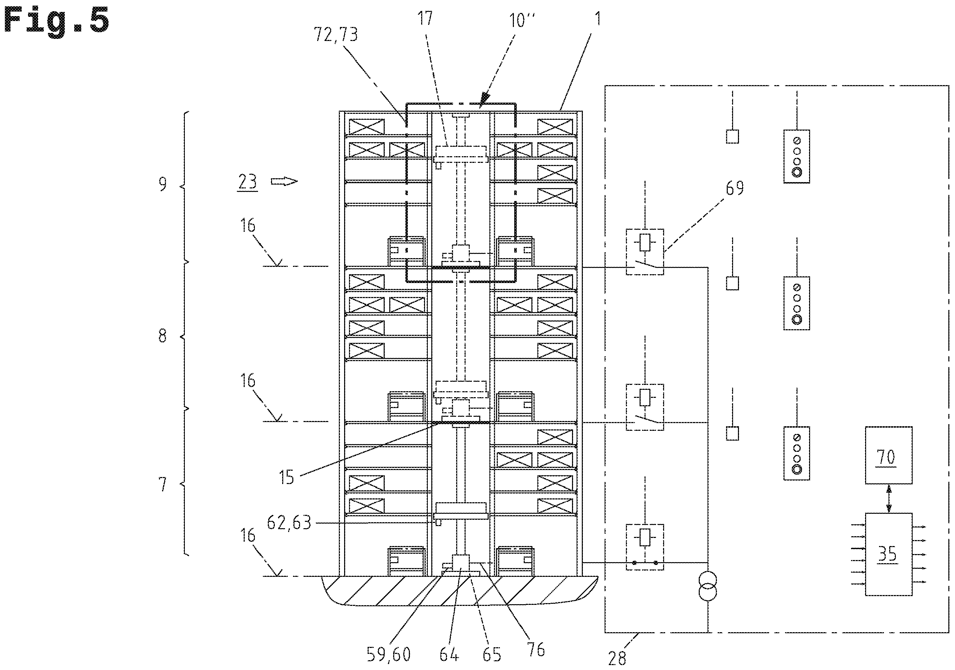

In Fig. 5 weisen die Lagerbereiche 7, 8, 9 jeweils nur ein Regalbediengerät 10" auf, welches auf einer heb- und senkbaren Plattform die unten noch genauer beschriebene Lastaufnahmevorrichtung 17 umfasst und in Richtung der Regalgasse 3 entlang von Führungsschienen verfahrbar ist. Die Lastaufnahmevorrichtung 17 kann doppelseitig in einer Querrichtung (z-Richtung) auf jede der Regalebenen (RE) innerhalb eines Lagerbereiches 7, 8, 9 zugreifen und ein oder mehrere Ladegüter 6 in einen Lagerplatz 11 einlagern bzw. aus einem Lagerplatz 11 auslagern. Nach dieser Ausführung umfasst jeder Lagerbereich 7, 8, 9 eine einzige Fahrebene 16, vier Regalebenen (RE) und ein Regalbediengerät 10".

Im Unterschied zu den Ausführungen gemäß den Fig. 1 bis 3 und Fig. 4, wo die Führungsschienen durch die vorderen Längstraversen 12 gebildet sind, dienen nach dieser Ausgestaltung der Erfindung in der Regalgasse 3 in übereinander liegenden Fahrebenen 16 angeordnete Führungsschienen der Führung der Regalbediengeräte 10". Die Energie- und/oder Datenversorgung der Regalbediengeräte 10", insbesondere der Antriebsmotoren 60, 63 und der Steuereinheit 64 kann, wie an sich bekannt, über eine Schleifleitungsanordnung 65 erfolgen, welche je Fahrebene 16 an einer der Führungsschienen befestigt ist und sich über die gesamte Länge der Führungsschiene erstreckt. Die Antriebsmotoren 60, 63 sind mit der Steuereinheit 64 kommunikationsverbunden.

Eine Ladegut-Manipulationseinheit, wie sie in den Fig. 1 bis 3; 4; 6 bis 8 beschrieben ist, kann nach dieser Ausführung entfallen, da die Fördertechniken 4, 5 zum Antransport von Ladegütern 6 und zum Abtransport von Ladegütern 6 je Lagerbereich 7, 8, 9 vorgesehen sind. In diesem Fall, erstreckt sich die Regalgasse zwischen den Lagerregalen 1.

Auch wenn nach gezeigter Ausführung, jeder Lagerbereich 7, 8, 9 eine Fördertechnik 4, 5 zum Antransport von Ladegütern 6 und zum Abtransport von Ladegütern 6 aufweist und das Regalbediengerät 10" mit seiner Lastaufnahmevorrichtung 17 zwischen die Fördertechniken 4, 5 bewegbar ist, um Ladegüter 6 einzulagern und Ladegüter 6 auszulagern, wäre in einer (nicht gezeigten) alternativen Ausführung jeweils nur eine Fördertechnik 4, 5 zum Antransport von Ladegütern 6 und zum Abtransport von Ladegütern 6 und die Ladegut-Manipulationseinheit 2 (54; 55) vorgesehen, welche die Lagerbereiche 7, 8, 9 mit der Fördertechnik 4, 5 zum Antransport von Ladegütern 6 und zum Abtransport von Ladegütern 6 verbindet. Die Fördertechnik 4 zum Antransport von Ladegütern 6 und die Fördertechnik 5 zum Abtransport von Ladegütern 6 sind beispielweise an den unteren oder oberen Lagerbereich 7, 9 angeschlossen. In diesem Fall, erstreckt sich die Regalgasse zwischen den Lagerregalen 1 und entlang der Ladegut-Manipulationseinheit 2 (54; 55).

Da die Regalbediengeräte 10; 10'; 10" üblicherweise in einem Automatikmodus betrieben werden, um die Lagergüter 6 automatisch ein- und auszulagern, müssen die Regalgassen 3 aus sicherheitstechnischen Gründen gegenüber einem unbefugten Zutritt durch Menschen geschützt sein.

Zu diesem Zweck ist ein Schutzzaun 18 vorgesehen, welcher zumindest im Bereich der Stirnseite der Regalgasse 3 und Lagerregale 1 aufgestellt ist, der von einem Menschen nicht ohne Weiteres überwunden werden kann.

Um die Regalgasse 3 dennoch zugänglich zu machen, ist pro Lagerbereich 7, 8, 9 mindestens ein Zugang vorgesehen, der im gezeigten Beispiel in Form einer öffenbaren/schließbaren Zugangstür 19, 20, 21 realisiert ist. Die Zugangstür 19, 20, 21 kann verriegelt, entriegelt, geöffnet und geschlossen werden. Ein entsprechender Zustand der Zugangstür 19, 20, 21 kann mit einem Sensor 22 überwacht und als Zustandssignal ausgegeben werden. Der Sensor 22 kann in Form eines Positionsschalter, Lichttasters oder einer Lichtschranke realisiert sein. Der Sensor 22 ist so angeordnet, dass er das Öffnen einer geschlossenen Zugangstür 19, 20, 21 erkennt. Erst wenn die Zugangstür 19, 20, 21 offen ist, kann dort die Regalgasse 3 von einer Bedienperson 23 (Servicetechniker) betreten werden, wie es nachfolgend noch näher erläutert wird.

Das Regallagersystem umfasst außerdem mindestens eine Schaltvorrichtung. Bevorzugt ist pro Lagerbereich 7, 8, 9 eine eigene Schaltvorrichtung 24, 25, 26 vorgesehen. Die Schaltvorrichtung 24, 25, 26 ist (logisch) dem Lagerbereich 7, 8, 9 zugeordnet.

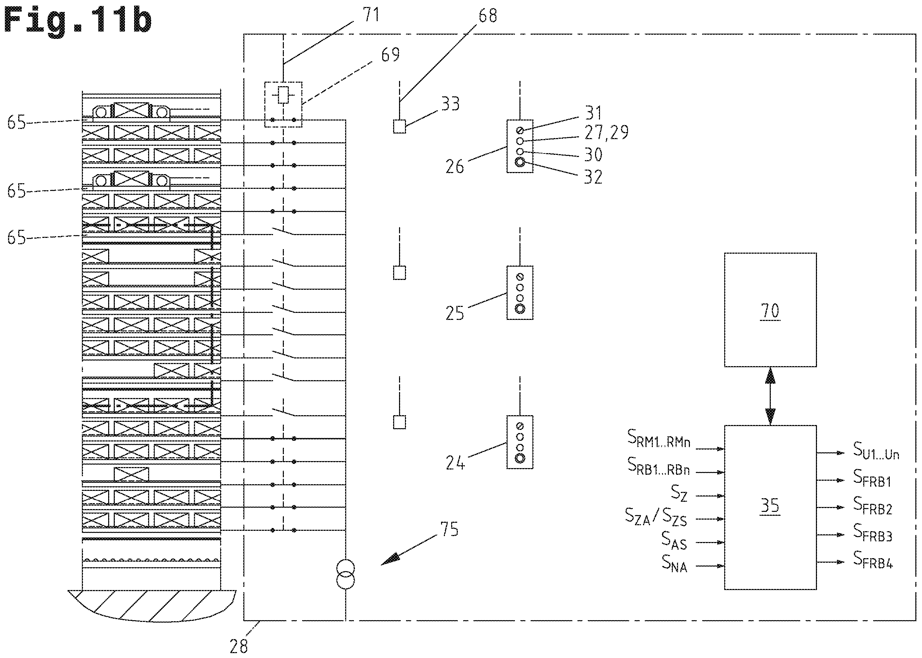

Jede der Schaltvorrichtungen 24, 25, 26 (siehe Fig. 11b) umfasst ein Schaltmittel 27 (Betriebsartenwahlschalter) mittels welchem die Betriebsart zwischen dem Automatikbetrieb und Sicherheitsbetrieb manuell umgeschaltet werden kann, um einer Steuerungsvorrichtung 28 (beispielweise eine Speicherprogrammierbare Steuerung "SPS") zu signalisieren, dass eine Bedienperson 23 in einen der Lagerbereiche 7, 8, 9 eintreten möchte. Der Automatikbetrieb wird unterbrochen, wenn auf Sicherheitsbetrieb geschaltet und die Steuerungsvorrichtung 28 von der Schaltvorrichtung 24, 25, 26 ein Betriebsartenänderungssignal erhält. Ferner kann jede der Schaltvorrichtungen 24, 25, 26 ein Ausgabemittel 29 umfassen, an welcher eine Zugangsmeldung für den gefahrenlosen Zugang der Bedienperson 23 in den Lagerbereich 7, 8, 9, insbesondere optisch oder akustisch signalisiert wird. Hierzu wird von der Steuerungsvorrichtung 28 ein Freigabesignal erzeugt, welches die Ausgabe der Zugangsmeldung bewirkt. Das Freigabesignal wird erst erzeugt, wenn von den Steuereinheiten der Regalbediengeräte 10; 10'; 10" an die Steuerungsvorrichtung 28 ein Bestätigungssignal und Rückmeldesignal je Regalbediengerät 10; 10'; 10" übermittelt wurde, wie noch genauer beschrieben wird.

Auch kann jede der Schaltvorrichtungen 24, 25, 26 ein Befehlseingabemittel 30 umfassen, an welchem ein Betriebsartenänderungssignal(befehl) eingegeben werden kann, wenn der Sicherheitsbetrieb wieder in den Automatikbetrieb geschaltet werden soll. Dies ist erst möglich, wenn sich die Bedienperson 21 vollständig aus dem Lagerbereich 7, 8, 9 herausbewegt hat und die Zugangstür 19, 20, 21 wieder geschlossen ist.

Ferner kann jede der Schaltvorrichtungen 24, 25, 26 eine Schlüsselaufnahme 31 aufweisen. Die Schlüsselaufnahme 31 weist zwei Stellungen auf, eine Automatikbetriebsstellung und eine Sicherheitsbetriebsstellung. In der Automatikbetriebsstellung muss der Zugangsschlüssel in der Schlüsselaufnahme 31 sein und kann nicht entfernt werden. Um in die Sicherheitsbetriebsstellung zu gelangen, wird der Zugangsschlüssel zum Beispiel um seine Längsachse gedreht. Sobald der Zugangsschlüssel in der Sicherheitsbetriebsstellung ist, kann er abgezogen werden, das heißt von der Schaltvorrichtung 24, 25, 26 getrennt und entfernt werden. Die Steuerungsvorrichtung 28 steht mit der Schaltvorrichtung 24, 25, 26 in Verbindung und bekommt die jeweilige Stellung der Schaltvorrichtung 24, 25, 26 (Automatikbetriebsstellung oder Sicherheitsbetriebsstellung) automatisch signalisiert. Hierzu werden der Steuerungsvorrichtung 28 entweder ein erstes Zustandssignal in der Automatikbetriebsstellung oder eine zweites Zustandssignal in der Sicherheitsbetriebsstellung übermittelt. Die Schlüsselaufnahme dient zur Aufnahme eines jeweiligen Zugangsschlüssels. Die Zugangsschlüssel sind vorzugsweise alle unterschiedlich ausgebildet. Der Zugangsschlüssel passt dann nur zu der Zugangstür 19, 20, 21 des betreffenden Lagerbereiches 7, 8, 9.

Außerdem kann jede der Schaltvorrichtungen 24, 25, 26 mit einem Notaus-Eingabemittel 32 zur Eingabe eines Notaus-Signals ausgestattet werden.

Das Schaltmittel 27 und Ausgabemittel 29 kann in einer Baueinheit vereint sein und ist beispielweise ein Leuchtdrucktaster, wobei ein Druckknopf das Schaltmittel 27 und eine Lampe das Ausgabemittel 29 bilden. Die Lampe leuchtet, wenn der Automatikbetrieb läuft, sie blinkt, wenn der Druckknopf betätigt wird, und sie erlischt, wenn zumindest von den Steuereinheiten der Regalbediengeräte 10; 10'; 10" an die Steuerungsvorrichtung 28 ein Bestätigungssignal und Rückmeldesignal je Regalbediengerät 10; 10'; 10" übermittelt wurde, wie noch genauer in verschiedenen Ausführungen beschrieben wird.

Jeder Lagerbereich 7, 8, 9 kann auch eine elektromechanische Schließeinheit 33 zum Verriegeln und Entriegeln der Zugangstür 19, 20, 21 umfassen. Die Schließeinheit 33 umfasst einen Stellantrieb, beispielweise einen Elektromagnet. Der Stellantrieb wird von der Steuerungsvorrichtung 28 betätigt und die Zugangstür 19, 20, 21 über den Stellantrieb entriegelt, wenn ein erstes Freigabesignal (S_{FRB1}) und ein zweites Freigabesignal (S_{FRB2}) an die Auswerteeinheit 35 übermittelt wurden. Das erste Freigabesignal (S_{FRB1}) und zweite Freigabesignal (S_{FRB2}) wird von der Steuerungsvorrichtung 28 erzeugt, wenn dieser von den Steuereinheiten der Regalbediengeräte 10; 10'; 10" ein Bestätigungssignal und Rückmeldesignal je Regalbediengerät 10; 10'; 10" übermittelt wurde, wie noch genauer beschrieben wird.

Die Schaltvorrichtungen 24, 25, 26 sind über Steuerleitungen 34 mit einer die Steuerungsvorrichtung 28 aufweisenden Auswerteeinheit 35 verbunden, mittels welcher eingehende Signale/Befehle von einer Steuerlogik verarbeitet und ausgehende Signale/Befehle erzeugt werden, wie nachfolgend beschrieben.

Die in den Fig. 1 bis 3 gezeigte Ladegut-Manipulationseinheit 2 ist zwischen einander gegenüber liegenden Stirnseiten der Lagerregale 1 angeordnet und umfasst eine erste Ladegut-Hebevorrichtung 37a, eine erste Puffervorrichtung 38a, eine zweite Ladegut-Hebevorrichtung 37b und eine zweite Puffervorrichtung 38b.

Die Ladegut-Hebevorrichtungen 37a, 37b sind ortsfest aufgestellt und über je eine Steuereinheit 39a, 39b unabhängig voneinander angesteuert. Die Steuereinheit 39a, 39b ist beispielweise eine Steuerlogik, insbesondere eine Antriebssteuerung. Die Ladegut-Hebevorrichtungen 37a, 37b umfassen jeweils eine über einen Hubantrieb 40a, 40b heb- und senkbare Transportvorrichtung 41, 41b. Der Hubantrieb 40a, 40b umfasst einen schematisch dargestellten Antriebsmotor 93a, 93b, welcher mit der Steuereinheit 39a, 39b verbunden ist. Bevorzugt sind die Transportvorrichtungen 41, 41b jeweils auf einem Vertikalmast gelagert. Die Transportvorrichtungen 41, 41b umfassen jeweils eine über einen Förderantrieb 42a, 42b antreibbare Fördervorrichtung 43a, 43b mit einer parallel zur Regalgasse 3 verlaufenden Förderrichtung, wie durch die Pfeile in Fig. 1 angedeutet. Der Förderantrieb 42a, 42b umfasst einen schematisch dargestellten Antriebsmotor 94a, 94b, welcher mit der Steuereinheit 39a, 39b verbunden ist. Die Fördervorrichtungen 43a, 43b sind beispielweise ein Rollenförderer, Gurtförderer. Den Ladegut-Hebevorrichtungen 37a, 37b ist je eine Steuereinheit 39a, 39b zugeordnet, die ihrerseits über Steuerleitungen 44 mit der Steuerungsvorrichtung 28 kommuniziert und Ein- und/oder Auslagerbefehle von der Steuerungsvorrichtung 28 erhält. Der Hubantrieb 40a, 40b und der Förderantrieb 42a, 42b sind an die Steuereinheit 39a, 39b angeschlossen. Der Hubantrieb 40a, 40b und der Förderantrieb 42a, 42b werden entsprechend dieser Ein- und/oder Auslagerbefehle angesteuert. Der Förderantrieb 42a, 42b umfasst einen oder mehrere Antriebsmotoren, welche die Fördervorrichtung 43a, 43b antreiben. Ist ein Antriebsmotor vorgesehen, so kann dieser die Steuereinheit 39a, 39b umfassen oder ist dieser an die Steuereinheit 39a, 39b angeschlossen. Sind mehrere Antriebsmotoren vorgesehen, so können diese über eine Busleitung an die Steuereinheit 39a, 39b angeschlossen werden. Ist die Fördervorrichtung 43a, 43b ein Rollenförderer, können Förderrollen eingesetzt werden, bei denen der Antriebsmotor innerhalb einer Förderrolle angeordnet ist. Solche Förderrollen werden als "Motorrollen" bezeichnet.

Die Puffervorrichtungen 38a, 38b umfassen jeweils in Richtung der Regalgasse 3 an einer Seite der Ladegut-Hebevorrichtung 37a, 37b und in zumindest einigen der Regalebenen (RE) erste Bereitstellvorrichtungen 45 für das Zwischenpuffern eines oder mehrerer einzulagernder Ladegüter 6 sowie in Richtung der Regalgasse 3 an der anderen Seite der zweiten Ladegut-Hebevorrichtung 37a, 37b und in zumindest einigen der Regalebenen (RE) zweite Bereitstellvorrichtungen 46 für das Zwischenpuffern eines oder mehrerer auszulagernder Ladegüter 6. Wie gezeigt, sind die erste Bereitstellvorrichtungen 45 und zweite Bereitstellvorrichtungen 46 jeweils in allen Regalebenen (RE) angeordnet. Die ersten Bereitstellvorrichtungen 45 bilden einen ersten Pufferbereich, einen so genannten Einlager-Pufferbereich und die zweiten Bereitstellvorrichtungen 46 bilden einen zweiten Pufferbereich, einen so genannten Auslager-Pufferbereich, wobei jeder Ladegut-Hebevorrichtung 37a, 37b der erste und zweite Pufferbereich zugeordnet sind.

Die ersten Bereitstellvorrichtungen 45 der Puffervorrichtungen 38a, 38b bilden in allen Regalebenen (RE), in welchen diese angeordnet sind, jeweils eine Einlagerstrecke für die Ladegüter 6 und die zweiten Bereitstellvorrichtungen 46 der Puffervorrichtungen 38a, 38b bilden in allen Regalebenen (RE), in welchen diese angeordnet sind, jeweils eine Auslagerstrecke für die Ladegüter 6. Die Bereitstellvorrichtungen 45, 46 weisen nach dieser Ausführung jeweils eine über einen Förderantrieb 47a, 47b, 48a, 48b antreibbare Fördervorrichtung, beispielweise Rollenförderer, auf. Die Bereitstellfördervorrichtungen 45, 46 bilden demnach motorisch angetriebene Bereitstellfördervorrichtungen. Jeder Bereitstellvorrichtung 45, 46 ist eine Steuereinheit 49a, 49b, 50a, 50b, beispielweise eine Steuerlogik, insbesondere eine Antriebssteuerung, zugeordnet. Der Förderantrieb 47a, 47b, 48a, 48b umfasst einen oder mehrere Antriebsmotoren, welche die Förderrollen antreiben. Ist ein Antriebsmotor vorgesehen, so kann dieser die Steuereinheit 49a, 49b, 50a, 50b umfassen oder ist dieser an die Steuereinheit 49a, 49b, 50a, 50b angeschlossen. Sind mehrere Antriebsmotor vorgesehen, so können diese über eine Busleitung an die Steuereinheit 49a, 49b, 50a, 50b angeschlossen werden. Der Antriebsmotor kann auch innerhalb einer Förderrolle angeordnet sein. Solche Förderrollen werden als "Motorrollen" bezeichnet.

Den Bereitstellvorrichtungen 45, 46 ist je eine Steuereinheit 49a, 49b, 50a, 50b zugeordnet, die ihrerseits über Steuerleitungen 51 mit der Steuerungsvorrichtung 28 kommuniziert und Ein- und/oder Auslagerbefehle von der Steuerungsvorrichtung 28 erhält. Die Förderantriebe 47a, 47b, 48a, 48b sind an die Steuereinheit 49a, 49b, 50a, 50b angeschlossen. Die Förderantriebe 47a, 47b, 48a, 48b werden entsprechend dieser Ein- und/oder Auslagerbefehle angesteuert.

Wie auch aus Fig. 1 ersichtlich, verlaufen die vorderen Längstraversen 12 entlang der Lagerregale 1 und der Ladegut-Manipulationseinheit 2 (Ladegut-Hebevorrichtung 37a, 37b und Puffervorrichtungen 38a, 38b) in Längsrichtung der Regalgasse 3 (x-Richtung) und in zumindest einigen der Regalebenen (RE), bevorzugt in jeder Regalebene (RE). Die Regalbediengeräte 10 können zum Einlagern von Ladegütern 6 und Auslagern von Ladegütern 6 entlang der Längstraversen 12 verfahren werden, wobei einerseits über deren Lastaufnahmevorrichtung 17 auszulagernde Ladegüter 6 von den Lagerplätzen 11 entnommen und auf die Bereitstellvorrichtungen 46 der Puffervorrichtung 38a oder Puffervorrichtung 38b abgeben werden können, und andererseits über deren Lastaufnahmevorrichtung 17 einzulagernde Ladegüter 6 von der Bereitstellvorrichtungen 45 der Puffervorrichtung 38a oder Puffervorrichtung 38b entnommen und auf Lagerplätze 11 abgeben werden können.

Im Detail wird das Einlagern und Auslagern von Ladegütern 6 mittels der Fördertechniken 4, 5, der Ladegut-Manipulationseinheit 2 und der Regalbediengeräte 10 in der WO 2013/090970 A2 beschrieben.

Die Fördertechniken 4, 5 sind aus Gründen der besseren Übersicht in Fig. 1 nur abschnittsweise dargestellt. Die Fördertechnik 4 zum Antransport von Ladegütern 6 zur Ladegut-Hebevorrichtung 37a, 37b und die Fördertechnik 5 zum Abtransport von Ladegütern 6 von der Ladegut-Hebevorrichtung 37a, 37b verlaufen parallel zur Regalgasse 3 unterhalb der Lageregale 1 und bilden eine Fördertechnikebene (FE) aus.

Die heb- und senkbare Transportvorrichtung 41a, 41b kann auf Höhe der Fördertechnikebene (FE) zwischen die einander gegenüber liegenden Fördertechniken 4, 5 und auf Höhe der Regalebenen (RE) zwischen die einander gegenüber liegenden Bereitstellvorrichtungen 45, 46 positioniert werden, um einzulagernde/auszulagernde Ladegüter 6 zwischen der Transportvorrichtung 41a, 41b und der jeweiligen Fördertechnik 4, 5 sowie zwischen der Transportvorrichtung 41a, 41b und der jeweiligen Bereitstellvorrichtung 45, 46 der ersten/zweiten Puffervorrichtung 38a, 38b zu fördern.

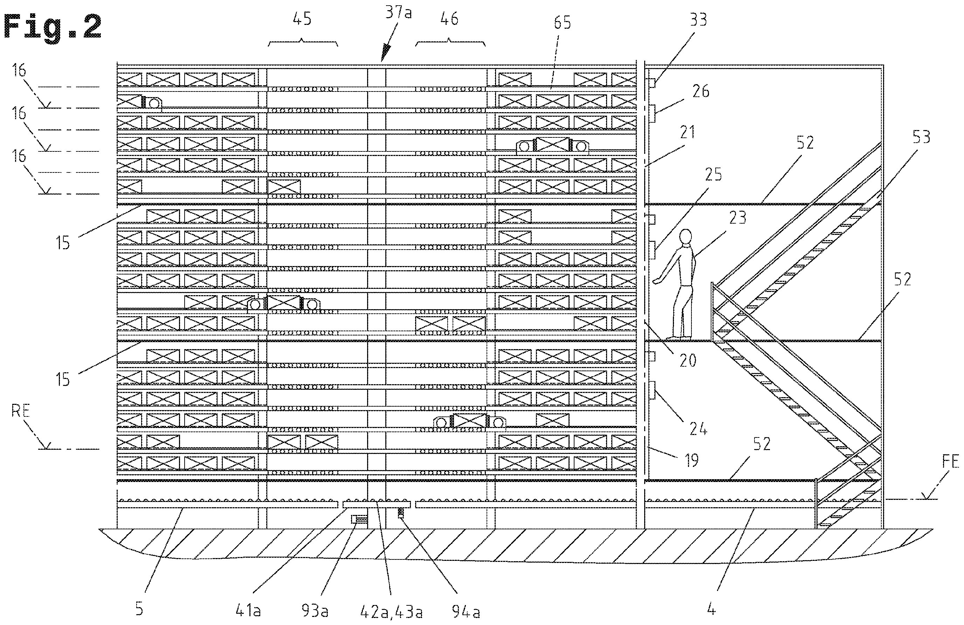

Wie in den Fig. 1 und 2 ersichtlich, umfasst das Regallagersystem stirnseitig zu den Lagerregalen 1 je Lagerbereich 7, 8, 9 Bühnen 52, die über eine Treppe 53 erreichbar sind.

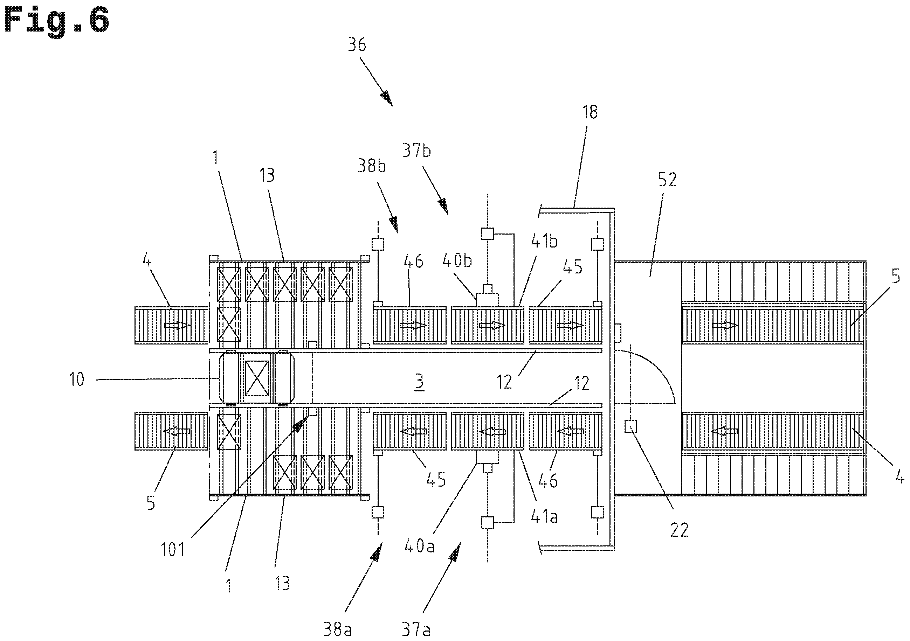

Nach einer anderen Ausführung, wie in Fig. 6 gezeigt, ist die Ladegut-Manipulationseinheit 36 stirnseitig vor den Lagerregalen 1 angeordnet und umfasst die erste Ladegut-Hebevorrichtung 37a, die erste Puffervorrichtung 38a, die zweite Ladegut-Hebevorrichtung 37b und die zweite Puffervorrichtung 38b. Der Aufbau der Ladegut-Manipulationseinheit 36 entspricht jenem der Ladegut-Manipulationseinheit 2 in Fig. 1. Auch nach dieser Ausführung verlaufen die vorderen Längstraversen 12 entlang der Lagerregale 1 und der Ladegut-Manipulationseinheit 36 (Ladegut-Hebevorrichtung 37a, 37b und Puffervorrichtungen 38a, 38b) in Längsrichtung der Regalgasse 3 (x-Richtung) und in zumindest einigen der Regalebenen (RE), bevorzugt in jeder Regalebenen (RE). Das Einlagern und Auslagern von Ladegütern 6 kann auf oben beschriebene Weise erfolgen.

Auch können die oben beschriebenen Ladegut-Manipulationseinheiten 2, 36 gemäß den Fig. 1 und 6, daher mit der in den Lagerregalen 1 integriert oder stirnseitig vor den Lagerregalen 1 angeordneten Ladegut-Manipulationseinheit 2, 36, auch jeweils bloß eine einzige Ladegut-Hebevorrichtung 37a und eine einzige Puffervorrichtung 38a aufweisen, wie dies jedoch nicht weiter dargestellt ist.

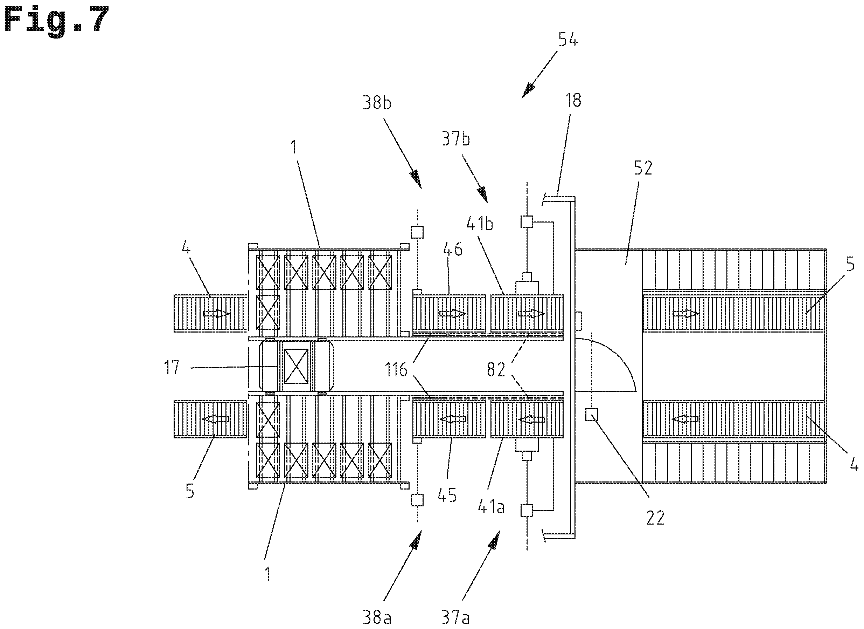

Gemäß einer Ausführung nach Fig. 7, ist die Ladegut-Manipulationseinheit 54 stirnseitig vor den Lagerregalen 1 angeordnet und umfasst die erste Ladegut-Hebevorrichtung 37a, die erste Puffervorrichtung 38a, die zweite Ladegut-Hebevorrichtung 37b und die zweite Puffervorrichtung 38b.

Die ersten Bereitstellvorrichtungen 45 bilden einen ersten Pufferbereich, einen so genannten Einlager-Pufferbereich und die zweiten Bereitstellvorrichtungen 46 bilden einen zweiten Pufferbereich, einen so genannten Auslager-Pufferbereich, wobei der ersten Ladegut-Hebevorrichtung 37a der erste Pufferbereich und der zweiten Ladegut-Hebevorrichtung 37b der zweite Pufferbereich zugeordnet ist. Auch nach dieser Ausführung verlaufen die vorderen Längstraversen 12 entlang der Lagerregale 1 und der Ladegut-Manipulationseinheit 54 (Ladegut-Hebevorrichtung 37a, 37b und Puffervorrichtungen 38a, 38b) in Längsrichtung der Regalgasse 3 (x-Richtung) und in zumindest einigen der Regalebenen (RE), bevorzugt in jeder Regalebenen (RE). Das Einlagern und Auslagern von Ladegütern 6 kann auf oben beschrieben Weise erfolgen.

Die erste Puffervorrichtung 38a und zweite Puffervorrichtung 38b umfassen nach dieser Ausführung jeweils in Richtung der Regalgasse 3 ausschließlich an einer der Seiten der ersten Ladegut-Hebevorrichtung 37a, 37b und in zumindest einigen der Regalebenen (RE) die Bereitstellvorrichtungen 45, 46 für das Zwischenpuffern eines oder mehrerer einzulagernder und auszulagernder Ladegüter 6.

Natürlich ist es auch nach dieser Ausführung möglich, dass die Ladegut-Manipulationseinheit 54 in den Lagerregalen 1 integriert angeordnet ist.

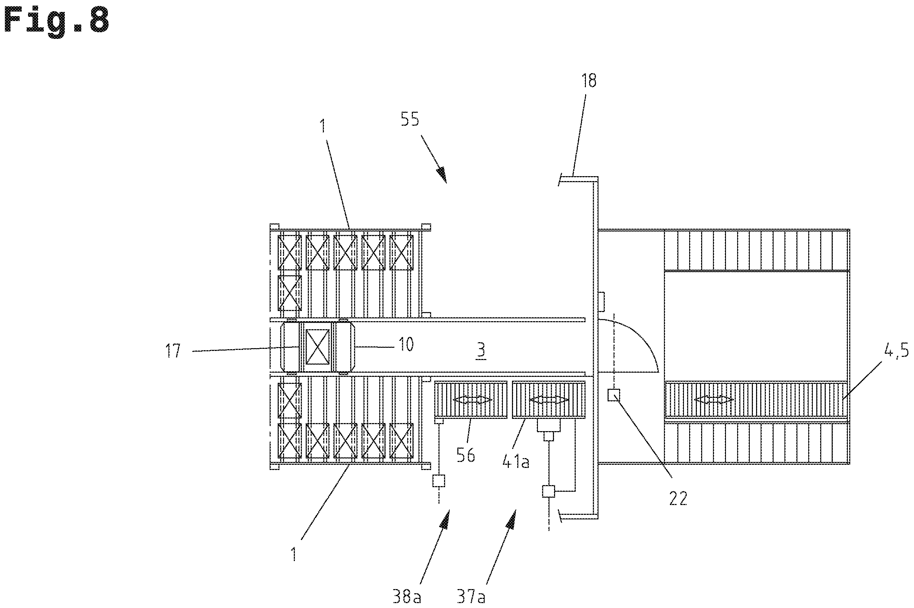

In Fig. 8 ist eine Ausführung gezeigt, bei der die Ladegut-Manipulationseinheit 55 stirnseitig vor den Lagerregalen 1 angeordnet ist. Diese umfasst die erste Ladegut-Hebevorrichtung 37a und die erste Puffervorrichtung 38a.

Die Puffervorrichtung 38a umfasst in Richtung der Regalgasse 3 an einer einzigen Seite der Ladegut-Hebevorrichtung 37a und in zumindest einigen der Regalebenen (RE) angeordnete Bereitstellvorrichtungen 56 für das Zwischenpuffern eines oder mehrerer einzulagernder und/oder auszulagernder Ladegüter 6. Dabei sei noch erwähnt, dass im Gegensatz zu den zuvor beschriebenen Ausführungsformen bei den hier eingesetzten Bereitstellvorrichtungen 56 in jeder Regalebene (RE) auch ein Reversierbetrieb vorgesehen sein kann. Umfassen die Bereitstellvorrichtungen 56 Fördervorrichtungen, können diese die Förderrichtungen reversieren, wie mit dem Doppelpfeil angedeutet. Die Bereitstellfördervorrichtungen 56 bilden demnach motorisch angetriebene Bereitstellfördervorrichtungen. Damit können sowohl Einlagervorgänge als auch Auslagervorgänge der Ladegüter 6 in den jeweiligen Regalebenen (RE) durchführt werden. Dies deshalb, da nur auf einer Seite der Ladegut-Hebevorrichtung 37a die Bereitstellvorrichtungen 56 vorgesehen sind. Sollten die Bereitstellvorrichtungen 56 so ausgebildet sein, dass diese einen Längstransport von Ladegütern 6 in Richtung der Regalgasse 3 durchführen können, können diese auch als Bereitstell-Fördervorrichtungen mit Reversierbetrieb bezeichnet werden. Die Bereitstellvorrichtungen 56 bilden einen gemeinsamen Pufferbereich, daher einen so genannten Einlager- und Auslager-Pufferbereich.

Natürlich ist es auch nach dieser Ausführung möglich, dass die Ladegut-Manipulationseinheit 55 in den Lagerregalen 1 integriert angeordnet ist.

Es sei an dieser Stelle hingewiesen, dass die oben beschriebenen Figuren bloß einen Auszug aus einer Vielzahl unterschiedlicher Möglichkeiten für den Aufbau eines Regallagersystems darstellen soll. Das Regallagersystem könnte genauso gut auch entsprechend der Offenbarung in der EP 2 530 035 B1, EP 2 543 611 A1 oder EP 2 566 789 B1 ausgebildet sein.

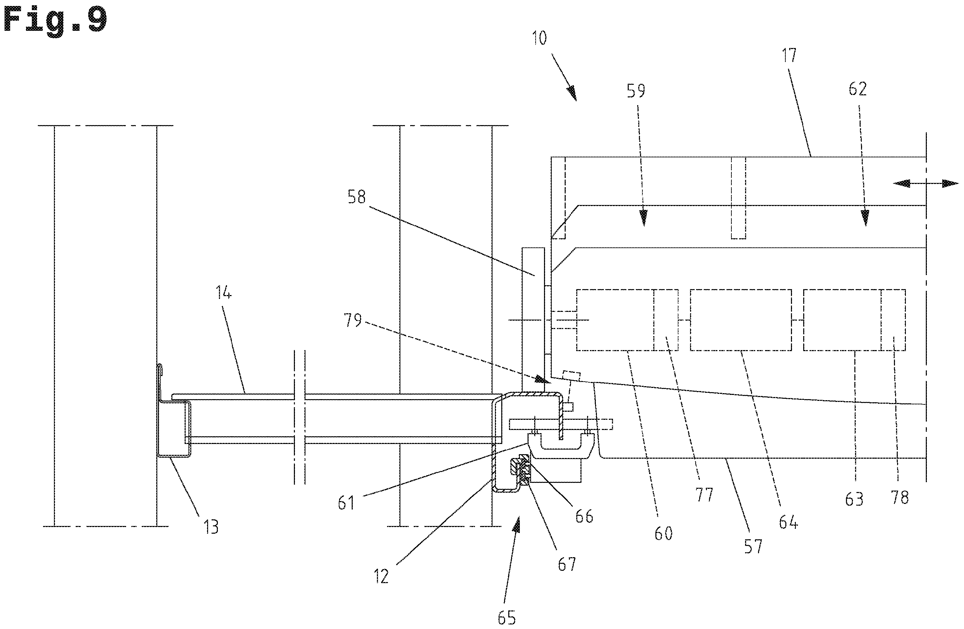

In Fig. 9 ist noch eine mögliche Ausgestaltung eines Regalbediengerätes 10 gezeigt, welches beispielweise als Einebenenregalbediengerät ausgebildet ist. Ein solches Einebenenregalbediengerät ist beispielweise aus der WO 2013/013252 A1 bekannt.

Das Regalbediengerät 10 weist, wie auch im Zusammenhang mit den vorhergehenden Fig. ersichtlich, einen Grundrahmen 57, Laufräder 58, einen Fahrantrieb 59 mit einem Antriebsmotor 60 zum Antrieb mindestens eines Laufrades 58, eine Führungsvorrichtung 61 mit Seitenführungsrädern, einen Stellantrieb 62 mit einem Antriebsmotor 63 zum Antrieb der Lastaufnahmevorrichtung 17, eine Steuereinheit 64 sowie die Lastaufnahmevorrichtung 17, beispielweise zur Einlagerung und Auslagerung von Ladegütern 6 in ein bzw. aus einem Lagerregal 1 auf. Die Lastaufnahmevorrichtung 17 umfasst beispielweise nach beiden Seiten relativ zum Förderfahrzeug 10 ausfahrbare Teleskoparme (wie in Fig. 9 durch den Doppelpfeil angedeutet) und jeweils an diesen angeordnete (in Fig. 9 in strichlierte Linien schematisch eingetragene) Mitnehmer zum Erfassen eines oder mehrerer Ladegüter 6. Eine solche Lastaufnahmevorrichtung 17 ist beispielweise aus der EP 2 351 698 A1 bekannt.

Wie in Fig. 9 gezeigt, kann die Energie- und/oder Datenversorgung des Regalbediengerätes 10, insbesondere der Antriebsmotoren 60, 63 und der Steuereinheit 64 über eine Schleifleitungsanordnung 65 erfolgen, welche je Fahrebene 16 an je einer der vorderen Längstraversen 12 (Führungsschienen) befestigt ist und sich über die gesamte Länge der Längstraverse 12 erstreckt.

Das Regalbediengerät 10 umfasst seinerseits Stromabnehmer 66 und kontaktiert damit Schleifleitungen 67 der Schleifleitungsanordnung 65 zur Energie- und/oder Datenversorgung.

Es ist also möglich, dass das Regalbediengerät 10 über die Schleifleitungsanordnung 65 nicht nur mit Energie (Motor- bzw. Steuerströme) sondern auch mit Daten (Datenübertragungssignale bzw. Fahr- und/oder Lagerbefehle und dgl.) zur Steuerung des Fahrantriebes 59 des Regalbediengerätes 10 und des Stellantriebes 62 für die Lastaufnahmevorrichtung 17 versorgt wird. Dabei können über dieselben Schleifleitungen 67 auch Daten für das Regalbediengerät 10 auf den Strom für die Versorgung des Regalbediengerätes 10 übertragen werden. Die Steuereinheit 64 des Regalbediengerätes 10 ist mit einer Vorrichtung (nicht dargestellt) zur Demodulation der Daten aus dem Strom ausgestattet. Außerdem ist die Steuereinheit 64 für die bidirektionale Datenübertragung über die Schleifleitungsanordnung 67 mit der zentralen Steuerungsvorrichtung 28 verbunden.

So können z.B. aufgrund unterschiedlich verwendeter Frequenzen für die Energie sowie die Daten, diese über einen Filter am jeweiligen Regalbediengerät 10 jeweils getrennt voneinander abgenommen werden. Dies ist im Detail in der DE 10 2010 030 998 A1 beschrieben.

Andererseits kann über eine Schleifleitungsanordnung 65 auch bloß die Energieversorgung für das Regalbediengerät 10, insbesondere die Antriebsmotoren 60, 63 und die Steuereinheit 64 erfolgen. Die Datenversorgung (Fahr- und/oder Lagerbefehle und dgl.) zur Steuerung des Fahrantriebes 59 des Regalbediengerätes 10 und des Stellantriebes 62 für die Lastaufnahmevorrichtung 17, daher die Übermittlung der Fahr- und/oder Lagerbefehle, erfolgen hingegen über eine drahtlose Nahkommunikationsverbindung. Dies kann beispielsweise über eine Infrarot-Datenübertragung oder eine Funkverbindung erfolgen, beispielsweise WLAN, Bluetooth oder ZigBee. Dabei ist die Steuereinheit 64 des Regalbediengerätes 10 zur bidirektionalen Datenübertragung über das drahtlose Kommunikationsnetzwerk mit der zentralen Steuerungsvorrichtung 28 verbunden.

Alternativ wäre es auch möglich, dass das jeweilige Regalbediengerät 10 mit einer förderfahrzeugeigenen elektrischen Speichervorrichtung, wie einem Akkumulator, z.B. einem Kondensator, wie einem sogenannten "PowerCap" ausgestattet ist. In diesem Fall ist das jeweilige Regalbediengerät 10, insbesondere der Fahrbetrieb 59 und Stellantrieb 62 für die Lastaufnahmevorrichtung 17 schienenungebunden mit Energie versorgt. Die Nachladung der Speichervorrichtung erfolgt z.B. in unregelmäßigen Zeitintervallen, z.B. gesteuert in Abhängigkeit vom Ladezustand und ggf. zusätzlich in Abhängigkeit von der momentanen Arbeitsanforderung an das Regalbediengerät 10. In diesem Fall könnte die Datenversorgung über die Schleifleitungsanordnung 65 oder über die drahtlose Nahkommunikationsverbindung erfolgen.

Die unterschiedlichen Ausführungen für die Energie- und/oder Datenversorgung sind auch auf die Ausführungen der Regalbediengeräte 10'; 10" gemäß den Fig. 4 und 5 anwendbar.

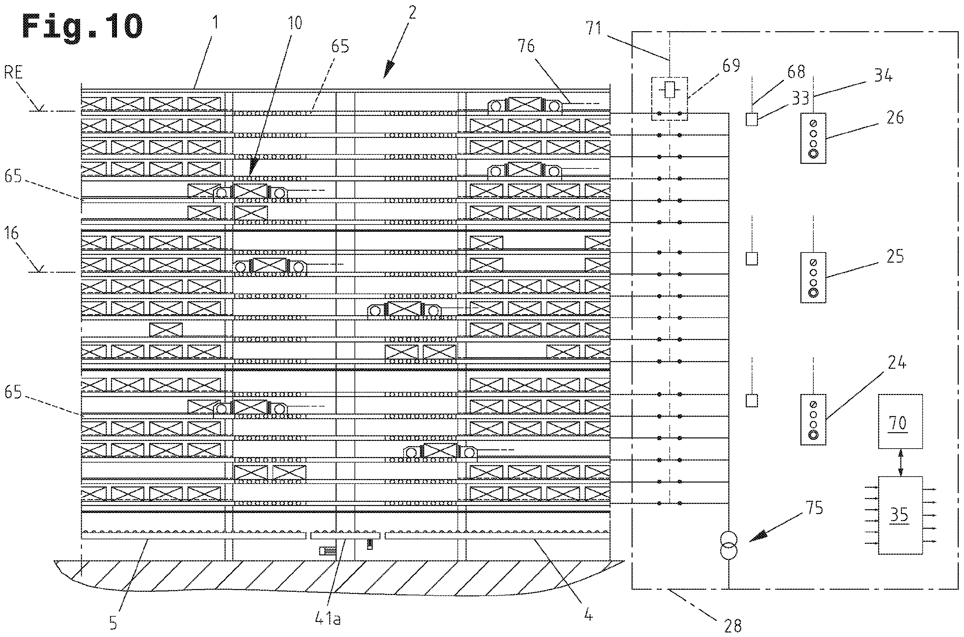

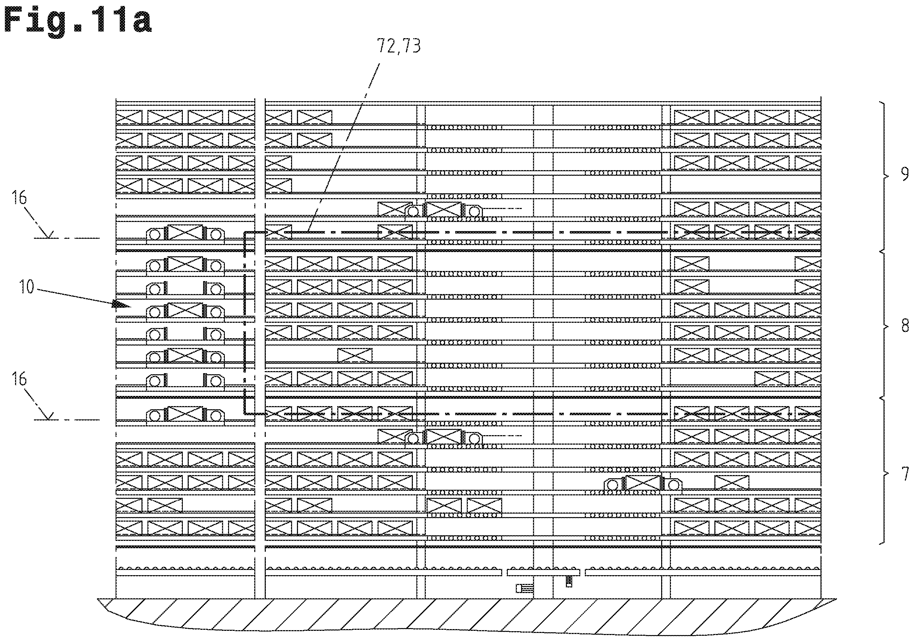

In den Fig. 10, 11a, 11b ist eine erste Ausführung eines Steuerungssystems für das Regallagersystem mit den Regalbediengeräten 10 gemäß der Ausführung in den Fig. 1 bis 3 gezeigt. Dabei zeigt Fig. 10 einen Automatikbetrieb für die Regalbediengeräte 10, in welchem sämtliche Regalbediengeräte 10 (automatisch) im Einlager- und Auslagerbetrieb betrieben werden. Fig. 11a, 11b zeigt einen Sicherheitsbetrieb, in welchem in einigen Fahrebenen 16 Regalbediengeräte 10 in eine Haltepositionen bewegt und danach in einen für die Bedienperson "ungefährlichen" Ruhezustand geschaltet werden, während Regalbediengeräte 10 in anderen Fahrebenen 16 nach wie vor (automatisch) betrieben werden.

Die Steuerungsvorrichtung 28 (wie ausschließlich in Fig. 11b im Detail dargestellt) umfasst zumindest die Auswerteeinheit 35, eine Vielzahl von parallel anschaltbaren Schaltmodulen 69 und Mittel 70 zur selektiven und parallelen (gleichzeitigen) Anschaltung von einigen Schaltmodulen 69 (Sicherheitsbetrieb) oder sämtlichen Schaltmodulen 69 (Automatikbetrieb) sowie eine Spannungsquelle 75. In den Fig. 10 und 11b ist nur eines der Schaltmodule 69 vollständig dargestellt. Jeder Fahrebene 16 bzw. jedem Regalbediengerät 10 ist ein Schaltmodul 69 zugeordnet. Die Schaltmodule 69 sind über Steuerleitungen 71 mit dem Mittel 70 bzw. der Steuerungsvorrichtung 28 verbunden, insbesondere fest verdrahtet. Möglich wäre aber auch die Verwendung eines Bussystems (Feldbus), an welchen die Schaltmodule 69 angeschlossen sind, wobei dann jedes Schaltmodul 69 über Adressierung von dem Mittel 70 bzw. der Steuerungsvorrichtung 28 ansprechbar ist. Die Schaltmodule 69 sind beispielweise Schütze (Schaltschütze), daher elektrisch geschaltete Schalter oder elektronische Schalter. Bevorzugt werden die Schütze mit zwangsgeführten Kontakten ausgeführt. Das Mittel 70 kommuniziert mit der Auswerteeinheit 35 und sind beispielweise analoge/digitale Eingänge/Ausgänge, wie durch die Verbindungslinie in Fig. 11b angedeutet.

Die Anzahl der selektiv und parallel (gleichzeitig) angeschalteten Schaltmodule 69 basiert auf einem räumlichen Zugriffsbereich 72, wie in den Fig. 3, 11a, 11b schematisch eingetragen, für die Bedienperson 23 innerhalb eines Lagerbereiches 8, in welchem die Bedienperson 23 zutritt, und von diesem auf einen oberhalb und/oder unterhalb liegenden Lagerbereich 7, 9.

Der räumliche Zugriffsbereich 72 ist nach dieser Ausführung grundsätzlich in einer y-z-Richtung durch den (theoretischen) Bewegungsbereich eines Armes oder Fußes der Bedienperson 23 und in einer x-Richtung durch den Gehweg der Bedienperson 23 entlang der Regalgasse 3 definiert, wenn sich die Bedienperson 23 in einem der Lagerbereiche 7, 8, 9, beispielweise im Lagerbereich 8 aufhält. Die dritte Dimension (x-Richtung) kann sich bei einer kurzen Regalgasse 3 über die gesamte Länge der Regalgasse 3 und bei einer langen Regalgasse 3 auch nur über einen Längenabschnitt der Regalgasse 3 erstrecken, daher könnten auch mehr als ein Zugriffsbereich 72 bzw. Schutzbereich 73 entlang der betreffenden Regalgasse 3 und des betreffenden Lagerbereiches 7, 8, 9 definiert werden.

In der Darstellung in den Fig. 3, 11a, 11b ist der Zugriffsbereich 72 vom mittleren Lagerbereich 8 bis in den darunter liegenden Lagerbereich 7 und darüber liegenden Lagerbereich 9 ausgedehnt. Dabei erstreckt sich der Zugriffsbereich 72 (in der y-z-Richtung) im mittleren Lagerbereich 8 über sämtliche Fahrebenen 16 und im unteren und oberen Lagerbereich 7, 9 jeweils nur über eine Fahrebene 16 oder eine Gruppe von Fahrebenen 16, beispielweise zwei bis vier Fahrebenen 16.

Würde die Bedienperson 23 hingegen in den unteren Lagerbereich 7 eintreten, erstreckt sich der Zugriffsbereich 72 im unteren Lagerbereich 7 über sämtliche Fahrebenen 16 und bis in den mittleren Lagerbereich 8. Im mittleren Lagerbereich 8 kann nur die dem unteren Lagerbereich 7 benachbarte Fahrebene 16 oder eine dem unteren Lagerbereich 7 benachbarte Gruppe von Fahrebenen 16, beispielweise zwei bis vier Fahrebenen 16 im Zugriffsbereich 72 der Bedienperson 23 liegen.

Müsste die Bedienperson 23 in den oberen Lagerbereich 9 eintreten, erstreckt sich der Zugriffsbereich 72 im oberen Lagerbereich 9 über sämtliche Fahrebenen 16 und bis in den mittleren Lagerbereich 8. Im mittleren Lagerbereich 8 kann nur die dem oberen Lagerbereich 9 benachbarte Fahrebenen 16 oder eine dem oberen Lagerbereich 9 benachbarte Gruppe von Fahrebenen 16, beispielweise zwei bis vier Fahrebenen 16 im Zugriffsbereich 72 der Bedienperson 23 liegen.

Es muss nun aus sicherheitstechnischen Gründen sichergestellt werden, dass der Zugriffsbereich 72 zu einem "gefährdungsfreien Bereich", daher einem Schutzbereich 73 wird, wenn die Bedienperson 23 in einem der Lagerbereiche 7, 8, 9 zutritt.

Dies wird durch das Umschalten vom Automatikbetrieb in den Sicherheitsbetrieb für die Regalbediengeräte 10 bewerkstelligt, daher wenn die Steuerungsvorrichtung 28 bzw. die Auswerteeinheit 35 von einer der Schaltvorrichtungen 24, 25, 26 ein Betriebsartenänderungssignal empfängt. Im Sicherheitsbetrieb werden einerseits jene Regalbediengeräte 10, welche sich im Automatikbetrieb in den Schutzbereich 73 hineinbewegen und/oder durch den Schutzbereich 73 hindurchbewegen würden, in die in Fig. 11a gezeigten Haltepositionen bewegt und in den Haltepositionen in einen "gefahrlosen Ruhezustand" geschalten, sodass keine Gefährdung für die Bedienperson 23 besteht, und andererseits jene Regalbediengeräte 10, welche außerhalb des Schutzbereiches 73 bewegt werden, weiterhin im Automatikbetrieb betrieben.

Im Sicherheitsbetrieb muss also sichergestellt sein, dass die Bedienperson 23 keiner Gefahr ausgesetzt wird, wenn sie sich in einem der Lagerbereiche 7, 8,9, beispielweise den Lagerbereich 8 befindet. Mit anderen Worten, dürfen in den anderen Lagerbereichen 7, 9 nur noch jene Regalbediengeräte 10 (automatisch) betrieben werden, die sich außerhalb des räumlichen Schutzbereiches 73 für die Bedienperson 23 befinden. Daher muss ein Sicherheitsabstand zu einem potenziellen Gefahrenbereich zumindest der benachbarten Lagerbereiche 7, 9 eingehalten werden. Innerhalb dieses räumlichen Schutzbereiches 73 kann die Bedienperson 23 agieren, wobei der Schutzbereich 73 basierend auf dem Zugriffsbereich 72 festgelegt wird.

Der Zugriffsbereich 72 wird vor der Inbetriebnahme des Regallagersystems in einem Analyseverfahren eruiert/konfiguriert und kann abhängig von der Körpergröße der Bedienperson 23 und/oder von dem Gefährdungsrisiko für die Bedienperson 23 durch die Bewegung der Regalbediengeräte 10 bestimmt werden. Der Zugriffsbereich 72 resultiert aus den Vorgaben für einen Sicherheitsabstand in einschlägigen Normen, beispielweise der DIN EN 13857.

Wie in den Fig. 9, 10, 11a, 11b ersichtlich, sind die je einer Fahrebene 16 zugeordneten Schleifleitungsanordnungen 65, mittels welcher die Regalbediengeräte 10, insbesondere der Fahrantrieb 59 für das Regalbediengerät 10 und der Stellantrieb 62 für die Lastaufnahmevorrichtung 17 sowie die Steuereinheit 64 mit Strom versorgt werden, über die Schaltmodule 69 an einen elektrischen Stromkreis angeschlossen. Der Stromkreis umfasst nach gezeigter Ausführung eine Spannungsquelle 75. Die Steuereinheit 64 ist beispielweise eine Steuerlogik und bildet eine Motorsteuerung.

Wie an einigen Regalbediengeräten 10 in Fig. 10, 11a, 11b gezeigt, sind die Regalbediengeräte 10 jeweils über eine Steuerleitung 76 mit der Steuerungsvorrichtung 28 bzw. Auswerteeinheit 35 verbunden, über welche Fahr- und Lagerbefehle der Steuerungsvorrichtung 28 und Bestätigungssignale (S_{RB1..RBn}) und Rückmeldesignale (S_{RM1..RMn}) übertragen werden. Die Steuerleitungen 76 können durch die Schleifleitungsanordnungen 65 oder ein drahtloses Kommunikationsnetzwerk, beispielsweise eine Infrarot-Datenübertragung oder WLAN, Bluetooth oder ZigBee, gebildet sein. Über die Steuerleitungen 76 ist eine bidirektionalen Signal- bzw. Datenübertragung zwischen der Steuereinheit 64 der Regalbediengeräte 10 und der Steuerungsvorrichtung 28 möglich.

Die Auswerteeinheit 35 weist eine nicht dargestellte Steuerlogik (Computerprogrammlogik) bzw. ein Rechnermodul (Central Processing Unit) auf, die dazu eingerichtet ist, eingehende Signale/Befehle, wie beispielweise
- Bestätigungssignale (S_{RB1..RBn}) und Rückmeldesignale (S_{RML1..RMn}) von den Steuereinheiten 64 der Regalbediengeräte 10,
- das Zustandssignal (S_{Z}) vom Sensor 22,
- das Betriebsartenänderungssignal (S_{AS}) von den Schaltvorrichtungen 24, 25, 26 (Schaltmittel 27),
- ein erstes Zustandssignal (S_{ZA}) (Automatikbetriebsstellung) von den Schaltvorrichtungen 24, 25, 26,
- ein zweites Zustandssignal (S_{ZS}) (Sicherheitsbetriebsstellung) von den Schaltvorrichtungen 24, 25, 26, und/oder
- ein Notaus-Signal (S_{NA}) vom Notaus-Eingabemittel 32
   auszuwerten und ausgehende Signale/Befehle zu erzeugen, wie beispielweise
- Fahr- und Lagerbefehle für den Fahrantrieb 59 und/oder Stellantrieb 62 der Regalbediengeräte 10,
- ein Umschaltsignal (S_{U}) für das Umschalten eines Schaltmodules 69; 69'; 69" zumindest einer Fahrebene 16 von einer Betriebsspannung für das Regalbediengerät 10 dieser zumindest einen Fahrebene 16 auf eine Gefahrenbetriebsspannung für das Regalbediengerät 10 dieser zumindest einen Fahrebene 16,
- ein erstes Freigabesignal (S_{FRB1}) für die elektromechanische Schließeinheit 33,
- ein zweites Freigabesignal (S_{FRB2}) für die elektromechanische Schließeinheit 33,
- ein drittes Freigabesignal (S_{FRB3}) für die Ausgabe der Zugangsmeldung an der Schaltvorrichtung 24, 25, 26, und/oder
- ein viertes Freigabesignal (S_{FRB4}) für die Steuereinheit 64 der Regalbediengeräte 10.

Ist eine Schließeinheit 33 nicht vorgesehen, so entfallen auch das erste Freigabesignal (S_{FRB1}) und zweite Freigabesignal (S_{FRB2}).

Die eingehenden Signale/Befehle und/oder ausgehenden Signale/Befehle werden über die Mittel 70 kommuniziert.

In Fig. 10 ist der Automatikbetrieb für die Regalbediengeräte 10 gezeigt, bei dem die Schaltmodule 69 bzw. deren Schalter in einen geschlossenen Schaltzustand geschaltet sind und die Schleifleitungsanordnungen 65 mit der Spannungsquelle 75 verbunden und in diese eine Betriebsspannung, beispielsweise 60V, eingespeist werden. Die Schaltmodule 69 erhalten hierzu über die Steuerleitungen 71 von der Steuerungsvorrichtung 28 Umschaltsignale (S_{U1..Un})/Umschaltbefehle, mittels welchem die Schaltmodule 69 bzw. deren Schalter in einem geschlossenen Schaltzustand geschaltet bleiben. Um im Automatikbetrieb die sicherheitstechnischen Anforderungen zu erfüllen, ist der Schutzzaun 18 vorgesehen, siehe Fig. 1.

In Fig. 11a, 11b ist der Sicherheitsbetrieb für einige der Regalbediengeräte 10 gezeigt, bei dem einige der Schaltmodule 69 bzw. deren Schalter vom geschlossenen Schaltzustand in einen geöffneten Schaltzustand "aktiv" geschaltet und die Schleifleitungsanordnungen 65 von der Spannungsquelle 75 getrennt und die Regalbediengeräte 10 spannungslos geschaltet werden. Eine Gefahrenbetriebsspannung beträgt Null Volt.

Im Sicherheitsbetrieb werden die Regalbediengeräte 10 beispielweise im Lagerbereich 8, in welchem die Bedienperson 23 zutritt, und zumindest eines der Regalbediengeräte 10 im oberhalb und unterhalb liegenden Lagerbereich 7, 9 in eine Halteposition bewegt. Wie in Fig. 11a eingetragen, betrifft dies die sechste bis dreizehnte Fahrebene 16.

Es sei erwähnt, dass es von Vorteil ist, wenn mit dem Wechsel vom Automatikbetrieb in den Sicherheitsbetrieb, die Regalbediengeräte 10 nicht "schlagartig" stillgesetzt werden, sondern durch von der Steuerungsvorrichtung 28 bzw. Auswerteeinheit 35 vorgegebene Fahr- und Lagerbefehle "kontrolliert" in die x-Haltepositionen (oder die x-Haltepositionen und z-Haltepositionen) verfahren werden. Auch können noch "anstehende" Lagerbefehle abgearbeitet werden, daher noch Einlagerungsvorgänge oder Auslagerungsvorgänge abgeschlossen werden, ehe die Regalbediengeräte 10 in die Haltepositionen bewegt werden.

Die Haltepositionen der Regalbediengeräte 10 können derart festgelegt werden, dass die Regalbediengeräte 10 in der Lotrechten übereinander liegen. Möglich ist es aber auch, dass die Haltepositionen der Regalbediengeräte 10 derart festgelegt werden, dass die Regalbediengeräte 10 in Richtung der Regalgasse 3 zueinander versetzt sind.

Die Haltepositionen sind in x-Richtung entlang der Regalgasse 3 und an von der Steuerungsvorrichtung 28 bzw. Auswerteeinheit 35 vorgegebenen x-Positionen definiert und werden von den Regalbediengeräten 10 durch Vorgabe entsprechender Fahrbefehle angefahren. Die Erfassung der Fahrposition des Regalbediengerätes 10 in x-Richtung kann über eine geeignete Sensorik erfolgen. Vorzugsweise ist ein Sensor 77 vorgesehen, welcher nach gezeigter Ausführung (Fig. 9) durch einen Drehgeber gebildet und am Antriebsmotor 60 angeordnet ist.

Es erweist sich von Vorteil, wenn je Regalbediengerät 10 auch eine Halteposition in z-Richtung senkrecht zur Regalgasse 3 definiert wird. Dies betrifft eine Stellbewegung der Lastaufnahmevorrichtung 17 in z-Richtung. In der Halteposition befindet sich die in z-Richtung vorzugsweise doppelseitig gegenüber einer Ausgangsstellung ausfahrbare Lastaufnahmevorrichtung 17 in der Ausgangsstellung (siehe Fig. 1 und 9). Die Halteposition der Lastaufnahmevorrichtung 17 bzw. des Regalbediengerätes 10 in z-Richtung wird durch Vorgabe entsprechender Fahrbefehle angefahren. Die Erfassung der Fahrposition des Regalbediengerätes 10 bzw. der Lastaufnahmevorrichtung 17 in z-Richtung kann über eine geeignete Sensorik erfolgen. Vorzugsweise ist ein Sensor 78 vorgesehen, welcher nach gezeigter Ausführung (Fig. 9) durch einen Drehgeber gebildet und am Antriebsmotor 63 angeordnet ist.

Haben die Regalbediengeräte 10 die x-Haltepositionen (oder die x-Haltepositionen und z-Haltepositionen) erreicht, so verharren diese solange in den Haltepositionen und sind diese solange in einen für die Bedienperson 23 gefahrenlosen bzw. bewegungslosen Ruhezustand geschalten, bis die Steuereinheit 64 von der Steuerungsvorrichtung 28, insbesondere der Auswerteeinheit 35 ein Freischaltsignal (S_{FRB4}) erhält.

Es ist aus sicherheitstechnischen Anforderungen von Vorteil, wenn von jedem Regalbediengerät 10, nach dem es seine x-Halteposition (oder die x-Halteposition und z-Halteposition) erreicht hat, mittels der Steuereinheit 64 ein Bestätigungssignal (S_{RB1..RBn}) erzeugt wird. Die Steuereinheit 64 jedes Regalbediengerätes 10 umfasst hierzu eine (nicht dargestellte) Elektronikschaltung, mittels welcher die Fahrbewegungen jedes Regalbediengerätes 10 in Richtung der Regalgasse 3 (x-Richtung) relativ zur Fahrebene 16 bzw. das Anfahren der x-Halteposition überwacht werden.

Man bedient sich einem Wegmesssystem 79 (Fig. 9), mittels welchem die Istposition jedes Regalbediengerätes 10 in Richtung der Regalgasse 3 erfasst wird. Das Wegmesssystem 79 umfasst beispielweise ein an der vorderen Längstraverse 12 über dessen Gesamtlänge angeordnetes Barcodeetikett mit einer Vielzahl von Barcodefeldern und ein am Regalbediengerät 10 angeordnetes Barcodelesegerät.

Zusätzlich kann von jedem Regalbediengerät 10, nach dem es seine Halteposition erreicht und an die Steuerungsvorrichtung 28 bzw. Auswerteeinheit 35 das Bestätigungssignal (S_{RB1..RBn}) übermittelt hat, mittels der Steuereinheit 64 auch ein Rückmeldesignal (S_{RM1..RMn}) erzeugt werden, sobald sich das entsprechende Regalbediengerät 10 in einem für die Bedienperson 23 gefahrenlosen bzw. bewegungslosen Ruhezustand befindet.

Wurden an der Steuerungsvorrichtung 28 bzw. Auswerteeinheit 35 die Bestätigungssignale (S_{RB1..RBn}) von den in die x-Halteposition (oder die x-Haltepositionen und z-Haltepositionen) bewegten (angehaltenen) Regalbediengeräten 10 empfangen, werden von der Steuerungsvorrichtung 28 bzw. Auswerteeinheit 35 Umschaltsignale (S_{U1..Un}) erzeugt. Diese Umschaltsignale (S_{U1..Un}) werden von dem Mittel 70 zur selektiven und parallelen Anschaltung von einigen der Schaltmodule 69, über die Steuerleitungen 71 denjenigen Schaltmodulen 69 zugeleitet, die den Fahrebenen 16 für die (angehaltenen) Regalbediengeräte 10 bzw. den Schleifleitungsanordnungen 65 für die (angehaltenen) Regalbediengeräte 10 zugeordnet sind. Durch Umschalten der Schaltmodule 69 werden der Antriebsmotor 60 für den Fahrantrieb 59 und der Antriebsmotor 63 für die Lastaufnahmevorrichtung 17 mit der Gefahrenbetriebsspannung versorgt. Dies bedeutet nach dieser Ausführung, dass die Gefahrenbetriebsspannung auf null Volt abgesenkt und der Antriebsmotor 60 für den Fahrantrieb 59 und der Antriebsmotor 63 für die Lastaufnahmevorrichtung 17 spannungslos geschalten werden. Ein selbsttätiges Losfahren des Regalbediengerätes 10 und ein selbsttätiges Verstellen der Lastaufnahmevorrichtung 17 ist damit zuverlässig vermieden. Mit anderen Worten sind die Antriebsmotoren 60, 63 durch das Umschalten auf die Gefahrenbetriebsspannung "antriebslos" und ist damit der gefahrenlose bzw. bewegungslose Ruhezustand des jeweiligen Regalbediengerätes 10 bzw. der Lastaufnahmevorrichtung 17 sichergestellt.

Die Steuereinheit 64 jedes (in der Halteposition angehaltenen) Regalbediengerätes 10 umfasst eine Elektronikschaltung, mittels welcher die Änderung der Betriebsspannung auf die Gefahrenbetriebsspannung erfasst und ein Rückmeldesignal (S_{RM1..RMn}) erzeugt wird. Dieses Rückmeldesignal (S_{RML1..RMn}) wird der Steuerungsvorrichtung 28 bzw. Auswerteeinheit 35 zugeleitet.

Mit dem Wechsel vom Automatikbetrieb in den Sicherheitsbetrieb, daher wenn die Steuerungsvorrichtung 28 bzw. die Auswerteeinheit 35 von einer der Schaltvorrichtungen 24, 25, 26 ein Betriebsartenänderungssignal empfängt, startet ein Überwachungszeitraum, innerhalb welchem die Regalbediengeräte 10 bei ordnungsgemäßer Funktion die x-Haltepositionen (oder optional die x-Haltepositionen und z-Haltepositionen) erreicht haben sollten. Der Überwachungszeitraum definiert eine Zeitspanne von beispielweise 60 Sekunden.

Erreichen die Regalbediengeräte 10 vor dem Ende des Überwachungszeitraumes, daher innerhalb der Zeitspanne, die x-Haltepositionen (oder optional die x-Haltepositionen und z-Haltepositionen), ergeht von jedem Regalbediengerät 10 an die Steuerungsvorrichtung 28 bzw. der Auswerteeinheit 35 das Bestätigungssignal (S_{RB1..RBn}) oder das Bestätigungssignal (S_{RB1..RBn}) und Rückmeldesignal (S_{RM1..RMn}). Hierzu wird über das Wegmesssystem 79 die x-Istposition für jedes Regalbediengerät 10 erfasst und die x-Istposition mit einer von der Steuerungsvorrichtung 28 vorgegebenen x-Sollposition für jedes Regalbediengerät 10 verglichen. Die x-Sollposition entspricht dabei der x-Halteposition für jedes Regalbediengerät 10. Bei ordnungsgemäßem Betrieb entspricht je Regalbediengerät 10 die x-Istposition der x-Sollposition.

In Fällen, in welchen der Fahrantrieb 59 eines Regalbediengerätes 10 funktionsuntüchtig oder nur bedingt funktionsfähig ist, ist zu erwarten, dass die Regalbediengeräte 10 zum Ende des Überwachungszeitraumes, daher innerhalb der Zeitspanne, die x-Haltepositionen nicht erreicht haben. Es kann hierfür vorgesehen werden, dass von dem Regalbediengerät 10 an die Steuerungsvorrichtung 28 bzw. der Auswerteeinheit 35 das Bestätigungssignal (S_{RB1..RBn}) oder das Bestätigungssignal (S_{RB1..RBn}) und Rückmeldesignal (S_{RM1..RMn}) ergeht, wenn das Ende des Überwachungszeitraumes erreicht, daher die Zeitspanne überschritten wird. Grundsätzlich könnte man über das Wegmesssystem 79 die Istposition für das funktionsuntüchtige oder nur bedingt funktionsfähige Regalbediengerät 10 auswerten. In diesem Fall muss durch die Bedienperson 23 das funktionsuntüchtige oder nur bedingt funktionsfähige Regalbediengerät 10 manuell beseitigt werden.

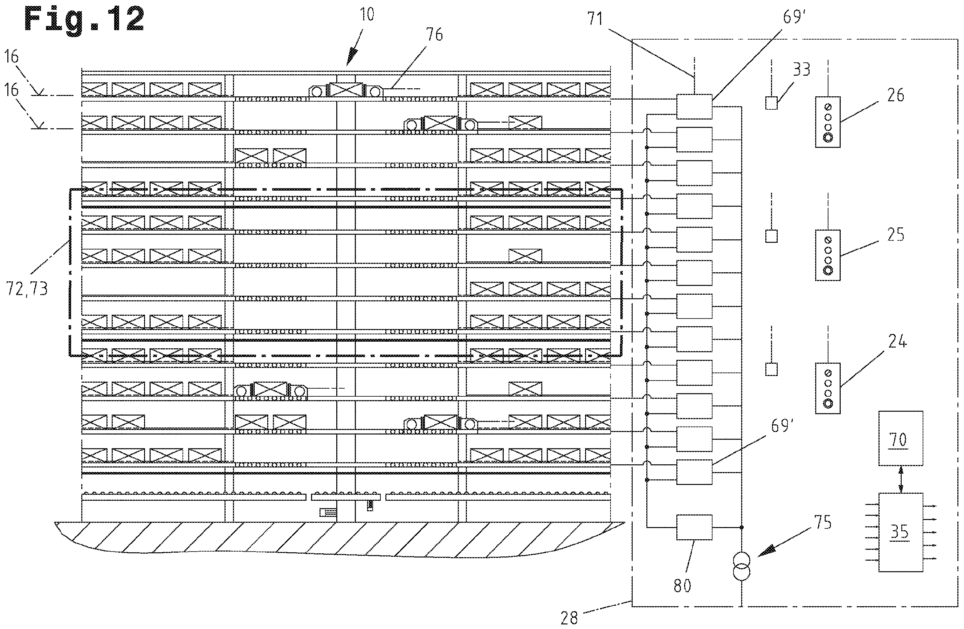

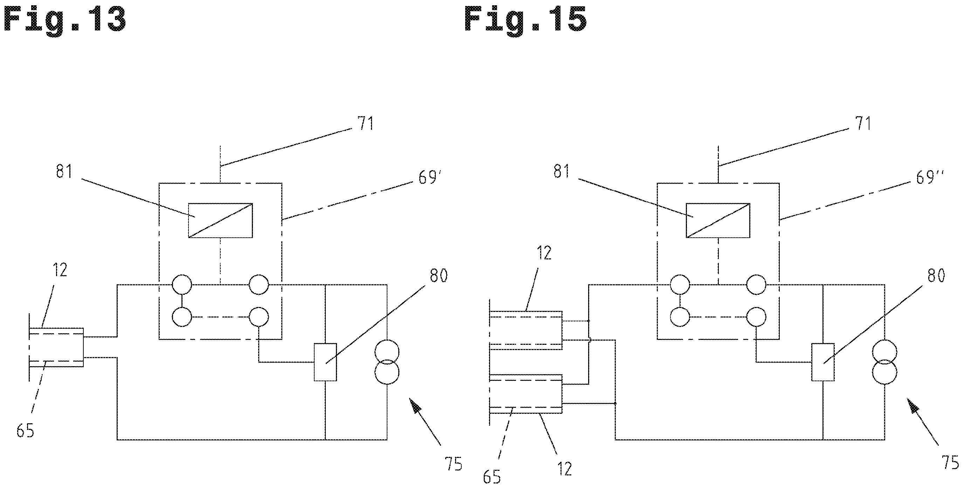

In den Fig. 12 und 13 ist eine zweite Ausführung eines Steuerungssystems für das Regallagersystem gezeigt, wobei in Fig. 13 das Schaltmodul 69' und der Stromkreis für eine Fahrebene 16 bzw. ein Regalbediengerät 10 in seinen unterschiedlichen Schaltzuständen dargestellt ist. Die obere Stellung eines Umschalters 81 (feste Linie) symbolisiert den Schaltzustand für einen Automatikbetrieb, wo die Betriebsspannung in sämtliche Schleifleitungsanordnungen 65 eingespeist wird, und die untere Stellung eines Umschalters 81 (strichlierte Linie) symbolisiert den Schaltzustand für einen Sicherheitsbetrieb, wo die Gefahrenbetriebsspannung in einige der Schleifleitungsanordnungen 65 eingespeist wird.

Die Steuerungsvorrichtung 28 umfasst die oben beschriebene Auswerteeinheit 35, die Spannungsquelle 75, einen Spannungskonverter 80, eine Vielzahl von parallel anschaltbaren Schaltmodulen 69' und die oben beschriebenen Mittel 70 zur selektiven und parallelen (gleichzeitigen) Anschaltung von einigen Schaltmodul 69' (Sicherheitsbetrieb) oder sämtlichen Schaltmodulen 69' (Automatikbetrieb). Jedes Schaltmodul 69' umfasst einen Umschalter 81. In Fig. 12 ist nur eines der Schaltmodule 69' vollständig dargestellt. Die Schaltmodule 69' sind über Steuerleitungen 71 mit dem Mittel 70 bzw. der Steuerungsvorrichtung 28 verbunden, insbesondere fest verdrahtet. Möglich wäre aber auch die Verwendung eines Bussystems (Feldbus), an welchen die Schaltmodule 69' angeschlossen sind, wobei dann jedes Schaltmodul 69' über Adressierung von dem Mittel 70 bzw. der Steuerungsvorrichtung 28 ansprechbar ist.

Die Anzahl der selektiv und parallel (gleichzeitig) angeschalteten Schaltmodule 69' basiert auf einem räumlichen Zugriffsbereich 72, wie in Fig. 12 schematisch eingetragen, für die Bedienperson 23 innerhalb eines Lagerbereiches 7, 8, 9, beispielweise dem Lagerbereich 8, in welchem die Bedienperson 23 zutritt, und von diesem auf einen oberhalb und/oder unterhalb liegenden Lagerbereich 7, 9.

Die Festlegung des räumliches Zugriffsbereiches 72 und des Schutzbereiches 73 ist oben im Detail beschrieben und ist auch auf diese Ausführung zu übertragen.

Der Spannungskonverter 80 und Umschalter 81 bilden eine Fahrsteuerung. Der Spannungskonverter 80 wandelt die von der Stromversorgung/Spannungsquelle 75 gelieferte Spannung auf ein niedrigeres Niveau, beispielsweise von 60V auf 24V. Mit Hilfe des Umschalters 81 kann die von der Spannungsquelle 75 gelieferte Spannung von beispielsweise 60V direkt auf die Schleifleitungsanordnungen 65 (Stromversorgungsschiene) geschaltet werden, oder es wird die konvertierte Spannung von beispielsweise 24V auf die Schleifleitungsanordnungen 65 (Stromversorgungsschiene) geschaltet.

Unterschiedliche Ausführungen der Motorsteuerung (Steuereinheit 64 des Regalbediengerätes 10) und Fahrsteuerung sind in der AT 513 977 A1 beschrieben.

Die Steuerungsvorrichtung 28 bzw. deren Fahrsteuerung setzt die Schleifleitungsanordnungen 65 (Stromversorgungsschiene), welche der Spannungsversorgung jener Regalbediengeräte 10 dienen, die sich im Automatikbetrieb in den Schutzbereich 73 hineinbewegen und/oder durch den Schutzbereich 73 hindurchbewegen würden, bevorzugt unter eine Gefahrenbetriebsspannung, wenn auf den Sicherheitsbetrieb gewechselt wird, das heißt wenn die Steuerungsvorrichtung 28 bzw. Auswerteeinheit 35 ein Betriebsartenänderungssignal erhält, mittels welchem der Wechsel vom Automatikbetrieb in den Sicherheitsbetrieb gemeldet wird. Der Gleichrichtwert/Effektivwert der Gefahrenbetriebsspannung liegt unter einem für das Bewegen des Regalbediengerätes 10 notwendigen Mindestgleichrichtwert/Mindesteffektivwert, jedoch über Null.

In vorteilhafter Weise kann die Steuereinheit 64 des Regalbediengerätes 10, zum Beispiel die Steuerelektronik der Steuereinheit 64, nach wie vor elektrisch versorgt werden, obwohl die Antriebsmotoren 60, 63 des Regalbediengerätes 10 bzw. der Lastaufnahmevorrichtung 17 aufgrund der niedrigen Spannung bewegungsunfähig sind. Das Spannungsniveau kann dabei so gewählt werden, dass es unterhalb der Anfahrspannung liegt und das stillstehende Regalbediengerät 10 nicht mehr losfahren bzw. die Lastaufnahmevorrichtung 17 verstellt werden kann, oder es kann sogar unter der Fahrspannung liegen, sodass auch ein sich bewegendes Regalbediengerät 10 anhält. Beispielsweise kann die Betriebsspannung im Normalbetrieb kleiner gleich 100V betragen und insbesondere bei 70V, bei 24V oder 48V liegen, wohingegen die Gefahrenbetriebsspannung beispielsweise kleiner gleich 24V betragen kann und insbesondere bei 5V oder 12V liegt, was für die Versorgung elektronischer Komponenten üblicherweise ausreichend ist. Denkbar wäre auch, dass nur wichtige Schaltkreise für den Betrieb durch die Gefahrenbetriebsspannung ausgelegt sind, andere Schaltkreise inklusive die Antriebsmotoren 60, 63 aber stillgelegt werden. Beispielsweise kann vorgesehen sein, dass Positionsgeber und Kommunikationsbausteine auch bei Anlegen nur der Gefahrenbetriebsspannung weiterhin uneingeschränkt arbeiten, sodass eine reibungslose Wiederaufnahme des Normalbetriebs nach einem Gefahrenbetrieb gewährleistet ist.

Durch die Trägheit des Regalbediengerätes 10 bzw. Lastaufnahmevorrichtung 17 ist es in der Regel ausreichend, wenn der Gleichrichtwert/Effektivwert der Gefahrenbetriebsspannung unter einem für das Bewegen des Regalbediengerätes 10 bzw. Lastaufnahmevorrichtung 17 notwendigen Gleichrichtwert/Effektivwert der Fahrspannung liegt. Für eine noch höhere Sicherheit kann aber auch vorgesehen sein, dass der Maximalwert der Gefahrenbetriebsspannung betragsmäßig unterhalb der Mindestfahrspannung liegt.

Die Schleifleitungsanordnungen 65 werden durch selektives Umschalten der Schaltzustände für die Schaltmodule 69' parallel angeschaltet und dabei entweder mit der Betriebsspannung oder mit der Gefahrenbetriebsspannung versorgt. Jene Regalbediengeräte 10, welche sich bei einem Automatikbetrieb in den Schutzbereich 73 hineinbewegen und/oder durch den Schutzbereich 73 hindurchbewegen würden, werden im Sicherheitsbetrieb vorerst in die Haltepositionen bewegt (wie ausschließlich in Fig. 11a eingetragen).

Sind die x-Haltepositionen (oder die x-Haltepositionen und z-Haltepositionen) erreicht, wird dies mit dem Bestätigungssignal (S_{RB1..RBn}) je Regalbediengerät 10 an die Steuerungsvorrichtung 28 bzw. Auswerteeinheit 35 gemeldet. Danach werden von der Steuerungsvorrichtung 28 bzw. Auswerteeinheit 35 Umschaltsignale (S_{U1..Un}) erzeugt. Diese Umschaltsignale (S_{U1..Un}) werden über die Mittel 70 zur selektiven und parallelen Anschaltung von einigen der Schaltmodule 69', über die Steuerleitungen 71 denjenigen Schaltmodulen 69' zugeleitet, die den Fahrebenen 16 für die (angehaltenen) Regalbediengeräte 10 bzw. den Schleifleitungsanordnungen 65 für die (angehaltenen) Regalbediengeräte 10 zugeordnet sind. Die Schaltmodule 69' bzw. die Umschalter 81 werden von der Steuerungsvorrichtung 28 entsprechend der Umschaltsignale (S_{U1..Un}) zwischen den Schaltzuständen umgeschaltet bzw. betätigt.

Zu diesem Zeitpunkt erfolgt das selektive Umschalten von einigen der Schaltmodule 69', womit die Regalbediengeräte 10 dieser Fahrebenen 16 bzw. deren die Antriebsmotoren 60, 63 nur noch mit der Gefahrenbetriebsspannung versorgt werden, deren Gleichrichtwert/Effektivwert unter einem für das Bewegen des Regalbediengerätes 10 notwendigen Mindestgleichrichtwert/Mindesteffektivwert, jedoch über Null liegt. Mit anderen Worten sind die Antriebsmotoren 60, 63 durch das Umschalten auf die Gefahrenbetriebsspannung "stillgelegt" und ist damit der gefahrenlose bzw. bewegungslose Ruhezustand des jeweiligen Regalbediengerätes 10 bzw. der Lastaufnahmevorrichtung 17 erreicht.

Die Steuereinheit 64 jedes Regalbediengerätes 10 umfasst eine Elektronikschaltung, mittels welcher die Änderung der Betriebsspannung auf die Gefahrenbetriebsspannung erfasst und ein Rückmeldesignal (S_{RML1..RMn}) erzeugt wird. Dieses Rückmeldesignal (S_{RML1..RMn}) wird der Steuerungsvorrichtung 28 bzw. Auswerteeinheit 35 zugeleitet.

Wie in Fig. 12 ersichtlich, werden die Regalbediengeräte 10 der vierten bis neunten Fahrebene 16 in eine Halteposition bewegt, während die Regalbediengeräte 10 der ersten bis dritten Fahrebene 16 und zehnten bis zwölften Fahrebene 16 weiterhin (automatisch) betrieben werden.

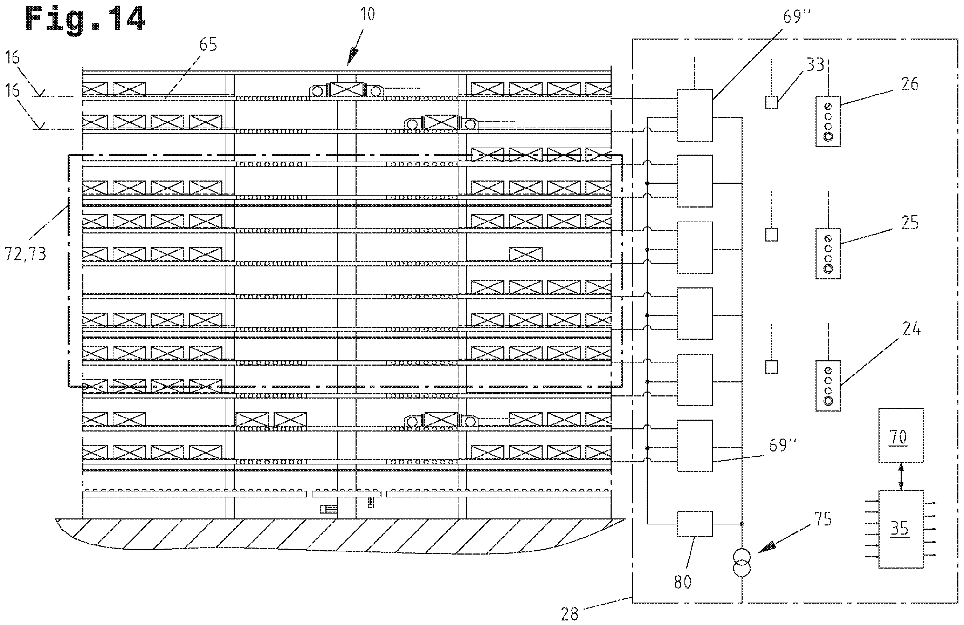

In den Fig. 14 und 15 ist eine Weiterbildung der Ausführung nach den Fig. 12 und 13 gezeigt. Nach dieser Ausführung wird über je ein Schaltmodul 69" eine Gruppe von Schleifleitungsanordnungen 65 entweder für einen Automatikbetrieb mit der Betriebsspannung oder für einen Sicherheitsbetrieb mit der Gefahrenbetriebsspannung versorgt. Beispielweise ist ein Schaltmodul 69" zwei Schleifleitungsanordnungen 65 bzw. zwei Fahrebenen 16 zugeordnet. Sind vier Fahrebenen 16 je Lagerbereich 7, 8, 9 vorgesehen, so sind je Lagerbereich 7, 8, 9 nur noch zwei Schaltmodule 69" erforderlich. Ein Schaltmodul 69" kann bei entsprechend hoher Anzahl an Fahrebenen 16, wobei jeder Fahrebene 16 eine Schleifleitungsanordnung 65 zugeordnet ist, gleichzeitig bzw. parallel mehr als zwei Schleifleitungsanordnungen 65 bzw. zwei Fahrebenen 16 zugeordnet werden. Sind sechs Fahrebenen 16 je Lagerbereich 7, 8, 9 vorgesehen und sind einem Schaltmodul 69" drei Schleifleitungsanordnungen 65 zugeordnet, so sind je Lagerbereich 7, 8, 9 nur zwei Schaltmodule 69" erforderlich. Zusammengefasst bedeutet dies, dass ein Schaltmodul 69" immer mehreren Schleifleitungsanordnungen 65 bzw. Regalbediengeräten 10 zugeordnet ist. Damit verringert sich der schaltungstechnische Aufwand und es reduzieren sich die Anschaffungskosten für die Steuerungsvorrichtung 28.

Die Steuerungsvorrichtung 28 umfasst die oben beschriebene Auswerteeinheit 35, die Spannungsquelle 75, einen Spannungskonverter 80, eine Vielzahl von parallel anschaltbaren Schaltmodulen 69" und die oben beschriebenen Mittel 70 zur selektiven und parallelen (gleichzeitigen) Anschaltung von einigen oder sämtlichen Schaltmodulen 69". Jedes Schaltmodul 69" umfasst einen Umschalter 81. Die Schaltmodule 69" sind über die Steuerleitungen 71 mit dem Mittel 70 bzw. der Steuerungsvorrichtung 28 verbunden, insbesondere fest verdrahtet. Möglich wäre aber auch die Verwendung eines Bussystems (Feldbus), an welchen die Schaltmodule 69" angeschlossen sind, wobei dann jedes Schaltmodul 69" über Adressierung von dem Mittel 70 bzw. der Steuerungsvorrichtung 28 ansprechbar ist.

Die Anzahl der selektiv und parallel (gleichzeitig) angeschalteten Schaltmodule 69" basiert auf einem räumlichen Zugriffsbereich 72, wie in den Fig. 14 schematisch eingetragen, für die Bedienperson 23 innerhalb eines Lagerbereiches 7, 8, 9, beispielsweise des Lagerbereiches 8, in welchem die Bedienperson 23 zutritt, und von diesem auf einen oberhalb und unterhalb liegenden Lagerbereich 7, 9.

Nach dieser Ausführung ist der Zugriffsbereich 72 (in der y-z-Richtung) durch sämtliche Gruppen von Fahrebenen 16 in jenem Lagerbereich 7, 8, 9, in welchen die Bedienperson 23 zutreten muss, und zumindest eine Gruppe von Fahrebenen 16 in jenem Lagerbereich 7, 8, 9, der oberhalb und/oder unterhalb dieses Lagerbereiches 7, 8, 9 liegt, definiert.

Die Schaltmodule 69" für die Gruppen aus je mehreren Schleifleitungsanordnungen 65 werden vom oben beschriebenen Mittel 70 selektiv durch Umschaltsignale (S_{U1..Un}) und parallel angeschaltet, sodass je Lagerbereich 7, 8, 9 eine oder mehrere Gruppen mit der Betriebsspannung und mehrere Gruppen mit der Gefahrenbetriebsspannung versorgt werden. Jene Regalbediengeräte 10, welche sich im Automatikbetrieb in den Schutzbereich 73 hineinbewegen und/oder durch den Schutzbereich 73 hindurchbewegen würden, werden für einen Sicherheitsbetrieb von den Schleifleitungsanordnungen 65 mit der Gefahrenbetriebsspannung versorgt, während jene Regalbediengeräte 10, welche außerhalb des Schutzbereiches 73 bewegt werden, weiterhin mit der Betriebsspannung versorgt werden.

Durch Umschalten der Schaltmodule 69" werden der Antriebsmotor 60 für den Fahrantrieb 59 und der Antriebsmotor 63 für die Lastaufnahmevorrichtung 17 mit der Gefahrenbetriebsspannung versorgt. Wie oben beschrieben, werden die Umschaltsignale (S_{U1..Un}) erst erzeugt, wenn an der Steuerungsvorrichtung 28 bzw. Auswerteeinheit 35 die Bestätigungssignale (S_{RB1..RBn}) von den in die x-Halteposition (oder die x-Haltepositionen und z-Haltepositionen) bewegten (angehaltenen) Regalbediengeräten 10 empfangen wurden.

Zurückkehrend auf Fig. 4, sei auch bei dieser Ausführung erwähnt, dass die Steuerungsvorrichtung 28 zumindest die Auswerteeinheit 35, eine Vielzahl von parallel anschaltbaren Schaltmodulen 69 und Mittel 70 zur selektiven und parallelen (gleichzeitigen) Anschaltung von einigen Schaltmodulen 69 (Sicherheitsbetrieb) oder sämtlichen Schaltmodulen 69 (Automatikbetrieb) sowie eine Spannungsquelle 75 umfasst. Jeder Fahrebene 16 bzw. jedem Regalbediengerät 10' ist ein Schaltmodul 69 zugeordnet. Auch bei diesem Regallagersystem kann die Steuerungsvorrichtung 28 gemäß den Ausführungen in den Fig. 12, 13 und Fig. 14, 15 ausgebildet sein. Auch können die Ausführungen der Fig. 12, 13 und Fig. 14, 15 kombiniert werden.

Die Funktionsweisen für einen Automatikbetrieb und Sicherheitsbetrieb sind auch bei diesem Regallagersystem identisch anwendbar. So kann man der Fig. 4 entnehmen, dass die Regalbediengeräte 10' der fünften bis neunten Fahrebene 16 (automatisch) betrieben werden, während die Regalbediengeräte 10' der ersten bis vierten Fahrebene 16 jeweils in eine Halteposition bewegt und in dieser in einen für die Bedienperson 23 gefahrenlosen bzw. bewegungslosen Ruhezustand versetzt werden. Dies ist für die vierte Fahrebene 16 durch die strichlierte Darstellung eines Regalbediengerätes 10' angedeutet. Die Regalbediengeräte 10' der ersten bis dritten Fahrebene 16 sind aus Gründen der besseren Übersicht nicht dargestellt.

Auch nach der Ausführung gemäß Fig. 5, umfasst die Steuerungsvorrichtung 28 zumindest die Auswerteeinheit 35, eine Vielzahl von parallel anschaltbaren Schaltmodulen 69 und Mittel 70 zur selektiven und parallelen (gleichzeitigen) Anschaltung von einigen Schaltmodulen 69 (Sicherheitsbetrieb) oder sämtlichen Schaltmodulen 69 (Automatikbetrieb) sowie eine Spannungsquelle 75. Jeder Fahrebene 16 bzw. jedem Regalbediengerät 10" ist ein Schaltmodul 69 zugeordnet. Auch bei diesem Regallagersystem kann die Steuerungsvorrichtung 28 gemäß der Ausführung in den Fig. 12, 13 ausgebildet sein.

Die Funktionsweise für einen Automatikbetrieb und Sicherheitsbetrieb sind auch bei diesem Regallagersystem identisch anwendbar. So kann man der Fig. 5 entnehmen, dass bei einem Zutritt einer durch den Pfeil angedeuteten Bedienperson 23 das Regalbediengerät 10" der ersten Fahrebene 16 (automatisch) betrieben werden, während die Regalbediengeräte 10' der zweiten und dritten Fahrebene 16 jeweils in eine Halteposition bewegt und in dieser in einen für die Bedienperson 23 gefahrenlosen bzw. bewegungslosen Ruhezustand versetzt werden. Dies ist für die zweite/dritte Fahrebene 16 durch die strichlierte Darstellung der Regalbediengeräte 10" angedeutet.

Es ist in einer vorteilhaften Ausführung der Erfindung vorgesehen, dass ein Freigabesignal (S_{FRB3}) für die Ausgabe der Zugangsmeldung an der Schaltvorrichtung 24, 25, 26 durch die Steuerungsvorrichtung 28 bzw. Auswerteeinheit 35 erzeugt wird, wenn das Bestätigungssignal (S_{RB1..RBn}) oder das Bestätigungssignal (S_{RB1..RBn}) und Rückmeldesignal (S_{RM1..RMn}) an der Steuerungsvorrichtung 28 empfangen und von dieser ausgewertet wurde. Eine Zugangsmeldung wird an der Schaltvorrichtung 24, 25, 26 signalisiert, nachdem das Freigabesignal (S_{FRB3}) ausgelöst wurde. Die Zugangsmeldung wird durch ein optisches und/oder akustisches Signal am Ausgabemittel 29 ausgegeben. Der Bedienperson 23 ist nunmehr der gefahrenlose Zugang in den Lagerbereich 7, 8, 9 möglich.

Wie oben beschrieben, kann auch die elektromechanische Schließeinheit 33 zum Verriegeln und Entriegeln der Zugangstür 19, 20, 21 vorgesehen werden, welche zuvor aktiviert werden muss, um der Bedienperson 23 den Zugang in den Lagerbereich 7, 8, 9 zu ermöglichen. Der Stellantrieb, beispielsweise ein Elektromagnet, wird über die Steuerleitung 68 von der Steuerungsvorrichtung 28 betätigt und die Zugangstür 19, 20, 21 über den Stellantrieb entriegelt, wenn die Auswerteeinheit 35
- das erste Freigabesignal (S_{FRB1}), welches basierend auf den Bestätigungssignalen (S_{RB1..RBn}) der in die x-Halteposition bewegten Regalbediengeräte 10; 10'; 10" erzeugt wird, und
- das zweite Freigabesignal (S_{FRB2}), welches basierend auf den Rückmeldesignalen (S_{RM1..RMn}) der in die x-Halteposition bewegten Regalbediengeräte 10; 10'; 10" erzeugt wird.

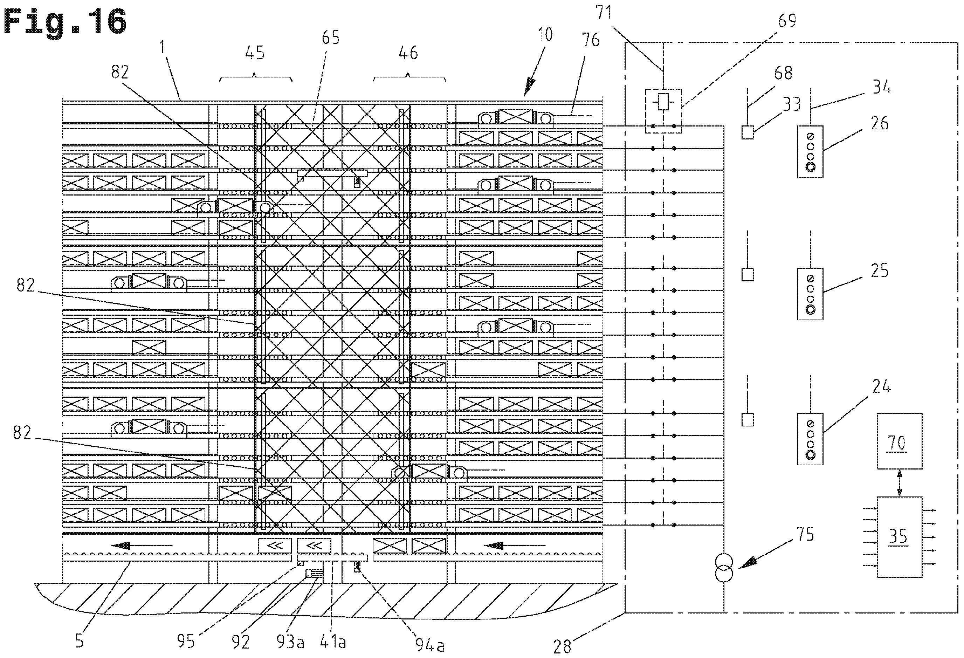

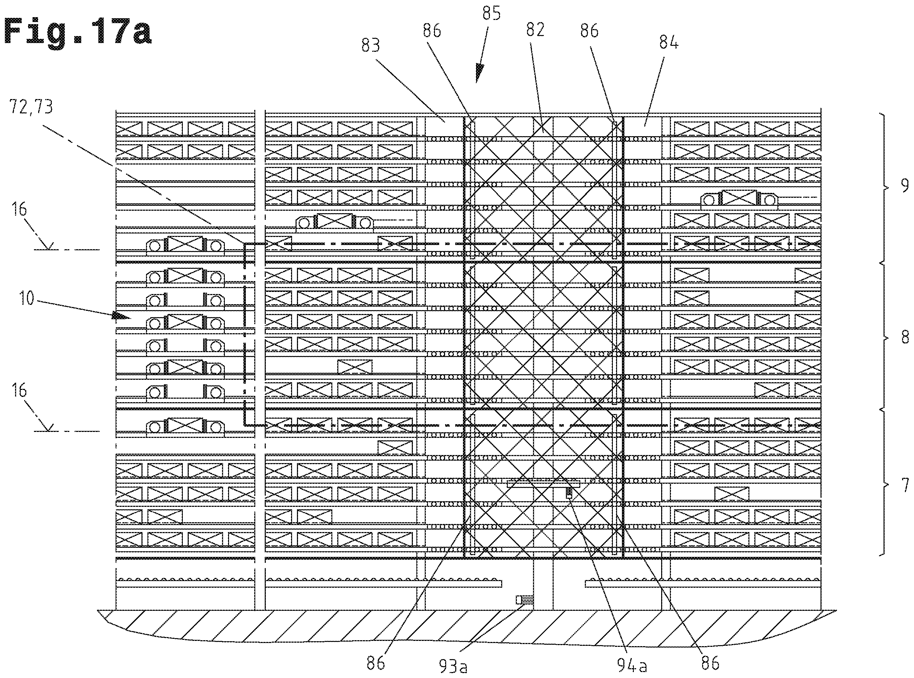

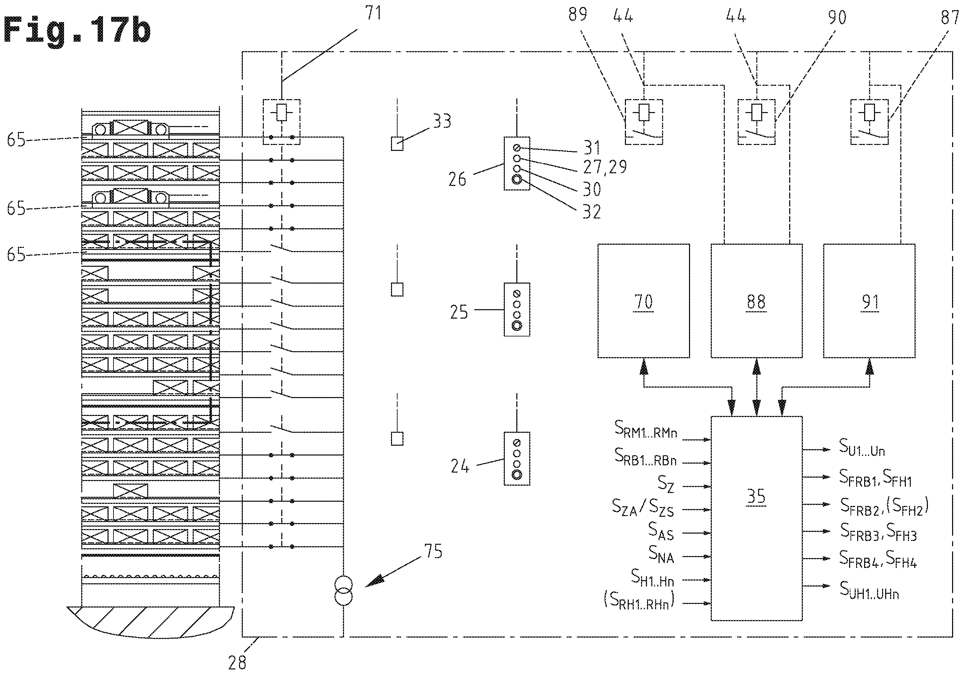

In den Fig. 16, 17a und 17b wird eine erste Ausführung von sicherheitstechnischen Maßnahmen beschrieben, welche vorgesehen werden können, wenn das Regallagersystem eine Manipulationseinheit 2; 36; 54; 55 gemäß einer der oben beschriebenen Ausführungen umfasst. Das hierfür modifizierte Steuerungssystem kombiniert mit einer "trennenden Schutzvorrichtung" wird im Nachfolgenden auch im Zusammenhang mit Fig. 1 beschrieben.

Wie in den Fig. 16, 17a, 17b schematisch eingetragen, umfasst die Ladegut-Manipulationseinheit 2; 36; 54; 55 in jedem Lagerbereich 7, 8, 9 und zumindest im Bereich der Ladegut-Hebevorrichtung 37a; 37b einen den Bewegungsraum der heb- und senkbaren Transportvorrichtung 41a; 41b gegenüber der Regalgasse 3 abgrenzende, erste physische Durchgriffsbarriere 82. Die Durchgriffsbarriere 82 ist beispielweise ein ortsfestes Schutzgitter, welches bevorzugt über Befestigungsmittel lösbar an den vorderen Längstraversen 12 arretiert ist, beispielsweise mit den Längstraversen 12 verschraubt. Somit können die Schutzgitter je Lagerbereich 7, 8, 9 bei Bedarf von der Bedienperson 23 entfernt werden, um beispielweise eine Störung an der Ladegut-Hebevorrichtung 37a; 37b zu beseitigen. Das Schutzgitter erstreckt sich in Richtung der Regalgasse 3 und zwischen den Gehstegen 15, insbesondere im Wesentlichen über die gesamte Höhe des jeweiligen Lagerbereiches 7, 8, 9. Wie in Fig. 1 in strichlierten Linien eingetragen, ist jeder Ladegut-Hebevorrichtung 37a; 37b und je Lagerbereich 7, 8, 9 eine Durchgriffsbarriere 82 angeordnet. Die Breite der Schutzgitter ist dabei so gewählt, dass diese zwar breiter sind als die Transportvorrichtung 41a; 41b und sofern die Bereitstellvorrichtung 45; 46 vorgesehen sind, aber nur so breit, dass eine Übernahmeplatz/Übergabeplatz 83, 84 für die Übernahme eines Ladegutes 6 von der Einlager-Bereitstellvorrichtung 45 auf das Regalbediengerät 10; 10'; 10" bzw. Übergabe eines Ladegutes 6 vom Regalbediengerät 10; 10'; 10" an die Auslager-Bereitstellvorrichtung 46 frei bleibt.

Die Breite des Schutzgitters lässt sich unter Einhaltung der sicherheitstechnischen Anforderungen auch verringern, wenn mit dem Wechsel vom Automatikbetrieb in den Sicherheitsbetrieb, daher wenn die Steuerungsvorrichtung 28 bzw. die Auswerteeinheit 35 von einer der Schaltvorrichtungen 24, 25, 26 ein Betriebsartenänderungssignal empfängt, die Hubgeschwindigkeit für die Transportvorrichtung 41a, 41b reduziert wird.

Es ist auch von Vorteil, wenn die Ladegut-Manipulationseinheit 2; 36; 54; 55 in jedem Lagerbereich 7, 8, 9 und im Bereich je Puffervorrichtung 38a; 38b eine den Bewegungsraum der heb- und senkbaren Transportvorrichtung 41a; 41b für die Ladegüter 6 gegenüber der Regalgasse 3 abgrenzende, zweite physische Durchgriffsbarriere 85 aufweist. Diese Durchgriffsbarriere 85 umfasst eine im Wesentlichen senkrecht zur Gassenlängsrichtung zwischen einer ersten Betriebsstellung, in welcher der Bewegungsraum gegenüber der Regalgasse 3 zugänglich ist, und einer zweiten Betriebsstellung, in welcher der Bewegungsraum gegenüber der Regalgasse 3 abgeschottet ist, verstellbare Schutzschleuse 86, wie nur schematisch in den Fig. 16, 17a dargestellt. Der Stellantrieb (nicht dargestellt) ist mit der Steuerungsvorrichtung 28 verbunden, wobei die Steuerungsvorrichtung 28 ein Schaltmodul 87 aufweist, welches dazu eingerichtet ist, mit dem Umschalten in den Sicherheitsbetrieb ein Stellsignal (S_{ST}) zu erzeugen und die Schutzschleuse 86 von der ersten Betriebsstellung in die zweite Betriebsstellung anzusteuern. Ist die Schutzschleuse 86 in die zweite Betriebsstellung verstellt, kann die Bedienperson 23 nicht mehr in den Bewegungsraum der Transportvorrichtung 41a; 41b hineingreifen.

Das Steuerungssystem umfasst die oben beschriebene Steuerungsvorrichtung 28, mittels welcher sichergestellt wird, dass in einem Sicherheitsbetrieb die Regalbediengeräte 10; 10'; 10" in die Halteposition bewegt und ferner in einen für die Bedienperson 23 gefahrenlosen bzw. bewegungslosen Ruhezustand versetzt werden sowie die Bedienperson 23 erst in einen Lagerbereich 7, 8, 9 eintreten kann, wenn die sicherheitstechnischen Rahmenbedingungen gegeben sind.

Ist im Regallagersystem auch die (optionale) Ladegut-Hebevorrichtung 37a; 37b vorgesehen, erweist sich nachfolgender Steuerungsaufbau bzw. nachfolgende Steuerungsmaßnahme von Vorteil. Die Ladegut-Manipulationseinheit 2; 36; 54; 55 umfasst zumindest eine Ladegut-Hebevorrichtung 37a; 37b mit einer heb- und senkbaren Transportvorrichtung 41a; 41b zum Einlagern und/oder Auslagern von Ladegütern 6. Die Regalgasse 3 erstreckt sich zwischen den Lagerregalen 1 und entlang der Ladegut-Manipulationseinheit 2; 36; 54; 55.

Die Steuerungsvorrichtung 28 umfasst, wie oben beschrieben, die Auswerteeinheit 35, eine Vielzahl von parallel anschaltbaren Schaltmodulen 69; 69'; 69" und Mittel 70 zur selektiven und parallelen (gleichzeitigen) Anschaltung von einigen oder sämtlichen Schaltmodulen 69; 69'; 69" sowie eine erste Spannungsquelle 75. Die erste Spannungsquelle 75 versorgt die Regalbediengeräte 10; 10'; 10" mit elektrischer Energie.

Die Auswerteinheit 35 umfasst die nicht dargestellte Steuerlogik (Computerprogrammlogik) bzw. das Rechnermodul, die verglichen mit den Ausführungen gemäß den Fig. 10, 11a, 11b; 12; 14 zusätzlich dazu eingerichtet sein kann, eingehende Signale/Befehle von der ersten und gegebenenfalls zweiten Ladegut-Hebevorrichtung 37a; 37b, wie beispielsweise
- Bestätigungssignale (S_{H1..Hn}) von der Steuereinheit 39a; 39b der ersten und/oder zweiten Ladegut-Hebevorrichtung (37a; 37b)
- und gegebenenfalls Rückmeldesignale (S_{RH1..RHn}) von der Steuereinheit 39a; 39b der ersten und/oder zweiten Ladegut-Hebevorrichtung (37a; 37b)
   auszuwerten und ausgehende Signale/Befehle für die erste und gegebenenfalls zweite Ladegut-Hebevorrichtung 37a; 37b zu erzeugen, wie beispielweise
- Ein- und/oder Auslagerbefehle für den Hubantrieb 40a; 40b und den Förderantrieb 42a; 42b der ersten und gegebenenfalls zweiten Transportvorrichtung 41a; 41b, und
- ein erstes Freigabesignal (S_{FH1}) für die elektromechanische Schließeinheit 33,
- ein zweites Freigabesignal (S_{FH2}) für die elektromechanische Schließeinheit 33,
- ein drittes Freigabesignal (S_{FH3}) für die Ausgabe der Zugangsmeldung an der Schaltvorrichtung 24, 25, 26, und
- ein viertes Freigabesignal (S_{FH4}) für die Steuereinheit 39a; 39b der ersten und gegebenenfalls zweiten Ladegut-Hebevorrichtung 37a; 37b, und/oder
- ein Stellsignal (S_{ST}) für die Schutzschleuse 87.

Die eingehenden Signale/Befehle und/oder ausgehenden Signale/Befehle werden über die Mittel 88 zur selektiven Anschaltung von einem Schaltmodul 89, 90 je Ladegut-Hebevorrichtung 37a, 37b und die Mittel 91 zur Anschaltung des Schaltmodule 87 für den Stellantrieb der Schutzschleuse 86 kommuniziert. Die Schaltmodule 87, 89, 90 sind beispielweise Schütze (Schaltschütze), daher elektrisch geschaltete Schalter oder elektronische Schalter. Bevorzugt werden die Schütze mit zwangsgeführten Kontakten ausgeführt.

Wie in Fig. 17b gezeigt, sind die Steuereinheiten 39a, 39b (Fig. 1) der Ladegut-Hebevorrichtung 37a, 37b jeweils über die Steuerleitung 44 mit der Steuerungsvorrichtung 28 bzw. Auswerteeinheit 35 und dem Schaltmodul 89, 90 verbunden, insbesondere fest verdrahtet. Das Schaltmodul 89, 90 ist über das Mittel 88 zur selektiven Anschaltung von einem Schaltmodul 89, 90 je Ladegut-Hebevorrichtung 37a, 37b mit der Auswerteeinheit 35 kommunikationsverbunden. Die Steuerleitung 44 dient der Übertragung von Ein- und/oder Auslagerbefehlen der Steuerungsvorrichtung 28 und Bestätigungssignalen (S_{H1..H2}) und gegebenenfalls Rückmeldesignalen (S_{RH1..RH2}). Die Ladegut-Hebevorrichtung 37a, 37b, insbesondere ein Antriebsmotor 93a, 93b für den Hubantrieb 40a, 40b und ein Antriebsmotor 94a, 94b für den Förderantrieb 42a; 42b der Transportvorrichtung 41a, 41b sind an eine nicht gezeigte zweite Spannungsquelle angeschlossen und werden von dieser mit Energie versorgt.

Für einen Automatikbetrieb (Fig. 1 und 16) der Ladegut-Manipulationseinheit 2; 36; 54; 55 erhalten die Ladegut-Hebevorrichtungen 37a, 37b über die Steuerleitungen 44 an den diesen zugeordneten Steuereinheiten 39a, 39b Ein- und/oder Auslagerbefehle. Der Hubantrieb 40a, 40b und Förderantrieb 42a; 42b für die Transportvorrichtung 41a, 41b werden entsprechend der Ein- und/oder Auslagerbefehle gesteuert, um Ladegüter 6, wie in strichlierten und festen Linien in Fig. 16 eingetragen, zwischen der Fördertechnikebene (FE) und der betreffenden Regallagerebene (RE) automatisch zu transportieren.

Mit dem Wechsel vom Automatikbetrieb in den Sicherheitsbetrieb für die Ladegut-Manipulationseinheit 2; 36; 54; 55, daher wenn die Steuerungsvorrichtung 28 bzw. die Auswerteeinheit 35 von einer der Schaltvorrichtungen 24, 25, 26 ein Betriebsartenänderungssignal empfängt, wird der Hubantrieb 40a, 40b für die Transportvorrichtung 41a, 41b derart angesteuert, dass sich die Transportvorrichtung 41a, 41b in eine Halteposition (y-Halteposition) bewegt. Diese Halteposition wird von der Steuerungsvorrichtung 28 definiert und befindet sich entlang einer vertikalen Hubachse für die Transportvorrichtung 41a, 41b, beispielweise auf einem Höhenniveau, bei dem die Transportvorrichtung 41a, 41b außerhalb des Schutzbereiches 73 positioniert ist. Eine solche Halteposition ist beispielhaft in Fig. 17a eingetragen.

Es sei erwähnt, dass es von Vorteil ist, wenn mit dem Wechsel vom Automatikbetrieb in den Sicherheitsbetrieb, die Transportvorrichtung 41a, 41b nicht "schlagartig" stillgesetzt werden, sondern durch von der Steuerungsvorrichtung 28 bzw. Auswerteeinheit 35 vorgegebene Ein- und/oder Auslagerbefehle "kontrolliert" in die y-Haltepositionen verfahren werden. Auch können noch "anstehende" Ein- und/oder Auslagerbefehle abgearbeitet werden, daher noch Einlagerungsvorgänge oder Auslagerungsvorgänge abgeschlossen werden, ehe die Transportvorrichtung 41a, 41b in die y-Haltepositionen bewegt wird.

Hat die Transportvorrichtung 41a, 41b die Halteposition (y-Halteposition) erreicht, wird von der Steuereinheit 39a, 39b ein Bestätigungssignal (S_{H1..Hn}) gesendet. Die Erfassung der Höhenposition der Transportvorrichtung 41a, 41b in y-Richtung und damit auch der Halteposition (y-Halteposition) kann über eine geeignete Sensorik erfolgen. Vorzugsweise ist ein Sensor 92 vorgesehen, welcher nach gezeigter Ausführung (Fig. 16) durch einen Drehgeber gebildet und am Antriebsmotor 93a, 93b angeordnet ist.

Ferner kann die Sensorik ein Wegmesssystem 95 umfassen, mittels welchem die Istposition in y-Richtung der Transportvorrichtung 41a, 41b erfasst wird. Das Wegmesssystem 94 umfasst beispielweise ein opto-elektronisches Messsystem, insbesondere Laser- oder Infrarotmesssystem, dessen Sendeeinheit an der Transportvorrichtung 41a, 41b und Empfangseinheit auf einer Bezugsebene angeordnet sind, um eine Distanz (Istposition) zwischen der Transportvorrichtung 41a, 41b und der Bezugsebene zu messen. Bei Abweichung einer von der Steuerungsvorrichtung 28 vorgegebenen y-Istposition von der y-Sollposition kann eine Nachregelung durch den Antriebsmotor 93a, 93b erfolgen.

Das Bestätigungssignal (S_{H1..Hn}) wird an die Auswerteeinheit 35 übermittelt und auf diesem basierend ein Umschaltsignal (S_{UH1..UHn}) erzeugt. Das Umschaltsignal (S_{UH1..UHn}) wird von der Steuerungsvorrichtung 28 über die Steuerleitung 44 dem Schaltmodul 89, 90 übermittelt, mittels welchem die Schaltmodule 89, 90 bzw. deren Schalter von einem geschlossenen Schaltzustand in einen geöffneten Schaltzustand geschaltet werden. Dadurch wird die Energiezufuhr zum Hubantrieb 40a, 40b und Förderantrieb 42a, 42b unterbrochen und Stellbewegungen der Transportvorrichtung 41a, 41b, welche die Bedienperson 23 im Zugriffsbereich 72 bzw. Schutzbereich 73 gefährden könnten, verhindert. Damit ist der gefahrenlose bzw. bewegungslose Ruhezustand für die Transportvorrichtung 41a, 41b erreicht.

Es kann auch vorgesehen werden, dass ein Rückmeldesignal (S_{RH1..RHn}) der Ladegut-Hebevorrichtung 37a, 37b erzeugt wird, wie in Fig. 17b eingetragen, wenn sich die Transportvorrichtung 41a, 41b in einem für die Bedienperson 23 gefahrenlosen bzw. bewegungslosen Ruhezustand befindet, in dem durch Betätigung des Schaltmodules 89, 90 die Energiezufuhr zum Antriebsmotor 86 für den Hubantrieb 40a, 40b und Antriebsmotor 87 für den Förderantrieb 42a, 42b unterbrochen wird. Das Rückmeldesignal (S_{RH1..RHn}) wird an die Steuerungsvorrichtung (28) bzw. Auswerteeinheit 35 übermittelt.

Die Transportvorrichtung 41a, 41b wird solange in einen für die Bedienperson 23 gefahrenlosen bzw. bewegungslosen Ruhezustand versetzt, bis die Steuereinheit 39a, 39b ein Freischaltsignal (S_{FH4}) erhält.

Wie oben beschrieben, kann eine elektromechanische Schließeinheit 33 zum Verriegeln und Entriegeln der Zugangstür 19, 20, 21 vorgesehen werden. Der Stellantrieb, beispielweise ein Elektromagnet, wird über die Steuerleitung 68 von der Steuerungsvorrichtung 28 betätigt und die Zugangstür 19, 20, 21 über den Stellantrieb entriegelt, wenn die Auswerteeinheit 35
- das erste Freigabesignal (S_{FRB1}), welches basierend auf den Bestätigungssignalen (S_{RBL..RBn}) der in die x-Halteposition bewegten Regalbediengeräte 10; 10'; 10" erzeugt werden, und
- zweite Freigabesignal (S_{FRB2}), welche basierend auf den Rückmeldesignalen (S_{RM1..RMn}) der in die x-Halteposition bewegten Regalbediengeräte 10; 10'; 10" erzeugt werden, und
- das erste Freigabesignal (S_{FH1}), welches basierend auf dem Bestätigungssignal (S_{H1..Hn}) der in die y-Halteposition bewegten Transportvorrichtung 41a, 41b erzeugt wird,
- und gegebenenfalls ein zweites Freigabesignal (S_{FH2}), wie in Fig. 17b eingetragen, welches basierend auf dem Rückmeldesignal (S_{RH1..RHn}) der in die y-Halteposition bewegten Transportvorrichtung 41a, 41b erzeugt wird, erhalten hat.

Auch ist es vorgesehen, dass ein Freigabesignal (S_{FH3}) für die Ausgabe der Zugangsmeldung an der Schaltvorrichtung 24, 25, 26 durch die Steuerungsvorrichtung 28 bzw. Auswerteeinheit 35 erzeugt wird, wenn das Bestätigungssignal (S_{H1..Hn}) oder das Bestätigungssignal (S_{H1..Hn}) und Rückmeldesignal (S_{RH1..RHn}) an der Steuerungsvorrichtung 28 empfangen und von dieser ausgewertet wurde. Eine Zugangsmeldung wird an der Schaltvorrichtung 24, 25, 26 signalisiert, nachdem die Freigabesignale (S_{FRB3}) und (S_{FH3}) ausgelöst wurden. Die Zugangsmeldung wird durch ein optisches und/oder akustisches Signal am Ausgabemittel 29 ausgegeben. Der Bedienperson 23 ist nunmehr der gefahrenlose Zugang in den Lagerbereich 7, 8, 9 möglich.

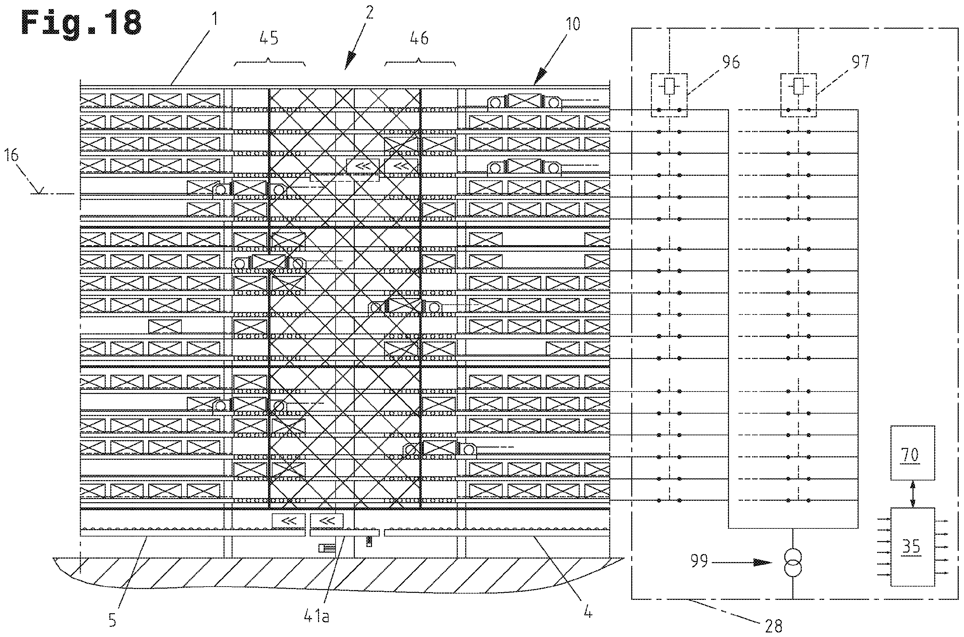

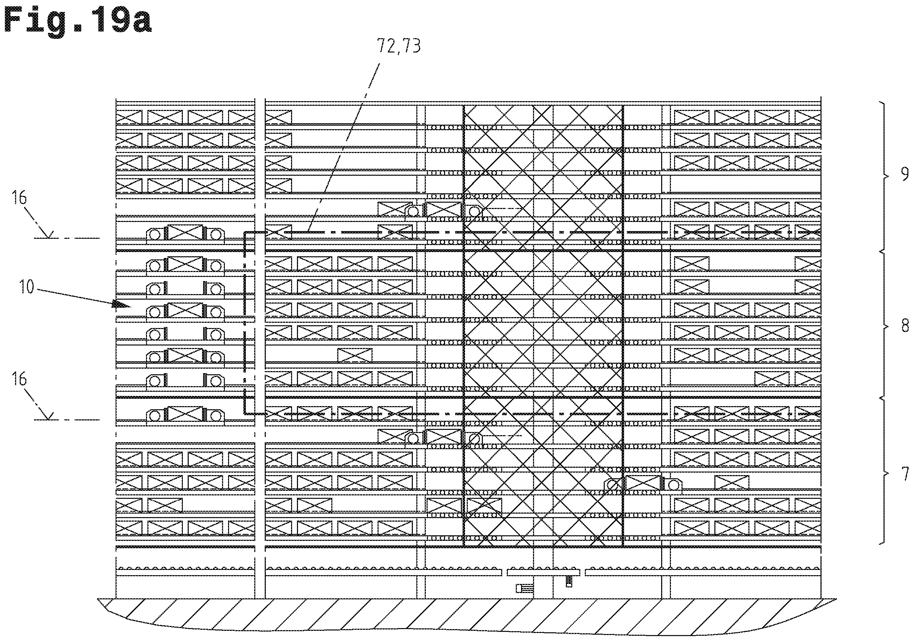

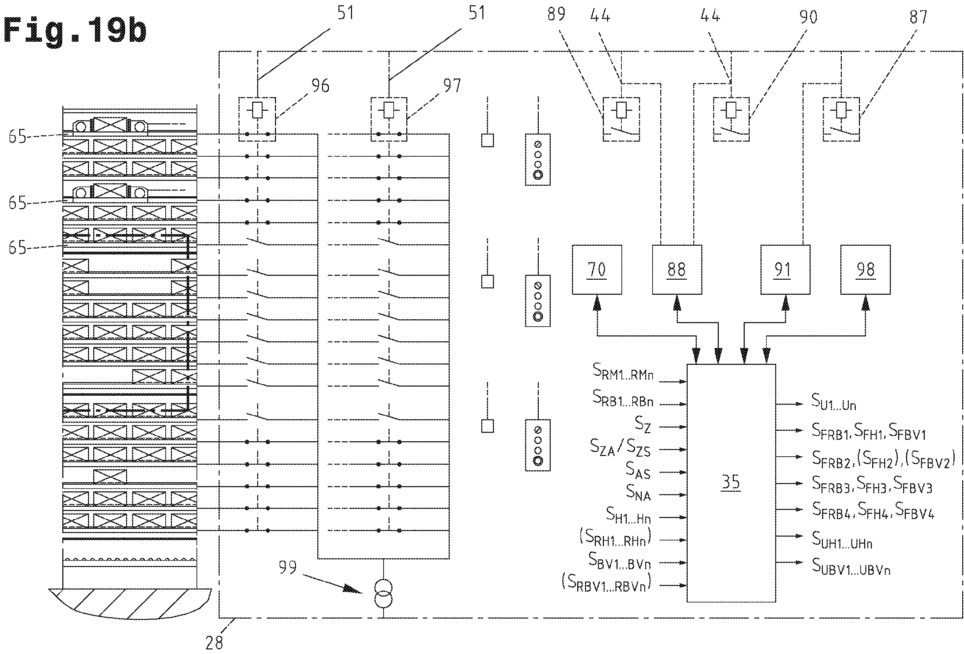

In den Fig. 18, 19a und 19b ist eine Erweiterung des Steuerungssystems gezeigt, welches in vorteilhafter Weise eingesetzt werden kann, wenn die Ladegut-Manipulationseinheit 2; 36; 54; 55 auch mit einer Puffervorrichtung 38a, 38b gemäß einer der oben beschriebenen Ausführungen vorgesehen ist. Es kann einigen der Regalebene (RE) oder jeder Regalebenen (RE) eine Einlager-Bereitstellvorrichtung 45 und/oder eine Auslager-Bereitstellvorrichtung 46 oder eine kombinierte Einlager-/Auslager-Bereitstellvorrichtung 45 zugeordnet sein.

Das Steuerungssystem umfasst die in den Fig. 16, 17a, 17b beschriebene Steuerungsvorrichtung 28, mittels welcher sichergestellt wird, dass in einem Sicherheitsbetrieb die Regalbediengeräte 10; 10'; 10" und die Transportvorrichtung 41a, 41b der zumindest einen Ladegut-Hebevorrichtung 37a; 37b jeweils in die Halteposition bewegt und in einen für die Bedienperson 23 gefahrenlosen bzw. bewegungslosen Ruhezustand versetzt werden sowie die Bedienperson 23 erst in einen Lagerbereich 7, 8, 9 eintreten kann, wenn die sicherheitstechnischen Rahmenbedingungen gegeben sind.

Die Steuerungsvorrichtung 28 umfasst nach dieser Ausführung zusätzlich eine Vielzahl von parallel anschaltbaren Schaltmodulen 96, 97 und Mittel 98 zur selektiven und parallelen (gleichzeitigen) Anschaltung von einigen Schaltmodulen 96, 97 (Sicherheitsbetrieb) oder sämtlichen Schaltmodulen 96, 97 (Automatikbetrieb) sowie eine Spannungsquelle 99. Die Schaltmodule 96 dienen der Anschaltung der Einlager-Bereitstellvorrichtung 45 und die Schaltmodule 97 dienen der Anschaltung der Auslager-Bereitstellvorrichtung 46. Jeder Einlager-Bereitstellvorrichtung 45 ist ein Schaltmodul 96 zugeordnet. Es kann aber auch ein Schaltmodul 96 eine Gruppe von mehreren übereinander angeordneten Einlager-Bereitstellvorrichtungen 45 anschalten. Jeder Auslager-Bereitstellvorrichtung 46 ist ein Schaltmodul 97 zugeordnet. Es kann aber auch ein Schaltmodul 97 eine Gruppe von mehreren übereinander angeordneten Auslager-Bereitstellvorrichtungen 46 anschalten.

Wie in Fig. 19b gezeigt, sind die Steuereinheiten 49a; 49b; 50a; 50b (Fig. 1) der Bereitstellvorrichtungen 45; 46; 56 jeweils über die Steuerleitung 51 und Schaltmodul 96; 97 mit der Steuerungsvorrichtung 28 bzw. Auswerteeinheit 35 verbunden, insbesondere fest verdrahtet. Es sei noch hingewiesen, dass in Fig. 19b die Schaltmodule 69; 69'; 69", beispielweise die Schaltmodule 69 und die zweite Durchgriffsbarriere 85 aus Gründen der besseren Übersicht nicht dargestellt sind.

Die Steuerleitung 51 dient der Übertragung von Ein- und/oder Auslagerbefehlen der Steuerungsvorrichtung 28 und Bestätigungssignalen (S_{BV1..BVn}) und gegebenenfalls Rückmeldesignalen (S_{RBV1..RBVn}). Die Bereitstellvorrichtungen 45; 46; 56, insbesondere Antriebsmotoren für den Förderantrieb 48a; 48b; 49a; 49b sind an die dritte Spannungsquelle 99 angeschlossen und werden von dieser mit Energie versorgt.

Die Auswerteinheit 35 umfasst die nicht dargestellte Steuerlogik (Computerprogrammlogik) bzw. das Rechnermodul, die verglichen mit den Ausführungen gemäß den Fig. 10, 11a, 11b; 12; 14; 16, 17a, 17b zusätzlich dazu eingerichtet sein kann, eingehende Signale/Befehle von den Bereitstellvorrichtungen 45 und/oder Bereitstellvorrichtungen 46 der ersten Puffervorrichtung 38a und/oder zweiten Puffervorrichtung 38b, wie beispielweise
- Bestätigungssignale (S_{BVL..BVn}) von der Steuereinheit 49a; 49b; 50a; 50b je Bereitstellvorrichtung 45; 46; 56
- und gegebenenfalls Rückmeldesignale (S_{RH1..RHn}) von der Steuereinheit 49a; 49b; 50a; 50b je Bereitstellvorrichtung 45; 46; 56 auszuwerten und ausgehende Signale/Befehle für die erste und gegebenenfalls zweite Ladegut-Hebevorrichtung 37a; 37b zu erzeugen, wie beispielweise
- Ein- und/oder Auslagerbefehle für den Förderantrieb 47a; 47b; 48a;48b der Bereitstellvorrichtungen 45; 46; 56
- ein erstes Freigabesignal (S_{FBV1}) für die elektromechanische Schließeinheit 33,
- ein zweites Freigabesignal (S_{FBV2}) für die elektromechanische Schließeinheit 33,
- ein drittes Freigabesignal (S_{FBV3}) für die Ausgabe der Zugangsmeldung an der Schaltvorrichtung 24, 25, 26, und/oder
- ein viertes Freigabesignal (S_{FBV4}) für die Steuereinheit 49a; 49b; 50a; 50b je Bereitstellvorrichtung 45; 46; 56.

Die eingehenden Signale/Befehle und/oder ausgehenden Signale/Befehle werden über die Mittel 98 zur selektiven und parallelen Anschaltung der Schaltmodule 96, welchen den Bereitstellvorrichtungen 45 zugeordnet sind, und gegebenenfalls Schaltmodule 97, welchen den Bereitstellvorrichtungen 46 zugeordnet sind, kommuniziert. Die Schaltmodule 96, 97 sind beispielweise Schütze (Schaltschütze), daher elektrisch geschaltete Schalter oder elektronische Schalter. Bevorzugt werden die Schütze mit zwangsgeführten Kontakten ausgeführt.

Für einen Automatikbetrieb (Fig. 1 und 18) einer Ladegut-Manipulationseinheit 2; 36; 54; 55 erhalten die Bereitstellvorrichtungen 45; 46; 56 über die Steuerleitungen 51 an einer Steuereinheit 49a; 49b; 50a; 50b Ein- und/oder Auslagerbefehle. Die Förderantriebe 47a; 47b; 48a; 48b, 94a; 94b für die Transportvorrichtung 41a; 41b und Bereitstellvorrichtungen 45; 46; 56 werden entsprechend der Ein- und/oder Auslagerbefehle angesteuert, um Ladegüter 6 zwischen der Transportvorrichtung 41a; 41b und einer Bereitstellvorrichtung 45; 46; 56 in der betreffenden Regallagerebene (RE) automatisch zu transportieren.

Mit dem Wechsel vom Automatikbetrieb in den Sicherheitsbetrieb für die Ladegut-Manipulationseinheit 2; 36; 54; 55, daher wenn die Steuerungsvorrichtung 28 bzw. die Auswerteeinheit 35 von einer der Schaltvorrichtungen 24, 25, 26 ein Betriebsartenänderungssignal empfängt, werden die Förderantriebe 47a; 47b; 48a; 48b für die Einlager-Bereitstellvorrichtungen 45 und/oder Auslager-Bereitstellvorrichtungen 46, welche im Schutzbereich 73 angeordnet sind, derart angesteuert, dass die Einlager-Bereitstellvorrichtungen 45 und/oder Auslager-Bereitstellvorrichtungen 46 in einen für die Bedienperson 23 gefahrenlosen Stillstand versetzt wird, bis die Steuereinheit 49a; 49b; 50a; 50b ein Freischaltsignal (S_{FBV4}) erhält.

Es sei erwähnt, dass es von Vorteil ist, wenn mit dem Wechsel vom Automatikbetrieb in den Sicherheitsbetrieb, die Bereitstellvorrichtungen 45; 46; 56 nicht "schlagartig" stillgesetzt werden, sondern durch von der Steuerungsvorrichtung 28 bzw. Auswerteeinheit 35 vorgegebene Ein- und/oder Auslagerbefehle "kontrolliert" fertiggestellt werden. So können noch "anstehende" Ein- und/oder Auslagerbefehle abgearbeitet werden, daher noch Einlagerungsvorgänge oder Auslagerungsvorgänge an den Bereitstellvorrichtungen 45; 46; 56 abgeschlossen werden, ehe die Bereitstellvorrichtungen 45; 46; 56 stillgesetzt werden.

Haben die Bereitstellvorrichtungen 45; 46; 56 den Stillstand erreicht, wird ein Bestätigungssignal (S_{BV1..BVn}) je Bereitstellvorrichtung 45; 46; 56 erzeugt. Die Bestätigungssignale (S_{BV1..BVn}) werden an die Auswerteeinheit 35 übermittelt und auf diesen basierend Umschaltsignale (S_{UBV1..UBVn}) für zumindest einige der Anzahl an Schaltmodulen 96; 97 erzeugt.

Die Anzahl der selektiv und parallel (gleichzeitig) angeschalteten Schaltmodule 96; 97 basiert auf dem oben beschriebenen räumlichen Zugriffsbereich 72, wie in den Fig. 19a, 19b schematisch eingetragen, für die Bedienperson 23 innerhalb eines Lagerbereiches 7, 8, 9, beispielweise dem Lagerbereich 8, in welchem die Bedienperson 23 zutritt, und von diesem auf einen oberhalb und/oder unterhalb liegenden Lagerbereich 7, 9.

Für einen Sicherheitsbetrieb, wie er in den Fig. 19a, 19b gezeigt ist, werden die Umschaltsignale (S_{UBV1..UBVn}) vom Mittel 98 zur selektiven und parallelen Anschaltung von einigen der Schaltmodule 96; 97, über die Steuerleitungen 71 denjenigen Schaltmodulen 96; 97 zugeleitet, die den Bereitstellvorrichtungen 45; 46; 56 bzw. jenen Regalebenen (RE), welche still zu setzen sind, zugeordnet sind. Dabei kann je eine Gruppe von Bereitstellvorrichtungen 45; 46; 56 auch über nur ein Schaltmodul 96; 97 angeschaltet werden. Beispielweise können zwei oder mehrere übereinander liegende Bereitstellvorrichtungen 45; 46; 56 jeweils zu einer Gruppe zusammengefasst und diese Gruppen jeweils von einem Schaltmodul 96; 97 angeschaltet werden. Zusammengefasst bedeutet dies, dass ein Schaltmodul 96; 97 immer mehreren Bereitstellvorrichtungen 45; 46; 56 bzw. Regalebenen (RE) zugeordnet ist. Damit verringert sich der schaltungstechnische Aufwand und es reduzieren sich die Anschaffungskosten für die Steuerungsvorrichtung 28.

Im Sicherheitsbetrieb werden nun jene Bereitstellvorrichtungen 45; 46; 56 je Lagerbereich 7, 8, 9, welche im Schutzbereich 73 angeordnet sind, von den Schaltmodulen 96; 97 umgeschaltet bzw. werden dessen Schalter von einem geschlossenen Schaltzustand in einen geöffneten Schaltzustand geschaltet. Dadurch wird die Energiezufuhr zu den Antriebsmotoren für die Förderantriebe 48a; 48b; 49a; 49b unterbrochen und die Förderbewegungen der Bereitstellvorrichtungen 45; 46; 56, welche die Bedienperson 23 im Zugriffsbereich 72 bzw. Schutzbereich 73 gefährden könnten, verhindert. Die Antriebsmotoren für die Förderantriebe 48a; 48b; 49a; 49b sind somit spannungslos geschaltet und damit ist der gefahrenlose bzw. bewegungslose Ruhezustand jeweiligen der Bereitstellvorrichtungen 45; 46; 56 sichergestellt.

Andererseits werden die außerhalb des Schutzbereiches 73 angeordneten Bereitstellvorrichtungen 45; 46; 56 weiterhin im Automatikbetrieb betrieben.

Es kann auch vorgesehen werden, dass ein Rückmeldesignal (S_{RBV1..RBVn}) der Bereitstellvorrichtungen 45; 46; 56 erzeugt wird, wie in Fig. 19b eingetragen, wenn sich die Bereitstellvorrichtungen 45; 46; 56 in einem für die Bedienperson 23 gefahrenlosen bzw. bewegungslosen Ruhezustand befindet, in dem durch Betätigung des Schaltmodules 96; 97 die Energiezufuhr zum Antriebsmotor für den Förderantrieb 47a; 47b; 48a; 48b unterbrochen wird. Das Rückmeldesignal (S_{RBV1..RBVn}) wird an die Steuerungsvorrichtung 28 bzw. Auswerteeinheit 35 übermittelt.

Die Bereitstellvorrichtungen 45; 46; 56 werden solange in einen für die Bedienperson 23 gefahrenlosen bzw. bewegungslosen Ruhezustand versetzt, bis die Steuereinheiten 49a; 49b; 50a; 50b (Fig. 1) ein Freischaltsignal (S_{FBV4}) erhalten.

Wie oben beschrieben, kann eine elektromechanische Schließeinheit 33 zum Verriegeln und Entriegeln der Zugangstür 19, 20, 21 vorgesehen werden. Der Stellantrieb, beispielweise ein Elektromagnet, wird über die Steuerleitung 68 von der Steuerungsvorrichtung 28 betätigt und die Zugangstür 19, 20, 21 über den Stellantrieb entriegelt, wenn die Auswerteeinheit 35
- das erste Freigabesignal (S_{FRB1}), welches basierend auf den Bestätigungssignalen (S_{RB1..RBn}) der in die x-Halteposition bewegten Regalbediengeräte 10; 10'; 10" erzeugt werden, und
- zweite Freigabesignal (S_{FRB2}), welche basierend auf den Rückmeldesignalen (S_{RM1..RMn}) der in die x-Halteposition bewegten Regalbediengeräte 10; 10'; 10" erzeugt werden, und
- das erste Freigabesignal (S_{FH1}), welches basierend auf dem Bestätigungssignal (S_{H1..Hn}) der in die y-Halteposition bewegten Transportvorrichtung 41a, 41b erzeugt wird,
- und gegebenenfalls das zweite Freigabesignal (S_{FH2}), wie in Fig. 17b eingetragen, welches basierend auf dem Rückmeldesignal (S_{RH1..RHn}) der in die y-Halteposition bewegten Transportvorrichtung 41a, 41b erzeugt wird, erhalten hat, und
- das erste Freigabesignal (S_{FBV1}), welches basierend auf dem Bestätigungssignal (S_{BV1..BVn}) der stillgesetzten Bereitstellvorrichtungen 45; 46; 56 erzeugt wird,
- und gegebenenfalls das zweite Freigabesignal (S_{FBV2}), wie in Fig. 19b eingetragen, welches basierend auf dem Rückmeldesignal (S_{RBV1..RBVn}) der stillgesetzten Bereitstellvorrichtungen 45; 46; 56 erzeugt wird, erhalten hat.

Auch ist es vorgesehen, dass ein Freigabesignal (S_{FBV3}) für die Ausgabe der Zugangsmeldung an der Schaltvorrichtung 24, 25, 26 durch die Steuerungsvorrichtung 28 bzw. Auswerteeinheit 35 erzeugt wird, wenn das Bestätigungssignal (S_{BV1..BVn}) oder das Bestätigungssignal (S_{BV1..BVn}) und Rückmeldesignal (S_{RBV1..RBVn}) an der Steuerungsvorrichtung 28 empfangen und von dieser ausgewertet wurde. Eine Zugangsmeldung wird an der Schaltvorrichtung 24, 25, 26 signalisiert, nachdem die Freigabesignale (S_{FRB3}), (S_{FH3}) und (S_{FBV3}) ausgelöst wurden. Die Zugangsmeldung wird durch ein optisches und/oder akustisches Signal am Ausgabemittel 29 ausgegeben. Der Bedienperson 23 ist nunmehr der gefahrenlose Zugang in den Lagerbereich 7, 8, 9 möglich.

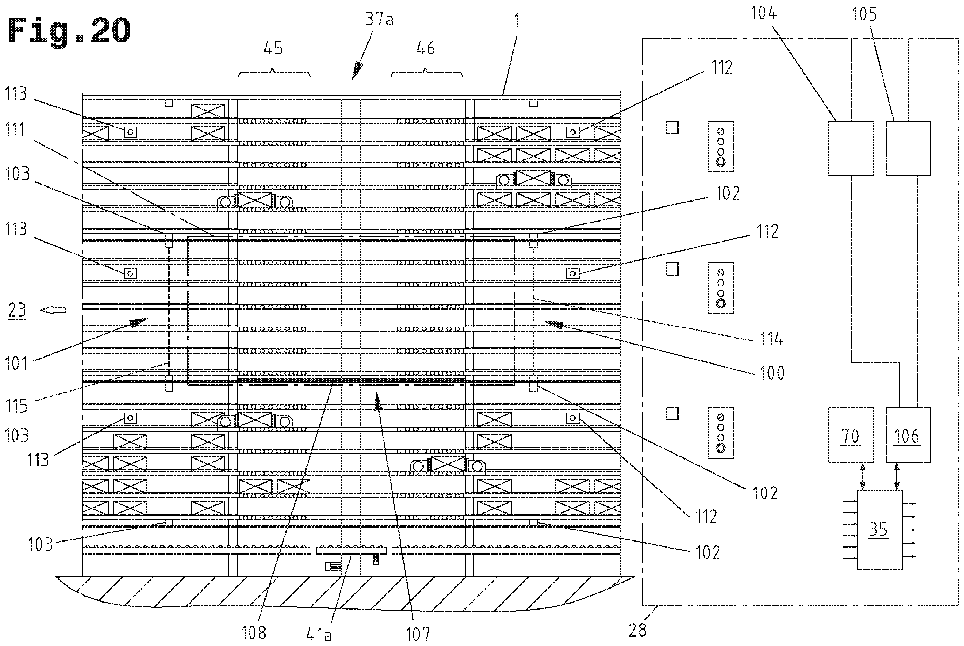

In den Fig. 20 wird eine zweite Ausführung von sicherheitstechnischen Maßnahmen beschrieben, welche vorgesehen werden können, wenn das Regallagersystem eine Manipulationseinheit 2; 36; 54; 55 gemäß einer der oben beschriebenen Ausführungen umfasst. Das hierfür modifizierte Steuerungssystem ist mit einer "nicht trennenden Schutzvorrichtung" kombiniert.

Wie in Fig. 20 eingetragen, kann in jedem Lagerbereich 7, 8, 9 in Richtung der Längserstreckung der Regalgasse 3 vor der Ladegut-Hebevorrichtung 37a; 37b eine erste Zutrittsüberwachung 100 und/oder nach der Ladegut-Hebevorrichtung 37a; 37b eine zweite Zutrittsüberwachung 101 vorgesehen werden. Die erste Zutrittsüberwachung 100 und/oder zweite Zutrittsüberwachung 101 je Lagerbereich 7, 8, 9 umfassen eine schaltende Sensorik 102, 103, welche über Steuerleitungen (nicht dargestellt) mit der Steuerungsvorrichtung 28 bzw. der Auswerteeinheit 35 verbunden sind. Die erste Zutrittsüberwachung 100 erzeugt ein Signal, wenn von ihr die Anwesenheit einer Bedienperson 23 im Lagerbereich 7, 8, 9 nahe der Ladegut-Manipulationseinheit 2; 36; 54; 55 erfasst wird. Die zweite Zutrittsüberwachung 101 erzeugt ebenso ein Signal, wenn von ihr die Anwesenheit einer Bedienperson 23 im Lagerbereich 7, 8, 9 erfasst wird.

Wie in Fig. 20 eingetragen, liegt zwischen den Zutrittsüberwachungen 100, 101 ein Gefahrenbereich 111, welcher im Automatikbetrieb infolge der Hubbewegungen der Transportvorrichtung 41a; 41b und die Förderbewegungen der Ladegüter 6 auf den Bereitstellvorrichtungen 45; 46; 56 definiert ist, und innerhalb welchem die Sicherheit der Bedienperson 23 gefährdet wäre. Die Zutrittsüberwachungen 100, 101 sind außerhalb dieses Gefahrenbereiches 111 angeordnet und wird über diese sichergestellt, dass für die Bedienperson 23 kein Risiko besteht, wenn sie in den Lagerbereich 7, 8, 9 zutritt.

Ist die Ladegut-Manipulationseinheit 36; 54; 55 an der Stirnseite der Lagerregale 1 angeordnet, wie in den Fig. 6; 7; 8 dargestellt, so kann in jedem Lagerbereich 7, 8, 9 auch bloß eine Zutrittsüberwachung 101 vorgesehen werden, die in Richtung der Längserstreckung der Regalgasse 3 nach der Ladegut-Hebevorrichtung 37a; 37b angeordnet ist, wie beispielhaft in Fig. 6 eingetragen. Die Zutrittsüberwachung 101 ist außerhalb dieses Gefahrenbereiches 111 angeordnet.

Die erste Sensorik 102 und/oder zweite Sensorik 103 ist durch, ein Strahlenfeld oder Schallwellenfeld erzeugende Sensoren gebildet, wobei das Strahlenfeld oder Schallwellenfeld im Wesentlichen in einer senkrecht zur Längsrichtung der Regalgasse 3 ausgerichteten Vertikalebene verläuft und sich im Wesentlichen zwischen den Lagerregalen 1 in der Gassenlichte und zwischen den Gehstegen 15 in der Gassenhöhe erstreckt. Eine solche Sensorik 102, 103 ist im Allgemeinen als schaltendes "Sicherheits-Lichtgitter" bekannt. Die Sensorik 102 und/oder zweite Sensorik 103 kann auch durch ein Kamerasystem realisiert werden.

Wie oben beschrieben, sind der Hubantrieb 40a; 40b und der Förderantrieb 42a; 42b der Transportvorrichtung 41a; 41b an die Steuereinheit 39a; 39b angeschlossen, die ihrerseits über eine Steuerleitung 44 mit einem Schaltmodul 104, 105 verbunden, insbesondere fest verdrahtet sind. Das Schaltmodul 104, 105 ist über das Mittel 106 zur Anschaltung von einem Schaltmodul 104, 105 je Ladegut-Hebevorrichtung 37a, 37b mit der Auswerteeinheit 35 kommunikationsverbunden.

Das Schaltmodul 104, 105 ist dazu eingerichtet, in Abhängigkeit von dem Erfassungssignal der ersten Zutrittsüberwachung 100 und/oder zweiten Zutrittsüberwachung 101 die Transportvorrichtung 41a; 41b, insbesondere den Hubantrieb 40a; 40b und den Förderantrieb 42a; 42b anzusteuern. Das Schaltmodul 104, 105 kann beispielweise eine Drehzahlregelung für den Antriebsmotor 93 des Hubantriebes 40a; 40b und/oder eine Drehzahlregelung für den Antriebsmotor 94 des Förderantriebes 42a; 42b umfassen.

Wie in Fig. 20 weiters eingetragen, ist auch die Anordnung einer Zustandsüberwachung 107, welche in jedem Lagerbereich 7, 8, 9 im Bereich der Ladegut-Hebevorrichtung 37a; 37b vorgesehen ist. Die Zustandsüberwachung 107 umfasst eine schaltende dritte Sensorik 108, welche ein Signal erzeugt, wenn von der Sensorik 108 die Anwesenheit einer Bedienperson 23 im Lagerbereich 7, 8, 9 zwischen den Zutrittsüberwachungen 100, 101 (Fig. 20) oder zwischen einer Zugangstür 19, 20, 21 und der Zutrittsüberwachung 101 (Fig. 6) erfasst wird. Die Zustandsüberwachung 107 bzw. dritte Sensorik 108 je Lagerbereich 7, 8, 9 ist über eine Steuerleitung (nicht dargestellt) mit der Steuerungsvorrichtung 28 bzw. der Auswerteeinheit 35 verbunden.

Die Steuerungsvorrichtung 28 ist mit der Steuereinheit 39a; 39b der Ladegut-Hebevorrichtung 37a; 37b verbunden und ist das Schaltmodul 104; 105 dazu eingerichtet, in Abhängigkeit von dem Erfassungssignal die Transportvorrichtung 41a; 41b für den Transport der Ladegüter 6 anzusteuern. Das Schaltmodul 104, 105 ist, wie oben beschrieben, über das Mittel 106 zur Anschaltung von einem Schaltmodul 104, 105 je Ladegut-Hebevorrichtung 37a, 37b mit der Auswerteeinheit 35 kommunikationsverbunden.

Die dritte Sensorik 108 kann durch, ein Strahlenfeld erzeugende Sensoren gebildet sein, wobei das Strahlenfeld im Wesentlichen in einer Horizontalebene verläuft und sich wenigstens über die Baubreite der Ladegut-Hebevorrichtung 37a; 37b zwischen den Lagerregalen 1 in der Gassenlichte erstreckt. Eine solche Sensorik 108 ist im Allgemeinen als schaltendes "Sicherheits-Lichtgitter" bekannt. Die Sensorik 108 kann auch durch ein Kamerasystem realisiert werden.

Andererseits kann die dritte Sensorik 108 auch durch eine am Gehsteg 15 aufgelegte und in einem elastischen Kunststoffmaterial eingebettete Flächenschalter aufweisende Sicherheitskontaktmatte gebildet sein, wie in der Fig. 20 schematisch eingetragen. Die Sicherheitskontaktmatte verläuft im Wesentlichen in einer Horizontalebene und erstreckt sich wenigstens über die Baubreite der Ladegut-Hebevorrichtung 37a; 37b zwischen den Lagerregalen 1 in der Gassenlichte. Eine solche Sensorik 108 ist im Allgemeinen als "Schaltmatte" bekannt.

Bei dieser Ausführung werden im Automatikbetrieb einer Ladegut-Manipulationseinheit 2; 36; 54; 55 die Ladegüter 6 entsprechend von Ein- und/oder Auslagerbefehlen über die Ladegut-Hebevorrichtung 37a; 37b in die Lageregale 1 eingelagert bzw. aus den Lageregalen ausgelagert.

Soll nun eine Bedienperson 23 in einen der Lagerbereiche 7, 8, 9, beispielsweise den Lagerbereich 8, eintreten, um Servicearbeiten, eine Störungsbehebung und dgl. an einem Regalbediengerät 10; 10'; 10", an der Ladegut-Hebevorrichtung 37a; 37b oder einer Bereitstellvorrichtung 45; 46; 56 durchzuführen, muss vorerst in den Sicherheitsbetrieb geschaltet werden und ein "gesicherter Betriebszustand" erreicht worden sein. Erst dann kann die Bedienperson 23 über die Zugangstür 19, 20, 21 in den gewünschten Lagerbereich 8 eintreten.

Die Steuerungsvorrichtung 28 ist eingerichtet, um einen oder mehrere der folgenden Schritte zu veranlassen:
- Entriegeln/Öffnen jener Zugangstür 19, 20, 21, welche dem Lagerbereich 7, 8, 9 zugeordnet ist, in welchen die Bedienperson 23 eintreten möchte, nachdem das Bestätigungssignal (S_{RB1..RBn}) von denjenigen Regalbediengeräten (10; 10'; 10") ausgelöst wurde, welche im Automatikbetrieb im Schutzbereich (73) bewegt wurden. Hierzu kann entweder nur eine Zugangsmeldung an der Schaltvorrichtung 24, 25, 26 ausgegeben oder, wenn eine elektromechanische Schließeinheit 33 vorgesehen ist, deren Stellantrieb betätigt werden;
- Aktivieren einer Zutrittsüberwachung 100; 101, insbesondere der Sensorik 102; 103, welche im Lagerbereich 7, 8, 9 in Richtung der Längserstreckung der Regalgasse 3 vor und/oder nach der Ladegut-Hebevorrichtung 37a; 37b angeordnet ist. In Fig. 20 sind die Zutrittsüberwachungen 100; 101 des Lagerbereiches 8 aktiv geschaltet;
- Überwachung eines Zutrittes einer Bedienperson 23 in den Lagerbereich 7, 8, 9 mittels der Zutrittsüberwachung 100; 101;
- Umschalten vom Automatikbetrieb in einen Sicherheitsbetrieb für eine Ladegut-Manipulationseinheit 2; 36; 54; 55, wenn an der Steuereinheit 39a; 39b der Ladegut-Hebevorrichtung 37a; 37b ein Zustandssignal eingeht, welches ausgelöst wird, sofern von der Zutrittsüberwachung 100; 101 der Zutritt der Bedienperson 23 in den Lagerbereich 7, 8, 9 nahe der Ladegut-Manipulationseinheit 2; 36; 54; 55 erfasst wird. Im Sicherheitsbetrieb wird der Hubantrieb 40a; 40b und/oder Förderantrieb 42a; 42b der Transportvorrichtung 41a; 41b abgeschaltet und in einen für die Bedienperson 23 gefahrlosen bzw. bewegungslosen Ruhezustand versetzt, bis die Steuereinheit 39a; 39b ein Freischaltsignal (S_{FH4}) erhält. Die Transportvorrichtung 41a; 41b ist in einem gefahrlosen bzw. bewegungslosen Ruhezustand, wenn die Energiezufuhr zum Hubantrieb 40a; 40b und Förderantrieb 42a, 42b unterbrochen und die Stellbewegungen der Transportvorrichtung 41a; 41b, welche die Bedienperson 23 im Zugriffsbereich 72 bzw. Schutzbereich 73 gefährden könnten, verhindert sind;
- Umschalten vom Automatikbetrieb in einen Sicherheitsbetrieb für eine Ladegut-Manipulationseinheit 2; 36; 54; 55, wenn an der Steuereinheit 49a; 49b; 50a; 50b der Bereitstellvorrichtung 45; 46; 56 ein Zustandssignal eingeht, welches ausgelöst wird, sofern von der Zutrittsüberwachung 100; 101 der Zutritt der Bedienperson 23 in den Lagerbereich 7, 8, 9 erfasst wird. Im Sicherheitsbetrieb werden die Förderantriebe 47a; 47b; 48a; 48b der im Schutzbereich 73 angeordneten Bereitstellvorrichtungen 45; 46; 56 abgeschaltet und in einen für die Bedienperson 23 gefahrlosen bzw. bewegungslosen Ruhezustand versetzt, bis die Steuereinheit 49a; 49b; 50a; 50b ein Freischaltsignal (S_{FBV4}) erhält. Die Art und Weise der Anschaltung der Bereitstellvorrichtungen 45; 46; 56 ist oben im Detail beschrieben. Die Bereitstellvorrichtungen 45; 46; 56 sind in einem gefahrlosen bzw. bewegungslosen Ruhezustand, wenn die Energiezufuhr zu den Förderantrieben 47a; 47b; 48a; 48b unterbrochen und der Ladeguttransport auf jenen Bereitstellvorrichtungen 45; 46; 56, welche die Bedienperson 23 im Zugriffsbereich 72 bzw. Schutzbereich 73 gefährden könnten, verhindert ist.

Wie in Fig. 20 eingetragen, können je Lagerbereich 7, 8, 9 auch (Befehls)Eingabevorrichtungen 112, 113 vorgesehen werden. Die erste Eingabevorrichtung 112 im jeweiligen Lagerbereich 7, 8, 9 ist in Richtung der Längserstreckung der Regalgasse 3 vor einer ersten Grenzfläche 114 des Gefahrenbereiches 111 und die zweite Eingabevorrichtung 112 im jeweiligen Lagerbereich 7, 8, 9 in Richtung der Längserstreckung der Regalgasse 3 nach einer zweiten Grenzfläche 115 des Gefahrenbereiches 111 angeordnet. Die Eingabevorrichtungen 112, 113 liegen also außerhalb des Gefahrenbereiches 111. Ferner sind die Eingabevorrichtungen 112, 113 über eine Steuerleitung (nicht dargestellt) mit der Steuerungsvorrichtung 28 bzw. der Auswerteeinheit 35 verbunden. Die erste Eingabevorrichtung 112 ist der ersten Zutrittsüberwachung 100 und die zweite Eingabevorrichtung 112 ist der zweiten Zutrittsüberwachung 101 zugeordnet und sind mit der Steuerungsvorrichtung 28 über Steuerleitungen (nicht dargestellt) verbunden.

Diese Ausführung findet vorwiegend bei langen Regalgassen 3 Anwendung, wobei eine Bedienperson 23 nach dem Verlassen des Gefahrenbereiches 111 die entsprechende Eingabevorrichtung 112; 113 betätigen kann. Bewegt sich die Bedienperson 23 ausgehend von der Zugangstür 19, 20, 21 in den Lagerbereich 7, 8, 9, beispielweise in den Lagerbereich 8, passiert diese die (rechte) Zutrittsüberwachung 100, woraufhin die Transportvorrichtung 41a; 41b derart angesteuert wird, dass diese stillgesetzt oder mit einer reduzierten Hubgeschwindigkeit bewegt wird.

Bei dieser Ausführung kann die Bedienperson 23 entweder den Gefahrenbereich 111 passieren und an der Ladegut-Manipulationseinheit 2; 36; 54; 56 vorbeigehen oder sie kann gegebenenfalls auch Störungen beispielsweise an der Ladegut-Hebevorrichtung 37a; 37b beheben.

Bewegt sich die Bedienperson 23 ausgehend von der Zugangstür 19, 20, 21 in Richtung der Regalgasse 3 (von rechts nach links), durchquert sie vorerst den Gefahrenbereich 111. Hat die Bedienperson 23 den Gefahrenbereich 111 verlassen, kann sie die von der (rechten) Zutrittsüberwachung 100 entfernt liegende (linke) Eingabevorrichtung 113 betätigen, wenn sie sich nach links bewegt.

Bewegt sich die Bedienperson 23 aus dem Lagerbereich 7, 8, 9 heraus in Richtung auf die Zugangstür 19, 20, 21 (von links nach rechts), passiert diese vorerst die (linke) Zutrittsüberwachung 101, woraufhin die Transportvorrichtung 41a; 41b derart angesteuert wird, dass diese stillgesetzt oder mit einer reduzierten Hubgeschwindigkeit bewegt wird. Dabei kann die Bedienperson 23 den Gefahrenbereich 111 durchqueren. Hat die Bedienperson 23 den Gefahrenbereich 111 verlassen, kann sie die von der (linken) Zutrittsüberwachung 101 entfernt liegende (rechte) Eingabevorrichtung 112 betätigen.

Auf diese Weise kann die Bedienperson 23 ohne Gefährdung bzw. ohne wesentlichem Gefährdungsrisiko an der gegebenenfalls noch im Sicherheitsbetrieb angesteuerte Transportvorrichtung 41a; 41b vorbeigehen.

Wird die Eingabevorrichtung 112; 113 betätigt, wird von der Steuerungsvorrichtung 28 bzw. der Auswerteeinheit 35 ein erstes Freischaltsignal erzeugt, mittels welchem die Transportvorrichtung 41a; 41b aus dem Sicherheitsbetrieb wieder in den Automatikbetrieb geschaltet wird. Ferner kann ein zweites Freischaltsignal erzeugt werden, mittels welchem jene Bereitstellvorrichtungen 45; 46; 56, welche im Lagerbereich 7, 8, 9 abgeschaltet wurden, oder jene Bereitstellvorrichtungen 45; 46; 56, welche im Gefahrenbereich 111 abgeschaltet wurden, aus dem Sicherheitsbetrieb wieder in den Automatikbetrieb geschaltet werden. Es sei hingewiesen, dass der Gefahrenbereich 111 innerhalb des oben beschriebenen Schutzbereiches 73 liegt und daher die "Gefährdungsquelle" eliminiert werden muss.

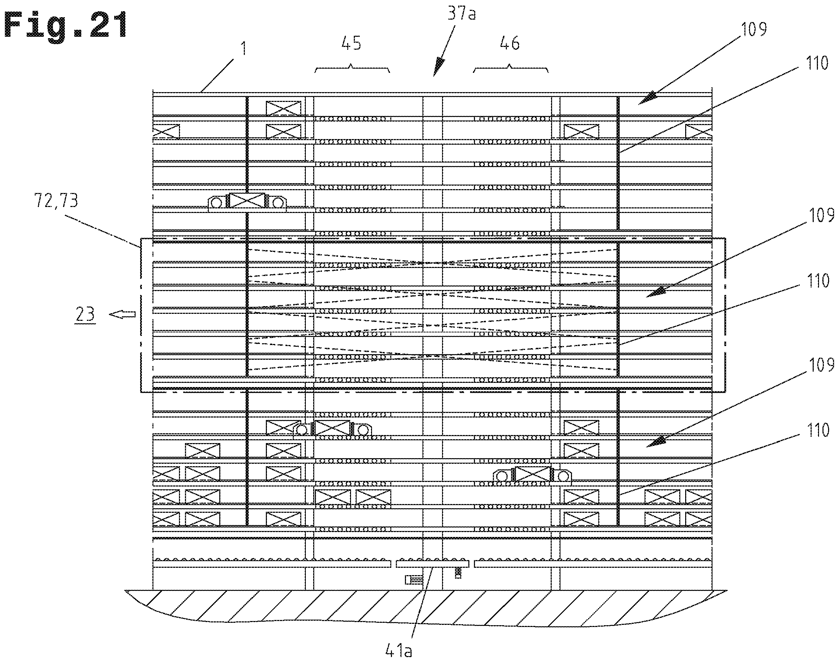

In der Fig. 21 wird eine dritte Ausführung von sicherheitstechnischen Maßnahmen beschrieben, welche vorgesehen werden können, wenn das Regallagersystem eine Manipulationseinheit 2; 36; 54; 55 gemäß einer der oben beschriebenen Ausführungen umfasst. Das hierfür modifizierte Steuerungssystem ist mit einer "nicht trennenden Schutzvorrichtung" kombiniert.

Nach dieser Ausführung umfasst die Ladegut-Manipulationseinheit 2; 36; 54; 55
- zumindest eine Ladegut-Hebevorrichtung 37a; 37b mit einer heb- und senkbaren Transportvorrichtung 41a; 41b für die Ladegüter 6, und
- zumindest eine Puffervorrichtung 38a; 38b für die Ladegüter 6 mit in Richtung der Regalgasse 3 an einer der Seiten der Ladegut-Hebevorrichtung 37a; 37b oder zu beiden Seiten der Ladegut-Hebevorrichtung 37a; 37b und in zumindest einigen der Regalebenen (RE) angeordnete Bereitstellvorrichtungen 45; 46; 56 für das Zwischenpuffern eines oder mehrerer Ladegüter 6, und
- je Lagerbereich 7, 8, 9 einen den Bewegungsraum der heb- und senkbaren Transportvorrichtung 41a; 41b und den Bewegungsraum für die Ladegüter 6 auf der Puffervorrichtung 38a; 38b gegenüber der Regalgasse 3 absichernden und diesen Bereich überwachenden "nichttrennenden" Durchgriffsschutz 109, wobei der Durchgriffsschutz 109 im Bereich der Ladegut-Hebevorrichtung 37a; 37b und der zumindest einen Puffervorrichtung 38a; 38b angeordnet ist und eine Überwachungsebene im Wesentlichen in einer Vertikalebene und parallel zur Regalgasse 3 verläuft. Die Überwachungsebene überspannt zumindest im Wesentlichen die lichte Höhe zwischen den Gehstegen 15, wenn der Schutzbereich 73 innerhalb eines Lagerbereiches 7, 8, 9 liegt, oder erstreckt sich ausgehend vom Lagerbereich 8 bis in einen angrenzenden (unteren und/oder oberen) Lagerbereich 7, 9 hinein, wenn der Schutzbereich 73 über mehrere Lagerbereiche 7, 8, 9 ausgedehnt ist.

Der Durchgriffsschutz 109 umfasst eine schaltende Sensorik 110, beispielsweise eine Vielzahl von opto-elektronischen Sensoren oder Ultraschallsensoren, um in der Überwachungsebene ein Strahlenfeld oder Schallwellenfeld zu erzeugen. Eine solche Sensorik 110 mit opto-elektronischen Sensoren ist im Allgemeinen als "Sicherheits-Lichtgitter" bekannt. Der Durchgriffsschutz kann auch durch ein Kamerasystem realisiert werden.

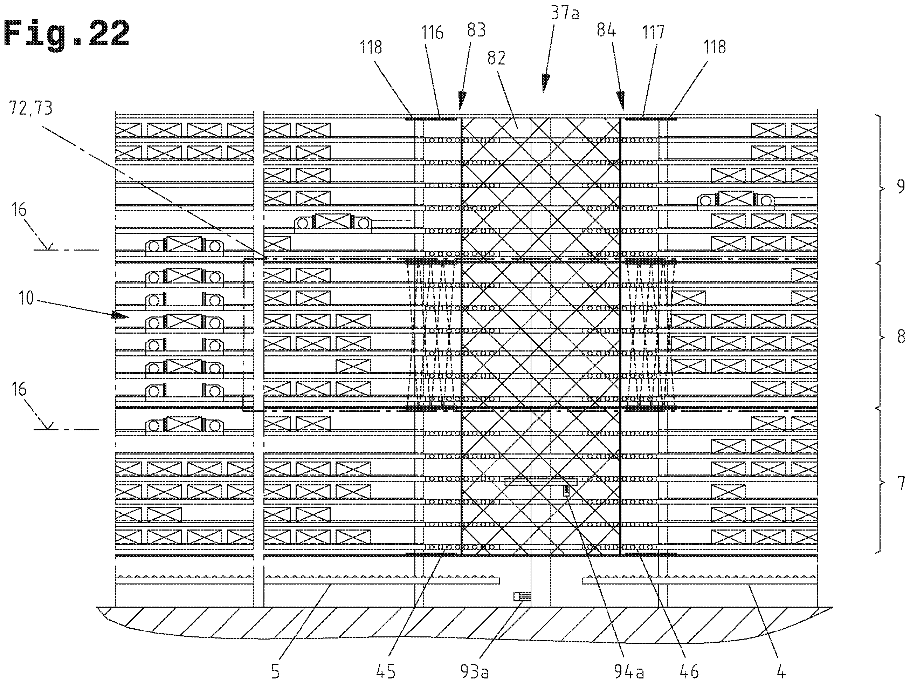

In Fig. 22 wird eine vierte Ausführung von sicherheitstechnischen Maßnahmen beschrieben, welche vorgesehen werden können, wenn das Regallagersystem eine Manipulationseinheit 2; 36; 54; 55 gemäß einer der oben beschriebenen Ausführungen umfasst. Das hierfür modifizierte Steuerungssystem ist mit einer "trennenden und nicht trennenden Schutzvorrichtung" kombiniert.

Die Ladegut-Manipulationseinheit 2; 36; 54; 55 kann wiederum in jedem Lagerbereich 7, 8, 9 und im Bereich der Ladegut-Hebevorrichtung 37a; 37b eine den Bewegungsraum der heb- und senkbaren Transportvorrichtung 41a; 41b gegenüber der Regalgasse 3 abgrenzende, erste physische Durchgriffsbarriere 82 umfassen.

Zusätzlich kann in jedem Lagerbereich 7, 8, 9 und im Bereich der Bereitstellvorrichtungen 45; 46; 56 eine den Pufferbereich der Bereitstellvorrichtungen 45; 46; 56 erfassende Zugriffsüberwachung 116, 117 vorgesehen werden. Die Zugriffsüberwachung 116, 117 je Lagerbereich 7, 8, 9 umfasst eine schaltende Sensorik 118, welche über Steuerleitungen (nicht dargestellt) mit der Steuerungsvorrichtung 28 bzw. der Auswerteeinheit 35 verbunden sind. Die Zugriffsüberwachung 116, 117 erzeugt ein Signal, wenn von ihr im Lagerbereich 7, 8, 9 der Zugriff der Bedienperson 23 auf den Pufferbereich der Bereitstellvorrichtungen 45; 46; 56 erfasst wird.

Die Sensorik 118 umfasst beispielsweise eine Vielzahl von opto-elektronischen Sensoren oder Ultraschallsensoren, um in der Überwachungsebene ein Strahlenfeld oder Schallwellenfeld zu erzeugen. Die Überwachungsebene verläuft im Wesentlichen in einer Vertikalebene und bevorzugt parallel zur Regalgasse 3. Eine solche Sensorik 110 mit opto-elektronischen Sensoren ist im Allgemeinen als "Sicherheits-Lichtgitter" bekannt. Die Überwachungsebene überspannt zumindest im Wesentlichen die lichte Höhe zwischen den Gehstegen 15, wenn der Schutzbereich 73 innerhalb eines Lagerbereiches 7, 8, 9 liegt, oder erstreckt sich ausgehend vom Lagerbereich 8 bis in einen angrenzenden (unteren und/oder oberen) Lagerbereich 7, 9 hinein, wenn der Schutzbereich 73 über mehrere Lagerbereiche 7, 8, 9 ausgedehnt ist.

Im Automatikbetrieb für die Ladegut-Manipulationseinheit 2; 36; 54; 55 erhalten die Bereitstellvorrichtungen 45; 46; 56 über die Steuerleitungen 51 (Fig. 1) an der Steuereinheit 49a; 49b; 50a; 50b Ein- und/oder Auslagerbefehle und entsprechend dieser Ein- und/oder Auslagerbefehle werden die Förderantriebe 47a; 47b; 48a; 48b; 94a; 94b für die Transportvorrichtung 41a; 41b und Bereitstellvorrichtungen 45; 46; 56 angesteuert, um Ladegüter 6 zwischen der Transportvorrichtung 41a; 41b und einer entsprechenden Bereitstellvorrichtung 45; 46; 56 in der betreffenden Regallagerebene (RE) zu transportieren.

Die Steuerungsvorrichtung 28 ist eingerichtet, um einen oder mehrere der folgenden Schritte durchzuführen:
- Festlegung der Bereitstellvorrichtungen 45; 46; 56, welche im Lagerbereich 7, 8, 9 angeordnet sind, oder der Bereitstellvorrichtungen 45; 46; 56 je Lagerbereich 7, 8, 9, welche im Schutzbereich 73 angeordnet sind;
- Aktivieren der Zugriffsüberwachung 116, 117, insbesondere einer Sensorik 118, an den Bereitstellvorrichtungen 45; 46; 56 zumindest in jenem Lagerbereich 7, 8, 9, in welchen die Bedienperson 23 eintritt;
- Überwachung eines Zugriffs einer Bedienperson 23 auf einen Pufferbereich der Bereitstellvorrichtungen 45; 46 mittels der Zugriffsüberwachung 116, 117;
- Notausschaltung der Transportvorrichtung 41a; 41b, wenn an der Steuereinheit 39a; 39b der Ladegut-Hebevorrichtung 37a; 37b ein Zustandssignal eingeht, welches ausgelöst wird, sofern von der Zugriffsüberwachung 116, 117 der Zugriff der Bedienperson 23 auf den Pufferbereich der Bereitstellvorrichtungen 45; 46; 56 erfasst wird.

Der Pufferbereich erstreckt sich über die Anzahl der übereinander angeordneten Bereitstellvorrichtungen 45; 46; 56 und erfasst sämtliche Übernahmeplätze 83 der Bereitstellvorrichtungen 45 bzw. Übergabeplätze 84 der Bereitstellvorrichtungen 46 (Fig. 1; 6; 7) bzw. Übernahme- und Übergabeplätze 83, 84 der Bereitstellvorrichtungen 56 (Fig. 8).

Es sei auch hingewiesen, dass bei Entfall einer Spalte Bereitstellvorrichtungen 45; 46 nur noch auf einer Seite die Bereitstellvorrichtungen 45; 46 und die Zugriffsüberwachung 116; 117 angeordnet ist. Eine solche Ausführung ist in strichlierten Linien in Fig. 7 beispielhaft eingetragen.

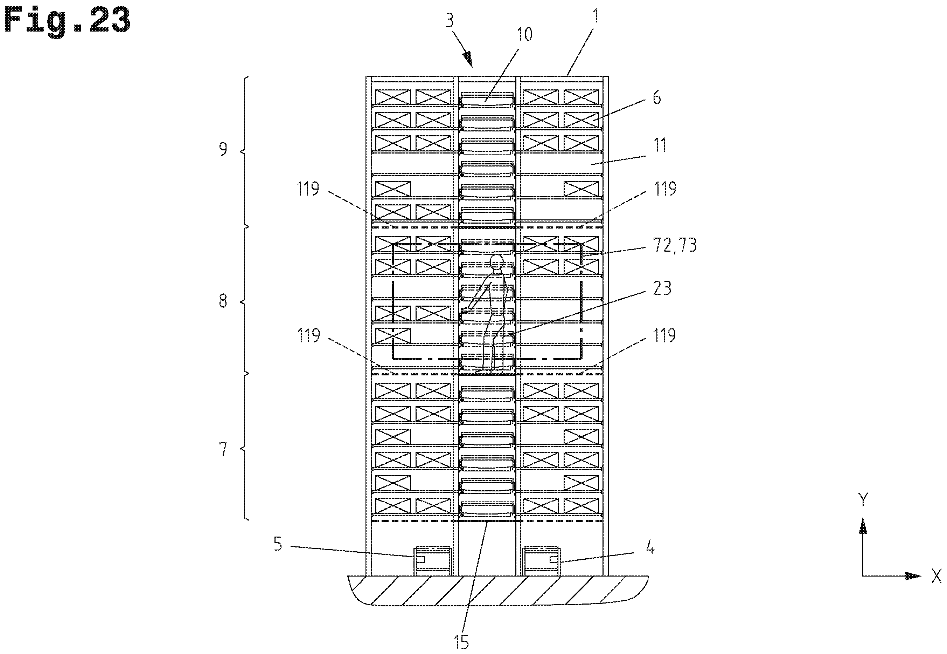

In Fig. 23 ist eine Ausführung gezeigt, bei der die Lagerregale 1 jeweils im Übergangsbereich zwischen übereinander liegenden Lagerbereichen 7, 8, 9 mit einer physischen Durchgriffsbarriere 119, insbesondere ein Sicherheitsgitter, ausgestattet sind, welche den Zugriff der Bedienperson 23 von einem Lagerbereich 7, 8, 9 in den anderen Lagerbereich 7, 8, 9 verhindert. Die Durchgriffsbarrieren 119 verlaufen parallel zur Fahrebene 16 bzw. Regalebene (RE) und erstrecken sich im Wesentlich über die Länge der Lagerbereiche 7, 8, 9 und in Richtung der Tiefe (z-Richtung) der Lagerregale 1. Diese Durchgriffsbarrieren 119 sind beispielweise im Wesentlich auf dem Höhenniveau der Gehstege 15 und zu dessen beiden Seiten angeordnet. Die Durchgriffsbarrieren 119 sind mit den Lagerregalen 1 fest verbunden, beispielweise verschraubt. Wie auch ersichtlich sind in jedem Lagerbereich 7, 8, 9 zwei oder mehrere Regalbediengeräte 10; 10'; 10" vorhanden.

In diesem Fall ist der räumliche Zugriffsbereich 72 grundsätzlich in einer y-z-Richtung durch den (theoretischen) Bewegungsbereich eines Armes oder Fußes der Bedienperson 23 zwischen den Durchgriffsbarrieren 119 bzw. Gehstegen 15 und in einer x-Richtung durch den Gehweg der Bedienperson 23 entlang der Regalgasse 3 definiert, wenn sich die Bedienperson 23 in einem der Lagerbereiche 8 aufhält. Die dritte Dimension (x-Richtung) kann sich bei einer kurzen Regalgasse 3 über die gesamte Länge der Regalgasse 3 und bei einer langen Regalgasse 3 auch nur über einen Längenabschnitt der Regalgasse 3 erstrecken, daher könnten auch mehr als ein Zugriffsbereich 72 bzw. Schutzbereich 73 entlang der betreffenden Regalgasse 3 definiert werden.

In diesem Fall liegt der Schutzbereich 73 innerhalb eines einzigen Lagerbereiches 7, 8, 9 und werden im Sicherheitsbetrieb für die Regalbediengeräte 10; 10'; 10" sämtliche in diesem Lagerbereich 7, 8, 9, beispielweise im Lagerbereich 8, angeordnete Regalbediengeräte 10; 10'; 10" in die Halteposition bewegt und in dieser in einen "gefahrlosen Ruhezustand" geschalten (wie in Fig. 23 in strichlierte Linien eingetragen), da der Schutzbereich 73 nur in diesem Lagerbereich 7, 8, 9 liegt. Auf die Detailausführungen der Steuerungsvorrichtung 28 und die verfahrenstechnischen Maßnahmen wird auf die oben beschriebenen bzw. nachfolgend beschriebenen Fig. verwiesen. Im darunter liegenden und darüber liegenden Lagerbereich 7, 9 werden die Regalbediengeräte 10; 10'; 10" weiterhin im Automatikbetrieb betrieben.

Wie ebenso aus der Fig. 23 ersichtlich, sind mehrere Fahrebenen 16 ausgebildet und sind in jedem Lagerbereich 7, 8, 9 zumindest zwei Regalbediengeräte 10; 10'; 10" vorgesehen. Ist in jedem Lagerbereich 7, 8, 9 je Fahrebene 16 ein Regalbediengerät 10; 10'; 10" vorgesehen, so werden diejenigen Regalbediengeräte 10; 10'; 10", welche sich im Automatikbetrieb in den Schutzbereich 73 hineinbewegen und/oder durch den Schutzbereich 73 hindurchbewegen würden, daher nach gezeigter Ausführung alle sechs Regalbediengeräte 10; 10'; 10", in die Halteposition bewegt und jeweils in dieser in einen "gefahrlosen Ruhezustand" geschaltet.

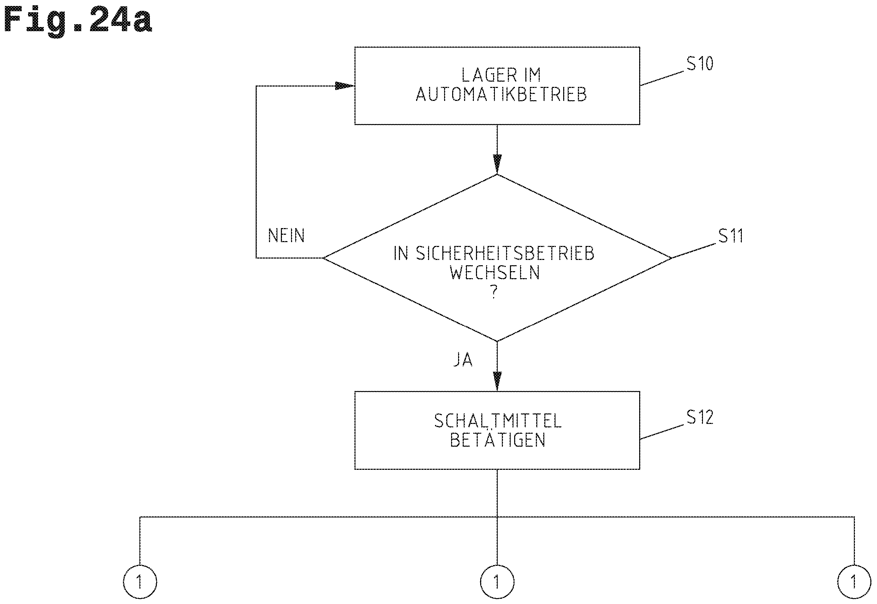

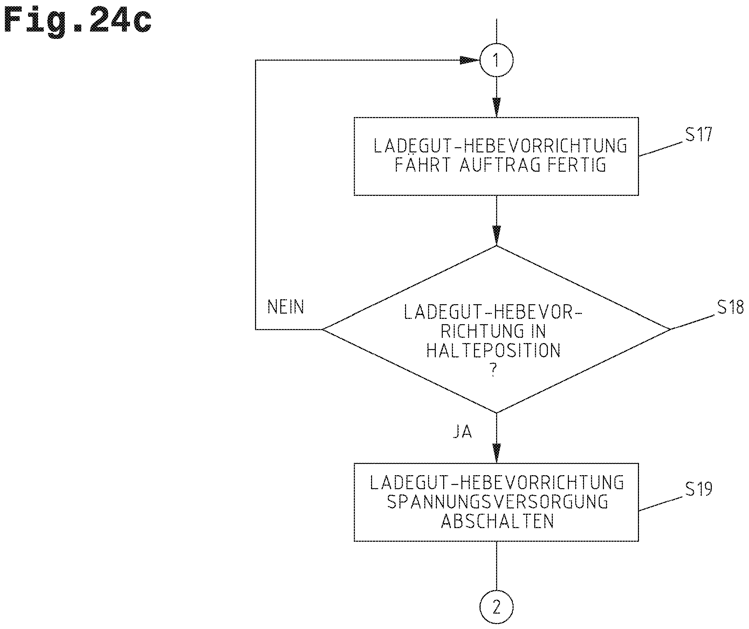

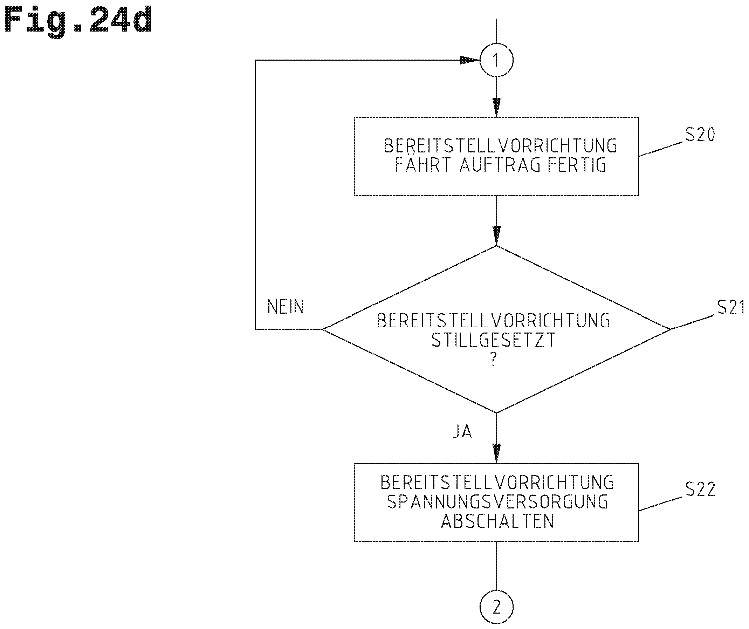

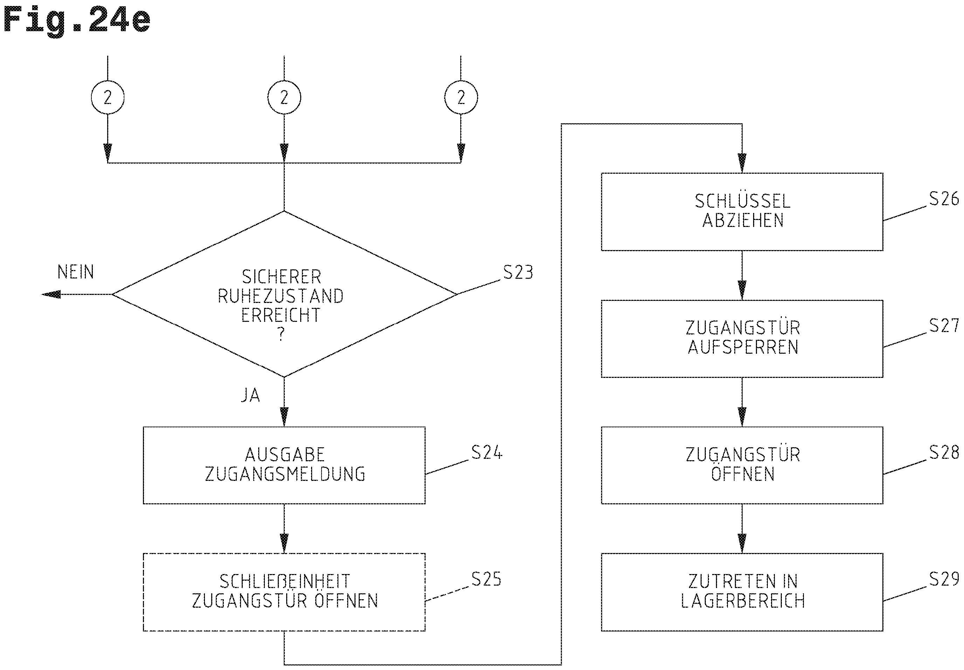

In den Fig. 24a bis 24e ist das Verfahren zum sicheren Betreiben eines automatisierten Regallagersystems in einer ersten Ausführung beschrieben.

Zu Beginn des Verfahrens wird das Regallagersystem in einem Schritt S10 in einem Automatikmodus betrieben, das heißt die Regalbediengeräte 10; 10'; 10" erhalten von der Steuerungsvorrichtung 28 die Fahr- und Lagerbefehle und lagern Ladegüter 6 vollautomatisch ein und aus.

Die zumindest eine Ladegut-Hebevorrichtung 37a; 37b erhält von der Steuerungsvorrichtung 28 die Einlagerbefehle und werden die Ladegüter 6 vollautomatisch von der Fördertechnik 4 übernommen, auf Höhe einer gewünschten Regalebene (RE) angehoben/abgesenkt und entweder auf eine Bereitstellvorrichtung 45; 56 oder direkt auf das Regalbediengerät 10; 10'; 10" übergeben. Ebenso erhält die zumindest eine Ladegut-Hebevorrichtung 37a; 37b von der Steuerungsvorrichtung 28 die Auslagerbefehle und werden die Ladegüter 6 vollautomatisch von den Regalbediengeräten 10; 10'; 10" übernommen, auf eine Bereitstellvorrichtung 46; 56 oder direkt an die Ladegut-Hebevorrichtung 37a; 37b übergeben, auf Höhe einer Fördertechnikebene (FE) angehoben/abgesenkt und auf die Fördertechnik 5 übergeben.

Sind die Bereitstellvorrichtungen 45; 46; 56 vorgesehen, so erhalten auch diese von der Steuerungsvorrichtung 28 Ein- und/oder Auslagerbefehle, um Ladegüter 6 vollautomatisch an einem Übernahmeplatz 83 und Übergabeplatz 84 bereitzustellen.

In einem Schritt S11 wird abgefragt, ob in einen Sicherheitsmodus bzw. Sicherheitsbetrieb gewechselt werden soll. Ist der Zutritt der Bedienperson 23 in einen der Lagerbereiche 7, 8, 9 erforderlich, um eine Wartung an einem Regalbediengeräte 10; 10'; 10", der Ladegut-Hebevorrichtung 37a; 37b oder der Bereitstellvorrichtung 45; 46; 56 durchzuführen, so kann die Bedienperson 23 den Automatikbetrieb für die Regalbediengeräte 10; 10'; 10", der zumindest einen Ladegut-Hebevorrichtung 37a; 37b und die Bereitstellvorrichtungen 45; 46; 56 unterbrechen. Hierzu wird in einem Schritt S12 von der Bedienperson 23 das Schaltmittel 27 betätigt, beispielweise ein Drückknopf gedrückt, mit dem der Steuerungsvorrichtung 28 signalisiert wird, dass ein Sicherheitsbetrieb erforderlich ist. Durch die schaltungstechnische (logische) Zuordnung der Schaltvorrichtungen 24, 25, 26 zu je einem Lagerbereich 7, 8, 9 kann die Steuerungsvorrichtung 28, nachdem die Bedienperson 23 das Schaltmittel 27 betätigt hat, feststellen, in welchen Lagerbereich 7, 8, 9 sie zutreten will. Es sei auch darauf hingewiesen, dass wenn im Text von "Wartung" gesprochen wird, auch Instandsetzungs-, Reparatur bzw. Servicearbeiten oder eine Störungsbehebung verstanden werden können.

Wurde das Schaltmittel 27 betätigt, beginnt eine Routine für einen Sicherheitsbetrieb zu laufen, und es werden von der Steuerungsvorrichtung 28 die Regalbediengeräte 10; 10'; 10" entsprechend der Schritte S13 bis S16, die zumindest eine Ladegut-Hebevorrichtung 37a; 37b entsprechend der Schritte S17 bis S19 und die Bereitstellvorrichtungen 45; 46; 56 entsprechend der Schritte S20 bis S22 angesteuert.

Gemäß der Schritte S13 bis S16 ist es nun vorgesehen, dass einige der Regalbediengeräte 10; 10'; 10" in einem Sicherheitsmodus und einige Regalbediengeräte 10; 10'; 10" im Automatikmodus betrieben werden. Diejenigen Regalbediengeräte 10; 10'; 10", welche sich im Automatikbetrieb in den Schutzbereich 73 hineinbewegen und/oder durch den Schutzbereich 73 hindurchbewegen würden, erhalten neuerlich Fahr- und/oder Lagerbefehle, mittels welcher die Regalbediengeräte 10; 10'; 10" angewiesen werden, jeweils in eine von der Steuerungsvorrichtung 28 festgelegte Halteposition zu fahren. Die Regalbediengeräte 10; 10'; 10" außerhalb des Schutzbereiches 73 bleiben im Automatikbetrieb. Es kann auch vorgesehen werden, dass nach dem Betätigen des Schaltmittels 27 je Regalbediengerät 10; 10'; 10" der letzte Einlager- oder Auslagerauftrag noch erledigt wird. Beispielweise wird noch ein Ladegut 6, welches bereits von einer Bereitstellvorrichtung 45 abgeholt wurde, noch auf einen Lagerplatz 11 eingelagert, oder es wird ein Ladegut 6, welches bereits von einem Lagerplatz 11 entnommen wurde, noch zu einer Bereitstellvorrichtung 46 transportiert.

Im Schritt S15 wird abgefragt, ob diejenigen Regalbediengeräte 10; 10'; 10", welche sich im Automatikbetrieb in den Schutzbereich 73 hineinbewegen und/oder durch den Schutzbereich 73 hindurchbewegen würden, in die Haltepositionen bewegt wurden. Wie oben beschrieben kann die Halteposition eine x-Halteposition (oder optional die x-Haltepositionen und z-Haltepositionen) betreffen.

Mit dem Wechsel vom Automatikbetrieb in den Sicherheitsbetrieb im Schritt S12 wird ein Überwachungszeitraum (Schritt S14) ausgelöst, innerhalb welchem die Regalbediengeräte 10; 10'; 10" die Haltepositionen (oder optional die x-Haltepositionen und z-Haltepositionen) erreicht haben sollten.

Im Schritt S15 kann nun auch abgefragt werden, ob "ausgewählte" Regalbediengeräte 10; 10'; 10" die Haltepositionen innerhalb des Überwachungszeitraumes erreicht haben. Dies wird von den Regalbediengeräte 10; 10'; 10" jeweils durch ein Bestätigungssignal (S_{RM1..RMn}) der Steuerungsvorrichtung 28 signalisiert.

Der Überwachungszeitraum definiert eine Zeitspanne und hat eines der "ausgewählten" Regalbediengeräte 10; 10'; 10" die Halteposition nicht innerhalb des Überwachungszeitraumes erreicht, können dennoch die Schritte S23 bis S29 ausgelöst werden.

In einem Schritt S16 wird die Betriebsspannung für die Regalbediengeräte 10; 10'; 10" auf eine Gefahrenbetriebsspannung umgeschaltet, wie oben beispielweise zu den unterschiedlichen Ausführungen gemäß der Fig. 11b; 12 und 14 beschrieben.

Gemäß der Schritte S17 bis S19 ist es nun vorgesehen, dass die zumindest eine Ladegut-Hebevorrichtung 37a; 37b in einem Sicherheitsmodus betrieben wird.

Es kann auch vorgesehen werden, dass nach dem Betätigen des Schaltmittels 27 von der Ladegut-Hebevorrichtung 37a; 37b der letzte Einlager- oder Auslagerauftrag noch erledigt wird. Beispielweise wird noch ein Ladegut 6, welches sich bereits auf der Transportvorrichtung 41a; 41b befindet, noch auf eine der Bereitstellvorrichtungen 45; 56 oder die Fördertechnik 5 übergeben, wie im Schritt S17 angeführt.

Im Schritt S18 wird abgefragt, ob die Transportvorrichtung 41a, 41b der zumindest einen Ladegut-Hebevorrichtung 37a; 37b in eine Halteposition (y-Halteposition) bewegt wurde.

Befindet sich die Transportvorrichtung 41a, 41b in der Halteposition (y-Halteposition) wird gemäß Schritt S19 die Spannungsversorgung zum Antriebsmotor für den Hubantrieb 40a; 40b und Antriebsmotor für den Förderantrieb 42a; 42b unterbrochen, wie oben beschrieben.

Gemäß der Schritte S20 bis S22 ist es vorgesehen, dass die Bereitstellvorrichtungen 45; 46 je Einlager- Pufferbereich und Auslager-Pufferbereich oder die Bereitstellvorrichtungen 56 je kombiniertem Einlager- / Auslager-Pufferbereich in einem Sicherheitsmodus betrieben werden.

Es kann auch vorgesehen werden, dass nach dem Betätigen des Schaltmittels 27 von den Bereitstellvorrichtungen 45; 46; 56 der letzte Einlager- oder Auslagerauftrag noch erledigt wird. Beispielweise wird noch ein Ladegut 6, welches sich bereits auf der Transportvorrichtung 41a; 41b befindet, noch auf einer Bereitstellvorrichtung 45; 56 aufgenommen oder von einer Bereitstellvorrichtung 46; 56 auf die Transportvorrichtung 41a; 41b abgegeben, wie im Schritt S20 angeführt.

Im Schritt S21 wird abgefragt, ob die motorisch angetriebene Fördervorrichtungen der Bereitstellvorrichtungen 45; 46; 56 des zumindest einen Pufferbereiches stillgesetzt wurden.

Wurden die Bereitstellvorrichtungen 45; 46; 56 stillgesetzt bzw. angehalten, wird gemäß Schritt S22 die Spannungsversorgung zum Antriebsmotor für den Förderantrieb 47a; 47b; 48a; 48b unterbrochen, wie oben beschrieben.

Gemäß der Schritte S23 bis S29 ist nun das "Zutrittsszenario" für die Bedienperson 23 gezeigt.

Im Schritt S23 kann abgefragt werden, ob die Regalbediengeräte 10; 10'; 10", die Ladegut-Hebevorrichtung 37a; 37b und die Bereitstellvorrichtungen 45; 46; 56 in einen für die Bedienperson 23 gefahrenlosen bzw. bewegungslosen Ruhezustand versetzt wurden, wie oben im Detail beschrieben. Sollte dies nicht der Fall sein, wird kein Zutritt in den Lagerbereich 7, 8, 9 gewährt und es muss eine autorisierte Person angefordert werden.

Ist der gefahrenlose bzw. bewegungslose Ruhezustand für die Regalbediengeräte 10; 10'; 10", die Ladegut-Hebevorrichtung 37a; 37b und die Bereitstellvorrichtungen 45; 46; 56 erreicht, erhält die Steuerungsvorrichtung 28 die Freischaltsignale (S_{FRB3}, S_{FH3}, S_{FBV3}), womit am Ausgabemittel 29 der Schaltvorrichtung 24, 25, 26 wird eine Zugangsmeldung optisch und/oder akustisch ausgegeben wird, wie im Schritt S24 angegeben.

Im Schritt S 25 kann auf oben beschriebene Weise eine optionale Schließeinheit 33 betätigt werden.

Die Bedienperson 23 kann nachdem die Zugangsmeldung ausgegeben und gegebenenfalls die Schließeinheit 33 betätigt worden ist, um die Zugangstür 19, 20, 21 zu entriegeln, die Schlüsselaufnahme 31 von der Automatikbetriebsstellung in die Sicherheitsbetriebsstellung schalten und danach den Schlüssel abziehen, wie im Schritt S26 dargestellt.

Danach kann die Bedienperson 23 die Zugangstür 19, 20, 21 aufsperren und öffnen, um das Zutreten in einen der Lagerbereiche 7, 8, 9 zu ermöglichen und eine Wartung an einem Regalbediengerät 10; 10'; 10", einer Bereitstellvorrichtung 45; 46; 56 im Schutzbereich 73 oder der Ladegut-Hebevorrichtung 37a; 37b vorzunehmen, siehe Schritte S27 bis S29.

Die Bedienperson 23 kann nachdem die Zugangsmeldung ausgegeben und gegebenenfalls die Schließeinheit 33 betätigt worden ist, um die Zugangstür 19, 20, 21 zu entriegeln, die Schlüsselaufnahme 31 von der Automatikbetriebsstellung in die Sicherheitsbetriebsstellung schalten und danach den Schlüssel abziehen, wie im Schritt S26 dargestellt.

Sind die Wartungsarbeiten abgeschlossen, geht die Bedienperson 23 wieder zur Zugangstür 19; 20; 21 zurück und schließt die Zugangstür 19, 20, 21. Ist die optionale Schließeinheit 33 vorgesehen, wird diese betätigt und die Zugangstür 19, 20, 21 verriegelt, vorzugsweise nachdem das Befehlseingabemittel 30 betätigt wurde.

Danach wird der Schlüssel wieder an der Schlüsselaufnahme 31 eingesteckt, und die Schlüsselaufnahme 31 von der Sicherheitsbetriebsstellung in die Automatikbetriebsstellung geschaltet. Anschließend wird das Befehlseingabemittel 30 betätigt und der Steuerungsvorrichtung 28 signalisiert, dass wieder der Automatikbetrieb aufgenommen werden kann. Die Steuerungsvorrichtung 28 übermittelt nach der Betätigung des Befehlseingabemittels 30 ein Freischaltsignal (S_{FRB4}) an die Steuereinheit (64), ein Freischaltsignal (S_{FH4}) an die Steuereinheit 39a; 39b und ein Freischaltsignal (S_{FBV4}) an die Steuereinheit 49a; 49b; 50a; 50b. Somit wird wieder die Gefahrenbetriebsspannung auf die Betriebsspannung umgeschaltet und es werden die Regalbediengeräte 10; 10'; 10" von den Haltepositionen wegbewegt und entsprechend der nächsten Fahr- und/oder Lagerbefehle automatisch betrieben. Auch die Ladegut-Hebevorrichtung 37a; 37b und die Bereitstellvorrichtungen 45; 46; 56 werden wieder mit Spannung versorgt und automatisch betrieben.

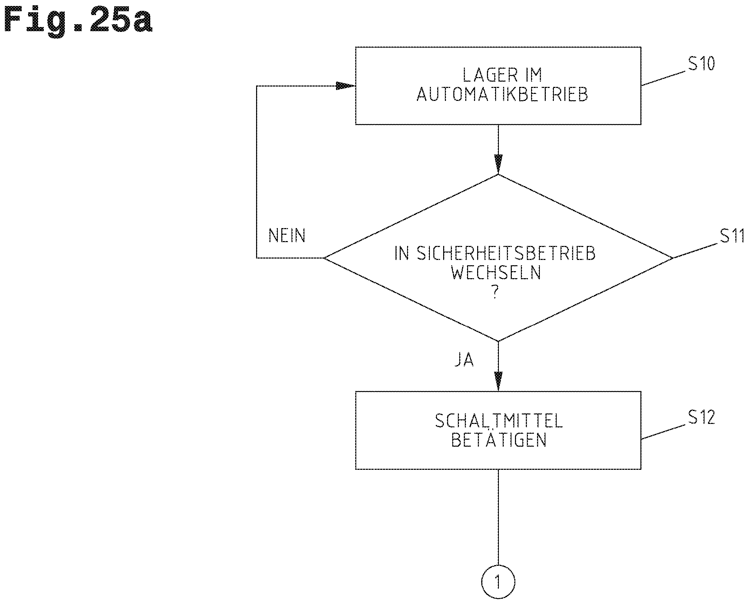

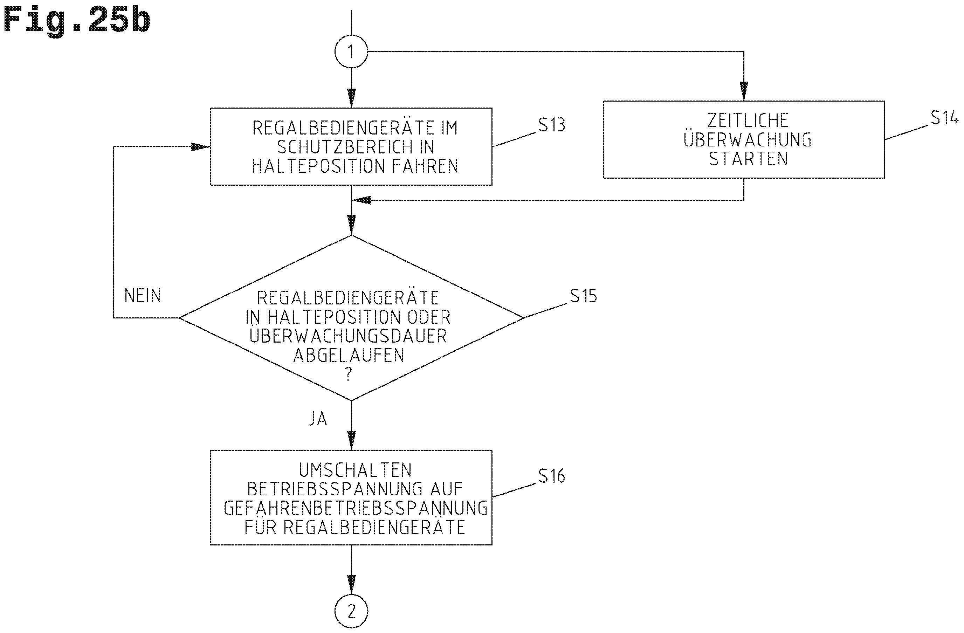

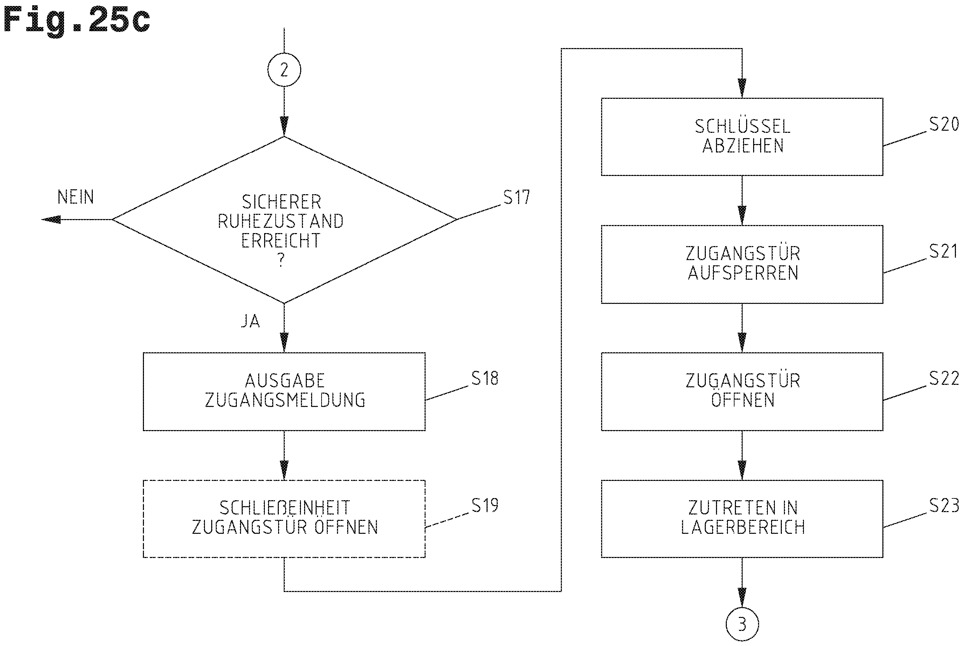

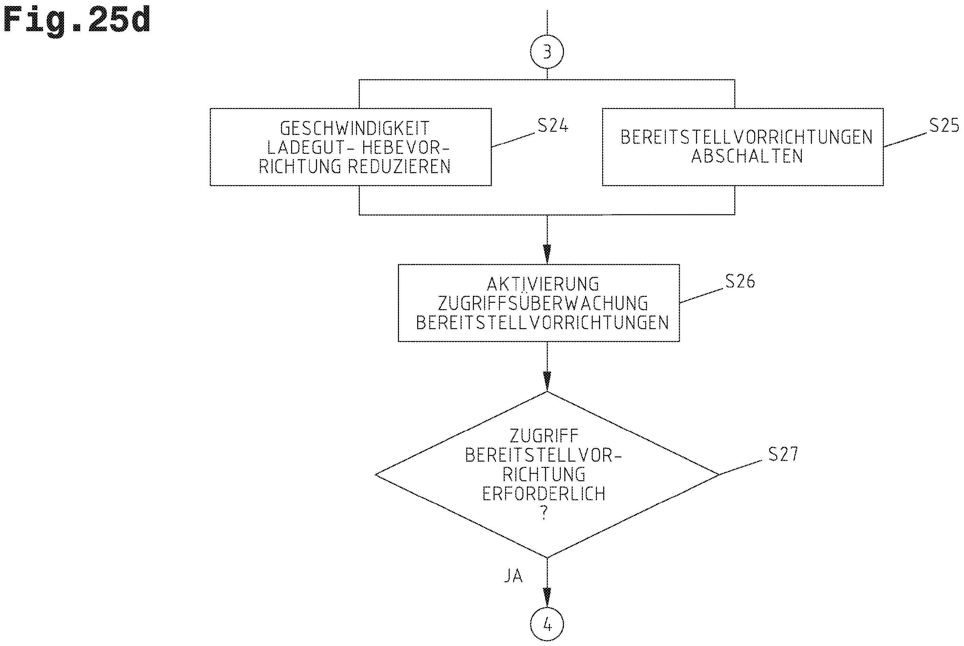

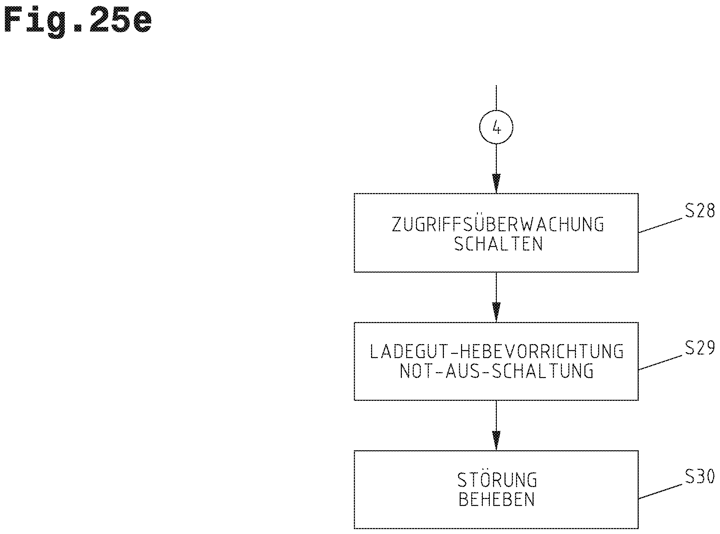

In den Fig. 25a bis 25e ist das Verfahren zum sicheren Betreiben eines automatisierten Regallagersystems in einer zweiten Ausführung beschrieben.

Zu Beginn des Verfahrens wird das Regallagersystem in einem Schritt S10 in einem Automatikmodus betrieben, das heißt die Regalbediengeräte 10; 10'; 10" erhalten von der Steuerungsvorrichtung 28 die Fahr- und Lagerbefehle und lagern Ladegüter 6 vollautomatisch ein und aus.

In einem Schritt S11 wird abgefragt, ob in einen Sicherheitsmodus bzw. Sicherheitsbetrieb gewechselt werden soll, wie oben beschrieben. Ist der Zutritt der Bedienperson 23 in einen der Lagerbereiche 7, 8, 9 erforderlich, so kann die Bedienperson 23 den Automatikbetrieb für die Regalbediengeräte 10; 10'; 10", der zumindest einen Ladegut-Hebevorrichtung 37a; 37b und die Bereitstellvorrichtungen 45; 46; 56 unterbrechen, wie oben zu Schritt S12 beschrieben.

Wurde das Schaltmittel 27 betätigt, beginnt eine Routine für einen Sicherheitsbetrieb zu laufen, und es werden die Regalbediengeräte 10; 10'; 10" von der Steuerungsvorrichtung 28 entsprechend der Schritte S13 bis S16 angesteuert und in die beschriebene Halteposition verfahren.

Gemäß der Schritte S17 bis S23 ist nun das "Zutrittsszenario" für die Bedienperson 23 gezeigt.

Im Schritt S17 kann abgefragt werden, ob die Regalbediengeräte 10; 10'; 10" in einen für die Bedienperson 23 gefahrenlosen bzw. bewegungslosen Ruhezustand versetzt wurden, wie oben im Detail beschrieben. Sollte dies nicht der Fall sein, wird kein Zutritt in den Lagerbereich 7, 8, 9 gewährt und es muss eine autorisierte Person angefordert werden.

Ist der gefahrenlose bzw. bewegungslose Ruhezustand für die Regalbediengeräte 10; 10'; 10" erreicht, erhält die Steuerungsvorrichtung 28 das Freischaltsignal (S_{FRB3}), womit an dem Ausgabemittel 29 der entsprechenden Schaltvorrichtung 24, 25, 26 eine Zugangsmeldung optisch und/oder akustisch ausgegeben wird, wie im Schritt S18 angegeben.

Im Schritt S 19 kann auf oben beschriebene Weise eine optionale Schließeinheit 33 betätigt werden.

Die Bedienperson 23 kann nachdem die Zugangsmeldung ausgegeben und gegebenenfalls die Schließeinheit 33 betätigt worden ist, um die Zugangstür 19, 20, 21 zu entriegeln, die Schlüsselaufnahme 31 von der Automatikbetriebsstellung in die Sicherheitsbetriebsstellung schalten und danach den Schlüssel abziehen, wie im Schritt S20 dargestellt.

Der Automatikbetrieb für die Ladegut-Manipulationseinheit 2; 36; 54; 55 kann in einen Sicherheitsbetrieb umgeschaltet werden, wenn an einer der Schaltvorrichtungen 24, 25, 26 von der Bedienperson 23 der Zugang in einen der Lagerbereiche 7, 8, 9 angemeldet und dies der Steuerungsvorrichtung 28 signalisiert wird, siehe beispielweise Fig. 17a, 17b. Dabei wird in einem Schritt S24 für den Sicherheitsbetrieb der Ladegut-Manipulationseinheit 2; 36; 54; 55 die Hubgeschwindigkeit für die Transportvorrichtung 41a; 41b auf eine Geschwindigkeit größer Null reduziert. Die Hubgeschwindigkeit wird gegenüber dem Automatikbetrieb zumindest auf der Hubbewegung bzw. dem Bewegungsweg entlang dem Schutzbereich 73 reduziert. Die Transportvorrichtung 41a; 41b wird vorzugsweise mit "sicherer Geschwindigkeit" durch den Schutzbereich 73 hindurchbewegt.

Danach kann die Bedienperson 23 die Zugangstür 19, 20, 21 aufsperren und öffnen, um das Zutreten in einen der Lagerbereiche 7, 8, 9 zu ermöglichen, siehe Schritte S21 bis S23.

Außerdem werden im Schritt S25 die Bereitstellvorrichtungen 45; 46; 56 stillgesetzt bzw. angehalten, in dem die Spannungsversorgung zum Antriebsmotor für den Förderantrieb 47a; 47b; 48a; 48b unterbrochen, wie oben beschrieben.

Zusätzlich können noch die Schritte S26 bis S29 vorgesehen werden. Dabei wird in einem Schritt S26 die Zugriffsüberwachung 116; 117 (Fig. 22) an den Bereitstellvorrichtungen 45; 46; 56 je Pufferbereich aktiviert und der Pufferbereich auf einen Zugriff der Bedienperson 23 überwacht.

Ist ein Zugriff der Bedienperson 23 auf einen Pufferbereich erforderlich, um beispielweise eine Störung auf einer Bereitstellvorrichtung 45; 46; 56 zu beheben, wird die Zugriffsüberwachung 116; 117 geschaltet und dies der Steuerungsvorrichtung 28 signalisiert, wie in den Schritten S27 und S28 gezeigt.

Die Steuerungsvorrichtung 28 veranlasst eine Notausschaltung der Transportvorrichtung 41a; 41b, indem der Steuereinheit 39a; 39b der Ladegut-Hebevorrichtung 37a; 37b ein Zustandssignal übermittelt wird, siehe Schritt S29.

Anschließend kann die Bedienperson 23 die Störung im Pufferbereich beheben, siehe Schritt S30.

Sind die Wartungsarbeiten beispielweise im Pufferbereich abgeschlossen, kann die Bedienperson beispielweise weitergehen, um ein in der Halteposition stehendes (gefahrloses) Regalbediengerät 10; 10'; 10" zu warten, oder zu einer entlang der Regalgasse 3 angeordneten, nächsten Ladegut-Manipulationseinheit 2; 36; 54; 55 weitergehen, um an dieser Wartungen durchzuführen, oder wieder zur Zugangstür 19, 20, 21 zurückkehren. Im ersten Fall, kann die Bedienperson 23 nach dem Verlassen des Gefahrenbereiches 111 eine Eingabevorrichtung 113 betätigen, womit die Ladegut-Manipulationseinheit 2; 36; 54; 55 wieder in den Automatikbetrieb geschalten wird. Im zweiten Fall, kann die Bedienperson 23 nach dem Verlassen des Gefahrenbereiches 111 eine Eingabevorrichtung 112 betätigen, womit die Ladegut-Manipulationseinheit 2; 36; 54; 55 wieder in den Automatikbetrieb geschalten wird, oder er verlässt den Lagerbereich 7, 8, 9 und schließt die Zugangstür 19, 20, 21. Ist die optionale Schließeinheit 33 vorgesehen, wird diese betätigt und die Zugangstür 19, 20, 21 verriegelt, vorzugsweise nachdem das Befehlseingabemittel 30 betätigt wurde. Die Steuerungsvorrichtung 28 übermittelt nach der Betätigung der Eingabevorrichtung 112; 113 ein Freischaltsignal (S_{FH4}) an die Steuereinheit 39a; 39b und ein Freischaltsignal (S_{FBV4}) an die Steuereinheiten 49a; 49b; 50a; 50b.

Danach wird der Schlüssel wieder an der Schlüsselaufnahme 31 eingesteckt, und die Schlüsselaufnahme 31 von der Sicherheitsbetriebsstellung in die Automatikbetriebsstellung geschaltet, wie oben beschrieben. Anschließend wird das Befehlseingabemittel 30 betätigt und der Steuerungsvorrichtung 28 signalisiert, dass wieder der Automatikbetrieb aufgenommen werden kann. Die Steuerungsvorrichtung 28 übermittelt nach der Betätigung des Befehlseingabemittels 30 ein Freischaltsignal (S_{FRB4}) an die Steuereinheit (64), ein Freischaltsignal (S_{FH4}) an die Steuereinheit 39a; 39b und ein Freischaltsignal (S_{FBV4}) an die Steuereinheit 49a; 49b; 50a; 50b. Damit wird wiederum die Gefahrenbetriebsspannung auf die Betriebsspannung umgeschaltet und es werden die Regalbediengeräte 10; 10'; 10" von den Haltepositionen wegbewegt und entsprechend der nächsten Fahr- und/oder Lagerbefehle automatisch betrieben. Auch die Ladegut-Hebevorrichtung 37a; 37 wird gegebenenfalls nach einem "Not-Aus" wieder mit Spannung versorgt und wieder mit maximaler Hubgeschwindigkeit verfahren und die Bereitstellvorrichtungen 45; 46; 56 werden wieder mit Spannung versorgt und automatisch betrieben.

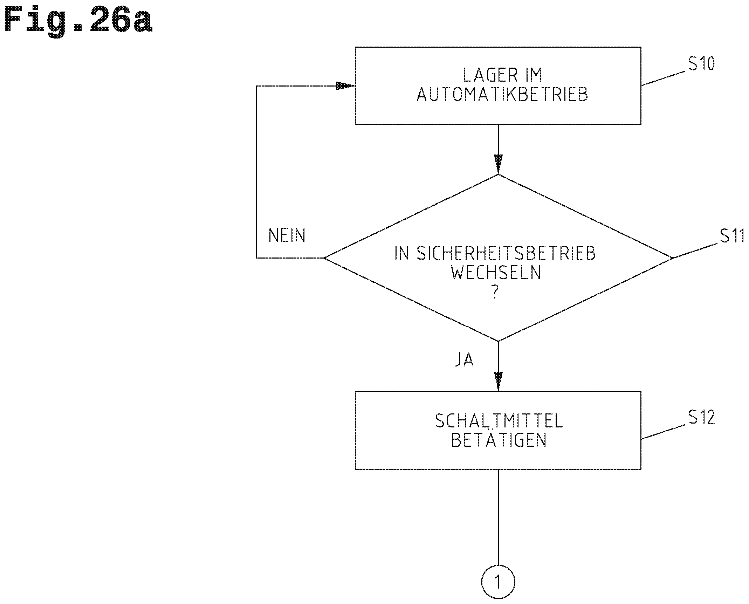

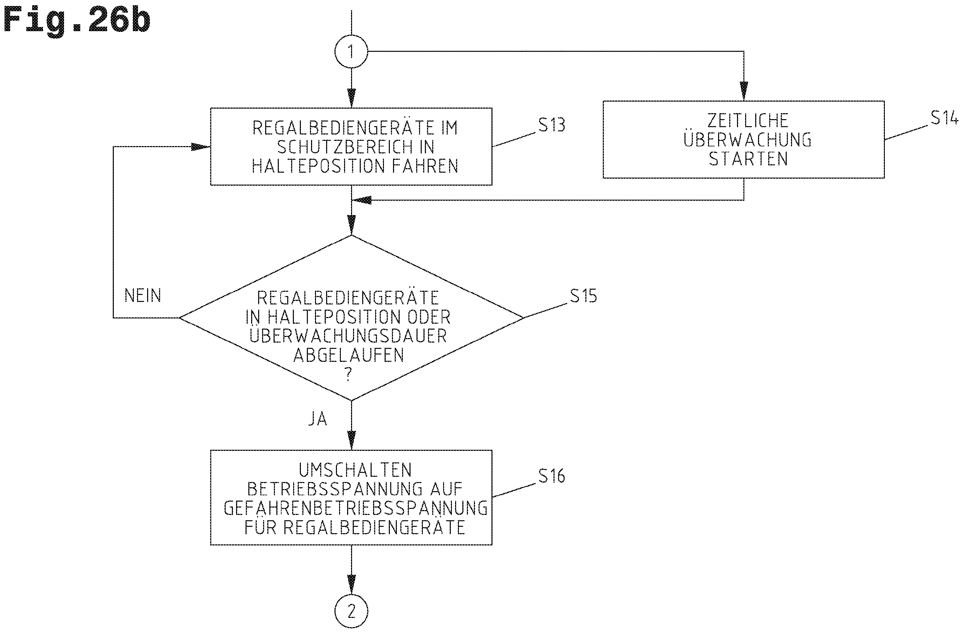

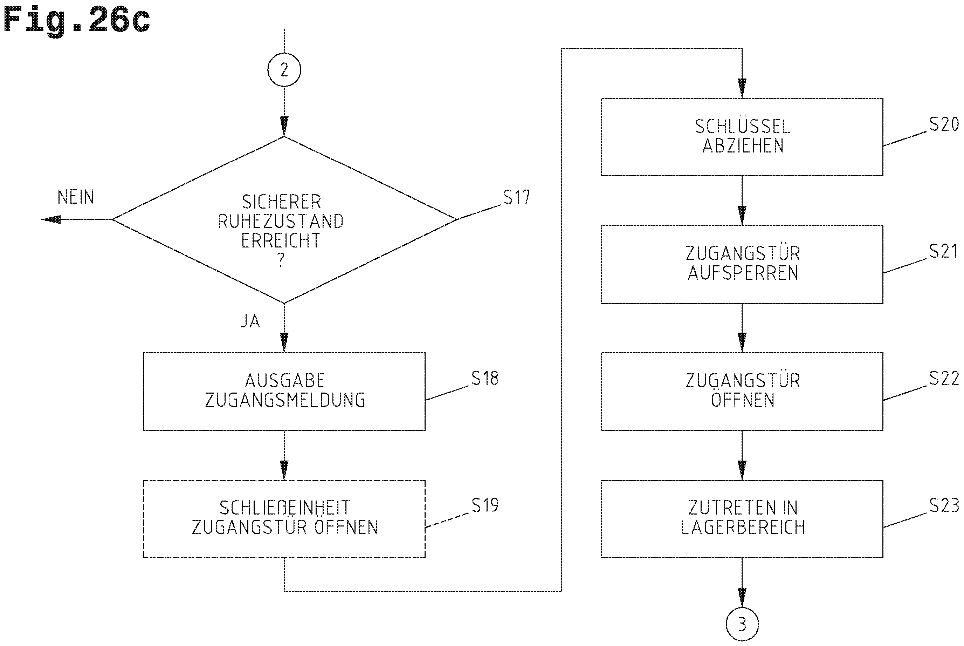

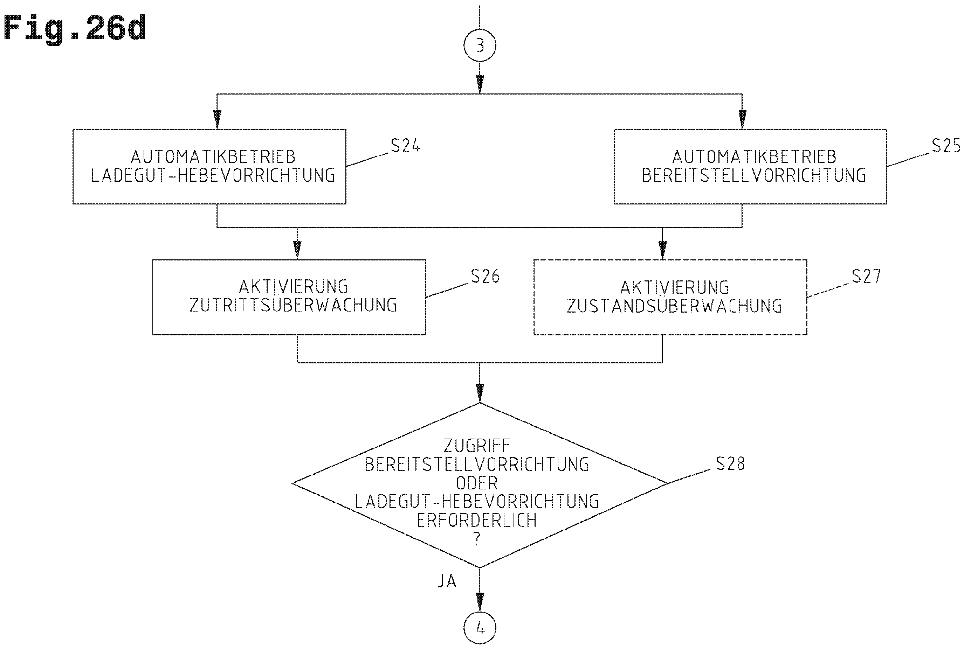

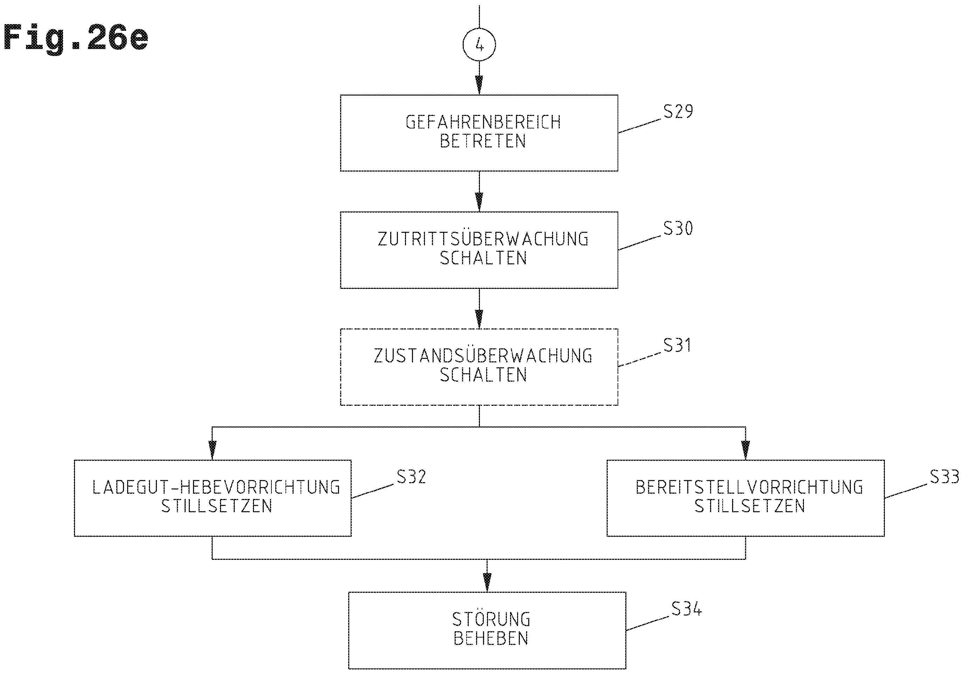

In den Fig. 26a bis 26e ist das Verfahren zum sicheren Betreiben eines automatisierten Regallagersystems in einer dritten Ausführung beschrieben.

Die Schritte S10 bis S23 entsprechenden den Schritte S10 bis S23, wie in den Fig. 25a bis 25c beschrieben.

Wie durch die Schritte S24 bis S26 angegeben, wird auch noch nach dem Umschalten von einem Automatikbetrieb in den Sicherheitsbetrieb die Ladegut-Manipulationseinheit 2; 36; 54; 55, daher die Ladegut-Hebevorrichtung 37a; 37b und die Bereitstellvorrichtungen 45; 46; 56 automatisch betrieben, aber es werden die erste Zutrittsüberwachung 100 und zweite Zutrittsüberwachungen 101 oder es wird nur eine der Zutrittsüberwachungen 100; 101 (Fig. 20) von der Steuerungsvorrichtung 28 aktiviert. Ebenso kann die Zustandsüberwachung 107 aktiviert werden, siehe Schritt S27.

Der Automatikbetrieb für die Ladegut-Manipulationseinheit 2; 36; 54; 55 kann in einen Sicherheitsbetrieb umgeschaltet werden, wenn durch eine Zutrittsüberwachung 100, 101 die Anwesenheit einer Bedienperson 23 in einem Lagerbereich 7, 8, 9 nahe der Ladegut-Hebevorrichtung 37a; 37b bzw. Bereitstellvorrichtungen 45; 46; 56 erfasst wurde, siehe beispielweise Fig. 20.

In diesem Fall kann bis zum Auslösen der Zutrittsüberwachung 100, 101 die Transportvorrichtung 41a; 41b mit maximaler Hubgeschwindigkeit und die Bereitstellvorrichtungen 45; 46; 56 vollautomatisch betrieben werden (Schritte S24 und S25).

Muss sich die Bedienperson 23 in den Gefahrenbereich 111, wie oben definiert, hineinbewegen (Schritt S29), muss sichergestellt sein, dass das Gefährdungsrisiko für die Bedienperson 23 auf ein Minimum reduziert wird. Dies wird durch den Schritte S30 und gegebenenfalls den Schritt S31 erreicht. Im Schritt S30 wird die Anwesenheit der Bedienperson 23 im Lagerbereich 7, 8, 9 über die Zutrittsüberwachung 100; 101 erfasst und dies der Steuerungsvorrichtung 28 signalisiert. Wie in strichlierte Linien eingetragen, kann im Schritt S31 über die Zustandsüberwachung 107 die Anwesenheit einer Bedienperson 23 im Gefahrenbereich 111 bzw. im Bereich der Ladegut-Hebevorrichtung 37a; 37b bzw. Bereitstellvorrichtungen 45; 46; 56 erfasst und dies der Steuerungsvorrichtung 28 signalisiert werden.

Die Steuerungsvorrichtung 28 veranlasst in Folge, dass die Ladegut-Hebevorrichtung 37a; 37b bzw. die Transportvorrichtung 41a; 41b und auch die Bereitstellvorrichtungen 45; 46; 56 stillgesetzt werden, siehe Schritte S32 und S33.

Die Bedienperson 23 kann nun die Störung beheben, siehe Schritt S34.

Sind die Wartungsarbeiten beispielweise im Pufferbereich abgeschlossen, kann die Bedienperson 23 beispielweise weitergehen, um ein in der Halteposition stehendes (gefahrloses) Regalbediengerät 10; 10'; 10" zu warten, oder zu einer entlang der Regalgasse 3 angeordneten, nächsten Ladegut-Manipulationseinheit 2; 36; 54; 55 weitergehen, um an dieser Wartungen durchzuführen, oder wieder zur Zugangstür 19, 20, 21 zurückkehren. Im ersten Fall, kann die Bedienperson 23 nach dem Verlassen des Gefahrenbereiches 111 eine Eingabevorrichtung 113 betätigen, womit die Ladegut-Manipulationseinheit 2; 36; 54; 55 wieder in den Automatikbetrieb geschalten wird. Im zweiten Fall, kann die Bedienperson 23 nach dem Verlassen des Gefahrenbereiches 111 eine Eingabevorrichtung 112 betätigen, womit die Ladegut-Manipulationseinheit 2; 36; 54; 55 wieder in den Automatikbetrieb geschalten wird, oder er verlässt den Lagerbereich 7, 8, 9 und schließt die Zugangstür 19, 20, 21. Ist die optionale Schließeinheit 33 vorgesehen, wird diese betätigt und die Zugangstür 19, 20, 21 verriegelt, vorzugsweise nachdem das Befehlseingabemittel 30 betätigt wurde. Danach wird der Schlüssel wieder an der Schlüsselaufnahme 31 eingesteckt, und die Schlüsselaufnahme 31 von der Sicherheitsbetriebsstellung in die Automatikbetriebsstellung geschaltet, wie oben beschrieben. Anschließend wird das Befehlseingabemittel 30 betätigt und der Steuerungsvorrichtung signalisiert, dass wieder der Automatikbetrieb aufgenommen werden kann. Die Steuerungsvorrichtung 28 übermittelt nach der Betätigung des Befehlseingabemittels 30 ein Freischaltsignal (S_{FRB4}) an die Steuereinheit (64) und gegebenenfalls ein Freischaltsignal (S_{FH4}) an die Steuereinheit 39a; 39b und gegebenenfalls ein Freischaltsignal (S_{FBV4}) an die Steuereinheit 49a; 49b; 50a; 50b. Somit wird wiederum die Gefahrenbetriebsspannung auf die Betriebsspannung umgeschaltet und es werden die Regalbediengeräte 10; 10'; 10" von den Haltepositionen wegbewegt und entsprechend der nächsten Fahr- und/oder Lagerbefehle automatisch betrieben. Auch kann gegebenenfalls die Transportvorrichtung 41a; 41b wieder von der Halteposition wegbewegt und entsprechend der nächsten Einlager- und/oder Auslagerbefehle automatisch betrieben werden. Ebenso können gegebenenfalls auch wieder die Bereitstellvorrichtungen 45; 46; 56 automatisch betrieben werden.

Ist eine Zugriffsüberwachung 116; 117 am Pufferbereich vorgesehen (Fig. 22), so kann diese entweder aktiviert werden, wenn an der Schaltvorrichtung 24, 25, 26 der Zugang durch eine Bedienperson 23 in einen der Lagerbereiche 7, 8, 9 angemeldet und dies der Steuerungsvorrichtung 28 signalisiert wird, oder die Zutrittsüberwachung 100, 101 ausgelöst und der Steuerungsvorrichtung 28 signalisiert wird.

Abschließend sei noch angemerkt, dass die in den Figuren aus Gründen des leichteren Verständnisses verwendeten (mechanischen) Schalter 69; 69'; 69" gleichwertig durch elektronische Schalter ersetzt werden können. Beispielsweise können anstelle des Schalters auch Transistoren, insbesondere FETs oder IGBTs eingesetzt werden.

Auch sei hingewiesen, dass in den Ausführungen nach den Fig. 1 bis 3; 6; 7; 8; 23 nicht jede Fahrebene 16 mit einem Regalbediengerät 10 ausgestattet sein muss, sondern ist es auch möglich, dass die Anzahl der Regalbediengeräte 10 geringer ist als die Anzahl der Fahrebenen 16 und eine Regalbediengeräte-Hebevorrichtung eingesetzt wird, welche zumindest ein Regalbediengerät 10 auf unterschiedliche Fahrebenen 16 aufgeben und von unterschiedlichen Fahrebenen 16 aufnehmen kann. Diese ist an einem stirnseitigen Ende der Regalgasse 3 angeordnet. Eine solche Regalbediengeräte-Hebevorrichtung ist beispielweise aus der WO 2012/106744 A1 bekannt.

Der Ordnung halber sei abschließend darauf hingewiesen, dass zum besseren Verständnis des Aufbaus des Regallagersystems dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Lagerregal | 25 | Schaltvorrichtung |
| 2 | Ladegut-Manipulationseinheit | 26 | Schaltvorrichtung |
| 3 | Regalgasse | 27 | Schaltmittel |
| 4 | Fördertechnik | 28 | Steuerungsvorrichtung |
| 5 | Fördertechnik | 29 | Ausgabemittel |
| 6 | Ladegut | 30 | Befehlseingabemittel |
| 7 | Lagerbereich | 31 | Schlüsselaufnahme |
| 8 | Lagerbereich | 32 | Notaus-Eingabemittel |
| 9 | Lagerbereich | 33 | Schließeinheit |
| 10 | Regalbediengerät | 34 | Steuerleitung |
| 11 | Lagerplatz | 35 | Auswerteeinheit für Schaltvorrichtungen |
| 12 | vordere Längstraverse | 36 | Ladegut-Manipulationseinheit |
| 13 | hintere Längstraverse | 37 | Ladegut-Hebevorrichtung |
| 14 | Querträger | 38 | Puffervorrichtung |
| 15 | Gehsteg | 39 | Steuereinheit Hebevorrichtung |
| 16 | Fahrebene | 40 | Hubantrieb |
| 17 | Lastaufnahmevorrichtung | 41 | Transportvorrichtung |
| 18 | Schutzzaun | 42 | Förderantrieb |
| 19 | Zugangstür | 43 | Fördervorrichtung |
| 20 | Zugangstür | 44 | Steuerleitung |
| 21 | Zugangstür | 45 | Einlager-B ereitstellvorrichtung |
| 22 | Sensor | 46 | Auslager-Bereitstellvorrichtung |
| 23 | Bedienperson | 47 | Förderantrieb Einlager-Bereitstellvorrichtung |
| 24 | Schaltvorrichtung | | |
| 48 | Förderantrieb Auslager-Bereitstellvorrichtung | 73 | Schutzbereich |
| | | 74 | |
| 49 | Steuereinheit Bereitstellvorrichtung | 75 | Spannungsquelle |
| 50 | Steuereinheit Bereitstellvorrichtung | 76 | Steuerleitung |
| 51 | Steuerleitung | 77 | Sensor |
| 52 | Bühne | 78 | Sensor |
| 53 | Treppe | 79 | Wegmesssystem |
| 54 | Ladegut-Manipulationseinheit | 80 | Spannungskonverter |
| 55 | Ladegut-Manipulationseinheit | 81 | Umschalter |
| 56 | Einlager/Auslager-Bereitstellvorrichtung | 82 | Durchgriffsbarriere |
| 57 | Grundrahmen | 83 | Übernahmeplatz |
| 58 | Laufrad | 84 | Übergabeplatz |
| 59 | Fahrantrieb | 85 | Durchgriffsbarriere |
| 60 | Antriebsmotor | 86 | Schutzschleuse |
| 61 | Führungsvorrichtung | 87 | Schaltmodul Schleuse |
| 62 | Stellantrieb | 88 | Mittel für Hebevorrichtung |
| 63 | Antriebsmotor | 89 | Schaltmodul für Hebevorrichtung |
| 64 | Steuereinheit Regalbediengerät | 90 | Schaltmodul für Hebevorrichtung |
| | | 91 | Mittel für Schleuse |
| 65 | Schleifleitungsanordnung | 92 | Sensor |
| 66 | Stromabnehmer | 93 | Antriebsmotor Hubantrieb |
| 67 | Schleifleitung | 94 | Antriebsmotor Förderantrieb |
| 68 | Steuerleitung | 95 | Wegmesssystem |
| 69 | Schaltmodul für Regalbediengerät | 96 | Schaltmodul Einlager-B ereitstellvorrichtung |
| 70 | Mittel für Regalbediengeräte | | |
| 71 | Steuerleitung | 97 | Schaltmodul Auslager-B ereitstellvorrichtung |
| 72 | Zugriffsbereich | | |
| 98 | Mittel für Bereitstellvorrichtung | | |
| 99 | Spannungsquelle | | |
| 100 | Zutrittsüberwachung | | |
| 101 | Zutrittsüberwachung | | |
| 102 | Sensorik | | |
| 103 | Sensorik | | |
| 104 | Schaltmodul | | |
| 105 | Schaltmodul | | |
| 106 | Mittel | | |
| 107 | Zustandsüberwachung | | |
| 108 | Sensorik | | |
| 109 | Durchgriffschutz | | |
| 110 | Sensorik | | |
| 111 | Gefahrenbereich | | |
| 112 | Eingabevorrichtung | | |
| 113 | Eingabevorrichtung | | |
| 114 | Grenzfläche | | |
| 115 | Grenzfläche | | |
| 116 | Zugriffs überwachung | | |
| 117 | Zugriffs überwachung | | |
| 118 | Sensorik | | |
| 119 | Durchgriffsbarriere | | |

## Patentansprüche

1. Verfahren zum sicheren Betreiben eines automatisierten Regallagersystems mit Lagerregalen (1), welche in übereinander liegenden Regalebenen (RE) Lagerplätze (11) für Ladegüter (6) aufweisen,
einer zwischen den Lagerregalen (1) in einer x-Richtung verlaufenden Regalgasse (3), Lagerbereichen (7, 8, 9), welche die Regalgasse (3) aufweist und welche übereinander liegen und durch Gehstege (15) voneinander getrennt sind, einer Ladegut-Manipulationseinheit (2; 36; 54; 55), die eine Ladegut-Hebevorrichtung (37a; 37b) mit einer heb- und senkbaren Transportvorrichtung (41a; 41b) für die Ladegüter (6) seitlich neben der Regalgasse (3) und einer Steuereinheit (39a; 39b) umfasst, Regalbediengeräten (10; 10'; 10") zum Einlagern der Ladegüter (6) in die Lagerplätze (11) bzw. Auslagern der Ladegüter (6) aus den Lagerplätzen (11), wobei jedem Lagerbereich (7, 8, 9) ein oder mehrere Regalbediengeräte (10; 10'; 10") zugeordnet sind und jedes Regalbediengerät (10; 10'; 10") mit einer Steuereinheit (64), einem Fahrantrieb (59) und einer Lastaufnahmevorrichtung (17) versehen ist,
einer Schaltvorrichtung (24, 25, 26), mittels welcher zwischen einem Automatikbetrieb und einem Sicherheitsbetrieb für die Regalbediengeräte (10; 10'; 10") gewechselt werden kann, einer Steuerungsvorrichtung (28), welche über eine Steuerleitung (76) mit den Steuereinheiten (64) der Regalbediengeräte (10; 10'; 10") und der Schaltvorrichtung (24, 25, 26) kommuniziert, und welche über eine Steuerleitung (44) mit der Steuereinheit (39a; 39b) der Ladegut-Hebevorrichtung (37a; 37b) kommuniziert, und
jeweils einem verriegelbaren Zugang (19, 20, 21) je Lagerbereich (7, 8, 9), der geöffnet und geschlossen werden kann,
mit den Schritten:
- Definition eines räumlichen Zugriffsbereiches (72) für die Bedienperson (23) entweder ausschließlich innerhalb eines Lagerbereiches (7, 8, 9), in welchen die Bedienperson (23) zutritt, oder innerhalb eines Lagerbereiches (7, 8, 9) und von diesem auf einen oberhalb und/oder unterhalb liegenden Lagerbereich (7, 8, 9);
- Definition eines räumlichen Schutzbereiches (73) anhand des Zugriffsbereiches (72);
- Festlegung jener Regalbediengeräte (10; 10'; 10"), welche sich im Schutzbereich (73) bewegen bzw. bewegen würden;
und mit
einem Automatikbetrieb für die Regalbediengeräte (10; 10'; 10") und für die Ladegut-Manipulationseinheit (2; 36; 54; 55), bei dem
- die Regalbediengeräte (10; 10'; 10") über die Steuerleitungen (76) jeweils an der Steuereinheit (64) Fahr- und Lagerbefehle erhalten und entsprechend dieser Fahr- und Lagerbefehle der Fahrantrieb (59) und die Lastaufnahmevorrichtung (17) angesteuert werden, um entlang der in x-Richtung verlaufenden Regalgasse (3) zu den Lagerplätzen (11) zu verfahren und die Ladegüter (6) auf die Lagerplätze (11) einzulagern bzw. Ladegüter (6) aus den Lagerplätzen (11) auszulagern, und
- die Ladegut-Hebevorrichtung (37a; 37b) über die Steuerleitung (44) an der Steuereinheit (39a; 39b) Ein- und/oder Auslagerbefehle erhält und entsprechend dieser Ein- und/oder Auslagerbefehle einen Hubantrieb (40a; 40b) und einen Förderantrieb (42a; 42b) für die Transportvorrichtung (41a; 41b) steuert, um Ladegüter (6) zwischen einer Fördertechnikebene (FE) und einer betreffenden Regallagerebene (RE) zu transportieren,
einem Sicherheitsbetrieb für die Regalbediengeräte (10; 10'; 10"), bei dem
- einige der Regalbediengeräte (10; 10'; 10") über die Steuerleitungen (76) jeweils an der Steuereinheit (64) neuerlich Fahr- und/oder Lagerbefehle erhalten und entsprechend dieser Fahr- und/oder Lagerbefehle der Fahrantrieb (59) und/oder die Lastaufnahmevorrichtung (17) angesteuert werden, wobei jene Regalbediengeräte (10; 10'; 10"), welche sich im Schutzbereich (73) bewegen bzw. bewegen würden, in eine x-Halteposition innerhalb der Regalgasse (3) bewegt werden, in welcher das jeweilige Regalbediengerät (10; 10'; 10") solange verharrt und ferner in einen für die Bedienperson (23) gefahrenlosen bzw. bewegungslosen Ruhezustand versetzt wird, bis die Steuereinheit (64) ein Freischaltsignal (S_{FRB4}) erhält,
- und zumindest ein anderes der Regalbediengeräte (10; 10'; 10") weiterhin im Automatikbetrieb betrieben wird,
wobei der Automatikbetrieb in den Sicherheitsbetrieb für die Regalbediengeräte (10; 10'; 10") wechselt, wenn an der Schaltvorrichtung (24, 25, 26) der Zugang durch eine Bedienperson (23) in einen der Lagerbereiche (7, 8, 9) angemeldet wird und die Bedienperson (23) in einen der Lagerbereiche (7, 8, 9) eintreten möchte,
**gekennzeichnet durch**
- Festlegung eines vertikalen Bewegungsweges der Transportvorrichtung (41a; 41b), welcher den Schutzbereich (73) schneidet bzw. an den Schutzbereich (73) angrenzt;
- Umschalten des Automatikbetriebes in einen Sicherheitsbetrieb für die Ladegut-Manipulationseinheit (2; 36; 54; 55), wenn durch eine Zutrittsüberwachung (100, 101) im Lagerbereich (7, 8, 9) in Richtung der Längserstreckung der Regalgasse (3) vor oder nach der Ladegut-Hebevorrichtung (37a; 37b) die Anwesenheit einer Bedienperson (23) erfasst wurde, wobei im Sicherheitsbetrieb der Hubantrieb (40a; 40b) für die Transportvorrichtung (41a; 41b) derart angesteuert wird, dass die Hubgeschwindigkeit gegenüber dem Automatikbetrieb zumindest auf dem Bewegungsweg entlang dem Schutzbereich (73) reduziert wird.

2. Verfahren zum sicheren Betreiben eines automatisierten Regallagersystems mit Lagerregalen (1), welche in übereinander liegenden Regalebenen (RE) Lagerplätze (11) für Ladegüter (6) aufweisen, und
einer zwischen den Lagerregalen (1) in einer x-Richtung verlaufenden Regalgasse (3), Lagerbereichen (7, 8, 9), welche die Regalgasse (3) aufweist und welche übereinander liegen und durch Gehstege (15) voneinander getrennt sind, einer Ladegut-Manipulationseinheit (2; 36; 54; 55), die eine Ladegut-Hebevorrichtung (37a; 37b) mit einer heb- und senkbaren Transportvorrichtung (41a; 41b) für die Ladegüter (6) seitlich neben der Regalgasse (3) und einer Steuereinheit (39a; 39b) umfasst, Regalbediengeräten (10; 10'; 10") zum Einlagern der Ladegüter (6) in die Lagerplätze (11) bzw. Auslagern der Ladegüter (6) aus den Lagerplätzen (11), wobei jedem Lagerbereich (7, 8, 9) ein oder mehrere Regalbediengeräte (10; 10'; 10") zugeordnet sind und jedes Regalbediengerät (10; 10'; 10") mit einer Steuereinheit (64), einem Fahrantrieb (59) und einer Lastaufnahmevorrichtung (17) versehen ist, einer Schaltvorrichtung (24, 25, 26), mittels welcher zwischen einem Automatikbetrieb und einem Sicherheitsbetrieb für die Regalbediengeräte (10; 10'; 10") gewechselt werden kann, und
einer Steuerungsvorrichtung (28), welche über eine Steuerleitung (76) mit den Steuereinheiten (64) der Regalbediengeräte (10; 10'; 10") und der Schaltvorrichtung (24, 25, 26) kommuniziert, und welche über eine Steuerleitung (44) mit der Steuereinheit (39a; 39b) der Ladegut-Hebevorrichtung (37a; 37b) kommuniziert,
und jeweils einem verriegelbaren Zugang (19, 20, 21) je Lagerbereich (7, 8, 9), der geöffnet und geschlossen werden kann,
mit den Schritten:
- Definition eines räumlichen Zugriffsbereiches (72) für die Bedienperson (23) entweder ausschließlich innerhalb eines Lagerbereiches (7, 8, 9), in welchen die Bedienperson (23) zutritt, oder innerhalb eines Lagerbereiches (7, 8, 9) und von diesem auf einen oberhalb und/oder unterhalb liegenden Lagerbereich (7, 8, 9);
- Definition eines räumlichen Schutzbereiches (73) anhand des Zugriffsbereiches (72);
- Festlegung jener Regalbediengeräte (10; 10'; 10"), welche sich im Schutzbereich (73) bewegen bzw. bewegen würden;
und mit
einem Automatikbetrieb für die Regalbediengeräte (10; 10'; 10") und für die Ladegut-Manipulationseinheit (2; 36; 54; 55), bei dem
- die Regalbediengeräte (10; 10'; 10") über die Steuerleitungen (76) jeweils an der Steuereinheit (64) Fahr- und Lagerbefehle erhalten und entsprechend dieser Fahr- und Lagerbefehle der Fahrantrieb (59) und die Lastaufnahmevorrichtung (17) angesteuert werden, um entlang der in x-Richtung verlaufenden Regalgasse (3) zu den Lagerplätzen (11) zu verfahren und die Ladegüter (6) auf die Lagerplätze (11) einzulagern bzw. Ladegüter (6) aus den Lagerplätzen (11) auszulagern, und
- die Ladegut-Hebevorrichtung (37a; 37b) über die Steuerleitung (44) an der Steuereinheit (39a; 39b) Ein- und/oder Auslagerbefehle erhält und entsprechend dieser Ein- und/oder Auslagerbefehle einen Hubantrieb (40a; 40b) und einen Förderantrieb (42a; 42b) für die Transportvorrichtung (41a; 41b) steuert, um Ladegüter (6) zwischen einer Fördertechnikebene (FE) und einer betreffenden Regallagerebene (RE) zu transportieren,
einem Sicherheitsbetrieb für die Regalbediengeräte (10; 10'; 10"), bei dem
- einige der Regalbediengeräte (10; 10'; 10") über die Steuerleitungen (76) jeweils an der Steuereinheit (64) neuerlich Fahr- und/oder Lagerbefehle erhalten und entsprechend dieser Fahr- und/oder Lagerbefehle der Fahrantrieb (59) und/oder die Lastaufnahmevorrichtung (17) angesteuert werden, wobei jene Regalbediengeräte (10; 10'; 10"), welche sich im Schutzbereich (73) bewegen bzw. bewegen würden, in eine x-Halteposition innerhalb der Regalgasse (3) bewegt werden, in welcher das jeweilige Regalbediengerät (10; 10'; 10") solange verharrt und ferner in einen für die Bedienperson (23) gefahrenlosen bzw. bewegungslosen Ruhezustand versetzt wird, bis die Steuereinheit (64) ein Freischaltsignal (S_{FRB4}) erhält, und
- ein Bestätigungssignal (S_{RS1..RSn}) je Regalbediengerät (10; 10'; 10") durch die Steuereinheit (64) erzeugt wird,
∘ wenn das betreffende Regalbediengerät (10; 10'; 10") die x-Halteposition innerhalb einer Zeitspanne erreicht hat, welche Zeitspanne durch einen Überwachungszeitraum definiert wird, innerhalb welchem die Regalbediengeräte (10; 10'; 10") bei ordnungsgemäßer Funktion die x-Haltepositionen erreicht haben sollten und welcher bei dem Wechsel vom Automatikbetrieb in den Sicherheitsbetrieb gestartet wird, und Übermittlung des Bestätigungssignals (S_{RS1..RSn}) an die Steuerungsvorrichtung (28), oder
∘ wenn das betreffende Regalbediengerät (10; 10'; 10") die x-Halteposition innerhalb einer Zeitspanne nicht erreicht hat, welche Zeitspanne durch einen Überwachungszeitraum definiert wird, innerhalb welchem die Regalbediengeräte (10; 10'; 10") bei ordnungsgemäßer Funktion die x-Haltepositionen erreicht haben sollten und welcher bei dem Wechsel vom Automatikbetrieb in den Sicherheitsbetrieb gestartet wird, und Übermittlung des Bestätigungssignals (S_{RS1..RSn}) an die Steuerungsvorrichtung (28),
- und zumindest ein anderes der Regalbediengeräte (10; 10'; 10") weiterhin im Automatikbetrieb betrieben wird,
wobei der Automatikbetrieb in den Sicherheitsbetrieb für die Regalbediengeräte (10; 10'; 10") wechselt, wenn an der Schaltvorrichtung (24, 25, 26) der Zugang durch eine Bedienperson (23) in einen der Lagerbereiche (7, 8, 9) angemeldet wird und die Bedienperson (23) in einen der Lagerbereiche (7, 8, 9) eintreten möchte,
**gekennzeichnet durch**
- Entriegeln jenes Zugangs (19, 20, 21), welcher dem Lagerbereich (7, 8, 9) zugeordnet ist, in welchen die Bedienperson (23) eintreten möchte, nachdem das Bestätigungssignal (S_{RS1..RSn}) von denjenigen Regalbediengeräten (10; 10'; 10") ausgelöst wurde, welche im Schutzbereich (73) bewegt wurden,
- Aktivieren einer Zutrittsüberwachung (100; 101), welche im Lagerbereich (7, 8, 9) in Richtung der Längserstreckung der Regalgasse (3) vor und/oder nach der Ladegut-Hebevorrichtung (37a; 37b) angeordnet ist,
- Überwachung eines Zutrittes einer Bedienperson (23) in den Lagerbereich (7, 8, 9) mittels der Zutrittsüberwachung (100; 101),
- Umschalten vom Automatikbetrieb in den Sicherheitsbetrieb für die Ladegut-Manipulationseinheit (2; 36; 54; 55), wenn an der Steuereinheit (39a; 39b) der Ladegut-Hebevorrichtung (37a; 37b) ein Zustandssignal eingeht, welches ausgelöst wird, sofern von der Zutrittsüberwachung (100; 101) der Zutritt der Bedienperson (23) in den Lagerbereich (7, 8, 9) erfasst wird, wobei im Sicherheitsbetrieb der Hubantrieb (40a; 40b) und/oder Förderantrieb (87a; 87b) der Transportvorrichtung (41a; 41b) abgeschaltet und in einen bewegungslosen Ruhezustand versetzt wird / werden, bis die Steuereinheit (39a; 39b) ein Freischaltsignal (S_{FH4}) erhält.

3. Verfahren nach Anspruch 1 oder 2, **dadurch gekennzeichnet, dass**
- in jedem Lagerbereich (7, 8, 9) in übereinander liegenden Fahrebenen (16) zumindest zwei Regalbediengeräte (10; 10') zum Einlagern der Ladegüter (6) auf die Lagerplätze (11) bzw. Auslagern von Ladegütern (6) aus den Lagerplätzen (11) unabhängig voneinander betrieben werden;
- jene Regalbediengeräte (10; 10') je Lagerbereich (7, 8, 9) festgelegt werden, welche sich im Schutzbereich (73) bewegen bzw. bewegen würden;
- im Sicherheitsbetrieb jene Regalbediengeräte (10; 10') in den Lagerbereichen (7, 8, 9), welche sich im Schutzbereich (73) bewegen bzw. bewegen würden, in eine x-Halteposition innerhalb der Regalgasse (3) bewegt werden, in welcher das jeweilige Regalbediengerät (10; 10'; 10") solange verharrt und ferner in einen für die Bedienperson (23) gefahrenlosen bzw. bewegungslosen Ruhezustand versetzt werden, bis die Steuereinheit (64) ein Freischaltsignal (S_{FRB4}) erhält.

4. Verfahren nach einem der Ansprüche 1 bis 3, **dadurch gekennzeichnet, dass**
im Automatikbetrieb das Regalbediengerät (10; 10'; 10") an einem Antriebsmotor (60) für den Fahrantrieb (59) und an einem Antriebsmotor (63) für die Lastaufnahmevorrichtung (17) mit einer Betriebsspannung versorgt werden, und
im Sicherheitsbetrieb die Betriebsspannung auf eine Gefahrenbetriebsspannung umgeschaltet wird, sodass das Regalbediengerät (10; 10'; 10") am Antriebsmotor (60) für den Fahrantrieb (59) und am Antriebsmotor (63) für die Lastaufnahmevorrichtung (17) mit der Gefahrenbetriebsspannung versorgt werden, wobei der Maximalwert der Gefahrenbetriebsspannung betragsmäßig niedriger ist als eine Mindestbetriebsspannung, welche benötigt wird, um das Regalbediengerät (10; 10'; 10") oder die Lastaufnahmevorrichtung (17) zu bewegen.

5. Verfahren nach einem Anspruch 4, **dadurch gekennzeichnet, dass** der Antriebsmotor (60) für den Fahrantrieb (59) und der Antriebsmotor (63) für die Lastaufnahmevorrichtung (17) aus einer in Richtung der Regalgasse (3) verlaufenden und je einer Fahrebene (16) für das Regalbediengerät (10; 10'; 10") zugeordneten Schleifleitungsanordnung (65) mit elektrischer Energie versorgt werden, wobei die Schleifleitungsanordnungen (65) jeweils über ein Schaltmodul (69; 69'; 69") an zumindest eine Spannungsquelle (75) angeschlossen sind und in die Schleifleitungsanordnungen (65) durch selektives Umschalten der Schaltzustände für das Schaltmodul (69; 69'; 69") entweder im Automatikbetrieb die Betriebsspannung oder im Sicherheitsbetrieb die Gefahrenbetriebsspannung eingespeist wird.

6. Verfahren nach einem Anspruch 4, **dadurch gekennzeichnet, dass** der Antriebsmotor (60) für den Fahrantrieb (59) und der Antriebsmotor (63) für die Lastaufnahmevorrichtung (17) aus einer in Richtung der Regalgasse (3) verlaufenden und je einer Fahrebene (16) für das Regalbediengerät (10; 10'; 10") zugeordneten Schleifleitungsanordnung (65) mit elektrischer Energie versorgt werden, wobei Gruppen jeweils aus mehreren Schleifleitungsanordnungen (65) über je einer Gruppe zugeordnete Schaltmodule (69") an zumindest eine Spannungsquelle (75) angeschlossen sind und in die Gruppen aus mehreren Schleifleitungsanordnungen (75) jeweils durch Umschalten der Schaltzustände für die Schaltmodule (69") entweder im Automatikbetrieb die Betriebsspannung oder im Sicherheitsbetrieb die Gefahrenbetriebsspannung eingespeist wird.

7. Verfahren nach Anspruch 4, **gekennzeichnet durch**
- Erzeugen eines Bestätigungssignals (S_{RB1..RBn}) je Regalbediengerät (10; 10'; 10"), wenn das betreffende Regalbediengerät (10; 10'; 10") die Halteposition erreicht hat, oder eine von einer Steuerungsvorrichtung (28) vordefinierte Zeitspanne, innerhalb welcher das betreffende Regalbediengerät (10; 10'; 10") die Halteposition erreicht haben soll, überschritten wird, und
- Übermittlung der Bestätigungssignale (S_{RB1..RBn}) an die Steuerungsvorrichtung (28), und
- Erzeugen eines Umschaltsignals (S_{U1..Un}) durch die Steuerungsvorrichtung (28), wenn das Bestätigungssignal (S_{RB1..RBn}) an der Steuerungsvorrichtung (28) empfangen und von dieser ausgewertet wurde, und
- Betätigung einiger Schaltmodule (69; 69'; 69") aus einer Anzahl an Schaltmodulen (69; 69'; 69") anhand der Umschaltsignale (S_{U1..Un}), wobei jene Schaltmodule (69; 69'; 69") betätigt werden, welchen den Regalbediengeräten (10; 10'; 10") zugeordnet sind, die in der Halteposition die Bestätigungssignale (S_{RB1..RBn}) an die Steuerungsvorrichtung (28) übermittelt haben, und
- Erzeugen eines Rückmeldesignals (S_{RM1..RMn}) je Regalbediengerät (10; 10'; 10"), wenn sich das betreffende Regalbediengerät (10; 10'; 10") in einem für die Bedienperson (23) gefahrenlosen bzw. bewegungslosen Ruhezustand befindet, in dem durch Betätigung der Schaltmodule (69; 69'; 69") der Antriebsmotor (60) für den Fahrantrieb (59) und der Antriebsmotor (63) für die Lastaufnahmevorrichtung (17) der Regalbediengeräte (10; 10'; 10"), welche sich in der Halteposition befinden, mit der Gefahrenbetriebsspannung versorgt werden, und
- Übermittlung der Rückmeldesignale (S_{RM1..RMn}) an die Steuerungsvorrichtung (28).

8. Verfahren nach Anspruch 1, bei dem
einzulagernde Ladegüter (6) von einer Fördertechnik (4) auf die Ladegut-Hebevorrichtung (37a; 37b) übernommen und mittels der Transportvorrichtung (41a; 41b) auf Höhe einer Regalebene (RE) bewegt sowie auf in den Regalebenen angeordnete Bereitstellfördervorrichtungen (45; 46; 56) abgegeben werden, wo die Ladegüter (6) solange zwischengepuffert werden, bis die Regalbediengeräte (10; 10'; 10") die einzulagernden Ladegüter (6) von den Bereitstellfördervorrichtungen (45; 46; 56) abholen und auf den Lagerplätzen (11) abstellen, und auszulagernde Ladegüter (6) mittels der Regalbediengeräte (10; 10'; 10") von den Lagerplätzen (11) abgeholt und auf in den Regalebenen angeordnete Bereitstellfördervorrichtungen (45; 46; 56) abgegeben werden, wo die Ladegüter (6) solange zwischengepuffert werden, bis diese von der Ladegut-Hebevorrichtung (37a; 37b) übernommen und mittels der Transportvorrichtung (41a; 41b) auf Höhe einer Fördertechnik (5) bewegt werden, und
im Automatikbetrieb der Ladegut-Manipulationseinheit (2; 36; 54; 55) die Bereitstellfördervorrichtungen (45; 46; 56) über eine Steuerleitung (51) an einer Steuereinheit (49a; 49b; 50a; 50b) Ein- und/oder Auslagerbefehle erhalten und entsprechend dieser Ein- und/oder Auslagerbefehle Förderantriebe (47a; 47b; 48a; 48b) für die Transportvorrichtung (41a; 41b) und Bereitstellfördervorrichtungen (45; 46; 56) steuert, um Ladegüter (6) zwischen der Transportvorrichtung (41a; 41b) und einer Bereitstellfördervorrichtung (45; 46; 56) in der betreffenden Regallagerebene (RE) zu transportieren,
und bei dem der Sicherheitsbetrieb für die Regalbediengeräte (10; 10'; 10") zusätzlich den Schritt umfasst
- Erzeugen eines Bestätigungssignals (S_{RS1..RSn}) je Regalbediengerät (10; 10'; 10") durch die Steuereinheit (64),
o wenn das betreffende Regalbediengerät (10; 10'; 10") die x-Halteposition innerhalb einer Zeitspanne erreicht hat, welche Zeitspanne durch einen Überwachungszeitraum definiert wird, innerhalb welchem die Regalbediengeräte (10; 10'; 10") bei ordnungsgemäßer Funktion die x-Haltepositionen erreicht haben sollten und welcher bei dem Wechsel vom Automatikbetrieb in den Sicherheitsbetrieb gestartet wird, und Übermittlung des Bestätigungssignals (S_{RS1..RSn}) an die Steuerungsvorrichtung (28), oder
∘ wenn das betreffende Regalbediengerät (10; 10'; 10") die x-Halteposition innerhalb einer Zeitspanne nicht erreicht hat, welche Zeitspanne durch einen Überwachungszeitraum definiert wird, innerhalb welchem die Regalbediengeräte (10; 10'; 10") bei ordnungsgemäßer Funktion die x-Haltepositionen erreicht haben sollten und welcher bei dem Wechsel vom Automatikbetrieb in den Sicherheitsbetrieb gestartet wird, und Übermittlung des Bestätigungssignals (S_{RS1..RSn}) an die Steuerungsvorrichtung (28), **gekennzeichnet durch**
- Entriegeln jenes Zugangs (19, 20, 21), welcher dem Lagerbereich (7, 8, 9) zugeordnet ist, in welchen die Bedienperson eintreten möchte, nachdem das Bestätigungssignal von denjenigen Regalbediengeräten (10; 10'; 10") ausgelöst wurde, welche im Schutzbereich (73) bewegt wurden;
- Aktivieren der Zutrittsüberwachung (100; 101) im Lagerbereich (7, 8, 9) in Richtung der Längserstreckung der Regalgasse (3) vor und/oder nach der Ladegut-Hebevorrichtung (37a; 37b);
- Überwachung eines Zutrittes einer Bedienperson (23) in den Lagerbereich (7, 8, 9) mittels der Zutrittsüberwachung (100; 101);
- Umschalten vom Automatikbetrieb in den Sicherheitsbetrieb für die Ladegut-Manipulationseinheit (2; 36; 54; 55), wenn an der Steuereinheit (49a; 49b; 50a; 50b) der Bereitstellfördervorrichtungen (45; 46; 56) ein Zustandssignal eingeht, welches ausgelöst wird, sofern von der Zutrittsüberwachung (100; 101) der Zutritt der Bedienperson (23) in den Lagerbereich (7, 8, 9) erfasst wird, wobei im Sicherheitsbetrieb die Förderantriebe (47a; 47b; 48a; 48b) der Bereitstellfördervorrichtungen (45; 46; 56), welche im Schutzbereich (73) angeordnet sind, abgeschaltet und in einen bewegungslosen Ruhezustand versetzt werden, bis die Steuereinheit (49a; 49b; 50a; 50b) ein Freischaltsignal (S_{FBV}) erhält.

9. Verfahren nach Anspruch 2, bei dem
einzulagernde Ladegüter (6) von einer Fördertechnik (4) auf die Ladegut-Hebevorrichtung (37a; 37b) übernommen und mittels der Transportvorrichtung (41a; 41b) auf Höhe einer Regalebene (RE) bewegt sowie auf in den Regalebenen angeordnete Bereitstellfördervorrichtungen (45; 46; 56) abgegeben werden, wo die Ladegüter (6) solange zwischengepuffert werden, bis die Regalbediengeräte (10; 10'; 10") die einzulagernden Ladegüter (6) von den Bereitstellfördervorrichtungen (45; 46; 56) abholen und auf den Lagerplätzen (11) abstellen, und
auszulagernde Ladegüter (6) mittels der Regalbediengeräte (10; 10'; 10") von den Lagerplätzen (11) abgeholt und auf in den Regalebenen angeordnete Bereitstellfördervorrichtungen (45; 46; 56) abgegeben werden, wo die Ladegüter (6) solange zwischengepuffert werden, bis diese von der Ladegut-Hebevorrichtung (37a; 37b) übernommen und mittels der Transportvorrichtung (41a; 41b) auf Höhe einer Fördertechnik (5) bewegt werden, und
im Automatikbetrieb der Ladegut-Manipulationseinheit (2; 36; 54; 55) die Bereitstellfördervorrichtungen (45; 46; 56) über eine Steuerleitung (51) an einer Steuereinheit (49a; 49b; 50a; 50b) Ein- und/oder Auslagerbefehle erhalten und entsprechend dieser Ein- und/oder Auslagerbefehle Förderantriebe (47a; 47b; 48a; 48b) für die Transportvorrichtung (41a; 41b) und Bereitstellfördervorrichtungen (45; 46; 56) steuert, um Ladegüter (6) zwischen der Transportvorrichtung (41a; 41b) und einer Bereitstellfördervorrichtung (45; 46; 56) in der betreffenden Regallagerebene (RE) zu transportieren,
**gekennzeichnet durch**
Umschalten vom Automatikbetrieb in den Sicherheitsbetrieb für die Ladegut-Manipulationseinheit (2; 36; 54; 55), wenn an der Steuereinheit (49a; 49b; 50a; 50b) der Bereitstellfördervorrichtungen (45; 46; 56) ein Zustandssignal eingeht, welches ausgelöst wird, sofern von der Zutrittsüberwachung (100; 101) der Zutritt der Bedienperson (23) in den Lagerbereich (7, 8, 9) erfasst wird, wobei im Sicherheitsbetrieb die Förderantriebe (47a; 47b; 48a; 48b) der Bereitstellfördervorrichtungen (45; 46; 56), welche im Schutzbereich (73) angeordnet sind, abgeschaltet und in einen bewegungslosen Ruhezustand versetzt werden, bis die Steuereinheit (49a; 49b; 50a; 50b) ein Freischaltsignal (S_{FBV}) erhält.

10. Verfahren nach Anspruch 8 oder 9, **gekennzeichnet durch**
- Bereitstellung einer ersten Eingabevorrichtung (112) im jeweiligen Lagerbereich (7, 8, 9) in Richtung der Längserstreckung der Regalgasse (3) vor einer ersten Grenzfläche (114) eines Gefahrenbereiches (111) und/oder einer zweiten Eingabevorrichtung (113) im jeweiligen Lagerbereich (7, 8, 9) in Richtung der Längserstreckung der Regalgasse (3) nach einer zweiten Grenzfläche (115) des Gefahrenbereiches (111), wobei der Gefahrenbereich (111) anhand der von der Ladegut-Hebevorrichtung (37a; 37b) und/oder Bereitstellfördervorrichtung (45; 46; 56) ausgehenden Gefährdung für eine Bedienperson (23), wenn sie in den Lagerbereich (7, 8, 9) zutritt, definiert wird, und
- Betätigen der Eingabevorrichtung (112; 113) durch die Bedienperson (23), nachdem diese den Gefahrenbereich (111) verlassen hat, und
- Erzeugung eines ersten Freischaltsignals, mittels welchem die Transportvorrichtung (41a; 41b) aus dem Sicherheitsbetrieb wieder in den Automatikbetrieb geschaltet wird, und
- Erzeugung eines zweiten Freischaltsignals, mittels welchem jene Bereitstellfördervorrichtungen (45; 46; 56), welche im Schutzbereich (73) abgeschaltet wurden, oder jene Bereitstellfördervorrichtungen (45; 46; 56), welche im Gefahrenbereich (111) abgeschaltet wurden, aus dem Sicherheitsbetrieb wieder in den Automatikbetrieb geschaltet werden.

11. Automatisiertes Regallagersystem mit
Lagerregalen (1), welche in übereinander liegenden Regalebenen Lagerplätze (11) für Ladegüter (6) aufweisen,
einer Fördertechnik (4, 5) zum Antransport von Ladegütern (6) und zum Abtransport (6) von Ladegütern (6),
einer zwischen den Lagerregalen (1) ausgebildeten und in einer x-Richtung verlaufenden Regalgasse (3),
einer Ladegut-Hebevorrichtung (37a; 37b) mit einer heb- und senkbaren Transportvorrichtung (41a; 41b) für die Ladegüter (6) seitlich neben der Regalgasse (3) und einer Steuereinheit (39a; 39b),
Lagerbereichen (7, 8, 9), welche die Regalgasse (3) aufweist und welche übereinander liegen und durch Gehstege (15) voneinander getrennt sind,
Regalbediengeräten (10; 10'; 10") zum Einlagern der Ladegüter (6) in die Lagerplätze (11) bzw. Auslagern der Ladegüter (6) aus den Lagerplätzen (11), welche in einem Automatikbetrieb oder einem Sicherheitsbetrieb betreibbar sind, und jeweils eine Steuereinheit (64), einen Fahrantrieb (59) und eine Lastaufnahmevorrichtung (17) aufweisen und entlang von Führungsschienen in x-Richtung verfahrbar sind, um die Ladegüter (6) auf die Lagerplätze (11) einzulagern bzw. Ladegüter (6) aus den Lagerplätzen (11) auszulagern, einer Schaltvorrichtung (24, 25, 26), mittels welcher zwischen dem Automatikbetrieb und dem Sicherheitsbetrieb für die Regalbediengeräte (10; 10'; 10") umgeschaltet werden kann, wobei im Automatikbetrieb die Regalbediengeräte (10; 10'; 10") über eine Steuerleitung (76) jeweils an der Steuereinheit (64) Fahr- und Lagerbefehle erhalten und entsprechend dieser Fahr- und Lagerbefehle der Fahrantrieb (59) und die Lastaufnahmevorrichtung (17) angesteuert werden, und wobei im Sicherheitsbetrieb einige der Regalbediengeräte (10; 10'; 10") über die Steuerleitung (76) jeweils an der Steuereinheit (64) neuerlich Fahr- und/oder Lagerbefehle erhalten und entsprechend dieser Fahr- und/oder Lagerbefehle der Fahrantrieb (59) und/oder die Lastaufnahmevorrichtung (17) angesteuert werden, während zumindest ein anderes der Regalbediengeräte (10; 10'; 10") weiterhin im Automatikbetrieb betrieben wird, und
einer Steuerungsvorrichtung (28), welche über die Steuerleitung (76) mit den Steuereinheiten (64) der Regalbediengeräte (10; 10'; 10") und der Schaltvorrichtung (24, 25, 26) kommuniziert, und welche über eine Steuerleitung (44) mit der Steuereinheit (39a; 39b) der Ladegut-Hebevorrichtung (37a; 37b) kommuniziert,
wobei jedem Lagerbereich (7, 8, 9) ein oder mehrere Regalbediengeräte (10; 10'; 10") zum Einlagern der Ladegüter (6) auf die Lagerplätze (11) bzw. Auslagern von Ladegütern (6) aus den Lagerplätzen (11) und eine verriegelbare Zugangstür (19, 20, 21) zum Zugang in den betreffenden Lagerbereich (7, 8, 9) zugeordnet sind,
wobei die Steuerungsvorrichtung (28)
- mit Schaltmodulen (69; 69'; 69") verbunden ist und ein Mittel (70) zur selektiven und parallelen (gleichzeitigen) Anschaltung von einigen der Schaltmodule (69; 69'; 69") umfasst, wobei die Anzahl der selektiv und parallel (gleichzeitig) angeschalteten Schaltmodule (69; 69'; 69") basierend auf einem räumlichen Zugriffsbereich (72) für die Bedienperson (23) entweder ausschließlich innerhalb eines Lagerbereiches (7, 8, 9), in welchen die Bedienperson (23) zutritt, oder innerhalb eines Lagerbereiches (7, 8, 9) und von diesem auf einen oberhalb und/oder unterhalb liegenden Lagerbereich (7, 8, 9) definiert wird, wobei der Zugriffsbereich (72) einen räumlichen Schutzbereich (73) vorgibt, und
- welche dazu angepasst ist:
jene Regalbediengeräte (10; 10'; 10") zu bestimmen, welche sich im Schutzbereich (73) bewegen bzw. bewegen würden, und
im Sicherheitsbetrieb die Fahr- und/oder Lagerbefehle zu erzeugen, mittels welcher jene Regalbediengeräte (10; 10'; 10"), welche sich im Schutzbereich (73) bewegen bzw. bewegen würden, in eine x-Halteposition entlang der Regalgasse (3) bewegt werden, in welcher das jeweilige Regalbediengerät (10; 10'; 10") solange verharrt und ferner in einen für die Bedienperson (23) gefahrenlosen bzw. bewegungslosen Ruhezustand versetzt wird, bis die Steuereinheit (64) ein Freischaltsignal (S_{FRB4}) erhält,
**dadurch gekennzeichnet, dass**
je Lagerbereich (7, 8, 9) in Richtung der Längserstreckung der Regalgasse (3) vor der Ladegut-Hebevorrichtung (37a; 37b) eine Zutrittsüberwachung (100) vorgesehen ist, welche ein Signal erzeugt, wenn von der Zutrittsüberwachung (100) die Anwesenheit einer Bedienperson (23) im Lagerbereich (7, 8, 9) nahe der Ladegut-Hebevorrichtung (37a; 37b) erfasst wird, und dass die Steuerungsvorrichtung (28) mit der Steuereinheit (39a; 39b) der Ladegut-Hebevorrichtung (37a; 37b) verbunden ist und ein Schaltmodul (104; 105) aufweist, welches dazu eingerichtet ist, in Abhängigkeit von dem Erfassungssignal die Transportvorrichtung (41a; 41b) für den Transport der Ladegüter (6) anzusteuern.

12. Regallagersystem nach Anspruch 11, **dadurch gekennzeichnet, dass** jedem Lagerbereich (7, 8, 9) in übereinander liegenden Fahrebenen zumindest zwei unabhängig voneinander angesteuerte Regalbediengeräte (10; 10'; 10") zum Einlagern der Ladegüter (6) in die Lagerplätze (11) bzw. Auslagern von Ladegütern (6) aus den Lagerplätzen (11) zugeordnet sind, und dass
die Steuerungsvorrichtung (28) dazu angepasst ist:
- jene Regalbediengeräte (10; 10'; 10") je Lagerbereich (7, 8, 9) zu bestimmen, welche sich im Schutzbereich (73) bewegen bzw. bewegen würden, und
- im Sicherheitsbetrieb Fahr- und/oder Lagerbefehle zu erzeugen, mittels welcher jene Regalbediengeräte (10; 10') in den Lagerbereichen (7, 8, 9), welche sich im Schutzbereich (73) bewegen bzw. bewegen würden, in eine x-Halteposition entlang der Regalgasse (3) bewegt werden, in welcher das jeweilige Regalbediengerät (10; 10'; 10") solange verharrt und ferner in einen für die Bedienperson (23) gefahrenlosen bzw. bewegungslosen Ruhezustand versetzt wird, bis die Steuereinheit (64) ein Freischaltsignal (S_{FRB4}) erhält.

13. Regallagersystem nach Anspruch 11 oder 12, **dadurch gekennzeichnet, dass**
- die Steuereinheit (64) jedes Regalbediengerätes (10; 10'; 10") eine Steuerlogik umfasst, welche eingerichtet ist, ein Bestätigungssignal (S_{RB1..RBn}) zu erzeugen, wenn das betreffende Regalbediengerät (10; 10'; 10") die Halteposition erreicht hat, oder eine von einer Steuerungsvorrichtung (28) vordefinierte Zeitspanne, innerhalb welcher das betreffende Regalbediengerät (10; 10'; 10") die Halteposition erreicht haben soll, überschritten wird, und
- die Steuerleitung (76) zur Übermittlung der Bestätigungssignale (S_{RB1..RBn}) an die Steuerungsvorrichtung (28) ausgebildet ist, und
- die Steuerungsvorrichtung (28) eine Auswerteeinheit (35) umfasst, welche eingerichtet ist, ein Umschaltsignal (S_{U1..Un}) zu erzeugen, wenn das Bestätigungssignal (S_{RS1..RSn}) an der Steuerungsvorrichtung (28) empfangen und von dieser ausgewertet wurde, und
- die Mittel (70) dazu eingerichtet sind, einige Schaltmodule (69; 69'; 69") aus einer Anzahl an Schaltmodulen (69; 69'; 69") anhand der Umschaltsignale (S_{U1..Un}) zu betätigen, wobei jene Schaltmodule (69; 69'; 69") betätigt werden, welchen den Regalbediengeräten (10; 10'; 10") zugeordnet sind, die in der Halteposition die Bestätigungssignale (S_{RB1..RBn}) an die Steuerungsvorrichtung (28) übermittelt haben, und
- die Steuereinheit (64) jedes Regalbediengerätes (10; 10'; 10") eine Steuerlogik umfasst, welche eingerichtet ist, ein Rückmeldesignal (S_{RM1..RMn}) je Regalbediengerät (10; 10'; 10") zu erzeugen, wenn sich das betreffende Regalbediengerät (10; 10'; 10") in einem für die Bedienperson (23) gefahrenlosen bzw. bewegungslosen Ruhezustand befindet, in dem durch Betätigung der Schaltmodule (69; 69'; 69") der Antriebsmotor (60) für den Fahrantrieb (59) und der Antriebsmotor (63) für die Lastaufnahmevorrichtung (17) der Regalbediengeräte (10; 10'; 10"), welche sich in der Halteposition befinden, mit einer Gefahrenbetriebsspannung versorgt werden, und
- die Steuerleitung (76) zur Übermittlung der Rückmeldesignale (S_{RM1..RMn}) an die Steuerungsvorrichtung (28) ausgebildet ist.

14. Regallagersystem nach Anspruch 13, **dadurch gekennzeichnet, dass**
- die Steuerungsvorrichtung (28) eine Auswerteeinheit (35) umfasst, welche eingerichtet ist, ein Freigabesignal (S_{FRB3}) für die Ausgabe der Zugangsmeldung an der Schaltvorrichtung (24, 25, 26) zu erzeugen, wenn das Bestätigungssignal (S_{RB1..RBn}) oder das Bestätigungssignal (S_{RB1..RBn}) und das Rückmeldesignal (S_{RM1..RMn}) an der Steuerungsvorrichtung (28) empfangen und von dieser ausgewertet wurde, und
- die Schaltvorrichtung (24, 25, 26) ein Schaltmittel (27) umfasst, mittels welchem zwischen dem Automatikbetrieb und Sicherheitsbetrieb manuell umgeschaltet werden kann, und ein Ausgabemittel (29) umfasst, an welcher basierend auf dem Freigabesignal (S_{FRB3}) eine Zugangsmeldung für den gefahrenlosen Zugang der Bedienperson (23) in den Lagerbereich (7, 8, 9) signalisiert wird.

15. Regallagersystem nach einem der Ansprüche 11 bis 14, **dadurch gekennzeichnet, dass** die Steuerungsvorrichtung (28) eine Auswerteeinheit (35) umfasst, welche eingerichtet ist,
- ein erstes Freigabesignal (S_{FRB1}) für das Entriegeln des Zugangs (19, 20, 21) zu erzeugen, wenn das Bestätigungssignal (S_{RB1..RBn}) an der Steuerungsvorrichtung (28) empfangen und von dieser ausgewertet wurde, und
- ein zweites Freigabesignal (S_{FRB2}) für das Entriegeln des Zugangs (19, 20, 21) zu erzeugen, wenn das Rückmeldesignal (S_{RM1..RMn}) an der Steuerungsvorrichtung (28) empfangen und von dieser ausgewertet wurde,
und dass
- eine elektromechanische Schließeinheit (33) zum Verriegeln und Entriegeln der Zugangstür (19, 20, 21) vorgesehen ist, welche mit der Steuerungsvorrichtung (28) verbunden ist und von dieser das erste Freigabesignal (S_{FRB1}) und zweite Freigabesignal (S_{FRB2}) erhält, um die Zugangstür (19, 20, 21) zu entriegeln.

16. Regallagersystem nach einem der Ansprüche 11 bis 15, **gekennzeichnet durch** eine Ladegut-Manipulationseinheit (2; 36; 54; 55), welche die Ladegut-Hebevorrichtung (37a; 37b) mit der heb- und senkbaren Transportvorrichtung (41a; 41b) für den Transport der Ladegüter (6) und zumindest im Bereich der Ladegut-Hebevorrichtung (37a; 37b) einen den Bewegungsraum der heb- und senkbaren Transportvorrichtung (41a; 41b) für die Ladegüter (6) gegenüber der Regalgasse (3) abgrenzende, erste physische Durchgriffsbarriere (82), insbesondere ein Schutzgitter aufweist, wobei sich die physische Durchgriffsbarriere (82) parallel zur Gassenrichtung und zwischen den Gehstegen (15), insbesondere im Wesentlichen über die gesamte Höhe des jeweiligen Lagerbereiches (7, 8, 9) erstreckt.

17. Regallagersystem nach einem der Ansprüche 11 bis 16, **gekennzeichnet durch** eine Ladegut-Manipulationseinheit (2; 36; 54; 55), welche
- die Ladegut-Hebevorrichtung (37a; 37b) mit der heb- und senkbaren Transportvorrichtung (41a; 41b) für den Transport der Ladegüter (6), und
- eine Puffervorrichtung (38a; 38b) mit in Richtung der Regalgasse (3) an einer der Seiten der Ladegut-Hebevorrichtung (37a; 37b) oder zu beiden Seiten der Ladegut-Hebevorrichtung (37a; 37b) und in zumindest einigen der Regalebenen (RE) angeordnete Bereitstellfördervorrichtungen (45; 46; 56) für das Zwischenpuffern eines oder mehrerer Ladegüter (6), und
- im Bereich der Puffervorrichtung (38a: 38b) einen den Bewegungsraum der heb- und senkbaren Transportvorrichtung (41a; 41b) für die Ladegüter (6) gegenüber der Regalgasse (3) abgrenzende, zweite physische Durchgriffsbarriere (85), insbesondere ein Schutzschleuse (86) aufweist, wobei die physische Durchgriffsbarriere (85) eine im Wesentlichen senkrecht zur Gassenlängsrichtung zwischen einer ersten Betriebsstellung, in welcher der Bewegungsraum gegenüber der Regalgasse (3) zugänglich ist, und einer zweiten Betriebsstellung, in welcher der Bewegungsraum gegenüber der Regalgasse (3) abgeschottet ist, verstellbare Schutzschleuse (86) umfasst, deren Stellantrieb mit der Steuerungsvorrichtung (28) verbunden ist, wobei die Steuerungsvorrichtung (28) ein Schaltmodul (87) aufweist, welches dazu eingerichtet ist, mit dem Umschalten in den Sicherheitsbetrieb die Schutzschleuse (86) von der ersten Betriebsstellung in die zweite Betriebsstellung anzusteuern.

18. Regallagersystem nach Anspruch 11, 15 oder 17, **gekennzeichnet, durch** eine Ladegut-Manipulationseinheit (2; 36; 54; 55), welche
- die Ladegut-Hebevorrichtung (37a; 37b) mit der heb- und senkbaren Transportvorrichtung (41a; 41b) für die Ladegüter (6), und
- eine Puffervorrichtung (38a; 38b) mit in Richtung der Regalgasse (3) an einer der Seiten der Ladegut-Hebevorrichtung (37a; 37b) oder zu beiden Seiten der Ladegut-Hebevorrichtung (37a; 37b) und in zumindest einigen der Regalebenen angeordnete Bereitstellfördervorrichtungen (45; 46; 56) für das Zwischenpuffern eines oder mehrerer Ladegüter (6), und
- im Bereich der Ladegut-Hebevorrichtung (37a; 37b) und Puffervorrichtung (38a; 38b) je Lagerbereich (7, 8, 9) einen den Bewegungsraum der heb- und senkbaren Transportvorrichtung (41a; 41b) und Bewegungsraum für die Ladegüter (6) auf der Puffervorrichtung (38a; 38b) gegenüber der Regalgasse (3) absichernden und diesen Bereich überwachenden Durchgriffsschutz (109) umfasst, wobei der Durchgriffsschutz (109) opto-elektronische Sensoren oder Ultraschallsensoren aufweist und eine Überwachungsebene im Wesentlichen in einer Vertikalebene und parallel zur Regalgasse (3) verläuft.

19. Regallagersystem nach Anspruch 11, **dadurch gekennzeichnet, dass** je Lagerbereich (7, 8, 9) in Richtung der Längserstreckung der Regalgasse (3) nach der Ladegut-Hebevorrichtung (37a; 37b) eine Zutrittsüberwachung (101) vorgesehen ist, welche ein Signal erzeugt, wenn von der Zutrittsüberwachung (101) die Anwesenheit einer Bedienperson (23) im Lagerbereich (7, 8, 9) nahe der Ladegut-Hebevorrichtung (37a; 37b) erfasst wird, und dass die Steuerungsvorrichtung (28) mit der Steuereinheit (39a; 39b) der Ladegut-Hebevorrichtung (37a; 37b) verbunden ist und ein Schaltmodul (104; 105) aufweist, welches dazu eingerichtet ist, in Abhängigkeit von dem Erfassungssignal die Transportvorrichtung (41a; 41b) für den Transport der Ladegüter (6) anzusteuern.

20. Regallagersystem nach Anspruch 11 oder 19, **dadurch gekennzeichnet, dass** je Lagerbereich (7, 8, 9) in der Regalgasse (3) im Bereich der Ladegut-Hebevorrichtung (37a; 37b) eine Zustandsüberwachung (107) vorgesehen ist, welche ein Signal erzeugt, wenn von der Zustandsüberwachung (107) die Anwesenheit einer Bedienperson im Lagerbereich (7, 8, 9) nahe der Ladegut-Hebevorrichtung (37a; 37b) erfasst wird, und dass die Steuerungsvorrichtung (28) mit der Steuereinheit (39a; 39b) der Ladegut-Hebevorrichtung (37a; 37b) verbunden ist und ein Schaltmodul (104; 105) aufweist, welches dazu eingerichtet ist, in Abhängigkeit von dem Erfassungssignal die Transportvorrichtung (41a; 41b) für den Transport der Ladegüter (6) anzusteuern.

## Claims

1. A method for the safe operation of an automated rack storage system having storage racks (1) having storage places (11) for storing loads (6) in rack levels (RE) located on top of one another,
a rack aisle (3) extending between the storage racks (1) in an x-direction,
storage areas (7, 8, 9), which the rack aisle (3) comprises and which are located on top of one another and are separated from one another by walkways (15),
a load manipulation unit (2; 36; 54; 55), which comprises a load lifting device (37a; 37b) with a liftable and lowerable transport device (41a; 41b) for the loads (6) laterally beside the rack aisle (3) and a control unit (39a; 39b),
storage and retrieval devices (10; 10'; 10") for storing the loads (6) in the storage places (11) and/or retrieving the loads (6) from the storage places (11), wherein each storage area (7, 8, 9) is assigned one or multiple storage and retrieval devices (10; 10'; 10"), and each storage and retrieval device (10; 10'; 10") is provided with a control unit (64), a traveling drive (59) and a load suspension device (17),
a switching device (24, 25, 26) by means of which a switching between an automatic operation and a safety operation for the storage and retrieval devices (10; 10'; 10") can take place,
a control device (28), which communicates with the control units (64) of the storage and retrieval devices (10; 10'; 10") and the switching device (24, 25, 26) via a control line (76), and which communicates with the control unit (39a; 39b) of the load lifting device (37a; 37b) via a control line (44), and
one lockable access (19, 20, 21) each per storage area (7, 8, 9) and which can be opened and closed,
comprising the steps:
- defining a spatial access range (72) for the operator (23), either exclusively within a storage area (7, 8, 9), which the operator (23) enters, or within a storage area (7, 8, 9) and from said storage area (7, 8, 9) to a storage area (7, 8, 9) located above and/or below;
- defining a spatial protection area (73) based on the access range (72);
- determining those storage and retrieval devices (10; 10'; 10"), which move and/or would move within the protection area (73);
and having
an automatic operation for the storage and retrieval devices (10; 10'; 10") and for the load manipulation unit (2; 36; 54; 55), in which
- the storage and retrieval devices (10; 10'; 10") receive travel and storage commands via the control lines (76), in each case on the control unit (64), and the traveling drive (59) and the load suspension device (17) are controlled in accordance with these travel and storage commands, in order to travel to the storage places (11) along the rack aisle (3) extending along the x-direction and to store the loads (6) on the storage places (11) and/or to retrieve loads (6) from the storage places (11), and
- the load lifting device (37a; 37b) receives storage and/or retrieval commands via the control line (44) on the control unit (39a; 39b), and controls, in accordance with these storage and/or retrieval commands, a lift drive (40a; 40b) and a conveying drive (42a; 42b) for the transport device (41a; 41b), in order to transport loads (6) between a material handling level (FE) and a respective rack storage level (RE),
a safety operation for the storage and retrieval devices (10; 10';10"), in which
- some of the storage and retrieval devices (10; 10';10") again receive travel and/or storage commands via the control lines (76), in each case on the control unit (64), and the traveling drive (59) and/or the load suspension device (17) are controlled in accordance with these travel and/or storage commands, wherein those storage and retrieval devices (10; 10';10"), which move and/or would move within the protection area (73) are moved into an x-stopping position within the rack aisle (3), in which position the respective storage and retrieval device (10; 10';10") remains and, moreover, is transferred into a non-operating state that is risk-free for the operator (23) and/or motionless, until the control unit (64) receives an activation signal (S_{FRB4}),
- and at least one other of the storage and retrieval devices (10; 10';10") is still operated in the automatic operation,
wherein the automatic operation switches into the safety operation for the storage and retrieval devices (10; 10';10") if, on the switching device (24, 25, 26), the access by an operator (23) to one of the storage areas (7, 8, 9) is announced, and the operator (23) wants to enter into one of the storage areas (7, 8, 9),
**characterized by**
- determination of a vertical movement path of the transport device (41a; 41b), which intersects with the protection area (73) and/or abuts on the protection area (73);
- switching the automatic operation into a safety operation for the load manipulation unit (2; 36; 54; 55) when the presence of an operator (23) has been detected by means of an access monitoring (100, 101) in the storage area (7, 8, 9) in the direction of the longitudinal extension of the rack aisle (3) in front of or behind the load lifting device (37a; 37b), wherein, in the safety operation, the lift drive (40a; 40b) for the transport device (41a; 41b) is controlled such that the lifting speed relative to the automatic operation is reduced at least to the movement path along the protection area (73).

2. The method for the safe operation of an automated rack storage system having storage racks (1) having storage places (11) for storing loads (6) in rack levels (RE) located on top of one another, and
a rack aisle (3) extending between the storage racks (1) in an x-direction,
storage areas (7, 8, 9), which the rack aisle (3) comprises and which are located on top of one another and are separated from one another by walkways (15),
a load manipulation unit (2; 36; 54; 55), which comprises a load lifting device (37a; 37b) with a liftable and lowerable transport device (41a; 41b) for the loads (6) laterally beside the rack aisle (3) and a control unit (39a; 39b),
storage and retrieval devices (10; 10'; 10") for storing the loads (6) in the storage places (11) and/or retrieving the loads (6) from the storage places (11), wherein each storage area (7, 8, 9) is assigned one or multiple storage and retrieval devices (10; 10'; 10"), and each storage and retrieval device (10; 10'; 10") is provided with a control unit (64), a traveling drive (59) and a load suspension device (17), a switching device (24, 25, 26) by means of which a switching between an automatic operation and a safety operation for the storage and retrieval devices (10; 10'; 10") can take place, and
a control device (28), which communicates with the control units (64) of the storage and retrieval devices (10; 10'; 10") and the switching device (24, 25, 26) via a control line (76), and which communicates with the control unit (39a; 39b) of the load lifting device (37a; 37b) via a control line (44),
and one lockable access (19, 20, 21) each per storage area (7, 8, 9) and which can be opened and closed,
comprising the steps:
- definition of a spatial access range (72) for the operator (23), either exclusively within a storage area (7, 8, 9), which the operator (23) enters, or within a storage area (7, 8, 9) and from said storage area (7, 8, 9) to a storage area (7, 8, 9) located above and/or below;
- definition of a spatial protection area (73) based on the access range (72);
- determining those storage and retrieval devices (10; 10'; 10"), which move and/or would move within the protection area (73);
and having
an automatic operation for the storage and retrieval devices (10; 10'; 10") and for the load manipulation unit (2; 36; 54; 55), in which
- the storage and retrieval devices (10; 10'; 10") receive travel and storage commands via the control lines (76), in each case on the control unit (64), and the traveling drive (59) and the load suspension device (17) are controlled in accordance with these travel and storage commands, in order to travel to the storage places (11) along the rack aisle (3) extending along the x-direction and to store the loads (6) on the storage places (11) and/or to retrieve loads (6) from the storage places (11), and
- the load lifting device (37a; 37b) receives storage and/or retrieval commands via the control line (44) on the control unit (39a; 39b), and controls, in accordance with these storage and/or retrieval commands, a lift drive (40a; 40b) and a conveying drive (42a; 42b) for the transport device (41a; 41b), in order to transport loads (6) between a material handling level (FE) and a respective rack storage level (RE),
a safety operation for the storage and retrieval devices (10; 10';10"), in which
- some of the storage and retrieval devices (10; 10';10") again receive travel and/or storage commands via the control lines (76), in each case on the control unit (64), and the traveling drive (59) and/or the load suspension device (17) are controlled in accordance with these travel and/or storage commands, wherein those storage and retrieval devices (10; 10';10"), which move and/or would move within the protection area (73) are moved into an x-stopping position within the rack aisle (3), in which position the respective storage and retrieval device (10; 10';10") remains and, moreover, is transferred into a non-operating state that is risk-free for the operator (23) and/or motionless, until the control unit (64) receives an activation signal (S_{FRB4}), and
- a confirmation signal (S_{RB1..RBn}) per storage and retrieval device (10; 10'; 10") is generated by the control unit (64),
∘ if the respective storage and retrieval device (10; 10'; 10") has reached the x-stopping position inside of a time span, which time span is defined by a monitoring time span, inside of which the storage and retrieval devices (10; 10'; 10") should have reached the x-stopping position if functioning properly, and which is started upon switching from the automatic operation to the safety operation, and transmission of the confirmation signal (S_{RB1..RBn}) to the control device (28), or
∘ if the respective storage and retrieval device (10; 10'; 10") has not reached the x-stopping position inside of a time span, which time span is defined by a monitoring time span, inside of which the storage and retrieval devices (10; 10'; 10") should have reached the x-stopping position if functioning properly, and which is started upon switching from the automatic operation to the safety operation, and transmission of the confirmation signal (S_{RB1..RBn}) to the control device (28),
- and at least one other of the storage and retrieval devices (10; 10';10") is still operated in the automatic operation,
wherein the automatic operation switches into the safety operation for the storage and retrieval devices (10; 10';10") if, on the switching device (24, 25, 26), the access by an operator (23) to one of the storage areas (7, 8, 9) is announced, and the operator (23) wants to enter into one of the storage areas (7, 8, 9),
**characterized by**
- unlocking of the access (19, 20, 21) which is assigned to the storage area (7, 8, 9), which the operator (23) wants to enter, after the confirmation signal (S_{RB1..RBn}) has been triggered by those storage and retrieval devices (10; 10'; 10") which have been moved in the protection area (73),
- activation of an access monitoring (100; 101) which is arranged in the storage area (7, 8, 9) in the direction of the longitudinal extension of the rack aisle (3) in front of and/or behind the load lifting device (37a; 37b),
- monitoring of an access of an operator (23) to the storage area (7, 8, 9) by means of the access monitoring (100; 101),
- switching from the automatic operation to the safety operation for the load lifting device (2; 36; 54; 55) if the control unit (39a; 39b) of the load lifting device (37a; 37b) receives a status signal, which is triggered if the access of the operator (23) to the storage area (7, 8, 9) is detected by the access monitoring (100; 101), wherein, in the safety operation, the lift drive (40a; 40b) and/or conveying drive (87a; 87b) of the transport device (41a; 41b) is/are shut off and transferred into a motionless non-operating state, until the control unit (39a; 39b) receives an activation signal (S_{FH4}).

3. The method according to claim 1 or 2, **characterized in that**,
- in each storage area (7, 8, 9), at least two storage and retrieval devices (10; 10') for storing the loads (6) in the storage places (11) and/or retrieving the loads (6) from the storage places (11) are operating independently of one another in travel planes (16) located on top of one another;
- those storage and retrieval devices (10; 10') are determined per storage area (7, 8, 9) which move and/or would move within the protection area (73);
- in the safety operation, those storage and retrieval devices (10; 10') in the storage area (7, 8 9), which move or would move within the protection area (73), are moved into an x-stopping position within the rack aisle (3), in which position the respective storage and retrieval device (10; 10';10") remains and, moreover, is transferred into a non-operating state that is risk-free for the operator (23) and/or motionless, until the control unit (64) receives an activation signal (S_{FRB4}).

4. The method according to one of claims 1 to 3, **characterized in that**,
in the automatic operation, the storage and retrieval device (10; 10'; 10") on a drive motor (60) for the traveling drive (59) and on a drive motor (63) for the load suspension device (17) are supplied with an operating voltage, and
in the safety operation, the operating voltage is switched to a safety operating voltage, so that the storage and retrieval device (10; 10'; 10") on the drive motor (60) for the traveling drive (59) and on the drive motor (63) for the load suspension device (17) are supplied with the danger operating voltage, wherein the maximum value of the danger operating voltage is lower, in terms of the amount, than a minimum operating voltage which is required for moving the storage and retrieval device (10; 10'; 10") or the load suspension device (17).

5. The method according to a claim 4, **characterized in that** the drive motor (60) for the traveling drive (59) and the drive motor (63) for the load suspension device (17) are supplied with electric energy from a conductor line arrangement (65) extending in the direction of the rack aisle (3) and assigned to one travel plane (16) for the storage and retrieval device (10; 10'; 10") each, wherein each of the conductor line arrangements (65) is connected to at least one voltage source (75) via a switching module (69; 69'; 69"), and, by selective switching of the switching states for the switching module (69; 69'; 69"), either the operating voltage when in the automatic operation or the danger operating voltage when in the safety operation is fed into the conductor line arrangements (65).

6. The method according to a claim 4, **characterized in that** the drive motor (60) for the traveling drive (59) and the drive motor (63) for the load suspension device (17) are supplied with electric energy from a conductor line arrangement (65) extending in the direction of the rack aisle (3) and assigned to one travel plane (16) for the storage and retrieval device (10; 10'; 10") each, wherein groups, each made up of multiple conductor line arrangements (65), are connected to at least one voltage source (75) via a group of assigned switching modules (69"), and, by selective switching of the switching states for the switching modules (69") in each case, either the operating voltage, when in the automatic operation, or the safety operating voltage, when in the safety operation, is fed into the groups of multiple conductor line arrangements (75).

7. The method according to claim 4, **characterized by**
- generating a confirmation signal (S_{RB1..RBn}) per storage and retrieval device (10; 10'; 10"), if the respective storage and retrieval device (10; 10'; 10") has reached the stopping position, or a time span predefined by a control device (28), inside of which the respective storage and retrieval device (10; 10'; 10") has to have reached the stopping position, is exceeded, and
- transmitting the confirmation signals (S_{RB1..RBn}) to the control device (28), and
- generating a switching signal (S_{U1..Un}) by means of the control device (28), if the confirmation signal (S_{RB1..RBn}) has been received by the control device (28) and evaluated by the same, and
- actuating some switching modules (69; 69'; 69") out of a number of switching modules (69; 69'; 69") based on the switching signals (S_{U1..Un}), wherein those switching modules (69; 69'; 69") are actuated which are assigned to the storage and retrieval devices (10; 10'; 10"), which have, in the stopping position, transmitted the confirmation signals (S_{RB1..RBn}) to the control device (28), and
- generating a feedback signal (S_{RM1..RMn}) per storage and retrieval device (10; 10'; 10"), if the respective storage and retrieval device (10; 10'; 10") is situated in a non-operating state that is risk-free for the operator (23) and/or motionless, in which non-operating state, by actuating the switching modules (69; 69'; 69"), the drive motor (60) for the traveling drive (59) and the drive motor (63) for the load suspension device (17) of the storage and retrieval devices (10; 10'; 10"), which are situated in the stopping position, are supplied with the safety operating voltage, and
- transmitting the feedback signals (S_{RM1..RMn}) to the control device (28).

8. The method according to claim 1, in which
loads (6) to be stored are taken over from a conveying device (4) onto the load lifting device (37a; 37b) and moved, by means of the transport device (41a; 41b), to the height of a rack level (RE), and are discharged onto provisioning conveying devices (45; 46; 56) arranged in the rack levels, where the loads (6) are temporarily buffered until the storage and retrieval devices (10; 10'; 10") pick up the loads (6) to be stored from the provisioning conveying devices (45; 46; 56) and place them on the storage places (11), and
loads (6) to be retrieved are picked up from the storage places (11) by means of the storage and retrieval devices (10; 10'; 10") and discharged onto provisioning conveying devices (45; 46; 56) arranged in the rack levels, where the loads (6) are temporarily buffered until they are taken over by the load lifting device (37a; 37b) and moved, by means of the transport device (41a; 41b), to the height of a conveying device (5), and
in the automatic operation of the load manipulation unit (2; 36; 54; 55), the provisioning conveying devices (45; 46; 56) receive storage and/or retrieval commands via a control line (51) on a control unit (49a; 49b; 50a; 50b), and conveying drives (47a; 47b; 48a; 48b) for the transport device (41a; 41b) and provisioning conveying devices (45; 46; 56) are controlled in accordance with these storage and/or retrieval commands, in order to transport loads (6) between the transport device (41a; 41b) and a provisioning conveying device (45; 46; 56) in the respective rack storage level (RE),
and in which the safety operation for the storage and retrieval devices (10; 10'; 10") additionally comprises the step
- generating a confirmation signal (S_{RB1..RBn}) per storage and retrieval device (10; 10'; 10") by the control unit (64),
o if the respective storage and retrieval device (10; 10'; 10") has reached the x-stopping position inside of a time span, which time span is defined by a monitoring time span, inside of which the storage and retrieval devices (10; 10'; 10") should have reached the x-stopping position if functioning properly, and which is started upon switching from the automatic operation to the safety operation, and transmission of the confirmation signal (S_{RB1..RBn}) to the control device (28), or
o if the respective storage and retrieval device (10; 10'; 10") has not reached the x-stopping position inside of a time span, which time span is defined by a monitoring time span, inside of which the storage and retrieval devices (10; 10'; 10") should have reached the x-stopping position if functioning properly, and which is started upon switching from the automatic operation to the safety operation, and transmission of the confirmation signal (S_{RB1..RBn}) to the control device (28),
**characterized by**
- unlocking of the access (19, 20, 21) which is assigned to the storage area (7, 8, 9), which the operator wants to enter, after the confirmation signal has been triggered by those storage and retrieval devices (10; 10'; 10") which have been moved in the protection area (73);
- activating the access monitoring (100; 101) in the storage area (7, 8, 9) in the direction of the longitudinal extension of the rack aisle (3) in front of and/or behind the load lifting device (37a; 37b);
- monitoring of an access of an operator (23) to the storage area (7, 8, 9) by means of the access monitoring (100; 101);
- switching from the automatic operation to the safety operation for the load lifting device (2; 36; 54; 55) if the control unit (49a; 49b; 50a; 50b) of the provisioning conveying devices (45; 46; 56) receives a status signal, which is triggered if the access of the operator (23) to the storage area (7, 8, 9) is detected by the access monitoring (100; 101), wherein, in the safety operation, the conveying drives (47a; 47b; 48a; 48b) of the provisioning conveying devices (45; 46;56), which are arranged in the protection area (73), are shut off and transferred into a motionless non-operating state, until the control unit (49a; 49b; 50a; 50b) receives an activation signal (S_{FBV}).

9. The method according to claim 2, in which
loads (6) to be stored are taken over from a conveying device (4) onto the load lifting device (37a; 37b) and moved, by means of the transport device (41a; 41b), to the height of a rack level (RE), and are discharged onto provisioning conveying devices (45; 46; 56) arranged in the rack levels, where the loads (6) are temporarily buffered until the storage and retrieval devices (10; 10'; 10") pick up the loads (6) to be stored from the provisioning conveying devices (45; 46; 56) and place them on the storage places (11), and
loads (6) to be retrieved are picked up from the storage places (11) by means of the storage and retrieval devices (10; 10'; 10") and discharged onto provisioning conveying devices (45; 46; 56) arranged in the rack levels, where the loads (6) are temporarily buffered until they are taken over by the load lifting device (37a; 37b) and moved, by means of the transport device (41a; 41b), to the height of a conveying device (5), and
in the automatic operation of the load manipulation unit (2; 36; 54; 55), the provisioning conveying devices (45; 46; 56) receive storage and/or retrieval commands via a control line (51) on a control unit (49a; 49b; 50a; 50b), and conveying drives (47a; 47b; 48a; 48b) for the transport device (41a; 41b) and provisioning conveying devices (45; 46; 56) are controlled in accordance with these storage and/or retrieval commands, in order to transport loads (6) between the transport device (41a; 41b) and a provisioning conveying device (45; 46; 56) in the respective rack storage level (RE),
wherein
switching from the automatic operation to the safety operation for the load lifting device (2; 36; 54; 55) if the control unit (49a; 49b; 50a; 50b) of the provisioning conveying devices (45; 46; 56) receives a status signal, which is triggered if the access of the operator (23) to the storage area (7, 8, 9) is detected by the access monitoring (100; 101), wherein, in the safety operation, the conveying drives (47a; 47b; 48a; 48b) of the provisioning conveying devices (45; 46;56), which are arranged in the protection area (73), are shut off and transferred into a motionless non-operating state, until the control unit (49a; 49b; 50a; 50b) receives an activation signal (S_{FBV}).

10. The method according to claim 8 or 9, **characterized by**
- provisioning a first input device (112) in the respective storage area (7, 8, 9) in the direction of the longitudinal extension of the rack aisle (3) in front of a first border surface (114) of a hazard area (111) and/or a second input device (113) in the respective storage area (7, 8, 9) in the direction of the longitudinal extension of the rack aisle (3) behind a second border surface (115) of the hazard area (111), wherein the hazard area (111) is defined based on the hazard, emanating from the load lifting device (37a; 37b) and/or provisioning conveying device (45; 46; 56), for an operator (23) when they enter the storage area (7, 8, 9), and
- actuating the input device (112; 113) by an operator (23) after they have left the hazard area (111), and
- generating a first activation signal by means of which the transport device (41a; 41b) is switched from the safety operation back to the automatic operation, and
- generating a second activation signal by means of which those provisioning conveying devices (45; 46; 56), which have been shut off in the protection area (73), or those provisioning conveying devices (45; 46; 56), which have been shut off in the hazard area (111), are switched from the safety operation back to the automatic operation.

11. An automated rack storage system having
storage racks (1) having storage places (11) for storing loads (6) in rack levels located on top of one another,
a conveying device (4, 5) for transporting loads (6) to a position and for transporting (6) loads (6) away from a position,
a rack aisle (3) formed between the storage racks (1) and extending in an x-direction,
a load lifting device (37a; 37b) with a liftable and lowerable transport device (41a; 41b) for the loads (6) laterally beside the rack aisle (3) and a control unit (39a; 39b),
storage areas (7, 8, 9), which the rack aisle (3) comprises and which are located on top of one another and are separated from one another by walkways (15),
storage and retrieval devices (10; 10'; 10") for storing loads (6) in the storage places (11) and/or retrieving the loads (6) from the storage places (11), which storage and retrieval devices (10; 10'; 10") can be operated in an automatic operation or a safety operation, and each have a control unit (64), a traveling drive (59) and a load suspension device (17) and can be displaced along guide rails in the x-direction, in order to store said loads (6) in the storage places (11) and/or retrieve loads (6) from the storage places (11),
a switching device (24, 25, 26), by means of which a switching between the automatic operation and the safety operation for the storage and retrieval devices (10; 10'; 10") can take place, wherein, in the automatic operation, the storage and retrieval devices (10; 10'; 10") receive travel and storage commands via a control line (76), in each case on the control unit (64), and the traveling drive (59) and the load suspension device (17) are controlled in accordance with these travel and storage commands, and wherein, in the safety operation, some of the storage and retrieval devices (10; 10'; 10") again receive travel and/or storage commands via the control line (76), in each case on the control unit (64), and the traveling drive (59) and the load suspension device (17) are controlled in accordance with these travel and/or storage commands, while at least one other of the storage and retrieval devices (10; 10'; 10") is still operated in the automatic operation, and
a control device (28), which communicates with the control units (64) of the storage and retrieval devices (10; 10'; 10") and the switching device (24, 25, 26) via the control line (76),
and which communicates with the control unit (39a; 39b) of the load lifting device (37a; 37b) via a control line (44),
wherein each storage area (7, 8, 9) is assigned one or multiple storage and retrieval devices (10; 10'; 10") for storing the loads (6) in the storage places (11) and/or retrieving loads (6) from the storage places (11) and a lockable access door (19, 20, 21) for access to the respective storage area (7, 8, 9),
wherein the control device (28)
- is connected with switching modules (69; 69'; 69") and comprises a means (70) for the selective and parallel (simultaneous) switching on of some of the switching modules (69; 69'; 69"), wherein the number of the switching modules (69; 69'; 69") that are switched on in a selective and parallel (simultaneous) manner is defined based on a spatial access range (72) for the operator (23), either exclusively within a storage area (7, 8, 9), which the operator (23) enters, or within a storage area (7, 8, 9) and from said storage area (7, 8, 9) to a storage area (7, 8, 9) located above and/or below, wherein the access range (72) specifies a spatial protection area (73), and
- which is adapted for:
determining those storage and retrieval devices (10; 10'; 10"), which move and/or would move within the protection area (73); and
generating, in the safety operation, the travel and/or storage commands, by means of which those storage and retrieval devices (10; 10'; 10") which move or would move within the protection area (73), are moved into an x-stopping position within the rack aisle (3), in which position the respective storage and retrieval device (10; 10';10") remains and, moreover, is transferred into a non-operating state that is risk-free for the operator (23) and/or motionless, until the control unit (64) receives an activation signal (S_{FRB4}),
**characterized in that**
an access monitoring (100) per storage area (7, 8, 9) is provided in the direction of the longitudinal extension of the rack aisle (3) in front of the load lifting device (37a; 37b), which access monitoring (100) generates a signal when the presence of an operator (23) in the storage area (7, 8, 9) near the load lifting device (37a; 37b) is detected by the access monitoring (100), and that the control device (28) is connected to the control unit (39a; 39b) of the load lifting device (37a; 37b) and has a switching module (104; 105), which is configured to control the transport device (41a; 41b) for transporting the loads (6) dependent on the detection signal.

12. The rack storage system according claim 11, **characterized in that** each storage area (7, 8, 9), in travel planes located on top of one another, is assigned at least two storage and retrieval devices (10; 10'; 10") controlled independently of one another for storing the loads (6) in the storage places (11) and/or retrieving loads (6) from the storage places (11), and that
the control device (28) is adapted for:
- determining those storage and retrieval devices (10; 10'; 10") per storage area (7, 8, 9) which move and/or would move within the protection area (73), and
- generating, in the safety operation, travel and/or storage commands, by means of which those storage and retrieval devices (10; 10'; 10") in the storage areas (7, 8, 9) which move or would move within the protection area (73), are moved into an x-stopping position within the rack aisle (3), in which position the respective storage and retrieval device (10; 10';10") remains and, moreover, is transferred into a non-operating state that is risk-free for the operator (23) and/or motionless, until the control unit (64) receives an activation signal (S_{FRB4}).

13. The rack storage system according to claim 11 or 12, **characterized in that**
- the control unit (64) of each storage and retrieval device (10; 10'; 10") comprises a control logic which is configured to generate a confirmation signal (S_{RB1..RBn}), if the respective storage and retrieval device (10; 10'; 10") has reached the stopping position, or a time span predefined by a control device (28), inside of which the respective storage and retrieval device (10; 10'; 10") has to have reached the stopping position, is exceeded, and
- the control line (76) is configured for the transmission of the confirmation signals (S_{RB1..RBn}) to the control device (28), and
- the control device (28) comprises an evaluation unit (35) which is configured to generate a switching signal (S_{U1..Un}), if the confirmation signal (S_{RB1..RBn}) has been received by the control device (28) and evaluated by the same, and
- the means (70) are configured to actuate some switching modules (69; 69'; 69") out of a number of switching modules (69; 69'; 69") based on the switching signals (S_{U1..Un}), wherein those switching modules (69; 69'; 69") are actuated which are assigned to the storage and retrieval devices (10; 10'; 10"), which have, in the stopping position, transmitted the confirmation signals (S_{RB1..RBn}) to the control device (28), and
- the control unit (64) of each storage and retrieval device (10; 10'; 10") comprises a control logic, which is configured to generate one feedback signal (S_{RM1..RMn}) per storage and retrieval device (10; 10'; 10"), if the respective storage and retrieval device (10; 10'; 10") is situated in a non-operating state that is risk-free for the operator (23) and/or motionless, in which non-operating state, by actuating the switching modules (69; 69'; 69"), the drive motor (60) for the traveling drive (59) and the drive motor (63) for the load suspension device (17) of the storage and retrieval devices (10; 10'; 10"), which are situated in the stopping position, are supplied with a danger operating voltage, and
- the control line (76) is configured for the transmission of the feedback signals (S_{RM1..RMn}) to the control device (28).

14. The rack storage system according to claim 13, **characterized in that**
- the control device (28) comprises an evaluation unit (35) which is configured to generate an activation signal (S_{FRB3}) for the issuing of the access message on the switching device (24, 25, 26), if the confirmation signal (S_{RB1..RBn}) or the confirmation signal (S_{RB1..RBn}) and the feedback signal (S_{RM1..RMn}) has been received by the control device (28) and evaluated by the same, and
- the switching device (24, 25, 26) comprises a switching means (27) by means of which a manual switching between the automatic operation and safety operation can take place, and comprises an issuing means (29), on which, based on the activation signal (S_{FRB3}), an access message for the risk-free access of the operator (23) to the storage area (7, 8, 9) is signaled.

15. The rack storage system according to one of claims 11 to 14, **characterized in that** the control device (28) comprises an evaluation unit (35) which is configured to
- generate a switching signal (S_{FRB1}) for unlocking the access (19, 20, 21) if the confirmation signal (S_{RB1..RBn}) has been received by the control device (28) and has been evaluated by the same, and
- generate a switching signal (S_{FRB2}) for unlocking the access (19, 20, 21) if the feedback signal (S_{RM1..RMn}) has been received by the control device (28) and has been evaluated by the same, and
and that
- an electromagnetic closing unit (33) for locking and unlocking the access door (19, 20, 21) is provided, which closing unit (33) is connected to the control device (28) and receives the first activation signal (S_{FRB1}) and the second activation signal (S_{FRB2}) from it for unlocking the access door (19, 20, 21).

16. The rack storage system according to one of claims 11 to 15, **characterized by** a load manipulation unit (2; 36; 54; 55) which comprises the load lifting device (37a; 37b) having the liftable and lowerable transport device (41a; 41b) for transporting the loads (6) and, at least in the region of the load lifting device (37a; 37b), has a first physical reach-through barrier (82), in particular a protective grid, delimiting the movement space of the liftable and lowerable transport device (41a; 41b) for the loads (6) with respect to the rack aisle (3), wherein the physical reach-through barrier (82) extends in parallel to the aisle direction and between the walkways (15), in particular substantially across the entire height of the respective storage area (7, 8, 9).

17. The rack storage system according to one of claims 11 to 16, **characterized by** a load manipulation unit (2; 36; 54; 55), which has
- the load lifting device (37a; 37b) having the liftable and lowerable transport device (41a; 41b) for transporting the loads (6), and
- a buffer device (38a; 38b) having provisioning conveying devices (45; 46; 56), arranged in the direction of the rack aisle (3) on one of the sides of the load lifting device (37a; 37b) or on both sides of the load lifting device (37a; 37b) and in at least some of the rack levels (RE), for temporarily buffering one or multiple loads (6), and
- in the region of the buffer device (38a; 38b), a second physical reach-through barrier (85), in particular a protective lock (86), delimiting the movement space of the liftable and lowerable transport device (41a; 41b) for the loads (6) with respect to the rack aisle (3), wherein the physical reach-through barrier (85) comprises an protective lock (86) adjustable substantially perpendicular to the longitudinal direction of the aisle between a first operating position, in which the movement space is accessible with respect to the rack aisle (3), and a second operating position, in which the movement space is partitioned off with respect to the rack aisle (3), the actuating drive of which protective lock (86) is connected with the control device (28), wherein the control device (28) has a switching module (87) which is configured to control the protective lock (86) from the first operating position into the second operating position by switching to the safety operation.

18. The rack storage system according to claim 11, 15 or 17, **characterized by** a load manipulation unit (2; 36; 54; 55), which comprises
- the load lifting device (37a; 37b) having the liftable and lowerable transport device (41a; 41b) for the loads (6), and
- a buffer device (38a; 38b) having provisioning conveying devices (45; 46; 56), arranged in the direction of the rack aisle (3) on one of the sides of the load lifting device (37a; 37b) or on both sides of the load lifting device (37a; 37b) and in at least some of the rack levels, for temporarily buffering one or multiple loads (6), and
- in the region of the load lifting device (37a; 37b) and buffer device (38a; 38b), one reach-through protection (109) per storage area (7, 8, 9), said reach-through protection (109) securing the movement space of the liftable and lowerable transport device (41a; 41b) and movement space for the loads (6) on the buffer device (38a; 38b) with respect to the rack aisle (3) and monitoring said region, wherein the reach-through protection (109) has optoelectronic sensors or ultrasonic sensors, and a monitoring plane extends substantially in a vertical plane and in parallel to the rack aisle (3).

19. The rack storage system according to claim 11, **characterized in that** one access monitoring (101) per storage area (7, 8, 9) is provided in the direction of the longitudinal extension of the rack aisle (3) behind the load lifting device (37a; 37b), which access monitoring (101) generates a signal when the presence of an operator (23) in the storage area (7, 8, 9) near the load lifting device (37a; 37b) is detected by the access monitoring (100), and that the control device (28) is connected to the control unit (39a; 39b) of the load lifting device (37a; 37b) and has a switching module (104; 105), which is configured to control the transport device (41a; 41b) for transporting the loads (6) dependent on the detection signal.

20. The rack storage system according to claim 11 or 19, **characterized in that** one status monitoring (107) per storage area (7, 8, 9) is provided in the rack aisle (3) in the region of the load lifting device (37a; 37b), which status monitoring (107) generates a signal when the presence of an operator (23) in the storage area (7, 8, 9) near the load lifting device (37a; 37b) is detected by the status monitoring (100), and that the control device (28) is connected to the control unit (39a; 39b) of the load lifting device (37a; 37b) and has a switching module (104; 105), which is configured to control the transport device (41a; 41b) for transporting the loads (6) dependent on the detection signal.

## Revendications

1. Procédé de fonctionnement sécurisé d'un système de stockage à rayonnages automatisé avec des rayonnages de stockage (1) qui comprennent des emplacements de stockage (11) pour des charges (6) dans des niveaux de rayonnages (RE) superposés,
une allée de rayonnages (3) s'étendant entre les rayonnages de stockage (1) dans une direction x,
des zones de stockage (7, 8, 9) incluses dans l'allée de rayonnages (3) et qui sont superposées et séparées les unes des autres par des passerelles (15), une unité de manipulation de charges (2 ; 36 ; 54 ; 55) qui comprend un dispositif de levage de charges (37a ; 37b) avec un dispositif de transport relevable et abaissable (41a ; 41b) pour les charges (6) latéralement à proximité de l'allée de rayonnages (3) et une unité de commande (39a ; 39b),
des appareils de commande de rayonnages (10 ; 10' ; 10") pour l'entreposage des charges (6) dans les emplacements de stockage (11) resp. le déstockage des charges (6) hors des emplacements de stockage (11), dans lequel, à chaque zone de stockage (7, 8, 9) correspondent un ou plusieurs appareils de commande de rayonnages (10 ; 10' ; 10") et chaque appareil de commande de rayonnages (10 ; 10' ; 10") est muni d'une unité de commande (64), d'un entraînement (59) et d'un dispositif de chargement (17),
un dispositif de commutation (24, 25, 26) au moyen duquel, on peut commuter entre un mode automatique à un mode de sécurité pour les appareils de commande de rayonnages (10 ; 10', 10"),
un dispositif de commande (28), qui communique, par l'intermédiaire d'une ligne de commande (76), avec les unités de commande (64) des appareils de commande de rayonnages (10 ; 10' ; 10") et le dispositif de commutation (24, 25, 26) et qui communique, par l'intermédiaire d'une ligne de commande (44), avec l'unité de commande (39a ; 39b) du dispositif de levage de charges (37a ; 37b) et
un accès verrouillable (19, 20, 21) pour chaque zone de stockage (7, 8, 9), qui peut être ouvert et fermé,
avec les étapes suivantes :
- définition d'une zone d'accès dans l'espace (72) pour l'opérateur (23) soit exclusivement à l'intérieur d'une zone de stockage (7, 8, 9), à laquelle l'opérateur (23) accède soit à l'intérieur d'une zone de stockage (7, 8, 9) et de celle-ci vers une zone de stockage (7, 8, 9) située au-dessus et/ou en dessous ;
- définition d'une zone de protection dans l'espace (73) à l'aide de la zone d'accès (72) ;
- détermination des appareils de commande de rayonnages (10 ; 10' ; 10") qui se déplacent ou se déplaceraient dans la zone de protection (73) ;
et avec
un mode automatique pour les appareils de commande de rayonnages (10 ; 10' ; 10") et pour l'unité de manipulation de charges (2 ; 36 ; 54 ; 55), dans lequel
- les appareils de commande de rayonnages (10 ; 10' ; 10") reçoivent, par l'intermédiaire de chacune des lignes de commande (76) sur l'unité de commande (64), des instructions de déplacement et de stockage et, en fonction de ces instructions de déplacement et de stockage, l'entraînement (59) et le dispositif de chargement (17) sont contrôlés afin de se déplacer le long de l'allée de rayonnages (3) s'étendant dans la direction x vers les emplacements de stockage (11) et de stocker les charges (6) sur les emplacements de stockage (11) resp. de déstocker les charges (6) hors des emplacements de stockage (11) et
- le dispositif de levage de charges (37a ; 37b) reçoit, par l'intermédiaire de la ligne de commande (44) sur l'unité de commande (39a ; 39b), des instructions de stockage et/ou de déstockage et, en fonction de ces instructions de stockage et/ou de déstockage, contrôle un entraînement de levage (40a ; 40b) et un entraînement de convoyage (42a ; 42b) pour le dispositif de transport (41a ; 41b) afin de transporter des charges (6) entre un niveau de convoyage (FE) et un niveau de stockage à rayonnages (RE) correspondant,
un mode de sécurité pour les appareils de commande de rayonnages (10 ; 10' ; 10"), dans lequel
- certains des appareils de commande de rayonnages (10 ; 10' ; 10") reçoivent, par l'intermédiaire des lignes de commande (76) sur l'unité de commande (64), à nouveau des instructions de déplacement et/ou de stockage et, en fonction de ces instructions de déplacement et/ou de stockage, l'entraînement de déplacement (59) et/ou le dispositif de chargement (17) sont contrôlés, dans lequel les appareils de commande de rayonnages (10 ; 10' ; 10") qui se déplacent ou se déplaceraient dans la zone de protection (73), sont déplacés vers une position de maintien x à l'intérieur de l'allée de rayonnages (3), dans laquelle l'appareil de commande de rayonnages (10 ; 10' ; 10") correspondant s'immobilise et est en outre mis dans un état de repos sans danger pour l'opérateur (23) resp. sans déplacement jusqu'à ce que l'unité de commande (64) reçoive un signal d'autorisation (S_{FRB4}),
- et au moins un autre des appareils de commande de rayonnages (10 ; 10', 10") continue de fonctionner en mode automatique, dans lequel le mode automatique passe en mode de sécurité pour les appareils de commande de rayonnages (10 ; 10' ; 10") lorsque, sur le dispositif de commutation (24, 25, 26), l'accès par un opérateur (23) à une des zones de stockage (7, 8, 9) est signalé et l'opérateur (23) souhaite entrer dans une des zones de stockage (7, 8, 9),
**caractérisé par**
- la détermination d'un trajet de déplacement vertical du dispositif de transport (41a ; 41b) qui coupe la zone de protection (73) resp. est adjacent à la zone de protection (73) ; la commutation du mode automatique dans un mode de sécurité pour l'unité de manipulation de charges (2 ; 36 ; 54 ; 55) lorsqu'une surveillance d'accès (100, 101) détecte la présence d'un opérateur (23) dans la zone de stockage (7, 8, 9) avant ou après le dispositif de levage de charges (37a ; 37b), dans la direction de l'extension longitudinale de l'allée de rayonnages (3), dans lequel, en mode de sécurité, l'entraînement de levage (40a ; 40b) pour le dispositif de transport (41a ; 41b) est contrôlé de façon à ce que la vitesse de levage soit réduite par rapport au mode automatique, au moins sur le trajet de déplacement le long de la zone de protection (73).

2. Procédé de fonctionnement sécurisé d'un système de stockage à rayonnages avec des rayonnages de stockage (1), qui comprennent des emplacements de stockage (11) pour des charges dans des niveaux de rayonnages superposés (RE) et
une allée de rayonnages (3) s'étendant entre les rayonnages de stockage (1) dans une direction x,
des zones de stockage (7, 8, 9) incluses dans l'allée de rayonnages (3) et qui sont superposées et sont séparées les unes des autres par des passerelles (15), une unité de manipulation de charges (2 ; 36 ; 54 ; 55), qui comprend un dispositif de levage de charges (37a ; 37b) avec un dispositif de transport relevable et abaissable (41a ; 41b) pour les charges (6) latéralement à proximité de l'allée de rayonnages (3) et une unité de commande (39a ; 39b),
des appareils de commande de rayonnages (10 ; 10' ; 10") pour le stockage des charges (6) dans les emplacements de stockage (11) respectivement le déstockage des charges (6) hors des emplacements de stockage (11), dans lequel, à chaque zone de stockage (7, 8, 9), correspondent un ou plusieurs appareils de commande de rayonnages (10 ; 10' ; 10") et chaque appareil de commande de rayonnages (10 ; 10' ; 10") est muni d'une unité de commande (64), d'un entraînement de déplacement (59) et d'un dispositif de chargement (17), un dispositif de commutation (24, 25, 26) au moyen duquel on peut commuter entre un mode automatique à un mode de sécurité pour les appareils de commande de rayonnages (10 ; 10' ; 10") et
un dispositif de commande (28) qui communique, par l'intermédiaire d'une ligne de commande (76), avec les unités de commande (64) des appareils de commande de rayonnages (10 ; 10' ; 10") et le dispositif de commutation (24, 25, 26) et qui communique, par l'intermédiaire d'une ligne de commande (44), avec l'unité de commande (39a ; 39b) du dispositif de levage de charges (37a ; 37b),
et un accès verrouillable (19, 20, 21) pour chaque zone de stockage (7, 8, 9), qui peut être ouvert et fermé,
avec les étapes suivantes :
- définition d'une zone d'accès dans l'espace (72) pour l'opérateur (23) soit exclusivement à l'intérieur d'une zone de stockage (7, 8, 9), à laquelle l'opérateur (23) accède soit à l'intérieur d'une zone de stockage (7, 8, 9) et de celle-ci vers une zone de stockage (7, 8, 9) située au-dessus et/ou en dessous ;
- définition d'une zone de protection dans l'espace (73) à l'aide de la zone d'accès (72) ;
- détermination des appareils de commande de rayonnages (10 ; 10' ; 10") qui se déplacent ou se déplaceraient dans la zone de protection (73) ;
et avec
un mode automatique pour les appareils de commande de rayonnages (10 ; 10' ; 10") et pour l'unité de manipulation de charges (2 ; 36 ; 54 ; 55), dans lequel
- les appareils de commande de rayonnages (10 ; 10' ; 10") reçoivent, par l'intermédiaire des lignes de commande (76) sur l'unité de commande (64), des instructions de déplacement et de stockage et, en fonction de ces instructions de déplacement et de stockage, l'entraînement de déplacement (59) et le dispositif de chargement (17) sont contrôlés afin de se déplacer le long de l'allée de rayonnages (3) s'étendant dans la direction x vers les emplacements de stockage (11) et de stocker les charges (6) sur les emplacements de stockage (11) respectivement de déstocker les charges (6) hors des emplacements de stockage (11) et
- le dispositif de levage de charges (37a ; 37b) reçoit, par l'intermédiaire de la ligne de commande (44) sur l'unité de commande (39a ; 39b), des instructions de stockage et/ou de déstockage et, en fonction de ces instructions de stockage et/ou de déstockage, contrôle un entraînement de levage (40a ; 40b) et un entraînement de convoyage (42a ; 42b) pour le dispositif de transport (41a ; 41b), afin de transporter des charges (6) entre un niveau de système de convoyage (FE) et un niveau de stockage à rayonnages (RE) correspondant,
un mode de sécurité pour les appareils de commande de rayonnages (10 ; 10' ; 10"), dans lequel
- certains des appareils de commande de rayonnages (10 ; 10' ; 10") reçoivent, par l'intermédiaire des lignes de commande (76) sur l'unité de commande (64), à nouveau des instructions de déplacement et/ou de stockage et, en fonction de ces instructions de déplacement et/ou de stockage, l'entraînement de déplacement (59) et/ou le dispositif de chargement (17) sont contrôlés, dans lequel les appareils de commande de rayonnages (10 ; 10' ; 10") qui se déplacent ou se déplaceraient dans la zone de protection (73), sont déplacés vers une position de maintien x à l'intérieur de l'allée de rayonnages (3), dans laquelle l'appareil de commande de rayonnages (10 ; 10' ; 10") correspondant s'immobilise et est en outre mis dans un état de repos sans danger pour l'opérateur (23) respectivement sans déplacement jusqu'à ce que l'unité de commande (64) reçoive un signal d'autorisation (S_{FRB4}), et
- un signal de confirmation (S_{RB1... Rbn}) pour chaque appareil de commande de rayonnages (10 ; 10' ; 10") est généré par l'unité de commande (64),
• lorsque l'appareil de commande de rayonnages (10 ; 10' ; 10") concerné a atteint la position de maintien x dans un intervalle de temps, cet intervalle de temps étant défini par une période de surveillance à l'intérieur de laquelle les appareils de commande de rayonnages (10 ; 10' ; 10") doivent avoir atteint la position de maintien x dans le cas d'un fonctionnement correct et qui est démarrée lors d'un passage du mode automatique au mode de sécurité, et la transmission du signal de confirmation (S_{RB1... Rbn}) au dispositif de commande (28) ou
• lorsque l'appareil de commande de rayonnages (10 ; 10' ; 10") concerné n'a pas atteint la position de maintien x dans un intervalle de temps, cet intervalle de temps étant défini par une période de surveillance à l'intérieur de laquelle les appareils de commande de rayonnages (10 ; 10' ; 10") doivent avoir atteint la position de maintien x dans le cas d'un fonctionnement correct et qui est démarrée lors d'un passage du mode automatique au mode de sécurité, et la transmission du signal de confirmation (S_{RB1... Rbn}) au dispositif de commande (28),
- et au moins un autre des appareils de commande de rayonnages (10 ; 10' ; 10") continue de fonctionner en mode automatique,
dans lequel le mode automatique passe en mode de sécurité pour les appareils de commande de rayonnages (10 ; 10' ; 10") lorsque, au niveau du dispositif de commutation (24, 25, 26), l'accès d'un opérateur (23) à une des zones de stockage (7, 8, 9) est signalé et l'opérateur (23) souhaite entrer dans une des zones de stockage (7, 8, 9),
**caractérisé par**
- le déverrouillage de l'accès (19, 20, 21) qui correspond à la zone de stockage (7, 8, 9) dans laquelle l'opérateur (23) souhaite entrer, une fois que le signal de confirmation (S_{RB1... Rbn}) a été déclenché par les appareils de commande de rayonnages (10 ; 10' ; 10") qui ont été déplacés dans la zone de protection (73)
- l'activation d'une surveillance d'accès (100 ; 101) qui est disposée dans la zone de stockage (7, 8, 9) avant et/ou après le dispositif de levage de charges (37a ; 37b) dans la direction de l'extension longitudinale de l'allée de rayonnages (3),
- la surveillance d'un accès d'un opérateur (23) à la zone de stockage (7, 8, 9) au moyen de la surveillance d'accès (100 ; 101),
- la commutation du mode automatique en mode de sécurité pour l'unité de manipulation de charges (2 ; 36 ; 54 ; 55) lorsque, au niveau de l'unité de commande (39a ; 39b) du dispositif de levage de charges (37a ; 37b), un signal d'état entre, qui est déclenché lorsque la surveillance d'accès (100 ; 101) détecte l'accès de l'opérateur (23) à la zone de stockage (7, 8, 9), dans lequel, en mode de sécurité, l'entraînement de levage (40a ; 40b) et/ou l'entraînement de convoyage (87a ; 87b) du dispositif de transport (41a ; 41b) sont désactivés et mis dans un état de repos sans mouvement jusqu'à ce que l'unité de commande (39a ; 39b) reçoive un signal d'autorisation (S_{FH4}).

3. Procédé selon la revendication 1 ou 2, **caractérisé en ce que**
- dans chaque zone de stockage (7, 8, 9) dans des niveaux de déplacement superposés (16), au moins deux appareils de commande de rayonnages (10 ; 10') sont actionnés indépendamment entre eux pour le stockage des charges (6) sur les emplacements de stockage respectivement pour le déstockage des charges (6) hors des emplacements de stockage (11) ;
- les appareils de commande de rayonnages (10 ; 10') qui se déplacent ou se déplaceraient dans la zone de protection (73) sont déterminés pour chaque zone de stockage (7, 8, 9) ;
- en mode de sécurité, les appareils de commande de rayonnages (10 ; 10') des zones de stockage (7, 8, 9), qui se déplacent ou se déplaceraient, sont déplacées vers une position de maintien x à l'intérieur de l'allée de rayonnages (3), dans laquelle l'appareil de commande de rayonnages (10 ; 10' ; 10") correspondant s'immobilise et en outre est mis dans un état de repos sans danger pour l'opérateur (23) respectivement sans mouvement jusqu'à ce que l'unité de commande (64) reçoive un signal d'autorisation (S_{FRB4}).

4. Procédé selon l'une des revendications 1 à 3, **caractérisé en ce que**
en mode automatique, l'appareil de commande de rayonnages (10 ; 10' ; 10") est alimenté en tension de service au niveau d'un moteur d'entraînement (60) pour l'entraînement de déplacement (59) et au niveau d'un moteur d'entraînement (63) pour le dispositif de chargement (17) et
en mode de sécurité, la tension de service est commutée en une tension de service de secours, de façon à ce que l'appareil de commande de rayonnages (10 ; 10' ; 10") soit alimenté avec la tension de service de secours au niveau du moteur d'entraînement (60) pour l'entraînement de déplacement (59) et au niveau du moteur d'entraînement (63) pour le dispositif de chargement (17), dans lequel la valeur maximale de la tension de service de secours est inférieure, en valeur absolue, à une tension de service minimale qui est nécessaire pour déplacer l'appareil de commande de rayonnages (10 ; 10' ; 10") ou le dispositif de chargement (17).

5. Procédé selon la revendication 4, **caractérisé en ce que** le moteur d'entraînement (60) pour l'entraînement de déplacement (59) et le moteur d'entraînement (63) pour le dispositif de chargement (17) sont alimentés en énergie électrique à partir d'une disposition de ligne conductrice (65) s'étendant dans la direction de l'allée de rayonnages (3) et correspondant à un niveau de déplacement (16) pour l'appareil de commande de rayonnages (10 ; 10' ; 10"), dans lequel les dispositions de lignes conductrices (65) sont raccordées chacune par l'intermédiaire d'un module de commutation (69 ; 69' ; 69"), à au moins une source de tension (75) et, dans les dispositions de lignes conductrices (65), est introduite, par une commutation sélective des états de commutation pour le module de commutation (69, 69' ; 69"), soit, en mode automatique, la tension de service, soit, en mode de sécurité, la tension de service de secours.

6. Procédé selon la revendication 4, **caractérisé en ce que** le moteur d'entraînement (60) pour l'entraînement de déplacement (59) et le moteur d'entraînement (63) pour le dispositif de chargement (17) sont alimentés en énergie électrique à partir d'une disposition de ligne conductrice (65) s'étendant dans la direction de l'allée de rayonnages (3) et correspondant à un niveau de déplacement (16) pour l'appareil de commande de rayonnages (10 ; 10' ; 10"), dans lequel un groupe de modules de commutation (69") correspondants sont raccordés à au moins une source de tension (75) et, dans le groupe constitué de plusieurs dispositions de lignes conductrices (75), est introduite, par une commutation sélective des états de commutation pour les modules de commutation (69"), soit, en mode automatique, la tension de service, soit, en mode de sécurité, la tension de service de secours.

7. Procédé selon la revendication 4, **caractérisé par**
- la production d'un signal de confirmation (S_{RB1.. RBn}) pour chaque appareil de commande de rayonnages (10 ; 10' ; 10") lorsque l'appareil de commande de rayonnage (10 ; 10' ; 10") concerné a atteint la position de maintien ou lorsqu'un intervalle de temps, prédéfini par un dispositif de commande (28), dans lequel l'appareil de commande de rayonnages (10 ; 10' ; 10") doit avoir atteint la position de maintien, est dépassé et
- la transmission des signaux de confirmation (S_{RB1.. RBn}) au dispositif de commande (28) et
- la production d'un signal de commutation (S_{U1.. Un}) par le dispositif de commande (28) lorsque le signal de confirmation (S_{RB1.. RBn}) est reçu au niveau du dispositif de commande (28) et a été analysé par celui-ci et
- l'actionnement de certains modules de commutation (69 ; 69' ; 69") parmi un nombre de modules de commutation (69 ; 69' ; 69") à l'aide des signaux de commutation (S_{U1.. Un}), dans lequel les modules de commutation (69 ; 69' ; 69"), qui correspondent aux appareils de commande de rayonnages (10 ; 10' ; 10"), qui ont transmis, dans la position de maintien, les signaux de confirmation (S_{RB1.. RBn}) au dispositif de commande (28), sont actionnés et
- la production d'un signal de retour (S_{RM1.. RMn}) pour chaque appareil de commande de rayonnages (10 ; 10' ; 10") lorsque l'appareil de commande de rayonnage (10 ; 10' ; 10") concerné se trouve dans un état de repos sans danger pour l'opérateur (23) respectivement ; sans mouvement, dans lequel l'actionnement des modules de commutation (69 ; 69' ; 69") permet d'alimenter le moteur d'entraînement (60) pour l'entraînement de déplacement (59) et le moteur d'entraînement (63) pour le dispositif de chargement (17) des appareils de commande de rayonnages (10 ; 10' ; 10") qui se trouvent dans la position de maintien, avec la tension de service de secours et
- la transmission des signaux de retour (S_{RM1.. RMn}) au dispositif de commande (28).

8. Procédé selon la revendication 1, dans lequel
les charges (6) à stocker sont prises en charge par un système de convoyage (4) sur le dispositif de levage de charges (37a ; 37b) et sont déplacées au moyen du dispositif de transport (41a ; 41b) à la hauteur d'un niveau de rayonnage (RE) et transférées dans des dispositifs de convoyage de mise à disposition (45 ; 46 ; 56) disposés dans les niveaux de rayonnages, où les charges (6) sont entreposées jusqu'à ce que les appareils de commande de rayonnages (10 ; 10' ; 10") récupèrent les charges (6) à stocker dans les dispositifs de convoyage de mise à disposition (45 ; 46 ; 56) et les déposent sur les emplacements de stockage (11) et
les charges (6) à déstocker sont récupérées sur les emplacements de stockage (11) au moyen des appareils de commande de rayonnages (10 ; 10' ; 10") et sont transférées vers les dispositifs de convoyage de mise à disposition (45 ; 46 ; 56) disposés dans les niveaux de rayonnages, où les charges (6) sont entreposées jusqu'à ce qu'elles soient prise en charge par le dispositif de levage de charges (37a ; 37b) et déplacées au moyen du dispositif de transport (41a ; 41b) à la hauteur d'un système de convoyage (5) et dans le mode automatique de l'unité de manipulation de charges (2 ; 36 ; 54 ; 55), les dispositifs de convoyage de mise à disposition (45 ; 46 ; 56) reçoivent, par l'intermédiaire d'une ligne de commande (51) au niveau d'une unité de commande (49a ; 49b ; 50a ; 50b), des instructions de stockage et/ou de déstockage et, en fonction de ces instructions de stockage et/ou de déstockage, contrôlent des entraînements de convoyage (47a ; 47b ; 48a ; 48b) pour le dispositif de transport (41a ; 41b) et des dispositifs de convoyage de mise à disposition (45 ; 46 ; 56) afin de transporter des charges (6) entre le dispositif de transport (41a ; 41b) et un dispositif de convoyage de mise à disposition (45 ; 46 ; 56) dans le niveau de stockage par rayonnages (RE),
et dans lequel le mode de sécurité pour les appareils de commande de rayonnages (10 ; 10' ; 10") comprend en outre l'étape suivante
- production d'un signal de confirmation (S_{RB1.. RBn}) pour chaque appareil de commande de rayonnages (10 ; 10' ; 10") par l'unité de commande (64),
• lorsque l'appareil de commande de rayonnages (10 ; 10' ; 10") concerné a atteint la position de maintien x dans un intervalle de temps, cet intervalle de temps étant défini par une période de surveillance à l'intérieur de laquelle les appareils de commande de rayonnages (10 ; 10' ; 10") doivent avoir atteint la position de maintien x dans le cas d'un fonctionnement correct et qui est démarrée lors d'un passage du mode automatique au mode de sécurité, et la transmission du signal de confirmation (S_{RB1... Rbn}) au dispositif de commande (28) ou
• lorsque l'appareil de commande de rayonnages (10 ; 10' ; 10") concerné n'a pas atteint la position de maintien x dans un intervalle de temps, cet intervalle de temps étant défini par une période de surveillance à l'intérieur de laquelle les appareils de commande de rayonnages (10 ; 10' ; 10") doivent avoir atteint la position de maintien x dans le cas d'un fonctionnement correct et qui est démarrée lors d'un passage du mode automatique au mode de sécurité, et la transmission du signal de confirmation (S_{RB1... Rbn}) au dispositif de commande (28),
**caractérisé par**
- le déverrouillage de l'accès (19, 20, 21) qui correspond à la zone de stockage (7, 8, 9) dans laquelle l'opérateur (23) souhaite entrer, une fois que le signal de confirmation (S_{RB1... Rbn}) a été déclenché par les appareils de commande de rayonnages (10 ; 10' ; 10") qui ont été déplacés dans la zone de protection (73) ;
- l'activation de la surveillance d'accès (100 ; 101) de la zone de stockage (7, 8, 9) avant et/ou après le dispositif de levage de charges (37a ; 37b) dans la direction de l'extension longitudinale de l'allée de rayonnages (3) ;
- la surveillance d'un accès d'un opérateur (23) à la zone de stockage (7, 8, 9) au moyen de la surveillance d'accès (100 ; 101),
- la commutation du mode automatique au mode de sécurité pour l'unité de manipulation de charges (2 ; 36 ; 54 ; 55) lorsque, au niveau de l'unité de commande (49a ; 49b ; 50a ; 50b) du dispositif de convoyage de mise à disposition (45 ; 46 ; 56), un signal d'état entre, qui est déclenché lorsque la surveillance d'accès (100 ; 101) détecte l'accès de l'opérateur (23) à la zone de stockage (7, 8, 9), dans lequel, en mode de sécurité, les entraînements de convoyage(47a ; 47b ; 48a ; 48b) des dispositifs de convoyage de mise à disposition (45 ; 46 ; 56), qui sont disposés dans la zone de protection (73), sont désactivés et mis dans un état de repos sans mouvement jusqu'à ce que l'unité de commande (49a ; 49b ; 50a ; 50b) reçoive un signal d'autorisation (S_{FBV}).

9. Procédé selon la revendication 2, dans lequel
les charges (6) à stocker sont prises en charge par un système de convoyage (4) sur le dispositif de levage de charges (37a ; 37b) et déplacée au moyen du dispositif de transport (41a ; 41b) à la hauteur d'un niveau de rayonnages (RE) et transférées à des dispositifs de convoyage de mise à disposition (45 ; 46 ; 56) disposés dans les niveaux de rayonnages, où les charges (6) sont entreposées jusqu'à ce que les appareils de commande de rayonnages (10 ; 10' ; 10") récupèrent les charges (6) à stocker sur les dispositifs de convoyage de mise à disposition (45 ; 46 ; 56) et les déposent sur les emplacements de stockage (11) et
les charges (6) à déstocker sont récupérées sur les emplacements de stockage (11) au moyen des appareils de commande de rayonnages (10 ; 10' ; 10") et sont transférées vers les dispositifs de convoyage de mise à disposition (45 ; 46 ; 56) disposés dans les niveaux de rayonnages, où les charges (6) sont entreposées jusqu'à ce qu'elles soient prise en charge par le dispositif de levage de charges (37a ; 37b) et déplacées au moyen du dispositif de transport (41a ; 41b) à la hauteur d'un système de convoyage (5) et dans le mode automatique de l'unité de manipulation de charges (2 ; 36 ; 54 ; 55), les dispositifs de convoyage de mise à disposition (45 ; 46 ; 56) reçoivent, par l'intermédiaire d'une ligne de commande (51) au niveau d'une unité de commande (49a ; 49b ; 50a ; 50b), des instructions de stockage et/ou de déstockage et, en fonction de ces instructions de stockage et/ou de déstockage, contrôlent des entraînements de convoyage (47a ; 47b ; 48a ; 48b) pour le dispositif de transport (41a ; 41b) et des dispositifs de convoyage de mise à disposition (45 ; 46 ; 56) afin de transporter des charges (6) entre le dispositif de transport (41a ; 41b) et un dispositif de convoyage de mise à disposition (45 ; 46 ; 56) dans le niveau de stockage par rayonnages (RE), **caractérisé par**
la commutation du mode automatique en mode de sécurité pour l'unité de manipulation de charges (2 ; 36 ; 54 ; 55) lorsque, au niveau de l'unité de commande (49a ; 49b ; 50a ; 50b) du dispositif de convoyage de mise à disposition (45 ; 46 ; 56), un signal d'état entre, qui est déclenché lorsque la surveillance d'accès (100 ; 101) détecte l'accès de l'opérateur (23) à la zone de stockage (7, 8, 9), dans lequel, en mode de sécurité, les entraînements de convoyage (47a ; 47b ; 48a ; 48b) des dispositifs de convoyage de mise à disposition (45 ; 46 ; 56) qui sont disposés dans la zone de protection (73) sont désactivés et mis dans un état de repos sans mouvement jusqu'à ce que l'unité de commande (49a ; 49b ; 50a ; 50b) reçoive un signal d'autorisation (S_{FBV}).

10. Procédé selon la revendication 8 ou 9, **caractérisé par**
- la mise à disposition d'un premier dispositif d'entrée (112) dans la zone de stockage (7, 8, 9) correspondante avant une première surface limite (114) d'une zone à risque (111) dans la direction de l'extension longitudinale de l'allée de rayonnages (3) et/ou d'un deuxième dispositif d'entrée (113) dans la zone de stockage (7, 8, 9) correspondante après une deuxième surface limite (115) de la zone à risque (111), dans lequel la zone à risque (111) est définie par le risque constitué par le dispositif de levage de charges (37a ; 37b) et/ou le dispositif de convoyage de mise à disposition (45 ; 46 ; 56) pour un opérateur (23) lorsqu'il entre dans la zone de stockage (7, 8, 9) et
- l'actionnement du dispositif d'entrée (112 ; 113) par l'opérateur (23) une fois que celui-ci a quitté la zone à risque (111) et
- la production d'un premier signal d'autorisation au moyen duquel le dispositif de transport (41a ; 41b) est commuté à nouveau du mode de sécurité au mode automatique et
- la production d'un deuxième signal d'autorisation au moyen duquel les dispositifs de convoyage de mise à disposition (45 ; 46 ; 56) qui ont été désactivés dans la zone de protection (73) ou les dispositifs de convoyage de mise à disposition (45 ; 46 ; 56) qui ont été désactivés dans la zone à risque (111) sont commutés à nouveau du mode de sécurité au mode automatique.

11. Système de stockage à rayonnages automatisé avec
des rayonnages de stockage (1) qui comprennent des emplacements de stockage (11) sur des niveaux de rayonnages superposés, pour des charges (6),
un système de convoyage (4, 5) pour le transport de charges (6) et l'évacuation (6) de charges (6),
une allée de rayonnages (3) réalisée entre les rayonnages de stockage (1) et s'étendant dans une direction x,
un dispositif de levage de charges (37a ; 37b) avec un dispositif de transport relevable et abaissable (41a ; 41b) pour les charges (6) latéralement à proximité de l'allée de stockage (3) et une unité de commande (39a ; 39b),
des zones de stockage (7, 8, 9) incluses dans l'allée de rayonnages (3), qui sont superposées et séparées les unes des autres par des passerelles (15),
des appareils de commande de rayonnages (10 ; 10' ; 10") pour le stockage des charges (6) dans les emplacements de stockage (11) respectivement le déstockage des charges (6) hors des emplacements de stockage (11), qui peuvent fonctionner dans un mode automatique ou dans un mode de sécurité, et qui comprennent chacun une unité de commande (64), un entraînement de déplacement (59) et un dispositif de chargement (17) et peuvent être déplacés le long de rails de guidage dans la direction x, afin de stocker les charges (6) sur les emplacements de stockage (11) respectivement de déstocker les charges (6) hors des emplacements de stockage (11),
un dispositif de commutation (24, 25, 26) au moyen duquel on peut commuter entre le mode automatique et le mode de sécurité pour les appareils de commande de rayonnages (10 ; 10' ; 10"), dans lequel, en mode automatique, les appareils de commande de rayonnages (10 ; 10' ; 10") reçoivent, par l'intermédiaire d'une ligne de commande (76), chacune au niveau de l'unité de commande (64), des instructions de déplacement et de stockage et, en fonction de ces instructions de déplacement et de stockage, l'entraînement de déplacement (59) et le dispositif de chargement (17) sont contrôlés et dans lequel, en mode de sécurité, certains des appareils de commande de rayonnages (10 ; 10' ; 10") reçoivent, par l'intermédiaire d'une ligne de commande (76), chacune au niveau de l'unité de commande (64), à nouveau des instructions de déplacement et/ou de stockage et, en fonction de ces instructions de déplacement et de stockage, l'entraînement de déplacement (59) et le dispositif de chargement (17) sont contrôlés, tandis qu'au moins un autre des appareils de commande de rayonnages (10 ; 10' ; 10") continue de fonctionner en mode automatique et
un dispositif de commande (28) qui communique, par l'intermédiaire de la ligne de commande (76), avec les unités de commande (64) des appareils de commande de rayonnages (10 ; 10' ; 10") et le dispositif de commutation (24, 25, 26) et qui communique, par l'intermédiaire d'une ligne de commande (44), avec l'unité de commande (39a ; 39b) du dispositif de levage de charges (37a ; 37b),
dans lequel, à chaque zone de stockage (7, 8, 9) correspondent un ou plusieurs appareils de commande de rayonnages (10 ; 10' ; 10") pour le stockage des charges (6) sur les emplacements de stockage (11) respectivement le déstockage de charges (6) hors des emplacements de stockage (11) et une porte d'accès verrouillable (19, 20, 21) pour l'accès à la zone de stockage (7, 8, 9) concerné,
dans lequel le dispositif de commande (28)
- est relié avec des modules de commutation (69 ; 69' ; 69") et comprend un moyen (70) pour le branchement sélectif et parallèle (simultané) de certains des modules de commutation (69 ; 69' ; 69"), dans lequel le nombre des modules de commutation (69 ; 69' ; 69") branchés sélectivement et parallèlement (simultanément) est défini sur la base d'une zone d'accès spatiale (72) pour l'opérateur (23) soit exclusivement à l'intérieur d'une zone de stockage (7, 8, 9) à laquelle l'opérateur (23) accède soit à l'intérieur d'une zone de stockage (7, 8, 9) et de celle-ci vers une zone de stockage (7, 8, 9) se trouvant au-dessous et/ou en dessous, dans lequel la zone d'accès (72) détermine une zone de protection spatiale (73) et
- est conçu :
pour déterminer les appareils de commande de rayonnages (10 ; 10' ; 10") qui se déplacent ou se déplaceraient dans la zone de protection (73), et
en mode de sécurité, pour générer les instructions de déplacement et/ou de stockage au moyen desquelles les appareils de commande de rayonnages (10 ; 10' ; 10") qui se déplacent respectivement se déplaceraient dans la zone de protection (73), sont déplacés vers une position de maintien x, le long de l'allée de rayonnages (3), dans laquelle l'appareil de commande de rayonnages (10 ; 10' ; 10") s'immobilise et en outre est mis dans un état sans danger pour l'opérateur (23) respectivement sans mouvement jusqu'à ce que l'unité de commande (64) reçoive un signal d'autorisation (S_{FRB4}),
**caractérisé en ce que**
pour chaque zone de stockage (7, 8, 9), est prévue, avant le dispositif de levage de charges (37a ; 37b) dans la direction de l'extension longitudinale de l'allée de rayonnages (3), une surveillance d'accès (100) qui génère un signal lorsque la surveillance d'accès (100) détecte la présence d'un opérateur (23) dans la zone de stockage (7, 8, 9) près du dispositif de levage de charges (37a ; 37b) et **en ce que** le dispositif de commande (28) est relié avec l'unité de commande (39a ; 39b) du dispositif de levage de charges (37a ; 37b) et comprend un module de commutation (104 ; 105) qui est conçu pour contrôler, en fonction du signal de détection, le dispositif de transport (41a ; 41b) pour le transport de charges (6).

12. Système de stockage à rayonnages selon la revendication 11, **caractérisé en ce que**, à chaque zone de stockage (7, 8, 9) dans des niveaux mobiles superposés, correspondent au moins deux appareils de commande de rayonnages (10 ; 10', 10") contrôlés indépendamment l'un de l'autre pour le stockage des charges (6) dans les emplacements de stockage (11) respectivement le déstockage de charges (6) hors des emplacements de stockage (11) et **en ce que**
le dispositif de commande (28) est conçu
- pour déterminer les appareils de commande de rayonnages (10 ; 10' ; 10") pour chaque zone de stockage (7, 8, 9) qui se déplacent respectivement se déplaceraient dans la zone de protection (73) et
- pour générer, en mode de sécurité, des instructions de déplacement et/ou de stockage au moyen desquelles les appareils de commande de rayonnages (10 ; 10') des zones de stockage (7, 8, 9) qui se déplacent resp. se déplaceraient dans la zone de protection (73) sont déplacés vers une position de maintien x le long de l'allée de rayonnages (3), dans laquelle l'appareil de commande de rayonnages (10 ; 10' ; 10") correspondant s'immobilise et est en outre mis dans un état de repos sans danger pour l'opérateur (23) respectivement sans mouvement, jusqu'à ce que l'unité de commande (64) reçoive un signal d'autorisation (S_{FRB4}).

13. Système de stockage à rayonnages selon la revendication 11 ou 12, **caractérisé en ce que**
- l'unité de commande (64) de chaque appareil de commande de rayonnages (10 ; 10' ; 10") comprend une logique de commande qui est conçue pour générer un signal de confirmation (S_{RB1.. RBn}) lorsque l'appareil de commande de rayonnage (10 ; 10' ; 10") correspondant a atteint la position de maintien ou lorsqu'un intervalle de temps prédéfini par un dispositif de commande (28), dans lequel l'appareil de commande de rayonnage (10 ; 10' ; 10") doit avoir atteint la position de maintien, est dépassé et
- la ligne de commande (76) est conçue pour la transmission des signaux de confirmation (S_{RB1.. RBn}) au dispositif de commande (28) et
- le dispositif de commande (28) comprend une unité d'analyse (35) qui est conçue pour générer un signal de commutation (S_{U1.. Un}) lorsque le signal de confirmation (S_{RB1.. RBn}) a été reçu au niveau du dispositif de commande (28) et analysé par celui-ci et
- les moyens (70) sont conçus pour actionner certains modules de commutation (69 ; 69' ; 69") parmi un nombre de modules de commutation (69 ; 69' ; 69") à l'aide des signaux de commutation (S_{U1.. Un}), dans lequel les modules de commutation (69 ; 69' ; 69") qui correspondent les appareils de commande de rayonnages (10 ; 10' ; 10") qui ont transmis, dans la position de maintien, les signaux de confirmation (S_{RB1.. RBn}) au dispositif de commande (28), sont actionnés et
- l'unité de commande (64) de chaque appareil de commande de rayonnages (10 ; 10' ; 10") comprend une logique de commande qui est conçue pour générer un signal de retour (S_{RM1.. RMn}) pour chaque appareil de commande de rayonnage (10 ; 10' ; 10") lorsque l'appareil de commande de rayonnage (10 ; 10' ; 10") concerné se trouve dans un état sans danger pour l'opérateur (23) respectivement sans mouvement, dans lequel une commutation des modules de commutation (69 ; 69' ; 69") permet d'alimenter le moteur d'entraînement (60) pour l'entraînement de déplacement (59) et le moteur d'entraînement (63) pour le dispositif de chargement (17) des appareils de commande de rayonnages (10 ; 10' ; 10") qui se trouvent dans la position de maintien avec une tension de service de secours et
- la ligne de commande (76) est conçue pour la transmission des signaux de retour (S_{RM1.. RMn}) au dispositif de commande (28).

14. Système de stockage à rayonnages selon la revendication 13, **caractérisé en ce que**
- le dispositif de commande (28) comprend une unité d'analyse (35) qui est conçue pour générer un signal d'autorisation (S_{FRB3}) pour l'émission de la notification d'accès au dispositif de commutation (24, 25, 26) lorsque le signal de confirmation (S_{RB1.. RBn}) ou le signal de confirmation (S_{RB1.. RBn}) et le signal de retour (S_{RM1.. RMn}) sont reçus au niveau du dispositif de commande (28) et analysés par celui-ci et
- le dispositif de commutation (24, 25, 26) comprend un moyen de commutation (27) au moyen duquel il est possible de commuter manuellement entre le mode automatique et le mode de sécurité et comprend un moyen de sortie (29) au niveau duquel, sur la base du signal d'autorisation (S_{FRB3}), une notification d'accès est signalisée pour l'accès sans danger de l'opérateur (23) à la zone de stockage (7, 8, 9).

15. Système de stockage à rayonnages selon l'une des revendications 11 à 14, **caractérisé en ce que** le dispositif de commande (28) comprend une unité d'analyse (35) qui est conçue
- pour générer un premier signal d'autorisation (S_{FRB1}) pour le déverrouillage de l'accès (19, 20, 21) lorsque le signal de confirmation (S_{RB1.. RBn}) a été reçu au niveau du dispositif de commande (28) et analysé par celui-ci et
- pour générer un deuxième signal d'autorisation pour le déverrouillage de l'accès (19, 20, 21) lorsque le signal de retour (S_{RM1..RMn}) a été reçu au niveau du dispositif de commande (28) et analysé par celui-ci,
et **en ce que**
- une unité de fermeture électromécanique (33) est prévue pour le verrouillage et le déverrouillage de la porte d'accès (19, 20, 21), qui est reliée avec le dispositif de commande (28) et qui reçoit de celui-ci le premier signal d'autorisation (S_{FRB1}) et le deuxième signal d'autorisation (S_{FRB2}) afin de déverrouiller la porte d'accès (19, 20, 21).

16. Système de stockage à rayonnages selon l'une des revendications 11 à 15, **caractérisé par** une unité de manipulation de charges (2 ; 36 ; 54 ; 55), qui comprend le dispositif de levage de charges (37a ; 37b) avec le dispositif de transport relevable et abaissable (41a ; 41b) pour le transport des charges (6) et, au niveau du dispositif de levage de charges (37a ; 37b), au moins une première barrière d'accès physique (82) délimitant l'espace de mouvement du dispositif de transport relevable et abaissable (41a ; 41b) pour les charges (6) par rapport à l'allée de rayonnages (3), plus particulièrement une grille de protection, dans lequel la barrière d'accès physique (82) s'étend parallèlement à la direction de l'allée et entre les passerelles (15), plus particulièrement globalement sur toute la hauteur de la zone de stockage (7, 8, 9) correspondante.

17. Système de stockage à rayonnages selon l'une des revendications 11 à 16, **caractérisé par** une unité de manipulation de charges (2 ; 36 ; 54 ; 55) qui comprend
- le dispositif de levage de charges (37a ; 37b) avec le dispositif de transport relevable et abaissable (41a ; 41b) pour le transport des charges (6) et
- un dispositif tampon (38a ; 38b) avec des dispositifs de convoyage de mise à disposition (45 ; 46 ; 56) disposés dans la direction de l'allée de rayonnages (3) sur un côté du dispositif de levage de charges (37a ; 37b) ou des deux côtés du dispositif de levage de charges (37a ; 37b) et dans au moins certains des niveaux de rayonnages (RE), pour l'entreposage d'une ou plusieurs charges (6) et
- au niveau du dispositif tampon (38 ; 38b), une deuxième barrière d'accès physique (85) délimitant l'espace de mouvement du dispositif de transport relevable et abaissable (41a ; 41b) pour les charges (6) par rapport à l'allée de rayonnages (3), plus particulièrement un sas de protection (86), dans lequel la deuxième barrière d'accès physique (85) comprend un sas de protection (86) pouvant être déplacé entre une première position de fonctionnement, dans laquelle l'espace de mouvement par rapport à l'allée de rayonnages (3) est accessible et une deuxième position de fonctionnement, dans laquelle l'espace de mouvement par rapport à l'allée de rayonnages (3) est isolé, dont l'actionneur est relié avec le dispositif de commande (28), dans lequel le dispositif de commande (28) comprend un module de commutation (87) qui est conçu pour contrôler, avec la commutation vers le mode de sécurité, le sas de protection (86) de la première position de fonctionnement vers la deuxième position de fonctionnement.

18. Système de stockage à rayonnages selon la revendication 11, 15 ou 17, **caractérisé par** une unité de manipulation de charges (2 ; 36 ; 54 ; 55) qui comprend
- le dispositif de levage de charges (37a ; 37b) avec le dispositif de transport relevable et abaissable (41a ; 41b) pour le transport des charges (6) et
- un dispositif tampon (38a ; 38b) avec des dispositifs de convoyage de mise à disposition (45 ; 46 ; 56) disposés dans la direction de l'allée de rayonnages (3) sur un côté du dispositif de levage de charges (37a ; 37b) ou des deux côtés du dispositif de levage de charges (37a ; 37b) et dans au moins certains des niveaux de rayonnages, pour l'entreposage d'une ou plusieurs charges (6) et
- au niveau du dispositif de levage de charges (37a ; 37b) et du dispositif tampon (38a ; 38b), pour chaque zone de stockage (7, 8, 9), une protection d'accès (109) sécurisant l'espace de mouvement du dispositif de transport relevable et abaissable (41a ; 41b) et l'espace de mouvement pour les charges (6) sur le dispositif tampon (38a ; 38b) par rapport à l'allée de rayonnages (3) et surveillant cette zone, dans lequel la protection d'accès (109) comprend des capteurs opto-électroniques ou des capteurs à ultrasons et un niveau de surveillance s'étend globalement dans un plan vertical et parallèlement à l'allée de rayonnages (3).

19. Système de stockage à rayonnages selon la revendication 11, **caractérisé en ce que**, pour chaque zone de stockage (7, 8, 9) après le dispositif de levage de charges (37a ; 37b), dans la direction de l'extension longitudinale de l'allée de rayonnages (3), est prévue une surveillance d'accès (101) qui génère un signal lorsque la surveillance d'accès (101) détecte la présence d'un opérateur (23) dans la zone de stockage (7, 8, 9) à proximité du dispositif de levage de charges (37a ; 37b) et **en ce que** le dispositif de commande (28) est relié avec l'unité de commande (39a ; 39b) du dispositif de levage de charges (37a ; 37b) et comprend un module de commutation (104 ; 105) qui est conçu pour contrôler le dispositif de transport (41a ; 41b) pour le transport des charges (6) en fonction du signal de détection.

20. Système de stockage à rayonnages selon la revendication 11 ou 19, **caractérisé en ce que**, pour chaque zone de stockage (7, 8, 9), dans l'allée de rayonnages (3), au niveau du dispositif de levage de charges (37a ; 37b), est prévue une surveillance d'état (107) qui génère un signal lorsque la surveillance d'état (107) détecte la présence d'un opérateur dans la zone de stockage (7, 8, 9) à proximité du dispositif de levage de charges (37a ; 37b) et **en ce que** le dispositif de commande (28) est relié avec l'unité de commande (39a ; 39b) du dispositif de levage de charges (37a ; 37b) et comprend un module de commutation (104 ; 105) qui est conçu pour contrôler le dispositif de transport (41a ; 41b) pour le transport des charges (6) en fonction du signal de détection.
